(19) Europäisches Patentamt
European Patent Office
Office européen des brevets

(11) EP 3 111 763 A1

(12) EUROPEAN PATENT APPLICATION

(43) Date of publication:
**04.01.2017 Bulletin 2017/01**

(51) Int Cl.:
***A01N 43/58*** *(2006.01)* ***A01N 43/653*** *(2006.01)*
***A01P 7/00*** *(2006.01)*

(21) Application number: **15175092.4**

(22) Date of filing: **02.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **BASF Agro B.V.**
**6835 EA Arnhem (NL)**

(72) Inventor: **Mazuir, Florent**
**68165 Mannheim (DE)**

(74) Representative: **BASF IP Association**
**BASF SE**
**ZRX-C6**
**67056 Ludwigshafen (DE)**

(54) **PESTICIDAL COMPOSITIONS COMPRISING A TRIAZOLE COMPOUND**

(57) The present invention relates to pesticidal compositions and uses and methods for combatting harmful pests using the inventive compositions, such as phythopathogenic fungi and/or for the control of insects, acarids or nematodes. Furthermore, the present invention provides methods for improving the health of a plant using the inventive compositions.

EP 3 111 763 A1

## Description

The present invention relates to pesticidal compositions and uses and methods for combatting harmful pests using the inventive compositions, such as phythopathogenic fungi and/or for the control of insects, acarids or nematodes. Furthermore, the present invention provides methods for improving the health of a plant using the inventive compositions.

The invention furthermore relates to the use of the inventive compositions for controlling phytopathogenic fungi as detailled herein and preparations or compositions comprising them. The invention furthermore also relates to seed comprising the compositions. The invention furthermore also relates to methods for controlling phytopathogenic fungi as detailled herein, wherein the fungi or the materials, plants, the soil or seed to be protected from fungal attack are treated with an effective amount of a compositions according to the invention. The invention furthermore also relates to processes for preparing the compositions according to the invention.

Practical agricultural experience has shown that the repeated and exclusive application of an individual active compound in the control of harmful fungi leads in many cases to a rapid selection of those fungus strains which have developed natural or adapted resistance against the active compound in question. Effective control of these fungi with the active compound in question is then no longer possible.

To reduce the risk of the selection of resistant fungus strains, compositions of different active compounds are nowadays conventionally employed for controlling harmful fungi. By combining active compounds having different mechanisms of action, it is possible to ensure successful control over a relatively long period of time.

Furthermore, there is a desire for pesticide compounds or combination of compounds, which when applied improve plants, which may result in "plant health", "vitality of plant propagation material" or "increased plant yield".

It is therefore an object of the present invention to provide agricultural combinations which solves one or more than one of the discussed problems. It has been found that this object is in part or in whole achieved by the combination of active compounds defined below.

We have accordingly found that this object is achieved by the compositions, defined herein, comprising a compound I, a compound II and a compound III. Moreover, we have found that simultaneous, that is joint or separate, application of a compound I and a compound II or successive application of a compound I, a compound II and of compound III allows better control of harmful fungi than is possible with the individual compounds alone (synergistic compositions).

The present invention relates, to compositions comprising,

1) as component I a compound selected from the group consisting of the compounds I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 and I-31, or the N-oxides or the agriculturally acceptable salts of each of the compounds;

2) as component II a compound of formula II:

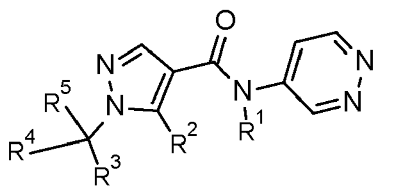

II

wherein

$R^1$ is H, $C_1$-$C_2$-alkyl, or $C_1$-$C_2$-alkoxy-$C_1$-$C_2$-alkyl;

$R^2$ is $CH_3$, or halomethyl;

$R^3$ is CN, $C_1$-$C_6$-alkyl, $C_1$-$C_6$-haloalkyl, $C_1$-$C_2$-alkoxy-$C_1$-$C_2$-alkyl, $C_2$-$C_6$-alkenyl and $C_2$-$C_6$-alkynyl, $C_3$-$C_6$-cycloalkyl, $C_5$-$C_6$-cycloalkenyl, $C_1$-$C_6$-alkoxy, wherein the C-atoms are unsubstituted, or partially or fully substituted by $R^a$;

$R^a$ is halogen, CN, $C_1$-$C_2$-alkyl, $C_1$-$C_2$-haloalkyl, $C_1$-$C_4$-alkoxy, $C_1$-$C_2$-haloalkoxy;

$R^4$ is $C_1$-$C_4$-alkyl, or a group mentioned for $R^3$; or

$R^3$ and $R^4$ may together form $C_5$-$C_6$-cycloalkyl, which is unsubstituted, or partially or fully substituted by $R^a$;

$R^5$ is H, or a group mentioned for $R^4$;

and the stereoisomers, salts, tautomers and N-oxides thereof; and

3) as component III a compound selected from the group consisting of the compounds

L1) Microbial pesticides with fungicidal, bactericidal, viricidal and/or plant defense activator activity: *Ampelomyces quisqualis, Aspergillus flavus, Aureobasidium pullulans, Bacillus altitudinis, B. amyloliquefaciens, B. megaterium, B. mojavensis, B. mycoides, B. pumilus, B. simplex, B. solisalsi, B. subtilis, B. subtilis* var. *amyloliquefaciens, Candida oleophila, C. saitoana, Clavibacter michiganensis* (bacteriophages), *Coniothyrium minitans, Cryphonectria parasitica*, *Cryptococcus albidus, Dilophosphora alopecuri, Fusarium oxysporum*, *Clonostachys rosea* f. *catenulate* (also named *Gliocladium catenulatum*), *Gliocladium roseum, Lysobacter antibioticus*, *L. enzymogenes*, *Metschnikowia fructicola, Microdochium dimerum, Microsphaeropsis ochracea, Muscodor albus, Paenibacillus alvei, Paenibacillus polymyxa*, *Pantoea vagans*, *Penicillium bilaiae*, *Phlebiopsis gigantea*, *Pseudomonas* sp., *Pseudomonas chloraphis*, *Pseudozyma flocculosa*, *Pichia anomala*, *Pythium oligandrum*, *Sphaerodes mycoparasitica, Streptomyces griseoviridis*, *S. lydicus*, *S. violaceusniger, Talaromyces flavus, Trichoderma asperellum, T. atroviride, T. fertile, T. gamsii, T. harmatum, T. harzianum, T. polysporum, T. stromaticum, T. virens, T. viride, Typhula phacorrhiza, Ulocladium oudemansii, Verticillium dahlia,* zucchini yellow mosaic virus (avirulent strain);
L2) Biochemical pesticides with fungicidal, bactericidal, viricidal and/or plant defense activator activity: chitosan (hydrolysate), harpin protein, laminarin, Menhaden fish oil, natamycin, Plum pox virus coat protein, potassium or sodium bicarbonate, *Reynoutria sachalinensis* extract, salicylic acid, tea tree oil;
L3) Microbial pesticides with insecticidal, acaricidal, molluscidal and/or nematicidal activity: *Agrobacterium radiobacter, Bacillus cereus, B. firmus, B. thuringiensis, B. thuringiensis* ssp. *aizawai, B. t.* ssp. *israelensis, B. t.* ssp. *galleriae, B. t.* ssp. *kurstaki, B. t.* ssp. *tenebrionis, Beauveria bassiana, B. brongniartii, Burkholderia* spp., *Chromobacterium subtsugae, Cydia pomonella* granulovirus (CpGV), *Cryptophlebia leucotreta* granulovirus (CrleGV), *Flavobacterium* spp., *Helicoverpa armigera* nucleopolyhedrovirus (HearNPV), *Heterorhabditis bacteriophora, Isaria fumosorosea, Lecanicillium longisporum, L. muscarium, Metarhizium anisopliae, Metarhizium anisopliae* var. *anisopliae, M. anisopliae* var. *acridum, Nomuraea rileyi, Paecilomyces lilacinus, Paenibacillus popilliae, Pasteuria* spp., *P. nishizawae, P. penetrans, P. ramosa, P. thornea, P. usgae, Pseudomonas fluorescens, Spodoptera littoralis* nucleopolyhedrovirus (SpliNPV), *Steinernema carpocapsae, S. feltiae, S. kraussei, Streptomyces galbus, S. microflavus*;
L4) Biochemical pesticides with insecticidal, acaricidal, molluscidal, pheromone and/or nematicidal activity: L-carvone, citral, (E,Z)-7,9-dodecadien-1-yl acetate, ethyl formate, (E,Z)-2,4-ethyl decadienoate (pear ester), (Z,Z,E)-7,11,13-hexadecatrienal, heptyl butyrate, isopropyl myristate, lavanulyl senecioate, cis-jasmone, 2-methyl 1-butanol, methyl eugenol, methyl jasmonate, (E,Z)-2,13-octadecadien-1-ol, (E,Z)-2,13-octadecadien-1-ol acetate, (E,Z)-3,13-octadecadien-1-ol, R-1-octen-3-ol, pentatermanone, potassium silicate, sorbitol actanoate, (E,Z,Z)-3,8,11-tetradecatrienyl acetate, (Z,E)-9,12-tetradecadien-1-yl acetate, Z-7-tetradecen-2-one, Z-9-tetradecen-1-yl acetate, Z-11-tetradecenal, Z-11-tetradecen-1-ol, Acacia negra extract, extract of grapefruit seeds and pulp, extract of *Chenopodium ambrosiodes,* Catnip oil, Neem oil, Quillay extract, Tagetes oil;
L5) Microbial pesticides with plant stress reducing, plant growth regulator, plant growth promoting and/or yield enhancing activity: *Azospirillum amazonense, A. brasilense, A. lipoferum, A. irakense, A. halopraeferens, Bradyrhizobium* spp., *B. elkanii, B. japonicum, B. liaoningense, B. lupini, Delftia acidovorans, Glomus intraradices, Mesorhizobium* spp., *Rhizobium leguminosarum* bv. *phaseoli, R. I.* bv. *trifolii, R. I.* bv. *viciae, R. tropici, Sinorhizobium meliloti*;
L6) Biochemical pesticides with plant stress reducing, plant growth regulator and/or plant yield enhancing activity: abscisic acid, aluminium silicate (kaolin), 3-decen-2-one, formononetin, genistein, hesperetin, homobrassinolide, humates, jasmonic acid and its salts or derivatives thereof, lysophosphatidyl ethanolamine, naringenin, polymeric polyhydroxy acid, *Ascophyllum nodosum* (Norwegian kelp, Brown kelp) extract and *Ecklonia maxima* (kelp) extract.

In particular, L1) to L6) are defined as follows (L1.1) to L.6.1)):

L1.1) Microbial pesticides with: Ampelomyces quisqualis, Aspergillus flavus, Aureobasidium pullulans, Bacillus amyloliquefaciens, B. mojavensis, B. pumilus, B. simplex, B. solisalsi, B. subtilis, B. subtilis var. amyloliquefaciens, Candida oleophila, C. saitoana, Clavibacter michiganensis (bacteriophages), Coniothyrium minitans, Cryphonectria parasitica, Cryptococcus albidus, Fusarium oxysporum, Clonostachys rosea f. catenulate (also named Gliocladium catenulatum), Gliocladium roseum, Metschnikowia fructicola, Microdochium dimerum, Paenibacillus polymyxa, Pantoea agglomerans, Phlebiopsis gigantea, Pseudozyma flocculosa, Pythium oligandrum, Sphaerodes mycoparasitica, Streptomyces lydicus, S. violaceusniger, Talaromyces flavus, Trichoderma asperellum, T. atroviride, T. fertile, T. gamsii, T. harmatum; composition of T. harzianum and T. viride; composition of T. polysporum and T. harzianum; T. stromaticum, T. virens (also named Gliocladium virens), T. viride, Typhula phacorrhiza, Ulocladium oudema, U. oudemansii, Verticillium dahlia, zucchini yellow mosaic virus (avirulent strain);

L2.1) Biochemical pesticides with fungicidal, bactericidal, viricidal and/or plant defense activator activity: chitosan (hydrolysate), jasmonic acid or salts or derivatives thereof, laminarin, Menhaden fish oil, natamycin, Plum pox virus coat protein, Reynoutria sachlinensis extract, salicylic acid, tea tree oil;

L3.1) Microbial pesticides with insecticidal, acaricidal, molluscidal and/or nematicidal : Bacillus firmus, B. thuringiensis ssp. israelensis, B. t. ssp. galleriae, B. t. ssp. kurstaki, Beauveria bassiana, Burkholderia sp., Chromobacterium subtsugae, Cydia pomonella granulosis virus, Isaria fumosorosea, Lecanicillium longisporum, L. muscarium (formerly Verticillium lecanii), Metarhizium anisopliae, M. anisopliae var. acridum, Paecilomyces fumosoroseus, P. lilacinus, Paenibacillus poppiliae, Pasteuria spp., P. nishizawae, P. reneformis, P. usagae, Pseudomonas fluorescens, Steinernema feltiae, Streptomces galbus;

L4.1) Biochemical pesticides with insecticidal, acaricidal, molluscidal, pheromone and/or nematicidal activity: L-carvone, citral, (E,Z)-7,9-dodecadien-1-yl acetate, ethyl formate, (E,Z)-2,4-ethyl decadienoate (pear ester), (Z,Z,E)-7,11,13-hexadecatrienal, heptyl butyrate, isopropyl myristate, lavanulyl senecioate, 2-methyl 1-butanol, methyl eugenol, methyl jasmonate, (E,Z)-2,13-octadecadien-1-ol, (E,Z)-2,13-octadecadien-1-ol acetate, (E,Z)-3,13-octadecadien-1-ol, R-1-octen-3-ol, pentatermanone, potassium silicate, sorbitol actanoate, (E,Z,Z)-3,8,11-tetradecatrienyl acetate, (Z,E)-9,12-tetradecadien-1-yl acetate, Z-7-tetradecen-2-one, Z-9-tetradecen-1-yl acetate, Z-11-tetradecenal, Z-11-tetradecen-1-ol, Acacia negra extract, extract of grapefruit seeds and pulp, extract of Chenopodium ambrosiodae, Catnip oil, Neem oil, Quillay extract, Tagetes oil;

L5.1) Microbial pesticides with plant stress reducing, plant growth regulator, plant growth promoting and/or yield enhancing activity: Azospirillum amazonense A. brasilense, A. lipoferum, A. irakense, A. halopraeferens, Bradyrhizobium sp., B. japonicum, Glomus intraradices, Mesorhizobium sp., Paenibacillus alvei, Penicillium bilaiae, Rhizobium leguminosarum bv. phaseolii, R. I. trifolii, R. I. bv. viciae, Sinorhizobium meliloti;

L6.1) Biochemical pesticides with plant stress reducing, plant growth regulator and/or plant yield enhancing activity: abscisic acid, aluminium silicate (kaolin), 3-decen-2-one, homobrassinlide, humates, lysophosphatidyl ethanolamine, polymeric polyhydroxy acid, Ascophyllum nodosum (Norwegian kelp, Brown kelp) extract and Ecklonia maxima (kelp) extract.

In the following, the components I, II and III used in the inventive compositions are further detailed and preferences and embodiments are outlined. Any of the embodiments and preferences given for a particular component can also be combined with any of the embdiments and preferences given for one or more further component/s of the inventive compositions.

The components I can be obtained by various routes in analogy to prior art processes known (cf. J.Agric. Food Chem. (2009) 57, 4854-4860; EP 0 275 955 A1; DE 40 03 180 A1; EP 0 113 640 A2; EP 0 126 430 A2). Furthermore, the components I, their preparation and use in crop protection are described in WO 2013/007767 (PCT/EP2012/063626), WO 2013/024076 (PCT/EP2012/065835), WO 2013/024075 (PCT/EP2012/065834), ), WO 2013/024077 (PCT/EP2012/065836), WO 2013/024081 (PCT/EP2012/065848), WO 2013/024080 (PCT/EP2012/065847), WO 2013/024083 (PCT/EP2012/065852) WO 2013/010862 (PCT/EP2012/063526), WO 2013/010894 (PCT/EP2012/063635), WO 2013/010885 (PCT/EP2012/063620), WO 2013/024082 (PCT/EP2012/065850), which also disclose certain compositions with other active compounds. Owing to the basic character of their nitrogen atoms, compounds I-1, I-2, I-3, I-4, I-5, I-6, I-7, I-8, I-9, I-10, I-11, i-12, I-13, I-14, I-15, I-16, I-17, I-18, I-19, I-20, I-21, I-22, I-23, I-24, I-25, I-26, I-27, I-28, I-29, I-30 and I-31, is capable of forming salts or adducts with inorganic or organic acids or with metal ions, in particular salts with inorganic acids or N-oxides.

Compounds I-1 to I-31 used as component I in the inventive compositions are the following fungicidal compounds:

compound I-1 2-[2-chloro-4-(4-chlorophenoxy)phenyl]-1-(1,2,4-triazol-1-yl)pent-3-yn-2-ol;
compound I-2 1-[2-chloro-4-(4-chlorophenoxy)phenyl]-1-cyclopropyl-2-(1,2,4-triazol-1-yl)ethanol;
compound I-3 2-[4-(4-chlorophenoxy)-2-(trifluoromethyl) phenyl]-1-(1,2,4-triazol-1-yl)propan-2-ol;

(continued)

| | |
|---|---|
| compound I-4 | 1-[4-(4-chlorophenoxy)-2-(trifluoromethyl) phenyl]-1-cyclopropyl-2-(1,2,4-triazol-1-yl)ethanol; |
| compound I-5 | 2-[4-(4-chlorophenoxy)-2-(trifluoromethyl) phenyl]-3-methyl-1-(1,2,4-triazol-1-yl)butan-2-ol; |
| compound I-6 | 1-[2-[2-chloro-4-(4-chlorophenoxy)phenyl]-2-methoxy-pent-3-ynyl]-1,2,4-triazole; |
| compound I-7 | 2-[4-(4-chlorophenoxy)-2-(trifluoromethyl) phenyl]-1-(1,2,4-triazol-1-yl)butan-2-ol; |
| compound I-8 | 1-[2-[2-chloro-4-(4-chlorophenoxy)phenyl]-2-cyclopropyl-2-methoxy-ethyl]-1,2,4-triazole; |
| compound I-9 | 1-[2-[4-(4-chlorophenoxy)-2-(trifluoromethyl)phenyl]-2-methoxy-propyl]-1,2,4-triazole; |
| compound I-10 | 2-[2-chloro-4-(4-chlorophenoxy)phenyl]-3,3-dimethyl-1-(1,2,4-triazol-1-yl)butan-2-ol, |
| compound I-11 | 1-[2-[4-(4-chlorophenoxy)-2-(trifluoromethyl)phenyl]-2-cyclopropyl-2-methoxy-ethyl]-1,2,4-triazole; |
| compound I-12 | 2-[2-trifluoromethyl-4-(4-chlorophenoxy)phenyl]-1-methoxy-3-(1,2,4-triazol-1-yl)propan-2-ol; |
| compound I-13 | 1-[2-[4-(4-chlorophenoxy)-2-(trifluoromethyl)phenyl]-2-methoxy-butyl] 1,2,4-triazole; |
| compound I-14 | 2-[4-(4-chlorophenoxy)-2-(trifluoromethyl) phenyl]-1-(1,2,4-triazol-1-yl)pent-3-yn-2-ol; |
| compound I-15 | 1-[2-[4-(4-chlorophenoxy)-2-(trifluoromethyl)phenyl]-2-methoxy-pent-3-ynyl]-1,2,4-triazole; |
| compound I-16 | 2-[4-(4-chlorophenoxy)-2-(trifluoromethyl) phenyl]-1-(1,2,4-triazol-1-yl)but-3-yn-2-ol; |
| compound I-17 | 2-[2-chloro-4-(4-chlorophenoxy)phenyl]-1-(1,2,4-triazol-1-yl)propan-2-ol; |
| compound I-18 | 2-[2-chloro-4-(4-fluorophenoxy)phenyl]-1-(1,2,4-triazol-1-yl)propan-2-ol; |
| compound I-19 | 2-[2-chloro-4-(4-chlorophenoxy)phenyl]-3-methyl-1-(1,2,4-triazol-1-yl)butan-2-ol; |
| compound I-20 | 1-[2-[2-chloro-4-(4-chlorophenoxy)phenyl]-2-methoxy-propyl]-1,2,4-triazole; |
| compound I-21 | 1-[2-[2-chloro-4-(4-chlorophenoxy)phenyl]-2-methoxy-butyl]-1,2,4-triazole; |
| compound I-22 | 1-[2-[2-chloro-4-(4-chlorophenoxy)phenyl]-2-methoxy-pentyl]-1,2,4-triazole; |
| compound I-23 | 2-[2-chloro-4-(4-chlorophenoxy)phenyl]-1,1,-trifluoro-3-(1,2,4-triazol-1-yl)propan-2-ol; |
| compound I-24 | 2-[2-chloro-4-(4-chlorophenoxy)phenyl]-3-fluoro-1-(1,2,4-triazol-1-yl)butan-2-ol hydrochloride; |
| compound I-25 | 2-[2-chloro-4-(4-chlorophenoxy)phenyl]-1-(1,2,4-triazol-1-yl)pent-4-yn-2-ol; |
| compound I-26 | 2-[2-chloro-4-(4-chlorophenoxy)phenyl]-1-methoxy-3-(1,2,4-triazol-1-yl)propan-2-ol; |
| compound I-27 | 2-[2-chloro-4-(4-fluorophenoxy)phenyl]-1-methoxy-3-(1,2,4-triazol-1-yl)propan-2-ol; |
| compound I-28 | 2-[4-(4-chlorophenoxy)-2-(trifluoromethyl) phenyl]-1-(1,2,4-triazol-1-yl)pentan-2-ol; |
| compound I-29 | 2-[4-(4-fluorophenoxy)-2-(trifluoromethyl)phenyl]-1-(1,2,4-triazol-1-yl)propan-2-ol; |
| compound I-30 | 2-[2-chloro-4-(4-chlorophenoxy)phenyl]-1-(1,2,4-triazol-1-yl)butan-2-ol; and |
| compound I-31 | 2-[2-chloro-4-(4-chlorophenoxy)phenyl]-1-(1,2,4-triazol-1-yl)pentan-2-ol. |

In each case, the respective N-oxide and the agriculturally acceptable salts of the compounds as further defined below are encompassed. Compounds I-1 to I-31 comprise chiral centers and they are generally obtained in the form of racemates. The R- and S-enantiomers of the compounds contained as component I in the compositions according to the invention can be separated and isolated in pure form with methods known by the skilled person, e.g. by using chiral HPLC. Suitable for use in the compositions are both the enantiomers and compositions thereof. Furthermore, said components I can be present in different crystal modifications, which may differ in biological activity.

In particular, in each case, a racemic composition of the respective components I, namely of compound I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 or I-31, respectively, is present. Furthermore, any other proportions of the (R)-enantiomer and the (S)-enantiomer of the respective compound I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 or I-31, respectively, may be present according to the present invention. For example, the (R)-enantiomer of compound I-3 is (R)-2-[4-(4-chlorophenoxy)-2-(trifluoromethyl)phenyl]-1-(1,2,4-triazol-1-yl)propan-2-ol; the S-enantiomer of I-3 is (S)-2-[4-(4-chlorophenoxy)-2-(trifluoromethyl)phenyl]-1-(1,2,4-triazol-1-yl)propan-2-ol. This applies to the other compounds accordingly.

According to one specific embodiment, the respective compound I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 or I-31, respectively, is provided and used as (R)-enantiomer with an enantiomeric excess (e.e.) of at least 40%, for example, at least 50%, 60%, 70% or 80%, preferably at least 90%, more preferably at least 95%, yet more preferably at least 98% and most preferably at least 99%. According to a further specific embodiment, the respective compound I-1, I-2, I-3, I-4, I-5, I-6, I-7, I-8, I-9, I-10, I-11, I-12, I-13, I-14, I-15, I-16, I-17, I-18, I-19, I-20, I-21, I-22, I-23, I-24, I-25, I-26, I-27, I-28, I-29, I-30 or I-31, respectively, is provided and used as (S)-enantiomer with an enantiomeric excess (e.e.) of at least 40%, for example, at least 50%, 60%, 70% or 80%, preferably at least 90%, more preferably at least 95%, yet more preferably at least 98% and most preferably at least 99%.

This applies to every composition detailled herein.

According to one embodiment of the invention, component I is compound I-1.

According to a further embodiment of the invention, component I is compound I-2.

According to a further embodiment of the invention, component I is compound I-3.

According to still a further embodiment of the invention, component I is compound I-4.

According to still a further embodiment of the invention, component I is compound I-5.

According to still a further embodiment of the invention, component I is compound I-6.

According to still a further embodiment of the invention, component I is compound I-7.

According to still a further embodiment of the invention, component I is compound I-8.

According to still a further embodiment of the invention, component I is compound I-9.

According to still a further embodiment of the invention, component I is compound I-10.

According to still a further embodiment of the invention, component I is compound I-11.

According to still a further embodiment of the invention, component I is compound I-12.

According to still a further embodiment of the invention, component I is compound I-13.

According to still a further embodiment of the invention, component I is compound I-14.

According to still a further embodiment of the invention, component I is compound I-15.

According to still a further embodiment of the invention, component I is compound I-16.

According to one further embodiment of the invention, component I is compound I-17.

According to still a further embodiment of the invention, component I is compound I-18.

According to still a further embodiment of the invention, component I is compound I-19.

According to still a further embodiment of the invention, component I is compound I-20.

According to still a further embodiment of the invention, component I is compound I-21.

According to still a further embodiment of the invention, component I is compound I-22.

According to still a further embodiment of the invention, component I is compound I-23.

According to still a further embodiment of the invention, component I is compound I-24.

According to still a further embodiment of the invention, component I is compound I-25.

According to still a further embodiment of the invention, component I is compound I-26.

According to still a further embodiment of the invention, component I is compound I-27.

According to still a further embodiment of the invention, component I is compound I-28.

According to still a further embodiment of the invention, component I is compound I-29.

According to still a further embodiment of the invention, component I is compound I-30.

According to still a further embodiment of the invention, component I is compound I-31.

According to one further embodiment of the present invention, component I is selected from compounds I-1, I-2, I-3, I-4, I-5, I-6, I-7, I-8, I-9, I-11, I-13, I-14, I-15 and I-16. According to a more particular embodiment of the present invention, component I is selected from compounds I-1, I-2, I-6 and I-8. According to another more particular embodiment of the present invention, component I is selected from compounds I-3, I-4, I-5, I-7, I-9, I-11, I-13, I-14, I-15 and I-16. According to still a further embodiment of the present invention, component I is selected from compounds I-1, I-2, I-3, I-4, I-5 and I-13, more specifically selected from compounds I-1, I-2, I-3, I-4 and I-5. According to still a further embodiment of the present invention, component I is selected from compounds I-1, I-4 and I-13. According to still a further embodiment of the present invention, component I is selected from compounds I-3 and I-5.

According to a further embodiment of the present invention, component I is selected from compounds I-17, I-18, I-19, I-20, I-21, I-22, I-23, I-24, I-25, I-26, I-27, I-28, I-29, I-30 and I-31.

The preparation of the compounds of formula II is described in WO2010/034737, WO2012/084670, WO2012/143317, and US 61/891437. The term "stereoisomers" with respect to compounds of formula II encompasses both optical isomers, such as enantiomers or diastereomers, the latter existing due to more than one center of chirality in the molecule, as well as geometrical isomers (cis/trans isomers).

Depending on the substitution pattern, the compounds of formula II may have one or more centers of chirality, in which case they are present as mixtures of enantiomers or diastereomers. One center of chirality is the carbon atom carrying radicals $R^3$, $R^4$ and $R^5$. The invention provides both the pure enantiomers or diastereomers and their mixtures and the use according to the invention of the pure enantiomers or diastereomers of the compound I or its mixtures. Suitable compounds of the formula I also include all possible geometrical stereoisomers (cis/trans isomers) and mixtures thereof.

The compounds of the formula II may be amorphous or may exist in one ore more different crystalline states (polymorphs) which may have a different macroscopic properties such as stability or show different biological properties such as activities. The present invention includes both amorphous and crystalline compounds of the formula I, mixtures of different crystalline states of the respective compound I, as well as amorphous or crystalline salts thereof.

The organic moieties mentioned in the above definitions of the variables are - like the term halogen - collective terms for individual listings of the individual group members. The prefix $C_n$-$C_m$ indicates in each case the possible number

of carbon atoms in the group.

The term "halogen" denotes in each case fluorine, bromine, chlorine or iodine, in particular fluorine, chlorine or bromine.

The term "alkyl" as used herein and in the alkyl moieties of alkylthio (also referred to as alkylsulfanyl), alkylsulfinyl, and alkylsulfonyl denotes in each case a straight-chain or branched alkyl group having usually from 1 to 6 carbon atoms, preferably 1 to 4 carbon atoms and in particular from 1 to 3 carbon atoms. Examples of an alkyl group are methyl, ethyl, n-propyl, isopropyl, n-butyl, 2-butyl, iso-butyl, tert-butyl, n-pentyl, 1-methylbutyl, 2-methylbutyl, 3-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, and 1-ethyl-2-methylpropyl.

The term "alkenyl" as used herein denotes in each case a singly unsaturated hydrocarbon radical having usually 2 to 6, preferably 2 to 4 carbon atoms, e.g. vinyl, allyl (2-propen-1-yl), 1-propen-1-yl, 2-propen-2-yl, methallyl (2-methylprop-2-en-1-yl), 2-buten-1-yl, 3-buten-1-yl, 2-penten-1-yl, 3-penten-1-yl, 4-penten-1-yl, 1-methylbut-2-en-1-yl, 2-ethylprop-2-en-1-yl and the like.

The term "alkynyl" as used herein denotes in each case a singly unsaturated hydrocarbon radical having usually 2 to 6, preferably 2 to 4 carbon atoms, e.g. ethynyl, propargyl (2-propyn-1-yl), 1-propyn-1-yl, 1-methylprop-2-yn-1-yl), 2-butyn-1-yl, 3-butyn-1-yl, 1-pentyn-1-yl, 3-pentyn-1-yl, 4-pentyn-1-yl, 1-methylbut-2-yn-1-yl, 1-ethylprop-2-yn-1-yl and the like.

The term "haloalkyl" as used herein and in the haloalkyl moieties of haloalkoxy, haloalkylthio, haloalkylsulfonyl and haloalkylsulfinyl, denotes in each case a straight-chain or branched alkyl group having usually from 1 to 6 carbon atoms, frequently from 1 to 4 carbon atoms, wherein the hydrogen atoms of this group are partially or totally replaced with halogen atoms. Preferred haloalkyl moieties are selected from $C_1$-$C_2$-haloalkyl, in particular from $C_1$-$C_2$-fluoroalkyl such as fluoromethyl, difluoromethyl, trifluoromethyl, 1-fluoroethyl, 2-fluoroethyl, 2,2-difluoroethyl, 2,2,2-trifluoroethyl, pentafluoroethyl, and the like.

The term "alkoxy" as used herein denotes in each case a straight-chain or branched alkyl group which is bound via an oxygen atom and has usually from 1 to 6 carbon atoms, preferably 1 to 4 carbon atoms. Examples of an alkoxy group are methoxy, ethoxy, n-propoxy, iso-propoxy, n-butyloxy, 2-butyloxy, iso-butyloxy, tert.-butyloxy, and the like.

The term "haloalkoxy" as used herein denotes in each case a straight-chain or branched alkoxy group having preferably 1 or 2 carbon atoms, wherein the hydrogen atoms of this group are partially or totally replaced with halogen atoms, in particular fluorine atoms. Preferred haloalkoxy moieties include $C_1$-$C_4$-haloalkoxy, in particular $C_1$-$C_2$-fluoroalkoxy, such as fluoromethoxy, difluoromethoxy, trifluoromethoxy, 1-fluoroethoxy, 2-fluoroethoxy, 2,2-difluoroethoxy, 2,2,2-trifluoroethoxy, 2-chloro-2-fluoroethoxy, 2-chloro-2,2-difluoro-ethoxy, 2,2-dichloro-2-fluorethoxy, 2,2,2-trichloroethoxy, pentafluoroethoxy and the like.

The term "alkoxyalkyl" as used herein refers to alkyl usually comprising 1 to 2 carbon atoms, wherein 1 carbon atom carries an alkoxy radical usually comprising 1 or 2 carbon atoms as defined above. Examples are $CH_2OCH_3$, $CH_2$-$OC_2H_5$, 2-(methoxy)ethyl, and 2-(ethoxy)ethyl.

The term "cycloalkyl" as used herein denotes in each case a monocyclic cycloaliphatic radical having usually from 3 to 6 carbon atoms. Examples are cyclopropyl (C-$C_3H_5$), cyclobutyl (c-$C_4H_7$), cyclopentyl (c-$C_5H_9$), and cyclohexyl (c-$C_6H_{11}$).

The term "cycloalkenyl" as used herein denotes in each case a monocyclic monounsaturated hydrocarbon group having 5 or 6 carbon ring members. Examples are cyclopenten-1-yl, cyclopenten-3-yl, cyclohexen-1-yl, cyclohexen-3-yl and cyclohexen-4-yl.

The remarks made as to preferred embodiments of the variables (substituents) of the compounds of formula II are to be understood as preferred on their own as well as preferably in combination with each other, as well as in combination with stereoisomers, tautomers, N-oxides or salts of the compounds of formula II. The preferred embodiments of the variables of the compounds of formula II are defined hereinafter.

In one embodiment, $R^1$ is H, $CH_3$, $C_2H_5$, or $CH_2OCH_3$, preferably $CH_3$, or $C_2H_5$.

In one embodiment, $R^2$ is $CH_3$.

In one embodiment, $R^3$ is $C_1$-$C_6$-alkyl, $C_1$-$C_6$-haloalkyl, $C_3$-$C_6$-cycloalkyl, wherein the C-atoms may be unsubstituted, or partially or fully substituted by halogen, or CN.

In a preferred embodiment, $R^3$ is $CH_3$, $C_2H_5$, $CH(CH_3)_2$, $CH_2CH_2CH_3$, $CF_3$, $CHFCH_3$, cyclopropyl, wherein the ring is substituted by halogen, or CN.

In a further preferred embodiment, $R^3$ is $CH_3$, $CH(CH_3)_2$, $CF_3$, $CHFCH_3$, 1-CN-C-$C_3H_4$.

In one embodiment, $R^4$ is $C_1$-$C_4$-alkyl, preferably $CH_3$.

In another embodiment $R^3$ and $R^4$ together form $C_5$-$C_6$-cycloalkyl, wherein the C-atoms may be unsubstituted, or partially or fully substituted by halogen, or CN.

In one embodiment, $R^5$ is H.

In another embodiment, $R^5$ is H, and $R^4$ is $CH_3$.

In a further embodiment, $R^1$ is $CH_3$ or $C_2H_5$, $R^2$ is $CH_3$, $R^5$ is H, and $R^4$ is $CH_3$, and $R^3$ is selected from $CH_3$, $CH(CH_3)_2$, $CF_3$, $CHFCH_3$, and 1-CN-c-$C_3H_4$.

In one embodiment, the compound of formula II is a compound of formula IIA as depicted below, wherein $R^2$ is $CH_3$ and $R^5$ is H.

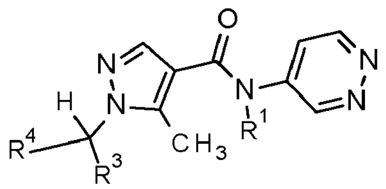

IIA

For the compounds of formula IIA, it is particularly preferred that $R^1$ is H, $CH_3$, $C_2H_5$, or $CH_2OCH_3$.

Furthermore, it is preferred for the compounds of formula IIA that $R^3$ is $CH_3$, $C_2H_5$, $CH(CH_3)_2$, $CH_2CH_2CH_3$, $CF_3$, $CHFCH_3$, cyclopropyl, wherein the ring is substituted by halogen, or CN, and that $R^4$ is $C_1$-$C_4$-alkyl, or that $R^3$ and $R^4$ together form $C_5$-$C_6$-cycloalkyl, which is unsubstituted, or partially or fully substituted by halogen, or CN.

Particularly preferred compounds of formula II are compounds of formula IIA, wherein the variables $R^1$, $R^3$, and $R^4$ correspond to one row of table II below. Said compounds are referred to as compounds II-1 to II-18 in accordance with each row of table II.

Table II

| No | $R^1$ | $R^3$ | $R^4$ |
|---|---|---|---|
| II-1 | $CH_3$ | $CH_3$ | $CH_3$ |
| II-2 | $CH_2CH_3$ | $CH(CH_3)_2$ | $CH_3$ |
| II-3 | $CH_3$ | $CF_3$ | $CH_3$ |
| II-4 | $CH_2CH_3$ | 1-CN-c-$C_3H_4$ | $CH_3$ |
| II-5 | $CH_2CH_3$ | $CHFCH_3$ | $CH_3$ |
| II-6 | $CH_3$ | $CH(CH_3)_2$ | $CH_3$ |
| II-7 | $CH_3$ | 1-CN-c-$C_3H_4$ | $CH_3$ |
| II-8 | $CH_3$ | $CHFCH_3$ | $CH_3$ |
| II-9 | $CH_2CH_3$ | $CH_2CH_2CF_2CH_2CH_2$ | |
| II-10 | $CH_3$ | $CH_2CH_2CF_2CH_2CH_2$ | |
| II-11 | $CH_2CH_3$ | $CH_3$ | $CH_3$ |
| II-12 | $CH_2CH_3$ | $CF_3$ | $CH_3$ |
| II-13 | $CH_2OCH_3$ | $CH_3$ | $CH_3$ |
| II-14 | $CH_2OCH_3$ | $CF_3$ | $CH_3$ |
| II-15 | $CH_2OCH_3$ | $CH(CH_3)_2$ | $CH_3$ |
| II-16 | $CH_2OCH_3$ | 1-CN-c-$C_3H_4$ | $CH_3$ |
| II-17 | $CH_2OCH_3$ | $CHFCH_3$ | $CH_3$ |
| II-18 | $CH_2OCH_3$ | $CH_2CH_2CF_2CH_2CH_2$ | |

With regard to the compounds II-2, II-3, II-4, II-5, II-6, II-7, II-8, II-12, II-14, II-15, II-16, II-17, it is to be understood, as explained above, that the compounds may be present in two enantiomeric forms, which are all understood to be encompassed by the present invention, either in isolated form or as a mixture.

Salts of the compounds are preferably agriculturally acceptable salts. They can be formed in a customary method, e.g. by reacting the compound with an acid of the anion in question if the respective compound has a basic functionality or by reacting an acidic compound with a suitable base.

Suitable agriculturally acceptable salts are especially the salts of those cations or the acid addition salts of

those acids whose cations and anions, respectively, do not have any adverse effect on the action of the compounds according to the present invention. Examples of inorganic acids are hydrohalic acids, such as hydrogen fluoride, hydrogen chloride, hydrogen bromide and hydrogen iodide, carbonic acid, sulfuric acid, phosphoric acid and nitric acid.

Suitable organic acids are, for example, formic acid and alkanoic acids, such as acetic acid, trifluoroacetic acid, trichloroacetic acid and propionic acid, and also glycolic acid, thiocyanic acid, lactic acid, succinic acid, citric acid, benzoic acid and other arylcarboxylic acids, cinnamic acid, oxalic acid, alkylsulfonic acids (sulfonic acids having straight-chain or branched alkyl radicals of 1 to 20 carbon atoms), arylsulfonic acids or aryldisulfonic acids (aromatic radicals, such as phenyl and naphthyl, which carry one or two sulfonic acid groups), alkylphosphonic acids (phosphonic acids having straight-chain or branched alkyl radicals with 1 to 20 carbon atoms), arylphosphonic acids or aryldiphosphonic acids (aromatic radicals, such as phenyl and naphthyl, which carry one or two phosphoric acid radicals), where the alkyl or aryl radicals may carry further substituents, for example p-toluenesulfonic acid, salicylic acid, p-aminosalicylic acid, 2-phenoxybenzoic acid, 2-acetoxybenzoic acid etc. Suitable metal ions are in particular the ions of the elements of the second main group, in particular calcium and magnesium, of the third and fourth main group, in particular aluminum, tin and lead, and also of the elements of transition groups one to eight, in particular chromium, manganese, iron, cobalt, nickel, copper, zinc, and others. Particular preference is given to the metal ions of the elements of transition groups of the fourth period. The metals can be present in the various valencies that they can assume.

Suitable cations are in particular the ions of the alkali metals, preferably lithium, sodium and potassium, of the alkaline earth metals, preferably calcium, magnesium and barium, and of the transition metals, preferably manganese, copper, zinc and iron, and also ammonium ($NH^{4+}$) and substituted ammonium in which one to four of the hydrogen atoms are replaced by $C_1$-$C_4$-alkyl, $C_1$-$C_4$-hydroxyalkyl, $C_1$-$C_4$-alkoxy, $C_1$-$C_4$-alkoxy-$C_1$-$C_4$-alkyl, hydroxy-$C_1$-$C_4$-alkoxy-$C_1$-$C_4$-alkyl, phenyl or benzyl. Examples of substituted ammonium ions comprise methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)ethylammonium, bis(2-hydroxyethyl)ammonium, benzyltrimethylammonium and benzl-triethylammonium, furthermore phosphonium ions, sulfonium ions, preferably tri($C_1$-$C_4$-alkyl)sulfonium, and sulfoxonium ions, preferably tri($C_1$-$C_4$-alkyl)sulfoxonium.

Anions of useful acid addition salts are primarily chloride, bromide, fluoride, hydrogen sulfate, sulfate, dihydrogen phosphate, hydrogen phosphate, phosphate, nitrate, hydrogen carbonate, carbonate, hexafluorosilicate, hexafluorophosphate, benzoate, and the anions of $C_1$-$C_4$-alkanoic acids, preferably formate, acetate, propionate and butyrate. They can be formed by reacting a respective compound with an acid of the corresponding anion, preferably of hydrochloric acid, hydrobromic acid, sulfuric acid, phosphoric acid or nitric acid.

The compounds used in the compositions of the present invention may be present in the form of their N-oxides. The term "N-oxide" includes any compound used in the compositions of the present invention which has at least one tertiary nitrogen atom that is oxidized to an N-oxide moiety. N-oxides of compounds of the present invention can in particular be prepared by oxidizing a ring nitrogen atom(s) of a heterocyclic ring with a suitable oxidizing agent, such as peroxo carboxylic acids or other peroxides. The person skilled in the art knows if and in which positions N-oxides may be formed.

In every of the following tables (such as T1, T2 etc.), each row corresponds to one embodiment of the compositions according to the invention, i.e. one specifically individualized composition with the name of the respective composition given in the first column of the respective row in the table (e.g. T1-3). According to one specific aspect, said compositions are ternary compositions, containing only these three components, respectively, given in the respective row of the table as active compounds. Furthermore, also every combination of the compositions individualized in the tables represent embodiments of the present invention.

According to one embodiment, component II is selected selected from the group of compounds consisting of 1-isopropyl-N,5-dimethyl-N-pyridazin-4-yl-pyrazole-4-carboxamide (II-1), 1-(1,2-dimethylpropyl)-N-ethyl-5-methyl-N-pyridazin-4-yl-pyrazole-4-carboxamide (II-2), N,5-dimethyl-N-pyridazin-4-yl-1-(2,2,2-trifluoro-1-methyl-ethyl)pyrazole-4-carboxamide (II-3), 1-[1-(1-cyanocyclopropyl)ethyl]-N-ethyl-5-methyl-N-pyridazin-4-yl-pyrazole-4-carboxamide (II-4), N-ethyl-1-(2-fluoro-1-methyl-propyl)-5-methyl-N-pyridazin-4-yl-pyrazole-4-carboxamide (II-5), 1-(1,2-dimethylpropyl)-N,5-dimethyl-N-pyridazin-4-yl-pyrazole-4-carboxamide (II-6), 1-[1-(1-cyanocyclopropyl)ethyl]-N,5-dimethyl-N-pyridazin-4-yl-pyrazole-4-carboxamide (II-7), N-methyl-1-(2-fluoro-1-methyl-propyl]-5-methyl-N-pyridazin-4-yl-pyrazole-4-carboxamide (II-8), 1-(4,4-difluorocyclohexyl)-N-ethyl-5-methyl-N-pyridazin-4-yl-pyrazole-4-carboxamide (II-9), 1-(4,4-difluorocyclohexyl)-N,5-dimethyl-N-pyridazin-4-yl-pyrazole-4-carboxamide (II-10), N-ethyl-1-isopropyl-5-methyl-N-pyridazin-4-yl-pyrazole-4-carboxamide (II-11), N-ethyl-5-methyl-N-pyridazin-4-yl-1-(2,2,2-trifluoro-1-methyl-ethyl)pyrazole-4-carboxamide (II-12), 1-isopropyl-N-(methoxymethyl)-5-methyl-N-pyridazin-4-yl-pyrazole-4-carboxamide (II-13), N-(methoxymethyl)-5-methyl-N-pyridazin-4-yl-1-(2,2,2-trifluoro-1-methyl-ethyl)pyrazole-4-carboxamide (II-14), 1-(1,2-dimethylpropyl)-N-(methoxymethyl)-5-methyl-N-pyridazin-4-yl-pyrazole-4-carboxamide (11-15), 1-[1-(1-cyanocyclopropyl)ethyl]-N-(methoxymethyl)-5-methyl-N-pyridazin-4-yl-pyrazole-4-carboxamide (II-16), 1-(2-fluoro-1-methyl-propyl)-N-(methoxymethyl)-5-methyl-N-pyridazin-4-yl-pyrazole-4-carboxamide (II-17) and 1-(4,4-difluorocyclohexyl)-N-(methoxymethyl)-5-methyl-N-pyridazin-4-yl-pyrazole-4-carboxamide (II-18); and the stereoisomers, salts,

tautomers and N-oxides of each of the compounds.

According to a further embodiment, said compositions are ternary compositions that contain only said component I selected from I-1 to I-31 and component II selected from II-1 to II-18 and the component III as defined and preferably defined herein as active ingredients.

In particular, according to one specific embodiment, component II is II-1.

According to a further specific embodiment, component II is II-2.

According to a further specific embodiment, component II is II-3.

According to a further specific embodiment, component II is II-4.

According to a further specific embodiment, component II is II-5.

According to a further specific embodiment, component II is II-6.

According to a further specific embodiment, component II is II-7.

According to a further specific embodiment, component II is II-8.

According to a further specific embodiment, component II is II-9.

According to a further specific embodiment, component II is II-10.

According to a further specific embodiment, component II is II-11.

According to a further specific embodiment, component II is II-12.

According to a further specific embodiment, component II is II-13.

According to a further specific embodiment, component II is II-14.

According to a further specific embodiment, component II is II-15.

According to a further specific embodiment, component II is II-16.

According to a further specific embodiment, component II is II-17.

According to a further specific embodiment, component II is II-18.

The component III is a "biopesticide".

A pesticide is generally a chemical or biological agent (such as pestidal active ingredient, compound, composition, virus, bacterium, antimicrobial or disinfectant) that through its effect deters, incapacitates, kills or otherwise discourages pests. Target pests can include insects, plant pathogens, weeds, mollusks, birds, mammals, fish, nematodes (roundworms), and microbes that destroy property, cause nuisance, spread disease or are vectors for disease. The term "pesticide" includes also plant growth regulators that alter the expected growth, flowering, or reproduction rate of plants; defoliants that cause leaves or other foliage to drop from a plant, usually to facilitate harvest; desiccants that promote drying of living tissues, such as unwanted plant tops; plant activators that activate plant physiology for defense of against certain pests; safeners that reduce unwanted herbicidal action of pesticides on crop plants; and plant growth promoters that affect plant physiology e.g. to increase plant growth, biomass, yield or any other quality parameter of the harvestable goods of a crop plant.

Biopesticides are typically created by growing and concentrating naturally occurring organisms and/or their metabolites including bacteria and other microbes, fungi, viruses, nematodes, proteins, etc. They are often considered to be important components of integrated pest management (IPM) programmes, and have received much practical attention as substitutes to synthetic chemical plant protection products (PPPs).

Biopesticides fall into two major classes, microbial and biochemical pesticides:

(1) Microbial pesticides consist of bacteria, fungi or viruses (and often include the metabolites that bacteria and fungi produce). Entomopathogenic nematodes are also classed as microbial pesticides, even though they are multicellular.

(2) Biochemical pesticides are naturally occurring substances that control pests or provide other crop protection uses as defined below, but are relatively non-toxic to mammals.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of a ternary composition may be mixed by the user himself in a spray tank or any other kind of vessel used for applications (e. g. seed treater drums, seed pelleting machinery, knapsack sprayer) and further auxiliaries may be added, if appropriate.

When living microorganisms, such as microbial pesticides from groups L1), L3) and L5), form part of such kit, it must be taken care that choice and amounts of the components (e. g. chemical pesticides) and of the further auxiliaries should not influence the viability of the microbial pesticides in the composition mixed by the user. Especially for bactericides and solvents, compatibility with the respective microbial pesticide has to be taken into account. Consequently, one

embodiment of the invention is a kit for preparing a usable pesticidal composition, the kit comprising a) a composition comprising component I as defined herein and at least one auxiliary; and b) a composition comprising component II as defined herein and at least one auxiliary; and optionally c) a composition comprising at least one auxiliary and optionally a further active component III as defined herein.

Many of these biopesticides used according to the invention have been deposited under deposition numbers mentioned herein (the prefices refer to the acronym of the respective culture collection), are referred to in literature, registered and/or are commercially available: aluminium silicate (Screen™ Duo from Certis LLC, USA), *Agrobacterium radiobacter* K1026 (e. g. NoGall® from BASF Agricultural Specialties Pty Ltd, Australia), *A. radiobacter* K84 (Nature 280, 697-699, 1979; e. g. GallTroll® from AG Biochem, Inc., C, USA), *Ampelomyces quisqualis* M-10 (e. g. AQ 10® from Intrachem Bio GmbH & Co. KG, Germany), *Ascophyllum nodosum* (Norwegian kelp, Brown kelp) extract or filtrate (e. g. ORKA GOLD from BASF Agricultural Specialities (Pty) Ltd., South Africa; or Goemar® from Laboratoires Goemar, France), *Aspergillus flavus* NRRL 21882 isolated from a peanut in Georgia in 1991 by USDA, National Peanut Research Laboratory (e. g. in Afla-Guard® from Syngenta, CH), compositions of *Aureobasidium pullulans* DSM 14940 and DSM 14941 (e. g. blastospores in Blossom Protect® from bio-ferm GmbH, Germany), *Azospirillum amazonense* SpY2 (DN: BR 11140; Proc. 9th Int. and 1st Latin American PGPR meeting, Quimara, Medellín, Colombia 2012, p. 60, ISBN 978-958-46-0908-3), *A. brasilense* AZ39 (also called Az 39; INTA Az-39; Eur. J. Soil Biol 45(1), 28-35, 2009), *A. brasilense* XOH (e. g. AZOS from Xtreme Gardening, USA or RTI Reforestation Technologies International; USA), *A. brasilense* BR 11002 (Proc. 9th Int. and 1st Latin American PGPR meeting, Quimara, Medellín, Colombia 2012, p. 60, ISBN 978-958-46-0908-3), *A. brasilense* Sp245 (BR 11005; e. g. in GELFIX Gramineas from BASF Agricultural Specialties Ltd., Brazil), *A. brasilense* strains Ab-V5 and Ab-V6 (e. g. in AzoMax from Novozymes BioAg Produtos papra Agricultura Ltda., Quattro Barras, Brazil or SimbioseMaíz® from Simbiose-Agro, Cruz Alta, RS, Brazil; Plant Soil 331, 413-425, 2010), *A. lipoferum* BR 11646 (Sp31) (Proc. 9th Int. and 1st Latin American PGPR meeting, Quimara, Medellín, Colombia 2012, p. 60), *Bacillus altitudinis* 41 KF2b (DSM 21631; Int. J. Syst. Evol. Microbiol. 56(7), 1465-1473, 2006), *Bacillus amyloliquefaciens* strains AP-136 (NRRL B-50614 and B-50330), AP-188 (NRRL B-50615 and B-50331), AP-218 (NRRL B-50618), AP-219 (NRRL B-50619 and B-50332), and AP-295 (NRRL B-50620 and B-50333) all known from US 8,445,255; *B. amyloliquefaciens* IT-45 (CNCM I-3800) (e. g. Rhizocell C from ITHEC, France), *B. amyloliquefaciens* IN937a (J. Microbiol. Biotechnol. 17(2), 280-286, 2007; e. g. BioYield® from Gustafson LLC, TX, USA), *B. amyloliquefaciens* spp. *plantarum* D747 (US 20130236522 A1; FERM BP-8234; e. g. Double Nickel™ 55 WDG or Double Nickel™ LC from Certis LLC, USA), *B. amyloliquefaciens* spp. *plantarum* FZB24 isolated from plant pathogen-infested soil of a sugar beet field in Brandenburg, Germany (also called SB3615; DSM ID 96-2; J. Plant Dis. Prot. 105, 181-197, 1998; e. g. Taegro® from Novozyme Biologicals, Inc., USA), ), *B. amyloliquefaciens* spp. *plantarum* SB3615vPPI being a phage-resistant variant of FZB24 (MRRL B-50349; US 2011/023045 A1; from Novozyme Biologicals, Inc., USA), *B. amyloliquefaciens* ssp. *plantarum* FZB42 isolated from plant pathogen-infested soil of a sugar beet field in Brandenburg, Germany (J. Plant Dis. Prot. 105, 181-197, 1998; DSM 23117; e. g. RhizoVital® 42 from AbiTEP GmbH, Berlin, Germany), *B. amyloliquefaciens* ssp. *plantarum* GB03 (also called GBO3; ATCC SD-1397; Phytopathol. 86(11), S36, 1996; e. g. Kodiak® or BioYield® from Gustafson, Inc., USA; or Companion® from Growth Products, Ltd., White Plains, NY 10603, USA), *B. amyloliquefaciens* ssp. *plantarum* MB1600 also referred to as 1430 (NRRL B-50595; Int. J. Microbiol. Res. 3(2) (2011), 120-130; US 2012/0149571 A1; e. g. Integral®, Subtilex® NG from BASF Corp., USA), *B. amyloliquefaciens* spp. *plantarum* TJ 1000 (also called 1 BE; CA 2471555 A1; ATCC BAA-390; e. g. QuickRoots™ from TJ Technologies, Watertown, SD, USA), *B. cereus* CNCM I-1562 (US 6,406,690), *B. chitinosporus* AQ746 isolated from roots in Saskatchewan, Canada (NRRL B-21618; US 5,733,544; AgraQuest now Bayer CropScience LP, USA), *B. firmus* CNCM I-1582 (WO 2009/126473, WO 2009/124707, US 6,406,690; e. g. Votivo® from Bayer CropScience LP, USA), *B. megaterium* strains H491 (NRRL B-50769), M018 (NRRL B-50770) and J142 (NRRL B-50771) all known from US 2014/0051571 A1 from Marrone BioInnovations, Inc., USA; *B. mojavensis* AP-209 (NRRL B-50616; US 8,445,255), *B. mycoides* AQ726 (NRRL B-21664; US 5,906,818; from Bayer Crop Science, Germany), *B. mycoides* strain J (e.g. BmJ WG from Certis, USA against potato virus Y), *B. pumilus* GB34 (ATCC 700814; e. g. YieldShield® from Gustafson LLC, TX, USA), *B. pumilus* GHA 180 isolated from apple tree rhizosphere in Mexico (IDAC 260707-01; e. g. in PRO-MIX® BX from Premier Horticulture, 1, avenue Premier, Rivie're-du-Loup, Quebec, Canada G5R6C1), *B. pumilus* KFP9F (NRRL B-50754; WO 2014/029697; e. g. BAC-UP or FUSION-P from BASF Agricultural Specialities (Pty) Ltd., South Africa), *B. pumilus* INR-7 otherwise referred to as BU-F22 and BU-F33 (NRRL B-50185, NRRL B-50153; US 8,445,255), *B. pumilus* QST 2808 (NRRL B-30087; e. g. Sonata® or Ballad® Plus from AgraQuest Inc., USA), *B. solisalsi* AP-217 (NRRL B-50617; US 8,445,255), *B. subtilis* CX-9060 (Federal Register 77(7), 1633-1637; by Certis U.S.A., L.L.C.), *B. subtilis* FB17 also called UD 1022 or UD10-22 isolated from red beet roots in North America (ATCC PTA-11857; System. Appl. Microbiol. 27, 372-379, 2004; US 2010/0260735; WO 2011/109395); *B. subtilis* GB07 (Phytopathol. 86(11), S36, 1996; Epic® from Gustafson, Inc., USA), *B. subtilis* QST-713 isolated from a California peach orchard in 1995 (NRRL B-21661; e. g. Rhapsody®, Serenade® MAX or Serenade® ASO from AgraQuest Inc., USA), *B. thuringiensis* ssp. *aizawai* ABTS-1857 (also called ABG-6346; ATCC SD-1372; e. g. XenTari® from BioFa AG, Münsingen, Germany), *B. t.* ssp. *aizawai SAN* 401 I, ABG-6305 (WO 2013/087709); *Bacillus t.* ssp. *israelensis* AM65-52 of Serotype H-14 (ATCC

SD-1276; e. g. VectoBac® from Valent BioSciences, IL, USA), *Bacillus thuringiensis* ssp. *kurstaki* SB4 (NRRL B-50753; e. g. Beta Pro® from BASF Agricultural Specialities (Pty) Ltd., South Africa), *B. t.* ssp. *kurstaki* ABTS-351 identical to HD-1 (ATCC SD-1275; e. g. Dipel® DF from Valent BioSciences, IL, USA), *B. t.* ssp. *kurstaki* EG 2348 (NRRL B-18208; e. g. Lepinox® or Rapax® from CBC (Europe) S.r.l., Italy), *B. t.* ssp. *tenebrionis* DSM 2803 of Serotype H 8a, 8b (identical to NRRL B-15939; EP 0 585 215 B1; Mycogen Corp.), *B. t.* ssp. *tenebrionis* NB-125 (also referred to as SAN 418 I or ABG-6479; EP 0 585 215 B1; DSM 5526; former production strain of Novo-Nordisk), *B. t.* ssp. *tenebrionis* NB-176 (or NB-176-1; a gamma-irridated, induced high-yielding mutant of strain NB-125; EP 585 215 B1; DSM 5480; e. g. Novodor® from Valent BioSciences, Switzerland), *Beauveria bassiana* JW-1 (ATCC 74040; e. g. Naturalis® from CBC (Europe) S.r.l., Italy), *B. bassiana* DSM 12256 (US 200020031495; e. g. BioExpert® SC from Live Sytems Technology S.A., Colombia), *B. bassiana* GHA (ATCC 74250; e. g. BotaniGard® 22WGP from Laverlam Int. Corp., USA), *B. bassiana* PPRI 5339 (ARSEF 5339; NRRL 50757; e. g. BroadBand® from BASF Agricultural Specialities (Pty) Ltd., South Africa), *B. brongniartii* for control of cockchafer (J. Appl. Microbiol. 100(5),1063-72, 2006; e. g. Melocont® from Agrifutur, Agrianello, Italy), *Bradyrhizobium* sp. (e. g. Vault® from BASF Corp., USA), *B.* sp. (Arachis) CB1015 presumably originally collected in India (IITA 1006, USDA 3446; from Australian Inoculants Research Group; http://www.qaseeds.com.au/inoculant_applic.php). *B.* sp. (Arachis) strains deposited at SEMIA and known from FEMS Microbiol. Letters 303(2), 123-131, 2010; Revista Brasileira de Ciencia do Solo 35(3), 739-742, 2011, ISSN 0100-0683: SEMIA 6144, SEMIA 6462 (BR 3267) and SEMIA 6464 (BR 3262); *B.* sp. (Vigna) PNL01 (Bisson and Mason, April 29, 2010, Project report, Worcester Polytechnic Institute, Worcester, MA, USA: http://www.wpi.edu/Pubs/E-project/Available/E-project-042810-163614/; e. g. Vault® Peanut Liquid from BASF Corp., USA), *B. elkanii* SEMIA 587 (Appl. Environ. Microbiol. 73(8), 2635, 2007; e. g. GELFIX 5 from BASF Agricultural Specialties Ltd., Brazil), *B. elkanii SEMIA* 5019 (=29W; Appl. Environ. Microbiol. 73(8), 2635, 2007; e. g. GELFIX 5 from BASF Agricultural Specialties Ltd., Brazil), *B. elkanii* USDA 76, *B. elkanii* USDA 94*B. elkanii* USDA 3254, *B. elkanii* U-1301 and U-1302 (e. g. Nitragin® Optimize from Novozymes Bio As S.A., Brazil, or Nlitrasec for soybean from LAGE y Cia, Brazil), *B. japonicum* (e. g. VAULT® from BASF Corp., USA), *B. japonicum* 532c isolated from Wisconsin field (Nitragin 61A152; Can. J. Plant. Sci. 70, 661-666, 1990; e. g. in Rhizoflo®, Histick®, Hicoat® Super from BASF Agricultural Specialties Ltd., Canada), *B. japonicum* E-109 variant of strain USDA 138 (INTA E109, SEMIA 5085; Eur. J. Soil Biol. 45, 28-35, 2009; Biol. Fertil. Soils 47, 81-89, 2011), *B. japonicum* G49 (MSDJ G49; C. R. Acad. Agric. Fr. 73, 163-171, 1987); *B. japonicum* strains deposited at SEMIA known from Appl. Environ. Microbiol. 73(8), 2635, 2007: SEMIA 566 isolated from North American inoculant in 1966 and used in Brazilian commercial inoculants from 1966 to 1978, SEMIA 586 originally isolated in Maryland, USA, in 1961 but received from Australia in 1966 and used in Brazilian inoculants in 1977 (CB 1809, USDA 136, Nitragin 61A136, RCR 3407), SEMIA 5079 a natural variant of SEMIA 566 used in commercial inoculants since 1992 (CPAC 15; e. g. GELFIX 5 or ADHERE 60 from BASF Agricultural Specialties Ltd., Brazil), *B. japonicum* SEMIA 5080 a natural variant of SEMIA 586 used in commercial inoculants since 1992 (CPAC 7; e. g. GELFIX 5 or ADHERE 60 from BASF Agricultural Specialties Ltd., Brazil); *B. japonicum* TA-11 (TA11 $NOD^+$) (NRRL B-18466; US 5,021,076; Appl. Environ. Microbiol. 56, 2399-2403, 1990; e. g. VAULT® NP, from BASF Corp., USA), *B. japonicum* strains deposited at USDA known from US 7,262,151 and Appl. Environ. Microbiol. 60, 940-94, 1994: USDA 3 isolated from *Glycine max* in Virginia (USA) in 1914, USDA 31 (= Nitragin 61A164) od Serogroup 31 isolated from *Glycine max* in Wisconsin (USA) in 1941, USDA 76 isolated from plant passage of strain USDA 74 (Serogroup 76) which has been isolated from *G. max* in California (USA) in 1956, USDA 110 (= IITA 2121, SEMIA 5032, RCR 3427, ARS I-110 and Nitragin 61A89; Serogroup 110) isolated from *G. max* in Florida in 1959, USDA 121 isolated from *G. max* in Ohio (USA) in 1965 (Crop Science 26(5), 911-916, 1986); *B. japonicum* WB74 (e. g. Eco-Rhiz Soya from Plant Health Products (Pty) Ltd, South Africa; or Soybean inoculant from Stimuplant CC, South Africa), *B. lupini* LL13 isolated from *Lupinus iuteus* nodules from French soils (deposited at INRA, France; http://agriculture.
gouv.fr/IMG/pdf/ch20060216.pdf), *B. lupini* strains from Australia and known from Palta J.A., Berger J.B. (eds), Proceed. 12th International Lupin Conference, 14-18 Sept. 2008, Fremantle, Western Australia, International Lupin Association, Canterbury, New Zealand, 47-50, http://www.lupins.org/pdf/conference/2008/Agronomy%20and%20Production/John%20Howie son%20and%20G%20G%Hara.pdf; Appl. Environ. Microbiol. 71, 7041-7052, 2005; Australian J. Exp. Agricult. 36(1), 63-70, 1996: strains WU425 isolated in Esperance, Western Australia from a non-Australian legume *Ornithopus compressus,* WSM471 isolated *from Ornithopus pinnatus* in Oyster Harbour, Western Australia, and WSM4024 isolated from lupins in Australia by CRS during a 2005 survey; *Burkholderia sp.* A396 (NRRL B-50319;
WO 2013/032693; Marrone Bio Innovations, Inc., USA), *Candida oleophila* I-182 (NRRL Y-18846; Phytoparasitica 23(3), 231-234, 1995; e. g. Aspire® from Ecogen Inc., USA;), *C. oleophila* strain O (NRRL Y-2317; Biological Control 51, 403-408, 2009), *Candida saitoana* (e. g. Biocure® [in composition with lysozyme] and BioCoat® from Micro Flo Company, USA (BASF SE) and Arysta), chitosan (e. g. Armour-Zen® from BotriZen Ltd., NZ), *Clonostachys rosea* f. *catenulate* (also named *Gliocladium catenulatum*) J1446 isolated from Finnish field soil (NJF seminar No 389: Pest, disease and weed management in strawberry; Finland 8-9. Nov. 2006 in NJF Report 2(10), 15-15, 2006; DSM 9212; e. g. Primastop® or Prestop® from Verdera Oy, Finland), *Chromobacterium subtsugae* PRAA4-1 isolated from soil under an eastern

hemlock (*Tsuga canadensis*) in the Catoctin Mountain region of central Maryland (NRRL B-30655; e. g. Grandevo® from Marrone Bio Innovations, USA), *Coniothyrium minitans* CON/M/91-08 (WO 1996/021358; DSM 9660; e. g. Contans® WG, Intercept® WG from Prophyta Biologischer Pflanzenschutz GmbH, Germany), *Cryphonectria parasitica* (hypovirulent strains; Microbiol. Reviews 56(4), 561-576, 1992; e. g. product Endothia parasitica from CNICM, France), *Cryptococcus albidus* (e. g. YIELD PLUS® from Anchor Bio-Technologies, South Africa), *Cryptophlebia leucotreta* granulovirus (CrleGV) (e. g. CRYPTEX from Adermatt Biocontrol, Switzerland), *Cydia pomonella* granulovirus (CpGV) V03 (DSM GV-0006; e. g. Madex® Max from Andermatt Biocontrol, Switzerland), CpGV V22 (DSM GV-0014; e. g. Madex® Twin from Adermatt Biocontrol, Switzerland), *Delftia acidovorans* RAY209 (ATCC PTA-4249; WO 2003/57861; e. g. BioBoost® from Brett Young, Winnipeg, Canada), *Dilophosphora alopecuri* (FarmNote 396, Feb. 2010, Department of Agriculture and Food, Government of Western Australia; e.g. Twist Fungus from BASF Agricultural Specialties Pty Ltd, Australia), *Ecklonia maxima* (kelp) extract (J. Ecological Engineering 14(1), 48-52, 2013; e. g. KELPAK SL from Kelp Products Ltd, South Africa), *Flavobacterium sp.* H492 (ATCC B-505584; WO 2013/138398; e. g. MBI-302 from Marrone Bio Innovations, USA for soyean cyst nematode control), formononetin (US 5,002,603; e. g. Myconate® from Plant Health Care plc, U.K.), *Fusarium oxysporum* Fo47 (non-pathogenic strain isolated from a suppressive soil located at Châteaurenard, France; Appl. Environ. Microbiol 68(8), 4044-4060, 2002; Fusaclean® from Natural Plant Protection, N.P.P. (société anonyme) Route d'Artix F-64150 Nogueres, France), *F. oxysporum* 251/2RB (Prevention Today Vol. 2, n. 1-2, 47-62, 2006; e. g. Biofox® C from S.I.A.P.A., Italy); *Glomus intraradices* (e. g. Myc® 4000 from ITHEC, France), *Glomus intraradices* RTI-801 (e. g. MYKOS from Xtreme Gardening, USA or RTI Reforestation Technologies International; USA), grapefruit seeds and pulp extract (e. g. BC-1000 from Chemie S.A., Chile), harpin (alpha-beta) protein (Science 257, 85-88, 1992; e. g. Messenger™ or HARP-N-Tek from Plant Health Care plc, U.K.), *Helicoverpa armigera* nucleopolyhedrovirus (HearNPV) (J. Invertebrate Pathol. 107, 112-126, 2011; e. g. Helicovex® from Adermatt Biocontrol, Switzerland), *Heterorhabditis bacteriophora* (e. g. Nemasys® G from BASF Agricultural Specialities Limited, UK), *Isaria fumosorosea* Apopka-97 (ATCC 20874; Biocontrol Science Technol. 22(7), 747-761, 2012; e. g. PFR-97™ or PreFeRal® from Certis LLC, USA), *I. fumosorosea* FE 9901 (ARSEF 4490; Biocontrol Science Technol. 22(7), 747-761, 2012; e. g. blastospores in NoFly™ WP from Natural Industries, Inc., Houston, TX, USA or from Novozymes, U.S.A.), cis-jasmone (US 6,890,525; US 8,221,736; Plant Bioscience Limited, Norwich, U.K.), laminarin (e. g. in Vacciplant® from Laboratoires Goemar, St. Malo, France or Stähler SA, Switzerland), *Lecanicillium longisporum* KV42 and KV71 (e. g. Vertalec® from Koppert BV, Netherlands), *L. muscariumVe6* (also called KV01; IMI 19-79, CABI 268317, CBS 102071, ARSEF 5128; e. g. Mycotal® from Koppert BV, Netherlands), *Lysobacter antibioticus* 13-1 (Biological Control 45, 288-296, 2008), *L. antibioticus* HS124 (Curr. Microbiol. 59(6), 608-615, 2009), *L. enzymogenes* 3.1T8 (Microbiol. Res. 158, 107-115, 2003; Biological Control 31(2), 145-154, 2004); *Mesorhizobium* spp. strains known from Soil Biol. Biochem. 36(8), 1309-1317, 2004; Plant and Soil 348(1-2), 231-243, 2011: *M.* sp. WSM1271 collected in Sardinia, Italy, from plant host *Biserrula pelecinus, M.* sp. WSM 1497 collected in Mykonos, Greece, from *Biserrula pelecinus, Mesorhizobium ciceri* CC1192 collected in Israel from Cicer arietinum nodules (UPM 848, CECT 5549; Can. J. Microbiol. 48, 279-284, 2002; from Horticultural Research Station, Gosford, Australia), *M. huakuii* HN3015 isolated from *Astralagus sinicus* in a rice-growing field of Southern China (World J. Microbiol. Biotechn. 23(6), 845-851, 2007, ISSN 0959-3993), *M. loti* CC829 isolated from *L. ulginosus* nodules in USA (NZP 2012; commerical inoculant for *Lotus pedunculatus* and *L. ulginosus* in Australia), and *M. loti* SU343 isolated from host nodules in USA (commercial inoculant for *Lotus corniculatus* in Australia); *Metarhizium anisopliae* FI-1045 (AGAL V10/0104285; WO 2012/018266; e. g. Biocane® from BASF Agricultural Specialties Pty Ltd, Australia), *M. anisopliae* var. *anisopliae* F52 also called 275 or V275 (DSM 3884, ATCC 90448; e. g. Met52® Novozymes Biologicals BioAg Group, Canada), *M. anisopliae* ICIPE 69 isolated from a soil sample obtained from the Democratic Republic of Congo (DRC) and using the Galleria bait method in 1990 (e. g. Metathripol from ICIPE, Nairobe, Kenya), *M. anisopliae* var. *acridum* IMI 330189 isolated from *Ornithacris cavroisi* in Niger (NRRL 50758; e. g. Green Muscle® from BASF Agricultural Specialities (Pty) Ltd., South Africa), *M. a.* var. *acridum* FI-985 isolated from a spur-throated locust, Austracris guttulosa (Walker), near Rockhampton, Queensland, Australia, in 1979 (ARSEF 324; Memoirs of the Entomological Society of Canada 171, 287-300, 1997; e. g. Green Guard® SC from BASF Agricultural Specialties Pty Ltd, Australia), *Metschnikowia fructicola* 277 isolated from the surface of grape berries (cv. Superior) grown in the central part of Israel (US 6,994,849; NRRL Y-30752; e. g. Shemer® from Agrogreen, Israel, now distributed by Bayer CropSciences, Germany), *Microdochium dimerum* L13 (CNCM I-3141; e. g. Antibot® from Agrauxine, France), *Microsphaeropsis ochracea* P130A isolated from apple leaves from an abandoned orchard, St-Joseph-du-Lac, Quebec, Canada in 1993 (ATCC 74412; Mycologia 94(2), 297-301, 2002), *Muscodor albus* QST 20799 also called 620 originally isolated from the bark of a cinnamon tree in Honduras (NRRL 30547; e. g. Muscudor™ or QRD300 from AgraQuest, USA), *Muscodor albus* SA-13 (NRRL B-50774; US 2014/0086879 A1; e. g. MBI-601-EP from Marrone BioInnovations, Inc., USA), Neem oil (e. g. Trilogy®, Triact® 70 EC from Certis LLC, USA), *Nomuraea rileyi* strains SA86101, GU87401, SR86151, CG128 and VA9101 (Braz. Arch. Biol. Technol. 46(1), 13-19, 2003; WO 2013/110594), *Paecilomyces lilacinus* 251 isolated from infected nematode eggs in the Philippines (AGAL 89/030550; WO1991/02051; Crop Protection 27, 352-361, 2008; e. g. BioAct®/MeloCon® from Prophyta, Germany), *P. lilacinus* DSM 15169 (e. g. Nemata® SC from Live Systems Technology S.A., Colombia), *P. lilacinus* BCP2 (NRRL 50756; Acta agriculturae Slovenica, 101 - 2, 263-275,

2013; e. g. PL Gold from BASF Agricultural Specialities (Pty) Ltd., South Africa), *Paenibacillus alvei* NAS6G6 (WO 2014/029697; NRRL B-50755; e.g. BAC-UP from BASF Agricultural Specialities (Pty) Ltd., South Africa in composition with *Bacillus pumilus* KFP9F), *P. polymyxa* PKB1 (ATCC 202127; Can. J. Microbiol. 48(2), 159-169, 2002), *Pantoea agglomerans* E325 (NRRL B-21856; Phytopathol. 101(10), 1234-41, 2011; Trees 26, 227-238, 2012; Bloomtime Biological™ from Northwest Agricultural Products, Inc., USA), *Pantoea vagans* (formerly *agglomerans*) C9-1 originally isolated in 1994 from apple stem tissue for control of fire blight in apple (J. Bacteriol. 192(24), 6486-6487, 2010; e. g. BlightBan C9-1® from NuFrams America Inc., USA), *Pasteuria* sp. ATCC PTA-9643 (WO 2010/085795), *Pasteuria* sp. Ph3 isolated from turfgrass soil samples collected at the DeBary Golf Course in central Florida (ATCC SD-5832; WO 2012/064527; for control of *Hoplolaimus galeatus* nematode from Pasteuria Bioscience, Inc. now Syngenta Crop Protection, LLC, USA), *Pasteuria* sp. Pr3 isolated from soil samples collected in the southeastern United States (ATCC SD-5834; for control of *Rotylenchulus reniformis* nematode potentially of species *P. ramosa;* Naviva® ST from Syngenta Crop Protection, LLC, USA), *P. nishizawae* (WO 2010/80619), *P. nishizawae* Pn1 (Federal Register 76(22), 5808, February 2, 2011; ATCC SD-5833; e.g. Clariva™ PN from Syngenta Crop Protection, LLC, USA), *P. penetrans* (US 5,248,500; Del Monte Corp.), *P. ramosa* (WO 2010/080619), *P. thornea* (WO 2010/080619), *P. usgae* BL1 (ATCC SD-5835; J. Nematol. 42(2): 87-90, 2010; *ibid.* 43(2), 101-109, 2011; e. g. Econem™ for control of *Belonolaimus longicaudatus* from Pasteuria BioScience now Syngenta sold by Harel's LLC, Florida, USA for use on turf for management of *Belonolaimus longicaudatus*), *Penicillium bilaiae* (also called *P. bilaii*) strains ATCC 18309 (= ATCC 74319), ATCC 20851 and/or ATCC 22348 (= ATCC 74318) originally isolated from soil in southern Alberta (Fertilizer Res. 39, 97-103, 1994; Can. J. Plant Sci. 78(1), 91-102, 1998; US 5,026,417, WO 1995/017806; e. g. Jump Start®, Provide® from Novozymes Biologicals BioAg Group, Canada), *P. bilaiae* NRRL 50162 and NRRL 50169 (WO 2010/037228), *Phlebiopsis gigantea* (e. g. RotStop® from Verdera Oy, Finland), *Pichia anomala* WRL-076 (NRRL Y-30842; US 8,206,972), potassium bicarbonate (e. g. Amicarb® from Stahler SA, Switzerland), potassium silicate (e. g. Sil-MATRIX™ from Certis LLC, USA), *Pseudozyma flocculosa* PF-A22 UL (e. g. Sporodex® L from Plant Products Co. Ltd., Canada), *Pseudomonas* sp. Proradix (DSM 13134; WO 2001/40441, e. g. PRORADIX from Sourcon Padena GmbH & Co. KG, Hechinger Str. 262, 72072 Tübingen, Germany), *P. chloraphis* MA 342 (Microbiology Monographs 18, 21-43, 2011; e. g. Cerall® or Cedemon® from BioAgri AB, Uppsala, Sweden or Intrachem Bio Deutschland GmbH & Co. KG, Bad Camberg, Germany), *P. fluorescens* (e.g. in Bio Cure-B from T. Stanes & Company Limited, India; or in Blight-End from Agri Naturals, Mumbai, India), *P. fluorescens* A506 (Phytopathol 97(2), 244-249, 2007; ATCC 31948; e. g. BlightBan® from NuFarm Americas, Inc., Morrisville, NC, USA), *P. fluorescens* ATCC 13525 of biovar I = biotype A; originally isolated from pre-filter tanks in England (DSM 50090; registered for use in Canada), *P. fluorescens* CHA0 (Mol. Plant Microbe Interact. 5(1), 4-13, 1992), *P. fluorescens* CL 145A (J. Invertebr. Pathol. 113(1), 104-14, 2013; e. g. Zequanox® from Marrone BioInnovations, Davis, CA, USA), *P. fluorescens* NCIB 12089 (EP 0210734 A!; Victus® from Mauri Laboratories, 9 Moorebank Ave., Moorebank, NSW 2170, Australia), *P. fluorescens* Pf-5 isolated from root surface of cotton (ATCC BAA-477), *P. putida* ATCC 202153 (EMBRAPA 63/88 4 B; WO 2004/0245865), *Pythium oligandrum* DV 74 (US 2013/0035230; ATCC 38472; e. g. Poyversum® from Remeslo SSRO, Biopreparaty, Czech Rep. and from Gowan, USA), *Reynoutria sachalinensis* extract (EP 0307510 B1; e. g. Regalia® SC from Marrone BioInnovations, Davis, CA, USA or Milsana® from BioFa AG, Germany), *Rhizobium leguminosarum* bv. *phaseoli* (e. g. RHIZO-STICK from BASF Corp., USA), *R. leguminosarum bv. phaseoli* RG-B10 (USDA 9041; from Int. J. Syst. Bacteriol. 46(1), 240-244, 1996; Int. J. Syst. Evol. Microbiol. 50, 159-170, 2000; e. g. Nodulator® Dry Bean in Africa, HiStick NT Dry bean in US, and Nodulator® Dry Bean in Canada from BASF Corp., USA, or BASF Agricultural Specialties Ltd., Canada), R. *l.* bv. *trifolii* CB782 (Nodulaid® peat for Kenya white clover from BASF Agricultural Specialties Pty Ltd, Australia), R. *l.* bv. *trifolii* CC275e (Nodulaid® peat for NZ white clover from BASF Agricultural Specialties Pty Ltd, Australia), *R. l.* bv. *trifolii* CC283b (ICMP 4073b; Proc. New Zealand Grassland Assoc. 56, 101-105, 1994; Microbiol. 153, 3184-3195, 2007; Nodulaid® peat for Caucasian clover from BASF Agricultural Specialties Pty Ltd, Australia), *R. l.* bv. *trifolii* CC1099 (Inoculating Legumes: A Practical Guide, ed. Grain Research and Development Corporation, 2012, ISBN 978-1-921779-45-9; e. g. Nodulaid® peat for sainfoin from BASF Agricultural Specialties Pty Ltd, Australia), *R. l.* bv. *trifolii* RP113-7 (Appl. Environ. Microbiol. 44(5), 1096-1101, 1982; e. g. Dormal® from BASF Corp., USA), *R. l.* bv. *trifolii* TA1 (Appl. Environ. Microbiol. 49(1), 127-131, 1985; e. g. Nodulaid® peat for white clover from BASF Agricultural Specialties Pty Ltd, Australia), *R. l.* bv. *trifolii* strain WSM1325 isolated in 1993 from the Greek Island of Serifos (Stand. Genomic Sci. 2(3), 347-356, 2010; Inoculating Legumes: A Practical Guide, ed. Grain Research and Development Corporation, 2012, ISBN 978-1-921779-45-9; Nodulaid® peat for sub clover and Nodulator® granules for sub clover both from BASF Agricultural Specialties Pty Ltd, Australia, for a broad range of annual clovers of Mediterranean origin), *R. l.* bv. *trifolii* strain WSM2304 isolated from *Trifolium polymorphum* in Uruguay in 1998 (Stand. Genomic Sci. 2(1), 66-76, 2010), *R. l.* bv. *viciae* P1 NP3Cst being a Streptomycin-resistant mutant of P1 NP3C isolated from pea root nodules in Bretenière, France (also referred to as 1435; New Phytol. 176, 680-690, 2007; *ibid.* 179(1), 224-235, 2008; e. g. Nodulator® PL Peat Granule from BASF Corp., USA; or Nodulator® XL PL from BASF Agricultural Specialties Ltd., Canada), *R. l.* bv. *viciae* RG-P2 also called P2 isolated from pea root nodules in Sakatchewan, Canada (e. g RhizUP peat for peas and lentils in Canada from BASF Agricultural Specialties Ltd., Canada), *R. l.* bv. *viciae* SU303 (e. g. Nodulaid® Group E from BASF Agricultural Specialties Pty Ltd, Australia), *R. l.* bv. *viciae* WSM1455 (e. g. Nodulaid®

Group F from BASF Agricultural Specialties Pty Ltd, Australia), *R. tropici* CC511 (Agronomy, N.Z. 36, 4-35, 2006; e. g. Nodulaid® peat for common bean from BASF Agricultural Specialties Pty Ltd, Australia)*R. tropici* CIAT 899 isolated in Colombia (SEMIA 4077; Rev. Ciênc. Agron. 44(4) Fortaleza Oct./Dec. 2013; e. g. Nitrafix® FEIJÃO peat for beans from BASF Agricultural Specialties Ltd., Brazil in composition with strain SEMIA 4080), *R. tropici* H12 isolated in Planaltina, DF, Cerrados, Brazil (SEMIA 4088; Appl. Microbiol. Biotechnol. 93(5), 2035-49, 2012; e. g. Nitrafix® FEIJÃO from BASF Agricultural Specialties Ltd., Brazil), *R. tropici* PRF 81 isolated in Paraná, Brazil (SEMIA 4080; Soil Biology & Biochemistry 39, 867-876, 2007; BMC Microbiol. 12, 84, 2012; Nitrafix® FEIJÃO peat for beans from BASF Agricultural Specialties Ltd., Brazil in composition with strain SEMIA 4077), *Sinorhizobium meliloti* RCR2011 also called 2011 or SU47 (MSDJ0848; Mol. Gen. Genomics 272, 1-17, 2004; e. g. Dormal® Alfalfa & Luzerne from BASF Corp., USA; Nitragin® Gold from Novozymes Biologicals BioAg Group, Canada), *Sphaerodes mycoparasitica* SMCD2220 also called SMCD2220-01 (IDAC 301008-01; WO 2011/022809), *Spodoptera littoralis* nucleopolyhedrovirus (SpliNPV) (e.g. in LITTOVIR from Adermatt Bio-control, Switzerland), *Steinernema carpocapsae* (e. g. Millenium® from BASF Agricultural Specialities Limited, UK), *S. feltiae* (Nemashield® from BioWorks, Inc., USA; Nemasys® from BASF Agricultural Specialities Limited, UK), *S. kraussei* L137 (Nemasys® L from BASF Agricultural Specialities Limited, UK), *Streptomyces galbus* AQ6047 (NRRL 30232; WO 2012/135763; AgraQuest now Bayer CropScience LP, USA); *S. galbus* M1064 (NRRL 50334; WO 2012/135763; AgraQuest now Bayer CropScience LP, USA); *S. griseoviridis* K61 (Crop Protection 25, 468-475, 2006; e. g. Mycostop® from Verdera Oy, Espoo, Finland), *S. lydicus* WYEC 108 (US 5,403,584; e. g. Actinovate® from Natural Industries, Inc., USA), *S. violaceusnigerYCED-9* (US 5,968,503; e. g. DT-9® from Natural Industries, Inc., USA), *Talaromyces flavus* V117b isolated from soil (e. g. Protus® WG from Prophyta, Germany), *Trichoderma asperellum* SKT-1 isolated from the rhizosphere of Japanese lawngrass (FERM P-16510; J. Gen. Plant Pathol. 71(5), 351-356, 2005; e. g. Eco-Hope® from Kumiai Chemical Industry Co., Ltd., Japan), *T. asperellum* ICC 012 isolated from a soil in central Italy that was found to suppress plant disease (IMI 392716; e. g. Tenet WP, Remdier WP or Bioten WP from Isagro NC, USA, Bio-Tam™ from AgraQuest, USA), *T. asperellum* TV1 formerly *T. viride* (MUCL 43093; e. g. T. viride TV1 from Agribiotec srl, Italy or Xedavir from Xeda Italia, Italy), *T. atroviride* LC52 (e. g. Sentinel® from Agrimm Technologies Ltd, NZ), T. *atroviride* CNCM I-1237 (e. g. Esquive® WG from Agrauxine S.A., France, e. g. against pruning wound diseases on vine and plant root pathogens), *T. fertile* JM41 R (NRRL 50759; e. g. Trichoplus™ from BASF Agricultural Specialities (Pty) Ltd., South Africa), *T. gamsii* ICC 080 (IMI 392151; e. g. Tenet WP, Remdier WP, Bioten WP from Isagro NC, USA, Bio-Tam™ from AgraQuest, USA), *T. harzianum* T-22 also called KRL-AG2 (ATCC 20847; BioControl 57, 687-696, 2012; e. g. Plantshield® from BioWorks Inc., USA or SabrEx™ from Advanced Biological Marketing Inc., Van Wert, OH, USA), *T. harzianum* T-35 and T-315 (ATCC 20691; EP 0133878 B1; e. g. Root Pro® from Mycontrol Ltd., Israel), *T. harzianum* T-39 (CNCM I-952; EP 0466133 B2; e. g. Trichodex® or Trichoderma 2000® from Mycontrol Ltd., Israel and Makhteshim Ltd., Israel), composition of *T. harzianum and T. viride* (e. g. Trichopel® from Agrimm Technologies Ltd, NZ), composition of *T. harzianum* ICC012 and *T. viride* ICC080 (e. g. Remdier® WP from Isagro Ricerca, Italy), *T. polysporum* IMI 206039 (ATCC 20476; e. g. Binab® from BINAB Bio-Innovation AB, Sweden in composition with *T. atroviride* IMI 206040), *T. stromaticum* (e. g. Tricovab® from C.E.P.L.A.C., Brazil), *T. virens* GI-3 also called G1-3 or GL-3 (CA 2471555 A1; ATCC 58678; e.g. QuickRoots™ from TJ Technologies, Watertown, SD, USA in composition with *B. amyloliquefaciens* TJ1000), *T. virens* GL-21 also called G1-21 isolated from a sclerotium of *Sclerotinia minor* (US 7,429,477; e. g. Soilguard® 12G from Certis LLC, USA; EPA Registration Number: 70051-3 and EPA Establishment Number: 067250-IL-001), *T. virens* G-41 also called 041, #41X or ABM 127 isolated from soil samples taken from *Aphanomyces*-suppressive bean fields in Livingston County, New York (ATCC 20906; US 4,996,157; e. g. Rootshield® PLUS from BioWorks, Inc., USA), *T. viride* (J. Biological Control 23(1), 31-36, 2009; e. g. Trieco® from Ecosense Labs. (India) Pvt. Ltd., India; or Bio-Cure® F from T. Stanes & Co. Ltd., India), and *Ulocladium oudemansii* HRU3 (Agronomy 3, 632-647, 2013; e. g. Botry-Zen® from Botry-Zen Ltd, NZ).

(3) Strains can be obtained from culture collections and deposition centers (listed by their acronym = strain prefix here: http://www.wfcc.info/ccinfo/collection/by_acronym/) such as strains with prefices AGAL or NMI from: National Measurement Institute, 1/153 Bertie Street, Port Melbourne, Victoria, Australia 3207; ATCC: American Type Culture Collection, 10801 University Blvd., Manassas, VA 20110-2209, USA; BR: Embrapa Agrobiology Diazothrophic Microbial Culture Collection, P.O.Box 74.505, Seropedica, Rio de Janeiro, 23.851-970, Brazil; CABI or IMI: CABI Europe - International Mycological Institute, Bakeham Lane, Egham, Surrey, TW20 9TYNRRL, UK; CB: The CB Rhizobium Collection, School of Environment and Agriculture, University of Western Sydney, Hawkesbury, Locked Bag 1797, South Penrith Distribution Centre, NSW 1797, Australia; CBS: Centraalbureau voor Schimmelcultures, Fungal Biodiversity Centre, Uppsalaan 8, PO Box 85167, 3508 AD Utrecht, Netherlands; CC: Division of Plant Industry, CSIRO, Canberra, Australia; CNCM: Collection Nationale de Cultures de Microorganismes, Institute Pasteur, 25 rue du Docteur Roux, F-75724 PARIS Cedex 15; CPAC: Embrapa-Cerrados, CX.Postal 08223,Planaltina,DF,73301-970, Brazil; DSM: Leibniz-Institut DSMZ-Deutsche Sammlung von Mikroorganismen und Zellkulturen GmbH, Inhoffenstraße 7 B, 38124 Braunschweig, Germany; IDAC: International Depositary Authority of Canada Collection, Canada; ICMP: Interntional Collection of Micro-organisms from Plants, Landcare Research, Private Bag

92170, Auckland Mail Centre, Auckland 1142, New Zealand; IITA: IITA, PMB 5320, Ibadan, Nigeria; INTA: Agriculture Collection Laboratory of the Instituto de Microbiologia y Zoologia Agncola (IMYZA), Instituto Nacional de Tecnologi'a Agropecuaria (INTA), Castelar, Argentina; MSDJ: Laboratoire de Microbiologie des Sols, INRA, Dijon, France; MUCL: Mycotheque de l'Université catholique de Louvain, Croix du Sud 2, box L7.05.06, 1348 Louvain-la-Neuve, Belgium; NCIMB or NICB: The National Collections of Industrial and Marine Bacteria Ltd., Torry Research Station, P.O. Box 31, 135 Abbey Road, Aberdeen, AB9 8DG, Scotland; Nitragin: Nitragin strain collection, The Nitragin Company, Milwaukee, Wisconsin, USA, NRRL or ARSEF (collection of entomopathogenic fungi): ARS Culture Collection of the National Center for Agricultural Utilization Research, Agricultural Research Service, U.S. Department of Agriculture, 1815 North University Street, Peoria, Illinois 61604, USA; NZP: Department of Scientific and Industrial Research Culture Collection, Applied Biochemistry Division, Palmerston North, New Zealand; PPRI: ARC-Plant Protection Research Institute, Private Bag X134, Queenswood Pretoria, Gauteng, 0121, South Africa; SEMIA: FEPAGRO-Fundação Estadual de Pesquisa Agropecuária, Rua Gonçalves Dias, 570, Bairro Menino Deus, Porto Alegre/RS, Brazil; SRDI: SARDI, Adelaide, South Australia; USDA: U.S. Department of Agriculture, Agricultural Research Service, Soybean and Alfalfa Research Laboratory, BARC-West, 10300 Baltimore Boulevard, Building 011, Beltsville, MD 20705, USA (Beltsville Rhiz. Cult. Catalog: http://pdf.usaid.gov/ pdf docs/PNAAW891.pdf); and WSM: Murdoch University, Perth, Western Australia. Further strains may be found at: http://gcm.wfcc.info/; http://www.landcareresearch.co.nz/resources/ collections/ icmp.

Jasmonic acid, its salts (jasmonate) or derivatives include without limitation potassium, sodium, lithium, ammonium, dimethylammonium, isopropylammonium, diolammonium and diethtriethanolammonium jasmonate; and also jasmonic acid methyl ester, jasmonic acid amide, jasmonic acid methylamide, jasmonic acid-L-amino acid (amide-linked) conjugates (e. g. conjugates with L-isoleucine, L-valine, L-leucine, or L-phenylalanine), 12-oxo-phytodienoic acid, coronatine, coronalon, coronafacoyl-L-serine, coronafacoyl-L-threonine, methyl esters of 1-oxo-indanoyl-isoleucine, methyl esters of 1-oxo-indanoyl-leucine, cis-jasmone, linoleic acid or derivatives thereof, and combinations of any of the above.

Bacillus amyloliquefaciens subsp. plantarum MB1600 having the accession number NRRL B-50595 is deposited with the United States Department of Agriculture on Nov. 10, 2011 under the strain designation Bacillus subtilis 1430. It has also been deposited at The National Collections of Industrial and Marine Bacteria Ltd. (NCIB), Torry Research Station, P.O. Box 31, 135 Abbey Road, Aberdeen, AB9 8DG, Scotland.under accession number 1237 on December 22, 1986. Bacillus amyloliquefaciens MBI600 is known as plant growth-promoting rice seed treatment from Int. J. Microbiol. Res. ISSN 0975-5276, 3(2) (2011), 120-130 and further described e.g. in US 2012/0149571 A1. This strain MBI600 is commercially available as liquid formulation product Integral® (Becker-Underwood Inc., USA). Metarhizium anisopliae IMI33 is commercially available from Becker Underwood as product Green Guard. M. anisopliae var acridium strain IMI 330189 (NRRL-50758) is commercially available from Becker Underwood as product Green Muscle.

According to one embodiment, the microbial pesticides selected from groups L1), L3) and L5) embraces not only the isolated, pure cultures of the respective micro-organism as defined herein, but also its cell-free extract, its suspensions in a whole broth culture or as a metabolite-containing supernatant or a purified metabolite obtained from a whole broth culture of the microorganism or microorganism strain.

According to a further embodiment, the microbial pesticides selected from groups L1), L3 and L5) embraces not only the isolated, pure cultures of the respective micro-organism as defined herein, but also a cell-free extract thereof or at least one metabolite thereof, and/or a mutant of the respective micro-organism having all the identifying characteristics thereof and also a cell-free extract or at least one metabolite of the mutant;

"Whole broth culture" refers to a liquid culture containing both cells and media.

"Supernatant" refers to the liquid broth remaining when cells grown in broth are removed by centrifugation, filtration, sedimentation, or other means well known in the art.

The term "metabolite" refers to any compound, substance or byproduct produced by a microorganism (such as fungi and bacteria) that has improves plant growth, water use efficiency of the plant, plant health, plant appearance, or the population of beneficial microorganisms in the soil around the plant activity.

The term "mutant" refers a microorganism obtained by direct mutant selection but also includes microorganisms that have been further mutagenized or otherwise manipulated (e.g., via the introduction of a plasmid). Accordingly, embodiments include mutants, variants, and or derivatives of the respective microorganism, both naturally occurring and artificially induced mutants. For example, mutants may be induced by subjecting the microorganism to known mutagens, such as N-methyl-nitrosoguanidine, using conventional methods.

According to one embodiment of the inventive compositions, the biopesticide component III is selected from the groups L1a) to L6a):

L1a) Microbial pesticides with fungicidal, bactericidal, viricidal and/or plant defense activator activity: *Ampelomyces quisqualis* M-10 (L.1.1), *Aspergillus flavus* NRRL 21882 (L1.2), *Aureobasidium pullulans* DSM 14940 (L1.3), *A. pullulans* DSM 14941 (L.1.4), *Bacillus altitudinis* 41 KF2b (L.1.5), *Bacillus amyloliquefaciens* AP-136 (L.1.6), *B.*

*amyloliquefaciens* AP-188 (L.1.7), *B. amyloliquefaciens* AP-218 (L.1.8), *B. amyloliquefaciens* AP-219 (L.1.9), *B. amyloliquefaciens* AP-295 (L.1.10), *B. amyloliquefaciens* IN937a (L.1.11), *B. amyloliquefaciens* IT-45 (L.1.12), *B. amyloliquefaciens* ssp. *plantarum* D747 (L.1.13), *B. amyloliquefaciens* ssp. *plantarum* FZB24 (L.1.14), *B. amyloliquefaciens* ssp. *plantarum* FZB42 (L.1.15), *B. amyloliquefaciens* ssp. *plantarum* GB03 (L.1.16), *B. amyloliquefaciens* ssp. *plantarum* MBI600 (NRRL B-50595) (L.1.17), *B. amyloliquefaciens* ssp. *plantarum* QST-713 (L.1.18), *B. amyloliquefaciens* ssp. *plantarum* TJ1000 (L.1.19), *B. mojavensis* AP-209 (L.1.20), *B. mycoides* AQ726 (L.1.21), *B. mycoides* strain J (L.1.22), *B. pumilus* INR-7 (L.1.23), *B. pumilus* KFP9F (L.1.24), *B. pumilus* QST 2808 (L.1.25), *B. pumilus* GHA 180 (L.1.26), *B. simplex ABU* 288 (L.1.27), *B. solisalsi* AP-217 (L.1.28), *B. subtilis* CX-9060 (L.1.29), *B. subtilis* FB17 (L.1.30), *B. subtilis* GB07 (L.1.31), *Candida oleophila* I-82 (L.1.32), *C. oleophila* O (L.1.33), *C. saitoana* (L.1.34), *Clavibacter michiganensis* (bacteriophages) (L.1.35), *Coniothyrium minitans* CON/M/91-08 (L.1.36), *Cryphonectria parasitica* (L.1.37), *Cryptococcus albidus* (L.1.38), *Dilophosphora alopecuri* (L.1.39), *Fusarium oxysporum* (L.1.40), *Clonostachys rosea* f. *catenulata* J 1446 (L.1.41), *Gliocladium roseum* 321U (L.1.42), *Metschnikowia fructicola* NRRL Y-30752 (L.1.43), *Microdochium dimerum* (L.1.44), *Microsphaeropsis ochracea* P130A (L.1.45), *Muscodor albus* QST 20799 (L.1.46), *Muscodor albus* SA-13 (L.1.47), *Paenibacillus alvei* NAS6G6 (L.1.48), *Paenibacillus polymyxa* PKB1 (L.1.49), *Pantoea agglomerans* E325 (L.1.90), *Pantoea vagans* C9-1 (L.1.50), *Penicillium bilaiae ATCC* 22348 (L.1.51), *P. bilaiae* ATCC 20851 (L.1.52), *Penicillium bilaiae* ATCC 18309 (L.1.53), *Phlebiopsis gigantea* (L.1.54), *Pichia anomala* WRL-76 (L.1.55), *Pseudomonas* sp. Proradix (L.1.56), *Pseudomonas chloraphis* MA 342 (L.1.57), *P. fluorescens* A506 (L.1.58), *P. fluorescens* CL 145A (L.1.91), *P. fluorescens* NCIB 12089 (L.1.92), *P. fluorescens* Pf-5 (L.1.93), *P. fluorescens WCS* 374 (L.1.94), *P. fluorescens* ATCC 13525 (L.1.95), *P. fluorescens* CHA0 (L.1.96), *P. putida ATCC* 202153 (L.1.97), *Pseudozyma flocculosa* PF-A22 UL (L.1.59), *Pythium oligandrum* DV 74 (L.1.60), *Sphaerodes mycoparasitica* SMCD2220 (L.1.61), *Streptomyces griseoviridis* K61 (L.1.62), *S. lydicus* WYEC 108 (L.1.63), *S. violaceusniger* XL-2 (L.1.64), *S. violaceusniger* YCED-9 (L.1.65), *Talaromyces flavus* V117b (L.1.66), *Trichoderma asperellum* T34 (L.1.67), *T. asperellum* SKT-1 (L.1.68), *T. asperellum* ICC 012 (L.1.69), *T. atroviride* LC52 (L.1.70), *T. atroviride* CNCM I-1237 (L.1.71), *T. fertile* JM41R (L.1.72), *T. gamsii* ICC 080 (L.1.73), *T. harmatum* TH 382 (L.1.74), *T. harzianum* T-35 (L.1.75), *T. harzianum* T-22 (L.1.76), *T. harzianum* T-39 (L.1.77); mixture of *T. harzianum* ICC012 and *T. viride* ICC080 (L.1.78); *T. polysporum* (L.1.79); *T. stromaticum* (L.1.80), *T. virens* GI-3 (L.1.81), *T. virens* G-41 (L.1.82), *T. virens* GL-21 (L.1.83), *T. virens* G-41 (L.1.84), *T. viride* TV1 (L.1.85), *Typhula phacorrhiza* 94671 (L.1.86), *Ulocladium oudemansii* HRU3 (L.1.87), *Verticillium dahlia* (L.1.88), zucchini yellow mosaic virus (avirulent strain) (L.1.89);

L2a) Biochemical pesticides with fungicidal, bactericidal, viricidal and/or plant defense activator activity: chitosan (hydrolysate) (L.2.1), harpin protein (L.2.2), laminarin (L.2.3), Menhaden fish oil (L.2.4), natamycin (L.2.5), Plum pox virus coat protein (L.2.6), potassium bicarbonate (L.2.7), *Reynoutria sachalinensis* extract (L.2.8), salicylic acid (L.2.9), potassium or sodium bicarbonate (L.2.10), tea tree oil (L.2.11);

L3a) Microbial pesticides with insecticidal, acaricidal, molluscidal and/or nematicidal activity: *Agrobacterium radiobacter* K1026 (L.3.1), *A. radiobacter* K84 (L.3.2), *Bacillus firmus* I-1582 (L.3.3); *B. thuringiensis* ssp. *aizawai* strains: ABTS-1857 (L.3.4), SAN 401 I (L.3.5), ABG-6305 (L.3.6) and ABG-6346 (L.3.7); *B. t.* ssp. *israelensis* AM65-52 (L.3.8), *B. t.* ssp. *israelensis* SUM-6218 (L.3.9), *B. t.* ssp. *galleriae* SDS-502 (L.3.10), *B. t.* ssp. *kurstaki* EG 2348 (L.3.11), *B. t.* ssp. *kurstaki* SB4 (L.3.12), *B. t.* ssp. *kurstaki* ABTS-351 (HD-1) (L.3.13), *Beauveria bassiana* ATCC 74040 (L.3.14), *B. bassiana* GHA (L.3.15), *B. bassiana* H123 (L.3.16), *B. bassiana* DSM 12256 (L.3.17), *B. bassiana* PPRI 5339 (L.3.18), *B. brongniartii* (L.3.19), *Burkholderia* sp. A396 (L.3.20), *Chromobacterium subtsugae* PRAA4-1 (L.3.21), *Cydia pomonella* granulosis virus V22 (L.3.22), *Cydia pomonella* granulosis virus V1 (L.3.23), *Cryptophlebia leucotreta* granulovirus (CrleGV) (L.3.57), *Flavobacterium sp.* H492 (L.3.60), *Helicoverpa armigera* nucleopolyhedrovirus (HearNPV) (L.3.58), *Isaria fumosorosea* Apopka-97 (L.3.24), *Lecanicillium longisporum* KV42 (L.3.25), *L. longisporum* KV71 (L.3.26), *L. muscarium* KV01 (L.3.27), *Metarhizium anisopliae* FI-985 (L.3.28), *M. anisopliae* FI-1045 (L.3.29), *M. anisopliae* F52 (L.3.30), *M. anisopliae* ICIPE 69 (L.3.31), *M. anisopliaevar. acridum* IMI 330189 (L.3.32); *Nomuraea rileyi* strains: SA86101 (L.3.33), GU87401 (L.3.34), SR86151 (L.3.35), CG128 (L.3.36) and VA9101 (L.3.37); *Paecilomyces fumosoroseus* FE 9901 (L.3.38), *P. lilacinus* 251 (L.3.39), *P. lilacinus* DSM 15169 (L.3.40), *P. lilacinus* BCP2 (L.3.41), *Paenibacillus popilliae* Dutky-1940 (NRRL B-2309 = ATCC 14706) (L.3.42), *P. popilliae* Dutky 1 (L.3.43), *P. popilliae* KLN 3 (L.3.56), *Pasteuria sp.* Ph3 (L.3.44), *Pasteuria sp.* ATCC PTA-9643 (L.3.45), *Pasteuria sp.* ATCC SD-5832 (L.3.46), *P. nishizawae* Pn1 (L.3.46), *P. penetrans* (L.3.47), *P. ramosa* (L.3.48), *P.* sp. Pr-3 (L.3.49), *P. thornea* (L.3.50), *P. usgae* (L.3.51), *Pseudomonas fluorescens* CL 145A (L.3.52), *Spodoptera littoralis* nucleopolyhedrovirus (SpliNPV) (L.3.59), *Steinernema carpocapsae* (L.3.53), *S. feltiae* (L.3.54), *S. kraussei* L137 (L.3.55);

L4a) Biochemical pesticides with insecticidal, acaricidal, molluscidal, pheromone and/or nematicidal activity: L-carvone (L.4.1), citral (L.4.2), (E,Z)-7,9-dodecadien-1-yl acetate (L.4.3), ethyl formate (L.4.4), (E,Z)-2,4-ethyl decadienoate (pear ester) (L.4.5), (Z,Z,E)-7,11,13-hexadecatrienal (L.4.6), heptyl butyrate (L.4.7), isopropyl myristate (L.4.8), cis-jasmone (L.4.9), lavanulyl senecioate (L.4.10), 2-methyl 1-butanol (L.4.11), methyl eugenol (L.4.12), methyl jasmonate (L.4.13), (E,Z)-2,13-octadecadien-1-ol (L.4.14), (E,Z)-2,13-octadecadien-1-ol acetate (L.4.15),

(E,Z)-3,13-octadecadien-1-ol (L.4.16), R-1-octen-3-ol (L.4.17), pentatermanone (L.4.18), potassium silicate (L.4.19), sorbitol actanoate (L.4.20), (E,Z,Z)-3,8,11-tetradecatrienyl acetate (L.4.21), (Z,E)-9,12-tetradecadien-1-yl acetate (L.4.22), Z-7-tetradecen-2-one (L.4.23), Z-9-tetradecen-1-yl acetate (L.4.24), Z-11-tetradecenal (L.4.25), Z-11-tetradecen-1-ol (L.4.26), Acacia negra extract (L.4.27), extract of grapefruit seeds and pulp (L.4.28), extract of *Chenopodium ambrosiodes* (L.4.29), Catnip oil (L.4.30), Neem oil (L.4.31), Quillay extract (L.4.32), Tagetes oil (L.4.33);

L5a) Microbial pesticides with plant stress reducing, plant growth regulator, plant growth promoting and/or yield enhancing activity: *Azospirillum amazonense* BR 11140 (SpY2) (L.5.1), *A. brasilense* Ab-V5 (L.5.74), *A. brasilense* Ab-V6 (L.5.75), *A. brasilense* AZ39 (L.5.2), *A. brasilense* XOH (L.5.3), *A. brasilense* Sp245 (BR 11005) (L.5.4), *A. brasilense* BR 11002 (L.5.5), *A. lipoferum* BR 11646 (Sp31) (L.5.6), *A. irakense* (L.5.7), *A. halopraeferens* (L.5.8), *Bradyrhizobium sp.* PNL01 (L.5.9), B. *sp.* (Arachis) CB1015 (L.5.10), *B. sp.* (Arachis) USDA 3446 (L.5.11), B. sp. (Arachis) SEMIA 6144 (L.5.12), B. sp. (Arachis) SEMIA 6462 (L.5.13), *B. sp.* (Arachis) SEMIA 6464 (L.5.14), *B. sp.* (Vigna) (L.5.15), *B. elkanii* SEMIA 587 (L.5.16), *B. elkanii* SEMIA 5019 (L.5.17), *B. elkanii U*-1301 (L.5.18), *B. elkanii* U-1302 (L.5.19), *B. elkanii* USDA 74 (L.5.20), *B. elkanii* USDA 76 (L.5.21), *B. elkanii* USDA 94 (L.5.22), *B. elkanii* USDA 3254 (L.5.23), *B. japonicum* 532c (L.5.24), *B. japonicum* CPAC 15 (L.5.25), *B. japonicum* E-109 (L.5.26), *B. japonicum* G49 (L.5.27), *B. japonicum* TA-11 (L.5.28), *B. japonicum* USDA 3 (L.5.29), *B. japonicum* USDA 31 (L.5.30), *B. japonicum* USDA 76 (L.5.31), *B. japonicum* USDA 110 (L.5.32), *B. japonicum* USDA 121 (L.5.33), *B. japonicum* USDA 123 (L.5.34), *B. japonicum* USDA 136 (L.5.35), B. japonicum SEMIA 566 (L.5.36), *B. japonicum* SEMIA 5079 (L.5.37), *B. japonicum* SEMIA 5080 (L.5.38), *B. japonicum* WB74 (L.5.39), *B. liaoningense* (L.5.40), *B. lupini* LL13 (L.5.41), *B. lupini* WU425 (L.5.42), *B. lupini* WSM471 (L.5.43), *B. lupini* WSM4024 (L.5.44), *Glomus intraradices* RTI-801 (L.5.45), *Mesorhizobium sp.* WSM1271 (L.5.46), *M. sp.* WSM1497 (L.5.47), *M. ciceri* CC1192 (L.5.48), *M. huakii* (L.5.49), *M. loti* CC829 (L.5.50), *M. loti* SU343 (L.5.51), *Rhizobium leguminosarum* bv. *phaseoli* RG-B10 (L.5.52), *R. l.* bv. *trifolii* RP113-7 (L.5.53), *R. l.* bv. *trifolii* 095 (L.5.57), *R. l.* bv. *trifolii* TA1 (L.5.58), *R. l.* bv. *trifolii* CC283b (L.5.59), *R. l.* bv. *trifolii* CC275e (L.5.60), *R. l.* bv. *trifolii* CB782 (L.5.61), *R. l.* bv. *trifolii* CC1099 (L.5.62), *R. l.* bv. *trifolii* WSM1325 (L.5.63), *R. l.* bv. *viciae* SU303 (L.5.64), *R. l.* bv. *viciae* WSM1455 (L.5.65), *R. l.* bv. *viciae* P1 NP3Cst (L.5.66), *R. l.* bv. *viciae* RG-P2 (L.5.67), *R. tropici* PRF 81 (L.5.68), *R. tropici* SEMIA 4077 (L.5.69), *R. tropici* CC511 (L.5.70), *Sinorhizobium meliloti* RCR2011 (L.5.71), *S. meliloti* NRG185 (L.5.72), *S. meliloti* RRI128 (L.5.73);

L6a) Biochemical pesticides with plant stress reducing, plant growth regulator and/or plant yield enhancing activity: abscisic acid (L.6.1), aluminium silicate (kaolin) (L.6.2), 3-decen-2-one (L.6.3), formononectin (L.6.4), genistein (L.6.5), hesperetin (L.6.6), homobrassinolide (L.6.7), humates (L.6.8), methyl jasmonate (L.6.9), cis-jasmone (L.6.10), lysophosphatidyl ethanlamine (L.6.11), naringenin (L.6.12), polymeric polyhydroxy acid (L.6.13), salicylic acid (L.6.14), *Ascophyllum nodosum* (Norwegian kelp, Brown kelp) extract (L.6.15) and *Ecklonia maxima* (kelp) extract (L.6.16).

According to a further embodiment of the inventive compositions, the biopesticide component III is Bacillus amyloliquefaciens subsp. plantarum MBI600. These compositions are particularly suitable in soybean.

According to another embodiment of the inventive compositions, the biopesticide component III is B. pumilus strain INR-7 (otherwise referred to as BU-F22 (NRRL B-50153) and BU-F33 (NRRL B-50185; see WO 2012/079073). These compositions are particularly suitable in soybean and corn.

According to another embodiment of the inventive compositions, the biopesticide component III is Bacillus simplex, preferably B. simplex strain ABU 288 (NRRL B-50340). These compositions are particularly suitable in soybean and corn.

According to another embodiment of the inventive compositions, the biopesticide component III is selected from Trichoderma asperellum, T. atroviride, T. fertile, T. gamsii, T. harmatum; composition of T. harzianum and T. viride; composition of T. polysporum and T. harzianum; T. stromaticum, T. virens (also named Gliocladium virens) and T. viride; preferably Trichoderma fertile, in particular T. fertile strain JM41R. These compositions are particularly suitable in soybean and corn.

According to another embodiment of the inventive compositions, the biopesticide component III is Sphaerodes mycoparasitica, preferably Sphaerodes mycoparasitica strain IDAC 301008-01 (also referred to as strain SMCD2220-01). These compositions are particularly suitable in soybean and corn.

According to another embodiment of the inventive compositions, the biopesticide component III is Beauveria bassiana, preferably Beauveria bassiana strain PPRI5339. These compositions are particularly suitable in soybean and corn.

According to another embodiment of the inventive compositions, the biopesticide component III is Metarhizium anisopliae or M. anisopliae var. acridium, preferably selected from M anisolpiae strain IMI33 and M. anisopliae var. acridium strain IMI 330189. These compositions are particularly suitable in soybean and corn.

According to another embodiment of the inventive compositions, the biopesticide component III is Bacillus firmus, preferably strain I-1592. This isolate has been deposited with the Collection Nationale de Cultures de Microorganismes (CNCM), Institute Pasteur, France, on May 29, 1995 under Accession Number CNCMI-1582.

According to another embodiment of the inventive compositions, Bradyrhizobium sp. (meaning any Bradyrhizobium species and/or strain) as biopesticide II is Bradyrhizobium japonicum (B. japonicum). These compositions are particularly suitable in soybean. Preferably B. japonicum is not one of the strains TA-11 or 532c. B. japonicum strains were cultivated using media and fermentation techniques known in the art, e.g. in yeast extract-mannitol broth (YEM) at 27°C for about 5 days.

References for various B. japonicum strains are given e.g. in US 7,262,151 (B. japonicum strains USDA 110 (= IITA 2121, SEMIA 5032, RCR 3427, ARS I-110, Nitragin 61A89; isolated from Glycine max in Florida in 1959, Serogroup 110; Appl Environ Microbiol 60, 940-94, 1994), USDA 31 (= Nitragin 61A164; isolated from Glycine max in Wisoconsin in 1941, USA, Serogroup 31), USDA 76 (plant passage of strain USDA 74 which has been isolated from Glycine max in California, USA, in 1956, Serogroup 76), USDA 121 (isolated from Glycine max in Ohio, USA, in 1965), USDA 3 (isolated from Glycine max in Virginia, USA, in 1914, Serogroup 6) and USDA 136 (= CB 1809, SEMIA 586, Nitragin 61A136, RCR 3407; isolated from Glycine max in Beltsville, Maryland in 1961; Appl Environ Microbiol 60, 940-94, 1994). USDA refers to United States Department of Agriculture Culture Collection, Beltsville, Md., USA (see e.g. Beltsville Rhizobium Culture Collection Catalog March 1987 ARS-30). Further suitable B. japonicum strain G49 (INRA, Angers, France) is described in Fernandez-Flouret, D. & Cleyet-Marel, J. C. (1987) C R Acad Agric Fr 73, 163-171), especially for soybean grown in Europe, in particular in France. Further suitable B. japonicum strain TA-11 (TA11 $NOD^+$) (NRRL B-18466) is i.a. described in US 5,021,076; Appl Environ Microbiol (1990) 56, 2399-2403 and commercially available as liquid inoculant for soybean (VAULT® NP, Becker Underwood, USA). Further B. japonicum strains as example for biopesticide component III are described in US2012/0252672A. Further suitable and especially in Canada commercially available strain 532c (The Nitragin Company, Milwaukee, Wisconsin, USA, field isolate from Wisconsin; Nitragin strain collection No. 61A152; Can J Plant Sci 70 (1990), 661-666).

Other suitable and commercially available B. japonicum strains (see e.g. Appl Environ Microbiol 2007, 73(8), 2635) are SEMIA 566 (isolated from North American inoculant in 1966 and used in Brazilian commercial inoculants from 1966 to 1978), SEMIA 586 (= CB 1809; originally isolated in Maryland, USA but received from Austrailia in 1966 and used in Brazilian inoculants in 1977), CPAC 15 (= SEMIA 5079; a natural varaiant of SEMIA 566 used in commercial inoculants since 1992) and CPAC 7 (= SEMIA 5080; a natural variant of SEMIA 586 used in commercial inoculants since 1992). These strains are especially suitable for soybean grown in Australia or South America, in particular in Brazil. Some of the abovementioned strains have been re-classified as a novel species Bradyrhizobium elkanii, e.g. strain USDA 76 (Can. J. Microbiol., 1992, 38, 501-505).

Another suitable and commercially available B. japonicum strain is E-109 (variant of strain USDA 138, see e.g. Eur. J. Soil Biol. 45 (2009) 28-35; Biol Fertil Soils (2011) 47:81-89, deposited at Agriculture Collection Laboratory of the Instituto de Microbiologia y Zoologia Agricola (IMYZA), Instituto Nacional de Tecnologi'a Agropecuaria (INTA), Castelar, Argentina). This strain is especially suitable for soybean grown in South America, in particular in Argentina.

The present invention also relates to compositions, wherein the biopesticide component III is selected from Bradyrhizobium elkanii and Bradyrhizobium liaoningense (B. elkanii and B. liaoningense), more preferably from B. elkanii. These compositions are particularly suitable in soybean. B. elkanii and liaoningense were cultivated using media and fermentation techniques known in the art, e.g. in yeast extract-mannitol broth (YEM) at 27°C for about 5 days.

Suitable and commercially available B. elkanii strains are SEMIA 587 and SEMIA 5019 (=29W) (see e.g. Appl Environ Microbiol 2007, 73(8), 2635) and USDA 3254 and USDA 76 and USDA 94. Further commercially available B. elkanii strains are U-1301 and U-1302 (e.g. product Nitroagin® Optimize from Novozymes Bio As S.A., Brazil or NITRASEC for soybean from LAGE y Cia, Brazil). These strains are especially suitable for soybean grown in Australia or South America, in particular in Brazil.

The present invention also relates to compositions, wherein the biopesticide component III is selected from Bradyrhizobium japonicum (B. japonicum) and further comprisies a compound III, wherein compound III is selected from jasmonic acid or salts or derivatives thereof including cis-jasmone, preferably methyl-jasmonate or cis-jasmone.

The present invention also relates to compositions, wherein biopesticide II is selected from Bradyrhizobium sp. (Arachis) (B. sp. Arachis) which shall describe the cowpea miscellany cross-inoculation group which includes inter alia indigenous cowpea bradyrhizobia on cowpea (Vigna unguiculata), siratro (Macroptilium atropurpureum), lima bean (Phaseolus lunatus), and peanut (Arachis hypogaea). This composition comprising as biopesticide II B. sp. Arachis is especially suitable for use in peanut, Cowpea, Mung bean, Moth bean, Dune bean, Rice bean, Snake bean and Creeping vigna, in particular peanut.

Suitable and commercially available B. sp. (Arachis) strain is CB1015 (= IITA 1006, USDA 3446 presumably originally collected in India; from Australian Inoculants Research Group; see e.g. http://www.qaseeds.com.au/inoculant applic.php; Beltsville Rhizobium Culture Collection Catalog March 1987 USDA-ARS ARS-30). These strains are especially suitable for peanut grown in Australia, North America or South America, in particular in Brazil. Further suitable strain is Bradyrhizobium sp. PNL01 (Becker Underwood; ISO Rep Marita McCreary, QC Manager Padma Somasageran; IDENTIFICATION OF RHIZOBIA SPECIES THAT CAN ESTABLISH NITROGEN-FIXING NODULES IN CROTALARIA

LONGIROSTRATA. April 29, 2010, University of Massachusetts Amherst: http://www.wpi.edu/Pubs/E-project/Available/E-project-042810-163614/unrestricted/Bisson.Mason._Identification of_Rhizobia_ Species That can_Establish_Nitrogen-Fixing_Nodules_in Crotalia_Longirostrata.pdf).

Suitable and commercially available Bradyrhizobium sp. (Arachis) strains especially for cowpea and peanut but also for soybean are Bradyrhizobium SEMIA 6144, SEMIA 6462 (= BR 3267) and SEMIA 6464 (= BR 3262) (deposited at FEPAGRO-MIRCEN, R. Gonçalves Dias, 570 Porto Alegre - RS, 90130-060, Brazil; see e.g. FEMS Microbiology Letters (2010) 303(2), 123-131; Revista Brasileira de Ciencia do Solo (2011) 35(3);739-742, ISSN 0100-0683).

The present invention also relates to compositions, wherein the biopesticide component III is selected from Bradyrhizobium sp. (Lupine) (also called B. lupini, B. lupines or Rhizobium lupini). This composition is especially suitable for use in dry beans and lupins.

Suitable and commercially available B. lupini strain is LL13 (isolated from Lupinus iuteus nodules from French soils; deposited at INRA, Dijon and Angers, France; http://agriculture.gouv.fr/IMG/pdf/ch20060216.pdf). This strain is especially suitable for lupins grown in Australia, North America or Europe, in particular in Europe.

Further suitable and commercially available B. lupini strains WU425 (isolated in Esperance, Western Australia from a non-Australian legume Ornthopus compressus), WSM4024 (isolated from lupins in Australia by CRS during a 2005 survey) and WSM471 (isolated from Ornithopus pinnatus in Oyster Harbour, Western Australia) are described e.g. in Palta J.A. and Berger J.B. (eds), 2008, Proceedings 12th International Lupin Conference, 14-18 Sept. 2008, Fremantle, Western Australia. International Lupin Association, Canterbury, New Zealand, 47-50, ISBN 0-86476-153-8: http://www.lupins.org/pdf/conference/2008/Agronomy%20and%20Production/John%20Howie son%20and%20G%20OHara.pdf; Appl Environ Microbiol (2005) 71, 7041-7052 and Australian J. Exp. Agricult. (1996) 36(1), 63-70.

The present invention also relates to compositions, wherein the biopesticide component III is selected from Mesorhizobium sp. (meaning any Mesorhizobium species and/or strain), more preferably Mesorhizobium ciceri. These compositions are particularly suitable in cowpea.

Suitable and commercially available M. sp. strains are e.g. M. ciceri CC1192 (=UPM 848, CECT 5549; from Horticultural Research Station, Gosford, Australia; collected in Israel from Cicer arietinum nodules; Can J Microbial (2002) 48, 279-284) and Mesorhizobium sp. strains WSM1271 (collected in Sardinia, Italy, from plant host Biserrula pelecinus), WSM 1497 (collected in Mykonos, Greece, from plant host Biserrula pelecinus), M. loti strains CC829 (commerical inoculant for Lotus pedunculatus and L. ulginosus in Australia, isolated from L. ulginosus nodules in USA) and SU343 (commercial inoculant for Lotus corniculatus in Australia; isolated from host nodules in USA) all of which are deposited at Western Australian Soil Microbiology (WSM) culture collection, Australia and/or CSIRO collection (CC), Canberra, Australian Capirtal Territory (see e.g. Soil Biol Biochem (2004) 36(8), 1309-1317; Plant and Soil (2011) 348(1-2), 231-243).

Suitable and commercially available M. loti strains are e.g. M. loti CC829 for Lotus pedunculatus.

The present invention also relates to compositions wherein the biopesticide component III is selected from Mesorhizobium huakuii, also referred to as Rhizobium huakuii (see e.g. Appl. Environ. Microbiol. 2011, 77(15), 5513-5516). These compositions are particularly suitable in Astralagus, e.g. Astalagus sinicus (Chinese milkwetch), Thermopsis, e.g. Thermopsis luinoides (Goldenbanner) and alike.

Suitable and commercially available M. huakuii strain is HN3015 which was isolated from Astralagus sinicus in a rice-growing field of Southern China (see e.g. World J. Microbiol. Biotechn. (2007) 23(6), 845-851, ISSN 0959-3993).

The present invention also relates to compositions, wherein the biopesticide component III is selected from Azospirillum amazonense, A. brasilense, A. lipoferum, A. irakense, A. halopraeferens, more preferably from A. brasilense, in particular selected from A. brasilense strains BR 11005 (SP 245) and AZ39 which are both commercially used in Brazil and are obtainable from EMBRAPA, Brazil. These compositions are particularly suitable in soybean.

Humates are humic and fulvic acids extracted from a form of lignite coal and clay, known as leonardite. Humic acids are organic acids that occur in humus and other organically derived materials such as peat and certain soft coal. They have been shown to increase fertilizer efficiency in phosphate and micro-nutrient uptake by plants as well as aiding in the development of plant root systems.

Salts of jasmonic acid (jasmonate) or derivatives include without limitation the jasmonate salts potassium jasmonate, sodium jasmonate, lithium jasmonate, ammonium jasmonate, dimethylammonium jasmonate, isopropylammonium jasmonate, diolammonium jasmonate, diethtriethanolammonium jasmonate, jasmonic acid methyl ester, jasmonic acid amide, jasmonic acid methylamide, jasmonic acid-L-amino acid (amide-linked) conjugates (e.g., conjugates with L- isoleucine, L- valine, L-leucine, or L-phenylalanine), 12-oxo-phytodienoic acid, coronatine, coronafacoyl- L-serine, coronafacoyl-L-threonine, methyl esters of 1 - oxo-indanoyl-isoleucine, methyl esters of 1-oxo-indanoyl-leucine, coronalon (2- [(6- ethyl-1-oxo-indane-4-carbonyl) -amino] -3- methyl -pentanoic acid methyl ester), linoleic acid or derivatives thereof and cis-jasmone, or combinations of any of the above. More preferably, jasmonic acid derivatives are selected from jasmonic acid, methyl jasmonate and cis-jasmone.

According to a further embodiment of the invention, the biopesticide component III is selected from the groups:

La) Microbial pesticides with fungicidal, bactericidal, viricidal and/or plant defense activator activity selected from: Bacillus altudinis, Bacillus amyloliquefaciens, Bacillus amyloliquefaciens ssp. plantarum MBI 600 (II-27), B. amyloliquefaciens ssp. plantarum D747, B. megaterium, B. mojavensis (II-28), B. mycoides, B. pumilus INR-7 (II-29), B. pumilus GHA 180, B. simplex (II-30), B. solisalsi (II-31), Bacillus subtilis, Burkholderia sp., Clavibacter michiganensis (bacteriophages) (II-32), Gliocladium roseum (II-33), Microsphaeropsis ochracea, Muscodor albus, Paenibacillus alvei, Paenibacillus polymyxa (II-34), Pantoea agglomerans (II-35), Pantoea vagans, Penicillium bilaiae, Pseudomonas sp., Pseudomonas chloraphis, P. fluorescens, Sphaerodes mycoparasitica (II-36), Streptomyces lydicus (II-37), S. violaceusniger (II-38), Trichoderma fertile JM41R (II-39), Typhula phacorrhiza (II-40), Verticillium dahlia (II-42), zucchini yellow mosaic virus (avirulent strain);

Lb) Biochemical pesticides with fungicidal, bactericidal, viricidal and/or plant defense activator activity selected from: harpin protein, laminarin, jasmonic acid (II-43) or salts or derivatives thereof, laminarin, Menhaden fish oil, natamycin, Plum pox virus coat protein, potassium or sodium bicarbonate, salicylic acid, tea tree oil;

Lc) Microbial pesticides with insecticidal, acaricidal, molluscidal and/or nematicidal activity selected from: Agrobacterium radiobacter, Bacillus cereus, Bacillus firmus (II-44), B. thuringiensis ssp. israelensis, B. t. ssp. galleriae, B. t. ssp. kurstaki, Beauveria bassiana (II-45), Beauveria brongniartii, Burkholderia sp., Chromobacterium subtsugae, Cydia pomonella granulosis virus, Isaria fumosorosea, Lecanicillium longisporum, L. muscarium (formerly Verticillium lecanii), Metarhizium anisopliae (II-46), M. anisopliae var. anisopliae, M. anisopliae var. acridum, Paecilomyces fumosoroseus, P. lilacinus, Paenibacillus popilliae, Pasteuria spp., P. nishizawae, P. reneformis, P. usagae, Pseudomonas fluorescens, Pseudomonas putida, Steinernema feltiae, Steinernema kraussei, Streptomces galbus, Streptomyces microflavus;

Ld) Biochemical pesticides with insecticidal, acaricidal, molluscidal, pheromone and/or nematicidal activity selected from: L-carvone, citral, (E,Z)-7,9-dodecadien-1-yl acetate, ethyl formate, (E,Z)-2,4-ethyl decadienoate (pear ester), (Z,Z,E)-7,11,13-hexadecatrienal, heptyl butyrate, isopropyl myristate, lavanulyl senecioate, 2-methyl 1-butanol, methyl eugenol, methyl jasmonate, (E,Z)-2,13-octadecadien-1-ol, (E,Z)-2,13-octadecadien-1-ol acetate, (E,Z)-3,13-octadecadien-1-ol, R-1-octen-3-ol, pentatermanone, potassium silicate, sorbitol actanoate, (E,Z,Z)-3,8,11-tetradecatrienyl acetate, (Z,E)-9,12-tetradecadien-1-yl acetate, Z-7-tetradecen-2-one, Z-9-tetradecen-1-yl acetate, Z-11-tetradecenal, Z-11-tetradecen-1-ol, Acacia negra extract, extract of grapefruit seeds and pulp, extract of Chenopodium ambrosiodae, Catnip oil, Neem oil, Quillay extract (II-47), Tagetes oil;

Le) Microbial pesticides with plant stress reducing, plant growth regulator, plant growth promoting and/or yield enhancing activity selected from: Azospirillum amazonense, A. brasilense (II-48), A. lipoferum, A. irakense, A. halopraeferens, Bradyrhizobium sp. (II-49), B. japonicum (II-50), B. elkanii, B. lupini, B. liaoningense, Delftia acidovorans, Glomus intraradices, Mesorhizobium sp. (II-51), M. ciceri, M. huakii, M. loti, Paenibacillus alvei, Penicillium bilaiae (II-52), Rhizobium leguminosarum bv. phaseoli (II-53), R. I. trifolii, R. I. bv. viciae (II-54), R. tropici, Sinorhizobium meliloti (II-55);

Lf) Biochemical pesticides with plant stress reducing, plant growth regulator and/or plant yield enhancing activity selected from: abscisic acid, aluminium silicate (kaolin), 3-decen-2-one, homobrassinlide, humates, indole-3-acetic acid, lysophosphatidyl ethanlamine, polymeric polyhydroxy acid, Ascophyllum nodosum (Norwegian kelp, Brown kelp) extract and Ecklonia maxima (kelp) extract.

In a further embodiment, La) to Lf) are defined as follows (La.1) to Lf.1)):

La.1) Microbial pesticides with fungicidal, bactericidal, viricidal and/or plant defense activator activity selected from: Bacillus amyloliquefaciens MBI 600 (II-27), B. mojavensis (II-28), B. pumilus INR-7 (II-29), B. simplex (II-30), B. solisalsi (II-31), Clavibacter michiganensis (bacteriophages) (II-32), Gliocladium roseum (II-33), Paenibacillus polymyxa (II-34), Pantoea agglomerans (II-35), Sphaerodes mycoparasitica (II-36), Streptomyces lydicus (II-37), S. violaceusniger (II-38), Trichoderma fertile JM41R (II-39), Typhula phacorrhiza (II-40), Ulocladium oudema (II-41), Verticillium dahlia (II-42), zucchini yellow mosaic virus (avirulent strain);
Lb.1) Biochemical pesticides with fungicidal, bactericidal, viricidal and/or plant defense activator activity selected from: jasmonic acid (II-43) or salts or derivatives thereof, laminarin, Menhaden fish oil, natamycin, Plum pox virus coat protein, Reynoutria sachlinensis extract, salicylic acid, tea tree oil;
Lc.1) Microbial pesticides with insecticidal, acaricidal, molluscidal and/or nematicidal activity selected from: Bacillus firmus (II-44), B. thuringiensis ssp. israelensis, B. t. ssp. galleriae, B. t. ssp. kurstaki, Beauveria bassiana (II-45), Burkholderia sp., Chromobacterium subtsugae, Cydia pomonella granulosis virus, Isaria fumosorosea, Lecanicillium

longisporum, L. muscarium (formerly Verticillium lecanii), Metarhizium anisopliae (II-46), M. anisopliae var. acridum, Paecilomyces fumosoroseus, P. lilacinus, Paenibacillus poppiliae, Pasteuria spp., P. nishizawae, P. reneformis, P. usagae, Pseudomonas fluorescens, Steinernema feltiae, Streptomces galbus;

Ld.1) Biochemical pesticides with insecticidal, acaricidal, molluscidal, pheromone and/or nematicidal activity selected from: L-carvone, citral, (E,Z)-7,9-dodecadien-1-yl acetate, ethyl formate, (E,Z)-2,4-ethyl decadienoate (pear ester), (Z,Z,E)-7,11,13-hexadecatrienal, heptyl butyrate, isopropyl myristate, lavanulyl senecioate, 2-methyl 1-butanol, methyl eugenol, methyl jasmonate, (E,Z)-2,13-octadecadien-1-ol, (E,Z)-2,13-octadecadien-1-ol acetate, (E,Z)-3,13-octadecadien-1-ol, R-1-octen-3-ol, pentatermanone, potassium silicate, sorbitol actanoate, (E,Z,Z)-3,8,11-tetradecatrienyl acetate, (Z,E)-9,12-tetradecadien-1-yl acetate, Z-7-tetradecen-2-one, Z-9-tetradecen-1-yl acetate, Z-11-tetradecenal, Z-11-tetradecen-1-ol, Acacia negra extract, extract of grapefruit seeds and pulp, extract of Chenopodium ambrosiodae, Catnip oil, Neem oil, Quillay extract (II-47), Tagetes oil;

Le.1) Microbial pesticides with plant stress reducing, plant growth regulator, plant growth promoting and/or yield enhancing activity selected from: Azospirillum amazonense, A. brasilense (II-48), A. lipoferum, A. irakense, A. halopraeferens, Bradyrhizobium sp. (II-49), B. japonicum (II-50), Glomus intraradices, Mesorhizobium sp. (II-1), Paenibacillus alvei, Penicillium bilaiae (II-52), Rhizobium leguminosarum bv. phaseolii (II-53), R. I. trifolii, R. I. bv. viciae (II-54), Sinorhizobium meliloti (II-55);

Lf.1) Biochemical pesticides with plant stress reducing, plant growth regulator and/or plant yield enhancing activity selected from: abscisic acid, aluminium silicate (kaolin), 3-decen-2-one, homobrassinlide, humates, indole-3-acetic acid, lysophosphatidyl ethanlamine, polymeric polyhydroxy acid, Ascophyllum nodosum (Norwegian kelp, Brown kelp) extract and Ecklonia maxima (kelp) extract.

According to one embodiment of the inventive mixtures, the component 2) is a biopesticide II from the groups D) to I) selected from:

La-1) Microbial pesticides with fungicidal, bactericidal, viricidal and/or plant defense activator activity: Bacillus altitudinis 41 KF2b, Bacillus amyloliquefaciens AP-136, B. amyloliquefaciens AP-188, B. amyloliquefaciens AP-218, B. amyloliquefaciens AP-219, B. amyloliquefaciens AP-295, B. amyloliquefaciens IN937a, B. amyloliquefaciens IT-45, B. amyloliquefaciens ssp. plantarum D747, B. amyloliquefaciens ssp. plantarum MBI600 (NRRL B-50595), B. amyloliquefaciens ssp. plantarum TJ1000, B. mojavensis AP-209, B. mycoides AQ726, B. mycoides strain J, B. pumilus INR-7, B. pumilus GHA 180, B. simplex ABU 288 , B. solisalsi AP-217, B. subtilis CX-9060, B. subtilis FB17, B. subtilis GB07, Clavibacter michiganensis (bacteriophages), Gliocladium roseum 321U, Microsphaeropsis ochracea P130A, Muscodor albus QST 20799, Muscodor albus SA-13, Paenibacillus alvei NAS6G6, Paenibacillus polymyxa PKB1, Pantoea agglomerans E325, Pantoea vagans C9-1, Penicillium bilaiae ATCC 22348, P. bilaiae ATCC 20851, Penicillium bilaiae ATCC 18309, Phlebiopsis gigantea, Pichia anomala WRL-76, Pseudomonas sp. Proradix, Pseudomonas chloraphis MA 342, P. fluorescens A506, P. fluorescens CL 145A, P. fluorescens NCIB 12089, P. fluorescens Pf-5, P. fluorescens WCS 374, P. fluorescens ATCC 13525, P. fluorescens CHA0, P. putida ATCC 202153, Sphaerodes mycoparasitica SMCD2220, S. lydicus WYEC 108, S. violaceusniger XL-2, S. violaceusniger YCED-9, Trichoderma fertile JM41R, Typhula phacorrhiza 94671, Verticillium dahlia, zucchini yellow mosaic virus (avirulent strain);

Lb-1) Biochemical pesticides with fungicidal, bactericidal, viricidal and/or plant defense activator activity: harpin protein, laminarin, Menhaden fish oil, natamycin, Plum pox virus coat protein, potassium bicarbonate, salicylic acid, potassium or sodium bicarbonate, tea tree oil;

Lc-1) Microbial pesticides with insecticidal, acaricidal, molluscidal and/or nematicidal activity: Agrobacterium radiobacter K1026, A. radiobacter K84, Bacillus firmus I-1582; B. thuringiensis ssp. aizawai strains: ABTS-1857, SAN 401 I, ABG-6305 and ABG-6346; B. t. ssp. israelensis AM65-52, B. t. ssp. israelensis SUM-6218, B. t. ssp. galleriae SDS-502, B. t. ssp. kurstaki EG 2348, B. t. ssp. kurstaki SB4, B. t. ssp. kurstaki ABTS-351 (HD-1), Beauveria bassiana ATCC 74040, B. bassiana GHA, B. bassiana H123, B. bassiana DSM 12256, B. bassiana PPRI 5339, B. brongniartii, Burkholderia sp. A396, Chromobacterium subtsugae PRAA4-1, Cydia pomonella granulosis virus V22, Cydia pomonella granulosis virus V1, Cryptophlebia leucotreta granulovirus (CrleGV), Flavobacterium sp. H492, Helicoverpa armigera nucleopolyhedrovirus (HearNPV), Isaria fumosorosea Apopka-97, Lecanicillium longisporum KV42, L. longisporum KV71, L. muscarium KV01, Metarhizium anisopliae FI-985, M. anisopliae FI-1045, M. anisopliae F52, M. anisopliae ICIPE 69, M. anisopliae var. acridum IMI 330189; Nomuraea rileyi strains: SA86101, GU87401, SR86151, CG128 and VA9101; Paecilomyces fumosoroseus FE 9901, P. lilacinus 251, P. lilacinus DSM 15169, P. lilacinus BCP2, Paenibacillus popilliae Dutky-1940 (NRRL B-2309 = ATCC 14706), P. popilliae Dutky 1, P. popilliae KLN 3, Pasteuria sp. Ph3, Pasteuria sp. ATCC PTA-9643, Pasteuria sp. ATCC SD-5832, P. nishizawae Pn1, P. penetrans, P. ramosa, P. sp. Pr-3, P. thornea, P. usgae, Pseudomonas fluorescens CL 145A, Spodoptera littoralis nucleopolyhedrovirus (SpliNPV), Steinernema carpocapsae, S. feltiae, S. kraussei L137;

Ld-1) Biochemical pesticides with insecticidal, acaricidal, molluscidal, pheromone and/or nematicidal activity: L-carvone, citral, (E,Z)-7,9-dodecadien-1-yl acetate, ethyl formate, (E,Z)-2,4-ethyl decadienoate (pear ester), (Z,Z,E)-7,11,13-hexadecatrienal, heptyl butyrate, isopropyl myristate, cis-jasmone, lavanulyl senecioate, 2-methyl 1-butanol, methyl eugenol, methyl jasmonate, (E,Z)-2,13-octadecadien-1-ol, (E,Z)-2,13-octadecadien-1-ol acetate, (E,Z)-3,13-octadecadien-1-ol, R-1-octen-3-ol, pentatermanone, potassium silicate, sorbitol actanoate, (E,Z,Z)-3,8,11-tetradecatrienyl acetate, (Z,E)-9,12-tetradecadien-1-yl acetate, Z-7-tetradecen-2-one, Z-9-tetradecen-1-yl acetate, Z-11-tetradecenal, Z-11-tetradecen-1-ol, Acacia negra extract, extract of grapefruit seeds and pulp, extract of Chenopodium ambrosiodes, Catnip oil, Neem oil, Quillay extract, Tagetes oil;

Le-1) Microbial pesticides with plant stress reducing, plant growth regulator, plant growth promoting and/or yield enhancing activity: Azospirillum amazonense BR 11140 (SpY2), A. brasilense Ab-V5, A. brasilense Ab-V6, A. brasilense AZ39, A. brasilense XOH, A. brasilense Sp245 (BR 11005), A. brasilense BR 11002, A. lipoferum BR 11646 (Sp31), A. irakense, A. halopraeferens, Bradyrhizobium sp. PNL01, B. sp. (Arachis) CB1015, B. sp. (Arachis) USDA 3446, B. sp. (Arachis) SEMIA 6144, B. sp. (Arachis) SEMIA 6462, B. sp. (Arachis) SEMIA 6464, B. sp. (Vigna), B. elkanii SEMIA 587, B. elkanii SEMIA 5019, B. elkanii U-1301, B. elkanii U-1302, B. elkanii USDA 74, B. elkanii USDA 76, B. elkanii USDA 94, B. elkanii USDA 3254, B. japonicum 532c, B. japonicum CPAC 15, B. japonicum E-109, B. japonicum G49, B. japonicum TA-11, B. japonicum USDA 3, B. japonicum USDA 31, B. japonicum USDA 76, B. japonicum USDA 110, B. japonicum USDA 121, B. japonicum USDA 123, B. japonicum USDA 136, B. japonicum SEMIA 566, B. japonicum SEMIA 5079, B. japonicum SEMIA 5080, B. japonicum WB74, B. liaoningense, B. lupini LL13, B. lupini WU425, B. lupini WSM471, B. lupini WSM4024, Glomus intraradices RTI-801, Mesorhizobium sp. WSM1271, M. sp. WSM1497, M. ciceri CC1192, M. huakii, M. loti CC829, M. loti SU343, Rhizobium leguminosarum bv. phaseoli RG-B10, R. I. bv. trifolii RP113-7, R. I. bv. trifolii 095, R. I. bv. trifolii TA1, R. I. bv. trifolii CC283b, R. I. bv. trifolii CC275e, R. I. bv. trifolii CB782, R. I. bv. trifolii CC1099, R. I. bv. trifolii WSM1325, R. I. bv. viciae SU303, R. I. bv. viciae WSM1455, R. I. bv. viciae P1 NP3Cst, R. I. bv. viciae RG-P2, R. tropici PRF 81, R. tropici SEMIA 4077, R. tropici CC511(L.5.70), Sinorhizobium meliloti RCR2011, S. meliloti NRG185, S. meliloti RRI128;

Lf-1) Biochemical pesticides with plant stress reducing, plant growth regulator and/or plant yield enhancing activity: abscisic acid, aluminium silicate (kaolin), 3-decen-2-one, formononectin, genistein, hesperetin, homobrassinolide, humates, methyl jasmonate, cis-jasmone, lysophosphatidyl ethanlamine, naringenin, polymeric polyhydroxy acid, salicylic acid, Ascophyllum nodosum (Norwegian kelp, Brown kelp) extract and Ecklonia maxima (kelp) extract.

Preference is also given to compositions comprising as biopesticide component III a biopesticide from group La), preferably selected from Bacillus amyloliquefaciens herein even more preferably from strains AP-136, AP-188, AP-218, AP-219, AP-295, IN937a, IT-45; B. amyloliquefaciens ssp. plantarum herein even more preferably from strains MBI600, D747 and TJ1000; B. mojavensis AP-209; B. pumilus GHA 180 and INR-7; B. simplex herein more preferably strain ABU 288; B. solisalsi herein more preferably strain AP-217; B. subtilis herein even more preferably selected from strains CX-9060, FB17 and GB07; Muscodor albus herein more preferably strains QST 20799 and SA-13; Paenibacillus alvei herein more preferably strain NAS6G6, Paenibacillus polymyxa herein more preferably strain PKB1, Penicillium bilaiae herein more preferably strains ATCC 22348, ATCC 20581 and ATCC 18309; Pseudomonas fluorescens herein more preferably strain A506; Sphaerodes mycoparasitica herein more preferably strain SMCD2220; Trichoderma fertile herein more preferably strain JM41R.

Preference is also given to compositions comprising as biopesticide component III a biopesticide from group La), even more preferably selected from even more preferably from B. amyloliquefaciens AP-188, B. amyloliquefaciens ssp. plantarum MBI600, B. pumilus INR-7, B. simplex ABU 288, B. subtilis FB17, Paenibacillus alvei NAS6G6 and Trichoderma fertile JM41R.

According to one embodiment of the inventive compositions, the at least one biopesticide component III is Bacillus amyloliquefaciens ssp. plantarum MBI600. These compositions are particularly suitable in soybean.

According to another embodiment of the inventive compositions, the at least one biopesticide component III is B. pumilus INR-7. These compositions are particularly suitable in soybean and corn.

According to a further embodiment, the at least one biopesticide component III is Bacillus simplex, preferably B. simplex ABU 288. These compositions are particularly suitable in soybean and corn.

According to a further embodiment, the at least one biopesticide component III is Bacillus subtilis, preferably B. subtilis strain FB17.

According to one embodiment of the inventive compositions, the at least one biopesticide component III is selected from Bacillus amyloliquefaciens AP-136, B. amyloliquefaciens AP-188, B. amyloliquefaciens AP-218, B. amyloliquefaciens AP-219, B. amyloliquefaciens AP-295, B. amyloliquefaciens ssp. plantarum TJ1000, B. amyloliquefaciens ssp. plantarum D747, B. amyloliquefaciens ssp. plantarum MBI600, B. mojavensis AP-209, B. pumilus INR-7, B. pumilus GHA 180, B. simplex ABU 288, B. solisalsi AP-217, B. subtilis CX-9060, B. subtilis FB17 and B. subtilis GB07. These compositions are particularly suitable in soybean and corn, in particular for seed treatment.

According to a further embodiment, the at least one biopesticide component III is selected from Streptomyces

spp., preferably from S. griseoviridis, S. lydicus and S. violaceusniger, in particular from strains S. griseoviridis K61, S. lydicus WYEC 108, S. violaceusniger XL-2 and S. violaceusniger YCED-9.

According to a further embodiment, the at least one biopesticide component III is selected from Pseudomonas spp., preferably selected from P. chloraphis herein more preferably strain MA 342 and Pseudomonas sp. DSM 13134; P. fluorescens herein more preferably selected from strains A506, WCS 374 and Pf-5; and P. putida herein more preferably strain ATCC 202153.

The present invention also relates to compositions wherein the at least one biopesticide component III is selected from the fungal species Muscodor albus preferably from the strains SA-13 and QST 20799, which are particularly suiable for soil and seed treatment against soil-borne pathogens and/or nematodes.

Preference is also given to compositions comprising as biopesticide component III a biopesticide from group Lb), preferably selected methyl-jasmonate, cis-jasmone, laminarin, Reynoutria sachalinensis extract and tea tree oil; even more preferable from methyl jasmonate, cis-jasmone and laminarin.

Preference is also given to compositions comprising as biopesticide component III a biopesticide from group Lc), preferably selected from Agrobacterium radiobacter herein preferably strain K1026, Bacillus firmus herein referably strain I-1582, Bacillus thuringiensis ssp. kurstaki herein preferably strain SB4, Beauveria bassiana herein preferably selected from strains GHA, H123, DSM 12256 and PPRI 5339; Burkholderia sp. and herein preferably strain A396, Metarhizium anisopliae var. acridum herein preferably strain IMI 330189, M. anisopliae herein preferably selected from strains FI-985, FI-1045, F52 and ICIPE 69; Paecilomyces lilacinus herein preferably selected from strains 251, DSM 15169 and BCP2, Paenibacillus popilliae herein preferably selected from strains Dutky-1940, KLN 3 and Dutky 1; Pasteuria nishazawa and herein preferably strain Pn1.

Preference is also given to compositions comprising as biopesticide component III a biopesticide from group Lc), even more preferably from Bacillus thuringiensis ssp. kurstaki SB4, B. bassiana DSM 12256, B. bassiana PPRI 5339, Metarhizium anisopliae var. acridum IMI 330189, M. anisopliae FI-985, M. anisopliae FI-1045, Paecilomyces lilacinus DSM 15169, P. lilacinus BCP2, P. lilacinus 251, Paenibacillus popilliae Dutky-1940, P. popilliae KLN 3 and P. popilliae Dutky 1.

According to a further embodiment, the at least one biopesticide component III is Beauveria brongniartii.

According to a further embodiment, the at least one biopesticide component III is Metarhizium anisopliae or M. anisopliae var. acridium, preferably selected from M. anisopliae FI-1045, M. anisopliae F52, M. anisopliae var. acridum strains FI-985 and IMI 330189; in particular strain IMI 330189. These compositions are particularly suitable for control of arthropod pests in soybean and corn.

According to a further embodiment, the at least one biopesticide component III is Lecanicillium sp., preferably selected from Lecanicillium longisporum KV42, L. longisporum KV71 and L. muscarium KV01.

According to a further embodiment, the at least one biopesticide component III is Paecilomyces fumosoroseus, preferably strain FE 9901 especially for white fly control.

According to a further embodiment, the at least one biopesticide component III is selected from Nomuraea rileyi, preferably strains SA86101, GU87401, SR86151, CG128 and VA9101; and P. lilacinus, preferably strains 251, DSM 15169 or BCP2, in particular BCP2, which strains especially control the growth of plant-pathogenic nematodes.

According to a further embodiment, the at least one biopesticide component III is Bacillus firmus, preferably spores of strain CNCM I-1582, preferably useful for seed treatment of soybean and corn against nematodes and insects.

According to a further embodiment, the at least one biopesticide component III is Bacillus cereus, preferably spores of CNCM I-1562, preferably useful for seed treatment of soybean and corn against nematodes and insects.

According to a further embodiment, the at least one biopesticide component III is a composition of spores of B. firmus and B. cereus, preferably compositions spores of above mentioned strains CNCM I-1582 and CNCM I-1562, preferably useful for seed treatment of soybean and corn against nematodes and insects.

According to a further embodiment, the at least one biopesticide component III is selected from Bacillus t. ssp. kurstaki preferably from strains EG 2348, SB4 and ABTS-351 (HD-1), in particular B. t. ssp. kurstaki SB4. These strains are used for control of lepidopteran larvae, but without noctuidae.

According to one embodiment of the inventive compositions, the at least one biopesticide component III is selected from Bacillus firmus CNCM I-1582, Paecilomyces lilcinus 251, Pasteuria nishizawa Pn1 and Burkholderia sp. A396 having nematicidal, acaricidal and/or insecticidal activity. These compositions are particularly suitable in soybean and corn, in particular for seed treatment.

Preference is also given to compositions comprising as biopesticide component III a biopesticide from group Ld), preferably selected from methyl jasmonate, Acacia negra extract, extract of grapefruit seeds and pulp, Catnip oil, Neem oil, Quillay extract and Tagetes oil, in particular methyl jasmonate or water-based Quillay extract.

Preference is also given to compositions comprising as biopesticide component III a biopesticide from group Le), preferably selected from Azospirillum amazonense, A. brasilense, A. lipoferum, A. irakense, A. halopraeferens, Bradyrhizobium sp. (Arachis), Bradyrhizobium sp. (Vigna), B. elkanii, B. japonicum; Paenibacillus alvei, Penicillium bilaiae, Rhizobium leguminosarum bv. phaseoli, R. I. bv. trifolii, R. I. bv. viciae, and Sinorhizobium meliloti.

Preference is also given to compositions comprising as biopesticide component III a biopesticide from group Le) selected from Azospirillum amazonense SpY2, A. brasilense XOH, A. brasilense Sp245, A. brasilense Cd, A. brasilense Ab-V5, A. brasilense Ab-V6, A. lipoferum Sp31, Bradyrhizobium sp. (Vigna) PNL1, B. elkanii SEMIA 587, B. elkanii SEMIA 5019, B. japonicum SEMIA 5079, B. japonicum SEMIA 5080, B. japonicum TA-11, B. japonicum 532c, Paenibacillus alvei NAS6G6, Peniciillium bilaiae strains ATCC 18309, ATCC 20851 and ATCC 22348; Rhizobium leguminosarum bv. phaseoli RG-B10, R. l. bv. viciae P1NP3Cst, R. l. bv. viciae $R^G$-P2, R. l. bv. trifolii RP113-7, R. l. bv. viciae SU303, R. l. bv. viciae WSM1455, R. tropici SEMIA 4077, R. tropici PRF 81 and Sinorhizobium meliloti; even more preferably selected from Azospirillum brasilense Sp245, Bradyrhizobium sp. (Vigna) PNL1, B B. elkanii SEMIA 587, B. elkanii SEMIA 5019, B. japonicum SEMIA 5079, B. japonicum SEMIA 5080, B. japonicum TA-11 and B. japonicum 532c.

The present invention also relates to compositions, wherein the at least one biopesticide II is selected from Azospirillum amazonense, A. brasilense, A. lipoferum, A. irakense and A. halopraeferens, more preferably from A. brasilense, in particular selected from A. brasilense strains Sp245 and AZ39 which are both commercially used in Brazil and are obtainable from EMBRAPA-Agribiologia, Brazil, and strains Ab-V5 and Ab-V6; in particular compositions of these strains Ab-V5 and Ab-V6. These compositions are particularly suitable in soybean, especially as seed treatment.

According to another embodiment of the inventive compositions, Bradyrhizobium spp. (meaning any Bradyrhizobium species and/or strain) as biopesticide component III is B. japonicum. These compositions are particularly suitable in soybean. Certain B. japonicum strains have been re-classified as a novel species B. elkanii, e. g. strain USDA 76 (Can. J. Microbiol. 38, 501-505, 1992). Bradyrhizobium spp. are cultivated using media and fermentation techniques known in the art, e. g. in yeast extract-mannitol broth (YEM) at 27°C for about 5 days.

Preferably, B. japonicum is selected from strains E-109, SEMIA 5079, SEMIA 5080, TA-11 and 532c. According to a further embodiment, compositions of B. japonicum strains TA-11 and 532c or B. japonicum strains SEMIA 5079 and 5080 are used. The strains having a prefix SEMIA are especially suitable for soybean grown in Australia or South America, in particular in Brazil. More preferably, compositions of B. japonicum SEMIA 5079 and SEMIA 5080 are used. B. japonicum WB74 is especially suitable for soybean grown in South America and Africa, in particular in South Africa. Strain E-109 is especially suitable for soybean grown in South America, in particular in Argentina.

The present invention also relates to compositions, wherein the at least one biopesticide component III is selected from Bradyrhizobium elkanii and Bradyrhizobium liaoningense, more preferably from B. elkanii even more preferably B. elkanii strains SEMIA 587 and SEMIA 5019; in particular compositions of both. These compositions are particularly suitable in soybean in Australia or South America, in particular in Brazil.

The present invention also relates to compositions, wherein biopesticide component III is selected from Bradyrhizobium sp. (Arachis) and B. sp. (Vigna) which shall describe the cowpea miscellany cross-inoculation group which includes inter alia indigenous cowpea bradyrhizobia on cowpea (Vigna unguiculata), siratro (Macroptilium atropurpureum), lima bean (Phaseolus lunatus), and peanut (Arachis hypogaea), in particular in particular B. sp. (Vigna) strain PNL1. This composition comprising as biopesticide II B. sp. (Arachis) or B. sp. (Vigna) is especially suitable for use in peanut, cowpea, Mung bean, Moth bean, Dune bean, Rice bean, Snake bean and Creeping vigna, in particular peanut.

The present invention also relates to compositions, wherein the at least one biopesticide component III is selected from Bradyrhizobium lupini (also called B. sp. (Lupine), B. lupines or Rhizobium lupini). These compositions are especially suitable for use in dry beans and lupins. Preferably, B. lupini is strain LL13. This strain is especially suitable for lupins grown in Australia, North America or Europe, in particular in Europe.

The present invention also relates to compositions wherein the at least one biopesticide component III is selected from Rhizobium leguminosarum bv. phaseoli especially for the legume common bean (Phaseolus vulgaris), but also for other for various legumes such as alfalfa, clover, peas, beans, lentils, soybeans, peanuts and other crops such as corn and lettuce, even more preferably strain RG-B10 thereof; R. l. bv. trifolii, especially strain RP113-7 thereof, R. l. bv. viciae, in particular strains RG-P2, SU303, WSM1455 and P1 NP3Cst thereof, in particular P1 NP3Cst; R. tropici, especially strains CC511, CIAT 899 and PRF 81 thereof; and Sinorhizobium meliloti, especially strain RCR2011 thereof. Further R. l. bv. phaseoli or R. etli strains are e. g. known from the above mentioned references and Appl. Environ. Microbiol. 45(3), 737-742, 1983; ibida 54(5), 1280-1283, 1988.

According to a further embodiment, in the inventive compositions biopesticide component III is selected from Sinorhizobium meliloti more preferably from RCR2011, S. meliloti NRG185, S. meliloti RRI128, S. meliloti SU277,

R. tropici is useful for a range of legume crops especially all kind of clovers e. g. in tropical regions such as Brazil. Preferably, compositions comprise as R. tropici at least one strain selected from CC511, CIAT899, H12 and PRF 81.

According to a further embodiment, the at least one biopesticide component III is selected from Delftia acidovorans, in particular strain RAY209, especially in soybean and canola.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400

liters, of the ready-to-use spray liquor are applied per hectare of agricultural useful area.

According to one embodiment, individual components of the composition according to the invention such as parts of a kit or parts of a ternary composition may be mixed by the user himself in a spray tank or any other kind of vessel used for applications (e.g seed treater drums, seed pelleting machinery, knapsack sprayer) and further auxiliaries may be added, if appropriate. Consequently, one embodiment of the invention is a kit for preparing a usable pesticidal composition, the kit comprising a) a composition comprising component I as defined herein and at least one auxiliary; and b) a composition comprising component II as defined herein and at least one auxiliary; and c) a composition comprising component III as defined herein and at least one auxiliary.

Mixing the compounds I or the compositions comprising them in the use form as fungicides with the component II and III as defined herein results in many cases in an expansion of the fungicidal spectrum of activity being obtained or in a prevention of fungicide resistance development. Furthermore, in many cases, synergistic effects are obtained.

In the following, the inventive compositions and their preferred uses are further described. In each case, according to the present invention, the use of the composition for controlling a particular phytopathogenic fungus is also meant to encompass the respective method for controlling the particular phytopathogenic fungi, wherein the fungi or the materials, plants, the soil or seed to be protected from fungal attack are treated with an effective amount of a composition as defined in that particular context.

According to a further embodiment of the invention, the biopesticide component III is selected from

Bacillus amyloliquefaciens MBI 600 ssp. plantarum (III-27);

| | |
|---|---|
| B. mojavensis (III-28), | S. violaceusniger (III-38); |
| B. pumilus INR-7 (III-29); | Trichoderma fertile JM41R (III-39); |
| B. simplex (III-30); | Typhula phacorrhiza (III-40); |
| B. solisalsi (III-31); | Verticillium dahlia (III-42); |
| Clavibacter michiganensis (bacteriophages) (III-32); | jasmonic acid (III-43) or salts or derivatives thereof; |
| Gliocladium roseum (III-33); | Bacillus firmus (III-44); |
| Paenibacillus polymyxa (III-34); | Beauveria bassiana (III-45); |
| Pantoea agglomerans (III-35); | Metarhizium anisopliae (III-46); |
| Sphaerodes mycoparasitica (III-36); | Quillay extract (III-47); |
| Streptomyces lydicus (III-37); | A. brasilense (III-48); |
| Bradyrhizobium sp. (III-49); | (III-53); |
| B. japonicum (III-50); | R. I. bv. viciae (III-54); and |
| Mesorhizobium sp. (III-51); | Sinorhizobium meliloti (III-55). |
| Penicillium bilaiae (III-52); | |

Rhizobium leguminosarum bv. phaseoli

According to still a further embodiment of the invention, the biopesticide component III is selected from:

| | | | |
|---|---|---|---|
| Bacillus amyloliquefaciens ssp. Plantarum | (III-27)) | Bradyrhizobium lupini | (III-64) |
| | | Delftia acidovorans | (III-65) |
| Bacillus mojavensis | (III-28) | Glomus intraradices | (III-66) |
| Bacillus pumilus | (III-29) | Mesorhizobium ciceri | (III-67) |
| Bacillus simplex | (III-30) | Mesorhizobium huakii | (III-68) |
| Bacillus solisalsi | (III-31) | Mesorhizobium loti | (III-69) |
| Paenibacillus polymyxa | (III-34) | Rhizobium leguminosarum bv. Trifolii | (III-70) |
| jasmonic acid or salts or derivatives thereof | (III-43) | Rhizobium tropici | (III-71) |
| Bacillus firmus | (III-44) | Bacillus altitudinis | (III-72) |
| Azospirillum brasilense | (III-48) | Bacillus amyloliquefaciens | (III-73) |
| Bradyrhizobium spp. | (III-49) | Bacillus megaterium | (III-74) |
| Bradyrhizobium japonicum | (III-50) | Bacillus mycoides | (III-75) |
| Mesorhizobium spp. | (III-51) | Bacillus subtilis | (III-76) |
| Penicillium bilaiae | (III-52) | Burkholderia sp. | (III-77) |
| Rhizobium leguminosarum bv. Phaseoli | (III-53) | Coniothyrium minitans | (III-78) |
| | | Paecilomyces lilacinus | (III-79) |

(continued)

| | | | |
|---|---|---|---|
| Rhizobium leguminosarum bv. Viciae | (III-54) | Paenibacillus alvei | (III-80) |
| | | Paenibacillus popilliae | (III-81) |
| Sinorhizobium meliloti | (III-55) | Pasteuria nishizawae | (III-82) |
| Azospirillum amazonense | (III-56) | Pasteuria usgae | (III-83) |
| Azospirillum lipoferum | (III-57) | Pseudomonas chloraphis | (III-84) |
| Azospirillum irakense | (III-58) | Pseudomonas fluorescens | (III-85) |
| Azospirillum halopraeferens | (III-59) | Pseudomonas putida | (III-86) |
| Bradyrhizobium sp. (Arachis) | (III-60) | abscisic acid | (III-87) |
| | | harpin (alpha-beta) | (III-88) |
| Bradyrhizobium sp. (Vigna) | (III-61) | cis-jasmone | (III-89) |
| Bradyrhizobium elkanii | (III-62) | methyl jasmonate | (III-90) |
| Bradyrhizobium liaoningense | (III-63) | | |

According to still a further embodiment of the invention, the biopesticide component III is selected from (III-27), (III-29), (III-30), (III-44), (III-48), (III-50), (III-52), (III-62), (III-73), (III-74), (III-76), (III-77), (III-78), (III-79), (III-80), (III-82), (III-88), (III-89) and (III-90).

According to still a further embodiment of the invention, the biopesticide component III is selected from:

| | | | |
|---|---|---|---|
| Azospirillum amazonense SpY2 | (III-91) | | |
| Azospirillum brasilense AZ39 also called Az 39 | (III-92) | Bradyrhizobium sp. (Arachis) SEMIA 6144 | (III-120) |
| Azospirillum brasilense Cd | (III-93) | Bradyrhizobium sp. (Arachis) SEMIA 6462 | |
| Azospirillum brasilense Sp 245 | (III-94) | | (III-121) |
| Azospirillum brasilense Ab-V5 | (III-95) | Bradyrhizobium sp. (Arachis) SEMIA 6464 | |
| Azospirillum brasilense Ab-V6 | (III-96) | | (III-122) |
| Azospirillum brasilense XOH | (III-97) | Bradyrhizobium sp. (Vigna) PNL1 | |
| Azospirillum lipoferum Sp31 | (III-98) | | (III-123) |
| Bradyrhizobium elkanii SEMIA 5019 also | | Mesorhizobium sp. WSM1497 | (III-124) |
| called 29W | (III-99) | Rhizobium leguminosarum bv. phaseoli | |
| Bradyrhizobium elkanii SEMIA 587 | | RG-B10 | (III-125) |
| | (III-100) | Rhizobium leguminosarum bv. phaseoli | |
| Bradyrhizobium elkanii U-1301 | (III-101) | | (III-126) |
| Bradyrhizobium elkanii U-1302 | (III-102) | Rhizobium leguminosarum bv. trifolii 095 | |
| Bradyrhizobium elkanii USDA 3254 | | | (III-127) |
| | (III-103) | Rhizobium leguminosarum bv. trifolii | |
| Bradyrhizobium elkanii USDA 76 | (III-104) | CB782 | (III-128) |
| Bradyrhizobium elkanii USDA 94 | (III-105) | Rhizobium leguminosarum bv. trifolii | |
| Bradyrhizobium japonicum 532c | (III-106) | CC1099 | (III-129) |
| Bradyrhizobium japonicum E-109 | (III-107) | Rhizobium leguminosarum bv. trifolii | |
| Bradyrhizobium japonicum G49 | (III-108) | CC275e | (III-130) |
| Bradyrhizobium japonicum SEMIA 5079 | (III-109) | Rhizobium leguminosarum bv. trifolii CC283b | (III-131) |
| Bradyrhizobium japonicum SEMIA 5080 | (III-110) | Rhizobium leguminosarum bv. trifolii RP113-7 | (III-132) |
| Bradyrhizobium japonicum SEMIA 566 | (III-111) | Rhizobium leguminosarum bv. trifolii TA1 | (III-133) |
| Bradyrhizobium japonicum SEMIA 586 | (III-112) | Rhizobium leguminosarum bv. trifolii WSM1325 | (III-134) |
| Bradyrhizobium japonicum TA-11 (TA11 NOD+) | (III-113) | Rhizobium leguminosarum bv. trifolii WSM2304 | (III-135) |

(continued)

| | | | |
|---|---|---|---|
| Bradyrhizobium japonicum USDA 110 | (III-114) | Rhizobium leguminosarum bv. viciae P1NP3Cst also referred to as 1435 | (III-136) |
| Bradyrhizobium japonicum USDA 121 | (III-115) | Rhizobium leguminosarum bv. viciae RG-P2 also called P2 | (III-137) |
| Bradyrhizobium japonicum USDA 3 | (III-116) | | |
| Bradyrhizobium japonicum USDA 31 | (III-117) | Rhizobium leguminosarum bv. viciae SU303 | (III-138) |
| Bradyrhizobium japonicum USDA 76 | (III-118) | Rhizobium leguminosarum bv. viciae WSM1455 | (III-140) |
| | | Rhizobium tropici CC511 | (III-141) |
| Bradyrhizobium sp. (Arachis) CB1015 | (III-119) | Rhizobium tropici CIAT 899 | (III-142) |
| | | Rhizobium tropici H12 | (III-143) |
| Rhizobium tropici PRF 81 | (III-144) | Bacillus pumilus GHA 180 | (III-170) |
| Sinorhizobium meliloti NRG185 | (III-145) | Bacillus pumilus INR-7 otherwise referred to as BU F22 and BU-F33 | (III-171) |
| Sinorhizobium meliloti RCR2011 also called 2011 or SU47 | (III-146) | Bacillus pumilus KFP9F | (III-172) |
| Sinorhizobium meliloti RRI128 | (III-147) | Bacillus pumilus QST 2808 | (III-173) |
| Bacillus altitudinis 41 KF2b | (III-148) | Bacillus simplex ABU 288 | (III-174) |
| Bacillus amyloliquefaciens AP-136 | (III-149) | Bacillus subtilis CX-9060 | (III-175) |
| | | Bacillus subtilis FB17 | (III-176) |
| Bacillus amyloliquefaciens AP-188 | (III-150) | Bacillus subtilis GB07 | (III-177) |
| | | Burkholderia sp. A396 | (III-178) |
| Bacillus amyloliquefaciens AP-218 | (III-151) | Coniothyrium minitans CON/M/91-08 | (III-179) |
| Bacillus amyloliquefaciens AP-219 | (III-152) | Paecilomyces lilacinus 251 | (III-180) |
| | | Paecilomyces lilacinus BCP2 | (III-181) |
| Bacillus amyloliquefaciens AP-295 | (III-153) | Paenibacillus alvei NAS6G6 | (III-182) |
| Bacillus amyloliquefaciens ssp. plantarum D747 | (III-154) | Paenibacillus polymyxa PKB1 | (III-183) |
| Bacillus amyloliquefaciens ssp. plantarum FZB24 also called SB3615 | (III-155) | Paenibacilllus popilliae 14F-D80 also called K14F-0080 | (III-184) |
| | | Paenibacilllus popilliae KLN 3 | (III-185) |
| | | Pasteuria nishizawae Pn1 | (III-186) |
| Bacillus amyloliquefaciens ssp. plantarum FZB42 | (III-156) | Pasteuria sp, Ph3 | (III-187) |
| | | Pasteuria sp. Pr3 | (III-188) |
| Bacillus amyloliquefaciens ssp. plantarum GB03 also called GBO3 formerly B. subtilis | (III-157) | Pasteuria sp. ATCC PTA-9643 | (III-189) |
| | | Pasteuria usgae BL1 | (III-190) |
| Bacillus amyloliquefaciens ssp. plantarum MBI600 also referred to as 1430, formerly B.subtilis | (III-158) | Penicillium bilaiae (also called P. bilaii) NRRL 50162 | (III-191) |
| | | Penicillium bilaiae (also called P. bilaii) NRRL 50169 | (III-192) |
| Bacillus amyloliquefaciens ssp. plantarum QST-713, formerly B. subtilis | (III-159) | Penicillium bilaiae (also called P. bilaii) ATCC 18309 (= ATCC 74319) | (III-193) |
| Bacillus amyloliquefaciens ssp. plantarum TJ1000, also called 1BE | (III-160) | Penicillium bilaiae (also called P. bilaii) ATCC 20851 | (III-194) |
| Bacillus firmus CNCM I-1582 | (III-161) | Penicillium bilaiae (also called P. bilaii) ATCC 22348 (= ATCC 74318) | (III-195) |
| Bacillus megaterium H491 | (III-162) | | |
| Bacillus megaterium J142 | (III-163) | Pseudomonas fluorescens A506 | (III-196) |
| Bacillus megaterium M018 | (III-164) | Pseudomonas fluorescens ATCC 13525 | (III-197) |
| Bacillus mojavensis AP-209 | (III-165) | | |
| Bacillus mojavensis SR11 | (III-166) | Pseudomonas fluorescens CHA0 | (III-198) |
| Bacillus mycoides AQ726 | (III-167) | | |
| Bacillus mycoides J also called BmJ | (III-168) | Pseudomonas fluorescens CL 145A | (III-199) |
| Bacillus pumilus GB34 | (III-169) | | |
| Pseudomonas fluorescens NCIB 12089 | (III-200) | Pseudomonas fluorescens WCS374 | (III-202) |

(continued)

| | | | |
|---|---|---|---|
| Pseudomonas fluorescens Pf-5 | (III-201) | Pseudomonas putida ATCC 202153 | (III-203) |

According to still a further embodiment of the invention, the biopesticide component III is selected from (III-94), (III-95), (III-96), (III-99), (III-100), (III-106), (III-107), (III-109), (III-110), (III-154), (III-155), (III-156), (III-158), (III-159), (III-160), (III-161), (III-170), (III-171), (III-173), (III-174), (III-176), (III-178), (III-179), (III-180), (III-182), (III-186), (III-193), (III-194) and (III-195).

In Table T1, specific compositions according to the invention are individualized.

Table T1: Three-component compositions comprising one component I ("I"), one component II ("II") and one component III ("III"), in particular ternary compositions containing the respective components I, II and III as only active ingredients.

| composition | I | II | III |
|---|---|---|---|
| T1-1 | I-1 | II-1 | III-27 |
| T1-2 | I-1 | II-1 | III-28 |
| T1-3 | I-1 | II-1 | III-29 |
| T1-4 | I-1 | II-1 | III-30 |
| T1-5 | I-1 | II-1 | III-31 |
| T1-6 | I-1 | II-1 | III-32 |
| T1-7 | I-1 | II-1 | III-33 |
| T1-8 | I-1 | II-1 | III-34 |
| T1-9 | I-1 | II-1 | III-35 |
| T1-10 | I-1 | II-1 | III-36 |
| T1-11 | I-1 | II-1 | III-37 |
| T1-12 | I-1 | II-1 | III-38 |
| T1-13 | I-1 | II-1 | III-39 |
| T1-14 | I-1 | II-1 | III-40 |
| T1-15 | I-1 | II-1 | III-41 |
| T1-16 | I-1 | II-1 | III-42 |
| T1-17 | I-1 | II-1 | III-43 |
| T1-18 | I-1 | II-1 | III-44 |
| T1-19 | I-1 | II-1 | III-45 |
| T1-20 | I-1 | II-1 | III-46 |
| T1-21 | I-1 | II-1 | III-47 |
| T1-22 | I-1 | II-1 | III-48 |
| T1-23 | I-1 | II-1 | III-49 |
| T1-24 | I-1 | II-1 | III-50 |
| T1-25 | I-1 | II-1 | III-51 |
| T1-26 | I-1 | II-1 | III-52 |

| composition | I | II | III |
|---|---|---|---|
| T1-27 | I-1 | II-1 | III-53 |
| T1-28 | I-1 | II-1 | III-54 |
| T1-29 | I-1 | II-1 | III-55 |
| T1-30 | I-1 | II-1 | III-56 |
| T1-31 | I-1 | II-1 | III-57 |
| T1-32 | I-1 | II-1 | III-58 |
| T1-33 | I-1 | II-1 | III-59 |
| T1-34 | I-1 | II-1 | III-60 |
| T1-35 | I-1 | II-1 | III-61 |
| T1-36 | I-1 | II-1 | III-62 |
| T1-37 | I-1 | II-1 | III-63 |
| T1-38 | I-1 | II-1 | III-64 |
| T1-39 | I-1 | II-1 | III-65 |
| T1-40 | I-1 | II-1 | III-66 |
| T1-41 | I-1 | II-1 | III-67 |
| T1-42 | I-1 | II-1 | III-68 |
| T1-43 | I-1 | II-1 | III-69 |
| T1-44 | I-1 | II-1 | III-70 |
| T1-45 | I-1 | II-1 | III-71 |
| T1-46 | I-1 | II-1 | III-72 |
| T1-47 | I-1 | II-1 | III-73 |
| T1-48 | I-1 | II-1 | III-74 |
| T1-49 | I-1 | II-1 | III-75 |
| T1-50 | I-1 | II-1 | III-76 |
| T1-51 | I-1 | II-1 | III-77 |
| T1-52 | I-1 | II-1 | III-78 |

| composition | I | II | III |
|---|---|---|---|
| T1-53 | I-1 | II-1 | III-79 |
| T1-54 | I-1 | II-1 | III-80 |
| T1-55 | I-1 | II-1 | III-81 |
| T1-56 | I-1 | II-1 | III-82 |
| T1-57 | I-1 | II-1 | III-83 |
| T1-58 | I-1 | II-1 | III-84 |
| T1-59 | I-1 | II-1 | III-85 |
| T1-60 | I-1 | II-1 | III-86 |
| T1-61 | I-1 | II-1 | III-87 |
| T1-62 | I-1 | II-1 | III-88 |
| T1-63 | I-1 | II-1 | III-89 |
| T1-64 | I-1 | II-1 | III-90 |
| T1-65 | I-1 | II-1 | III-91 |
| T1-66 | I-1 | II-1 | III-92 |
| T1-67 | I-1 | II-1 | III-93 |
| T1-68 | I-1 | II-1 | III-94 |
| T1-69 | I-1 | II-1 | III-95 |
| T1-70 | I-1 | II-1 | III-96 |
| T1-71 | I-1 | II-1 | III-97 |
| T1-72 | I-1 | II-1 | III-98 |
| T1-73 | I-1 | II-1 | III-99 |
| T1-74 | I-1 | II-1 | III-100 |
| T1-75 | I-1 | II-1 | III-101 |
| T1-76 | I-1 | II-1 | III-102 |
| T1-77 | I-1 | II-1 | III-103 |
| T1-78 | I-1 | II-1 | III-104 |
| T1-79 | I-1 | II-1 | III-105 |
| T1-80 | I-1 | II-1 | III-106 |
| T1-81 | I-1 | II-1 | III-107 |
| T1-82 | I-1 | II-1 | III-108 |
| T1-83 | I-1 | II-1 | III-109 |
| T1-84 | I-1 | II-1 | III-110 |
| T1-85 | I-1 | II-1 | III-111 |
| T1-86 | I-1 | II-1 | III-112 |
| T1-87 | I-1 | II-1 | III-113 |
| T1-88 | I-1 | II-1 | III-114 |
| T1-89 | I-1 | II-1 | III-115 |
| T1-90 | I-1 | II-1 | III-116 |
| T1-91 | I-1 | II-1 | III-117 |
| T1-92 | I-1 | II-1 | III-118 |

| composition | I | II | III |
|---|---|---|---|
| T1-93 | I-1 | II-1 | III-119 |
| T1-94 | I-1 | II-1 | III-120 |
| T1-95 | I-1 | II-1 | III-121 |
| T1-96 | I-1 | II-1 | III-122 |
| T1-97 | I-1 | II-1 | III-123 |
| T1-98 | I-1 | II-1 | III-124 |
| T1-99 | I-1 | II-1 | III-125 |
| T1-100 | I-1 | II-1 | III-126 |
| T1-101 | I-1 | II-1 | III-127 |
| T1-102 | I-1 | II-1 | III-128 |
| T1-103 | I-1 | II-1 | III-129 |
| T1-104 | I-1 | II-1 | III-130 |
| T1-105 | I-1 | II-1 | III-131 |
| T1-106 | I-1 | II-1 | III-132 |
| T1-107 | I-1 | II-1 | III-133 |
| T1-108 | I-1 | II-1 | III-134 |
| T1-109 | I-1 | II-1 | III-135 |
| T1-110 | I-1 | II-1 | III-136 |
| T1-111 | I-1 | II-1 | III-137 |
| T1-112 | I-1 | II-1 | III-138 |
| T1-113 | I-1 | II-1 | III-140 |
| T1-114 | I-1 | II-1 | III-141 |
| T1-115 | I-1 | II-1 | III-142 |
| T1-116 | I-1 | II-1 | III-143 |
| T1-117 | I-1 | II-1 | III-144 |
| T1-118 | I-1 | II-1 | III-145 |
| T1-119 | I-1 | II-1 | III-146 |
| T1-120 | I-1 | II-1 | III-147 |
| T1-121 | I-1 | II-1 | III-148 |
| T1-122 | I-1 | II-1 | III-149 |
| T1-123 | I-1 | II-1 | III-150 |
| T1-124 | I-1 | II-1 | III-151 |
| T1-125 | I-1 | II-1 | III-152 |
| T1-126 | I-1 | II-1 | III-153 |
| T1-127 | I-1 | II-1 | III-154 |
| T1-128 | I-1 | II-1 | III-155 |
| T1-129 | I-1 | II-1 | III-156 |
| T1-130 | I-1 | II-1 | III-157 |
| T1-131 | I-1 | II-1 | III-158 |
| T1-132 | I-1 | II-1 | III-159 |

| composition | I | II | III |
|---|---|---|---|
| T1-133 | I-1 | II-1 | III-160 |
| T1-134 | I-1 | II-1 | III-161 |
| T1-135 | I-1 | II-1 | III-162 |
| T1-136 | I-1 | II-1 | III-163 |
| T1-137 | I-1 | II-1 | III-164 |
| T1-138 | I-1 | II-1 | III-165 |
| T1-139 | I-1 | II-1 | III-166 |
| T1-140 | I-1 | II-1 | III-167 |
| T1-141 | I-1 | II-1 | III-168 |
| T1-142 | I-1 | II-1 | III-169 |
| T1-143 | I-1 | II-1 | III-170 |
| T1-144 | I-1 | II-1 | III-171 |
| T1-145 | I-1 | II-1 | III-172 |
| T1-146 | I-1 | II-1 | III-173 |
| T1-147 | I-1 | II-1 | III-174 |
| T1-148 | I-1 | II-1 | III-175 |
| T1-149 | I-1 | II-1 | III-176 |
| T1-150 | I-1 | II-1 | III-177 |
| T1-151 | I-1 | II-1 | III-178 |
| T1-152 | I-1 | II-1 | III-179 |
| T1-153 | I-1 | II-1 | III-180 |
| T1-154 | I-1 | II-1 | III-181 |
| T1-155 | I-1 | II-1 | III-182 |
| T1-156 | I-1 | II-1 | III-183 |
| T1-157 | I-1 | II-1 | III-184 |
| T1-158 | I-1 | II-1 | III-185 |
| T1-159 | I-1 | II-1 | III-186 |
| T1-160 | I-1 | II-1 | III-187 |
| T1-161 | I-1 | II-1 | III-188 |
| T1-162 | I-1 | II-1 | III-189 |
| T1-163 | I-1 | II-1 | III-190 |
| T1-164 | I-1 | II-1 | III-191 |
| T1-165 | I-1 | II-1 | III-192 |
| T1-166 | I-1 | II-1 | III-193 |
| T1-167 | I-1 | II-1 | III-194 |
| T1-168 | I-1 | II-1 | III-195 |
| T1-169 | I-1 | II-1 | III-196 |
| T1-170 | I-1 | II-1 | III-197 |
| T1-171 | I-1 | II-1 | III-198 |
| T1-172 | I-1 | II-1 | III-199 |

| composition | I | II | III |
|---|---|---|---|
| T1-173 | I-1 | II-1 | III-200 |
| T1-174 | I-1 | II-1 | III-201 |
| T1-175 | I-1 | II-1 | III-202 |
| T1-176 | I-1 | II-1 | III-203 |
| T1-177 | I-1 | II-2 | III-27 |
| T1-178 | I-1 | II-2 | III-28 |
| T1-179 | I-1 | II-2 | III-29 |
| T1-180 | I-1 | II-2 | III-30 |
| T1-181 | I-1 | II-2 | III-31 |
| T1-182 | I-1 | II-2 | III-32 |
| T1-183 | I-1 | II-2 | III-33 |
| T1-184 | I-1 | II-2 | III-34 |
| T1-185 | I-1 | II-2 | III-35 |
| T1-186 | I-1 | II-2 | III-36 |
| T1-187 | I-1 | II-2 | III-37 |
| T1-188 | I-1 | II-2 | III-38 |
| T1-189 | I-1 | II-2 | III-39 |
| T1-190 | I-1 | II-2 | III-40 |
| T1-191 | I-1 | II-2 | III-41 |
| T1-192 | I-1 | II-2 | III-42 |
| T1-193 | I-1 | II-2 | III-43 |
| T1-194 | I-1 | II-2 | III-44 |
| T1-195 | I-1 | II-2 | III-45 |
| T1-196 | I-1 | II-2 | III-46 |
| T1-197 | I-1 | II-2 | III-47 |
| T1-198 | I-1 | II-2 | III-48 |
| T1-199 | I-1 | II-2 | III-49 |
| T1-200 | I-1 | II-2 | III-50 |
| T1-201 | I-1 | II-2 | III-51 |
| T1-202 | I-1 | II-2 | III-52 |
| T1-203 | I-1 | II-2 | III-53 |
| T1-204 | I-1 | II-2 | III-54 |
| T1-205 | I-1 | II-2 | III-55 |
| T1-206 | I-1 | II-2 | III-56 |
| T1-207 | I-1 | II-2 | III-57 |
| T1-208 | I-1 | II-2 | III-58 |
| T1-209 | I-1 | II-2 | III-59 |
| T1-210 | I-1 | II-2 | III-60 |
| T1-211 | I-1 | II-2 | III-61 |
| T1-212 | I-1 | II-2 | III-62 |

| composition | I | II | III |
|---|---|---|---|
| T1-213 | I-1 | II-2 | III-63 |
| T1-214 | I-1 | II-2 | III-64 |
| T1-215 | I-1 | II-2 | III-65 |
| T1-216 | I-1 | II-2 | III-66 |
| T1-217 | I-1 | II-2 | III-67 |
| T1-218 | I-1 | II-2 | III-68 |
| T1-219 | I-1 | II-2 | III-69 |
| T1-220 | I-1 | II-2 | III-70 |
| T1-221 | I-1 | II-2 | III-71 |
| T1-222 | I-1 | II-2 | III-72 |
| T1-223 | I-1 | II-2 | III-73 |
| T1-224 | I-1 | II-2 | III-74 |
| T1-225 | I-1 | II-2 | III-75 |
| T1-226 | I-1 | II-2 | III-76 |
| T1-227 | I-1 | II-2 | III-77 |
| T1-228 | I-1 | II-2 | III-78 |
| T1-229 | I-1 | II-2 | III-79 |
| T1-230 | I-1 | II-2 | III-80 |
| T1-231 | I-1 | II-2 | III-81 |
| T1-232 | I-1 | II-2 | III-82 |
| T1-233 | I-1 | II-2 | III-83 |
| T1-234 | I-1 | II-2 | III-84 |
| T1-235 | I-1 | II-2 | III-85 |
| T1-236 | I-1 | II-2 | III-86 |
| T1-237 | I-1 | II-2 | III-87 |
| T1-238 | I-1 | II-2 | III-88 |
| T1-239 | I-1 | II-2 | III-89 |
| T1-240 | I-1 | II-2 | III-90 |
| T1-241 | I-1 | II-2 | III-91 |
| T1-242 | I-1 | II-2 | III-92 |
| T1-243 | I-1 | II-2 | III-93 |
| T1-244 | I-1 | II-2 | III-94 |
| T1-245 | I-1 | II-2 | III-95 |
| T1-246 | I-1 | II-2 | III-96 |
| T1-247 | I-1 | II-2 | III-97 |
| T1-248 | I-1 | II-2 | III-98 |
| T1-249 | I-1 | II-2 | III-99 |
| T1-250 | I-1 | II-2 | III-100 |
| T1-251 | I-1 | II-2 | III-101 |
| T1-252 | I-1 | II-2 | III-102 |

| composition | I | II | III |
|---|---|---|---|
| T1-253 | I-1 | II-2 | III-103 |
| T1-254 | I-1 | II-2 | III-104 |
| T1-255 | I-1 | II-2 | III-105 |
| T1-256 | I-1 | II-2 | III-106 |
| T1-257 | I-1 | II-2 | III-107 |
| T1-258 | I-1 | II-2 | III-108 |
| T1-259 | I-1 | II-2 | III-109 |
| T1-260 | I-1 | II-2 | III-110 |
| T1-261 | I-1 | II-2 | III-111 |
| T1-262 | I-1 | II-2 | III-112 |
| T1-263 | I-1 | II-2 | III-113 |
| T1-264 | I-1 | II-2 | III-114 |
| T1-265 | I-1 | II-2 | III-115 |
| T1-266 | I-1 | II-2 | III-116 |
| T1-267 | I-1 | II-2 | III-117 |
| T1-268 | I-1 | II-2 | III-118 |
| T1-269 | I-1 | II-2 | III-119 |
| T1-270 | I-1 | II-2 | III-120 |
| T1-271 | I-1 | II-2 | III-121 |
| T1-272 | I-1 | II-2 | III-122 |
| T1-273 | I-1 | II-2 | III-123 |
| T1-274 | I-1 | II-2 | III-124 |
| T1-275 | I-1 | II-2 | III-125 |
| T1-276 | I-1 | II-2 | III-126 |
| T1-277 | I-1 | II-2 | III-127 |
| T1-278 | I-1 | II-2 | III-128 |
| T1-279 | I-1 | II-2 | III-129 |
| T1-280 | I-1 | II-2 | III-130 |
| T1-281 | I-1 | II-2 | III-131 |
| T1-282 | I-1 | II-2 | III-132 |
| T1-283 | I-1 | II-2 | III-133 |
| T1-284 | I-1 | II-2 | III-134 |
| T1-285 | I-1 | II-2 | III-135 |
| T1-286 | I-1 | II-2 | III-136 |
| T1-287 | I-1 | II-2 | III-137 |
| T1-288 | I-1 | II-2 | III-138 |
| T1-289 | I-1 | II-2 | III-140 |
| T1-290 | I-1 | II-2 | III-141 |
| T1-291 | I-1 | II-2 | III-142 |
| T1-292 | I-1 | II-2 | III-143 |

| composition | I | II | III |
|---|---|---|---|
| T1-293 | I-1 | II-2 | III-144 |
| T1-294 | I-1 | II-2 | III-145 |
| T1-295 | I-1 | II-2 | III-146 |
| T1-296 | I-1 | II-2 | III-147 |
| T1-297 | I-1 | II-2 | III-148 |
| T1-298 | I-1 | II-2 | III-149 |
| T1-299 | I-1 | II-2 | III-150 |
| T1-300 | I-1 | II-2 | III-151 |
| T1-301 | I-1 | II-2 | III-152 |
| T1-302 | I-1 | II-2 | III-153 |
| T1-303 | I-1 | II-2 | III-154 |
| T1-304 | I-1 | II-2 | III-155 |
| T1-305 | I-1 | II-2 | III-156 |
| T1-306 | I-1 | II-2 | III-157 |
| T1-307 | I-1 | II-2 | III-158 |
| T1-308 | I-1 | II-2 | III-159 |
| T1-309 | I-1 | II-2 | III-160 |
| T1-310 | I-1 | II-2 | III-161 |
| T1-311 | I-1 | II-2 | III-162 |
| T1-312 | I-1 | II-2 | III-163 |
| T1-313 | I-1 | II-2 | III-164 |
| T1-314 | I-1 | II-2 | III-165 |
| T1-315 | I-1 | II-2 | III-166 |
| T1-316 | I-1 | II-2 | III-167 |
| T1-317 | I-1 | II-2 | III-168 |
| T1-318 | I-1 | II-2 | III-169 |
| T1-319 | I-1 | II-2 | III-170 |
| T1-320 | I-1 | II-2 | III-171 |
| T1-321 | I-1 | II-2 | III-172 |
| T1-322 | I-1 | II-2 | III-173 |
| T1-323 | I-1 | II-2 | III-174 |
| T1-324 | I-1 | II-2 | III-175 |
| T1-325 | I-1 | II-2 | III-176 |
| T1-326 | I-1 | II-2 | III-177 |
| T1-327 | I-1 | II-2 | III-178 |
| T1-328 | I-1 | II-2 | III-179 |
| T1-329 | I-1 | II-2 | III-180 |
| T1-330 | I-1 | II-2 | III-181 |
| T1-331 | I-1 | II-2 | III-182 |
| T1-332 | I-1 | II-2 | III-183 |

| composition | I | II | III |
|---|---|---|---|
| T1-333 | I-1 | II-2 | III-184 |
| T1-334 | I-1 | II-2 | III-185 |
| T1-335 | I-1 | II-2 | III-186 |
| T1-336 | I-1 | II-2 | III-187 |
| T1-337 | I-1 | II-2 | III-188 |
| T1-338 | I-1 | II-2 | III-189 |
| T1-339 | I-1 | II-2 | III-190 |
| T1-340 | I-1 | II-2 | III-191 |
| T1-341 | I-1 | II-2 | III-192 |
| T1-342 | I-1 | II-2 | III-193 |
| T1-343 | I-1 | II-2 | III-194 |
| T1-344 | I-1 | II-2 | III-195 |
| T1-345 | I-1 | II-2 | III-196 |
| T1-346 | I-1 | II-2 | III-197 |
| T1-347 | I-1 | II-2 | III-198 |
| T1-348 | I-1 | II-2 | III-199 |
| T1-349 | I-1 | II-2 | III-200 |
| T1-350 | I-1 | II-2 | III-201 |
| T1-351 | I-1 | II-2 | III-202 |
| T1-352 | I-1 | II-2 | III-203 |
| T1-353 | I-1 | II-3 | III-27 |
| T1-354 | I-1 | II-3 | III-28 |
| T1-355 | I-1 | II-3 | III-29 |
| T1-356 | I-1 | II-3 | III-30 |
| T1-357 | I-1 | II-3 | III-31 |
| T1-358 | I-1 | II-3 | III-32 |
| T1-359 | I-1 | II-3 | III-33 |
| T1-360 | I-1 | II-3 | III-34 |
| T1-361 | I-1 | II-3 | III-35 |
| T1-362 | I-1 | II-3 | III-36 |
| T1-363 | I-1 | II-3 | III-37 |
| T1-364 | I-1 | II-3 | III-38 |
| T1-365 | I-1 | II-3 | III-39 |
| T1-366 | I-1 | II-3 | III-40 |
| T1-367 | I-1 | II-3 | III-41 |
| T1-368 | I-1 | II-3 | III-42 |
| T1-369 | I-1 | II-3 | III-43 |
| T1-370 | I-1 | II-3 | III-44 |
| T1-371 | I-1 | II-3 | III-45 |
| T1-372 | I-1 | II-3 | III-46 |

| composition | I | II | III |
|---|---|---|---|
| T1-373 | I-1 | II-3 | III-47 |
| T1-374 | I-1 | II-3 | III-48 |
| T1-375 | I-1 | II-3 | III-49 |
| T1-376 | I-1 | II-3 | III-50 |
| T1-377 | I-1 | II-3 | III-51 |
| T1-378 | I-1 | II-3 | III-52 |
| T1-379 | I-1 | II-3 | III-53 |
| T1-380 | I-1 | II-3 | III-54 |
| T1-381 | I-1 | II-3 | III-55 |
| T1-382 | I-1 | II-3 | III-56 |
| T1-383 | I-1 | II-3 | III-57 |
| T1-384 | I-1 | II-3 | III-58 |
| T1-385 | I-1 | II-3 | III-59 |
| T1-386 | I-1 | II-3 | III-60 |
| T1-387 | I-1 | II-3 | III-61 |
| T1-388 | I-1 | II-3 | III-62 |
| T1-389 | I-1 | II-3 | III-63 |
| T1-390 | I-1 | II-3 | III-64 |
| T1-391 | I-1 | II-3 | III-65 |
| T1-392 | I-1 | II-3 | III-66 |
| T1-393 | I-1 | II-3 | III-67 |
| T1-394 | I-1 | II-3 | III-68 |
| T1-395 | I-1 | II-3 | III-69 |
| T1-396 | I-1 | II-3 | III-70 |
| T1-397 | I-1 | II-3 | III-71 |
| T1-398 | I-1 | II-3 | III-72 |
| T1-399 | I-1 | II-3 | III-73 |
| T1-400 | I-1 | II-3 | III-74 |
| T1-401 | I-1 | II-3 | III-75 |
| T1-402 | I-1 | II-3 | III-76 |
| T1-403 | I-1 | II-3 | III-77 |
| T1-404 | I-1 | II-3 | III-78 |
| T1-405 | I-1 | II-3 | III-79 |
| T1-406 | I-1 | II-3 | III-80 |
| T1-407 | I-1 | II-3 | III-81 |
| T1-408 | I-1 | II-3 | III-82 |
| T1-409 | I-1 | II-3 | III-83 |
| T1-410 | I-1 | II-3 | III-84 |
| T1-411 | I-1 | II-3 | III-85 |
| T1-412 | I-1 | II-3 | III-86 |

| composition | I | II | III |
|---|---|---|---|
| T1-413 | I-1 | II-3 | III-87 |
| T1-414 | I-1 | II-3 | III-88 |
| T1-415 | I-1 | II-3 | III-89 |
| T1-416 | I-1 | II-3 | III-90 |
| T1-417 | I-1 | II-3 | III-91 |
| T1-418 | I-1 | II-3 | III-92 |
| T1-419 | I-1 | II-3 | III-93 |
| T1-420 | I-1 | II-3 | III-94 |
| T1-421 | I-1 | II-3 | III-95 |
| T1-422 | I-1 | II-3 | III-96 |
| T1-423 | I-1 | II-3 | III-97 |
| T1-424 | I-1 | II-3 | III-98 |
| T1-425 | I-1 | II-3 | III-99 |
| T1-426 | I-1 | II-3 | III-100 |
| T1-427 | I-1 | II-3 | III-101 |
| T1-428 | I-1 | II-3 | III-102 |
| T1-429 | I-1 | II-3 | III-103 |
| T1-430 | I-1 | II-3 | III-104 |
| T1-431 | I-1 | II-3 | III-105 |
| T1-432 | I-1 | II-3 | III-106 |
| T1-433 | I-1 | II-3 | III-107 |
| T1-434 | I-1 | II-3 | III-108 |
| T1-435 | I-1 | II-3 | III-109 |
| T1-436 | I-1 | II-3 | III-110 |
| T1-437 | I-1 | II-3 | III-111 |
| T1-438 | I-1 | II-3 | III-112 |
| T1-439 | I-1 | II-3 | III-113 |
| T1-440 | I-1 | II-3 | III-114 |
| T1-441 | I-1 | II-3 | III-115 |
| T1-442 | I-1 | II-3 | III-116 |
| T1-443 | I-1 | II-3 | III-117 |
| T1-444 | I-1 | II-3 | III-118 |
| T1-445 | I-1 | II-3 | III-119 |
| T1-446 | I-1 | II-3 | III-120 |
| T1-447 | I-1 | II-3 | III-121 |
| T1-448 | I-1 | II-3 | III-122 |
| T1-449 | I-1 | II-3 | III-123 |
| T1-450 | I-1 | II-3 | III-124 |
| T1-451 | I-1 | II-3 | III-125 |
| T1-452 | I-1 | II-3 | III-126 |

| composition | I | II | III |
|---|---|---|---|
| T1-453 | I-1 | II-3 | III-127 |
| T1-454 | I-1 | II-3 | III-128 |
| T1-455 | I-1 | II-3 | III-129 |
| T1-456 | I-1 | II-3 | III-130 |
| T1-457 | I-1 | II-3 | III-131 |
| T1-458 | I-1 | II-3 | III-132 |
| T1-459 | I-1 | II-3 | III-133 |
| T1-460 | I-1 | II-3 | III-134 |
| T1-461 | I-1 | II-3 | III-135 |
| T1-462 | I-1 | II-3 | III-136 |
| T1-463 | I-1 | II-3 | III-137 |
| T1-464 | I-1 | II-3 | III-138 |
| T1-465 | I-1 | II-3 | III-140 |
| T1-466 | I-1 | II-3 | III-141 |
| T1-467 | I-1 | II-3 | III-142 |
| T1-468 | I-1 | II-3 | III-143 |
| T1-469 | I-1 | II-3 | III-144 |
| T1-470 | I-1 | II-3 | III-145 |
| T1-471 | I-1 | II-3 | III-146 |
| T1-472 | I-1 | II-3 | III-147 |
| T1-473 | I-1 | II-3 | III-148 |
| T1-474 | I-1 | II-3 | III-149 |
| T1-475 | I-1 | II-3 | III-150 |
| T1-476 | I-1 | II-3 | III-151 |
| T1-477 | I-1 | II-3 | III-152 |
| T1-478 | I-1 | II-3 | III-153 |
| T1-479 | I-1 | II-3 | III-154 |
| T1-480 | I-1 | II-3 | III-155 |
| T1-481 | I-1 | II-3 | III-156 |
| T1-482 | I-1 | II-3 | III-157 |
| T1-483 | I-1 | II-3 | III-158 |
| T1-484 | I-1 | II-3 | III-159 |
| T1-485 | I-1 | II-3 | III-160 |
| T1-486 | I-1 | II-3 | III-161 |
| T1-487 | I-1 | II-3 | III-162 |
| T1-488 | I-1 | II-3 | III-163 |
| T1-489 | I-1 | II-3 | III-164 |
| T1-490 | I-1 | II-3 | III-165 |
| T1-491 | I-1 | II-3 | III-166 |
| T1-492 | I-1 | II-3 | III-167 |

| composition | I | II | III |
|---|---|---|---|
| T1-493 | I-1 | II-3 | III-168 |
| T1-494 | I-1 | II-3 | III-169 |
| T1-495 | I-1 | II-3 | III-170 |
| T1-496 | I-1 | II-3 | III-171 |
| T1-497 | I-1 | II-3 | III-172 |
| T1-498 | I-1 | II-3 | III-173 |
| T1-499 | I-1 | II-3 | III-174 |
| T1-500 | I-1 | II-3 | III-175 |
| T1-501 | I-1 | II-3 | III-176 |
| T1-502 | I-1 | II-3 | III-177 |
| T1-503 | I-1 | II-3 | III-178 |
| T1-504 | I-1 | II-3 | III-179 |
| T1-505 | I-1 | II-3 | III-180 |
| T1-506 | I-1 | II-3 | III-181 |
| T1-507 | I-1 | II-3 | III-182 |
| T1-508 | I-1 | II-3 | III-183 |
| T1-509 | I-1 | II-3 | III-184 |
| T1-510 | I-1 | II-3 | III-185 |
| T1-511 | I-1 | II-3 | III-186 |
| T1-512 | I-1 | II-3 | III-187 |
| T1-513 | I-1 | II-3 | III-188 |
| T1-514 | I-1 | II-3 | III-189 |
| T1-515 | I-1 | II-3 | III-190 |
| T1-516 | I-1 | II-3 | III-191 |
| T1-517 | I-1 | II-3 | III-192 |
| T1-518 | I-1 | II-3 | III-193 |
| T1-519 | I-1 | II-3 | III-194 |
| T1-520 | I-1 | II-3 | III-195 |
| T1-521 | I-1 | II-3 | III-196 |
| T1-522 | I-1 | II-3 | III-197 |
| T1-523 | I-1 | II-3 | III-198 |
| T1-524 | I-1 | II-3 | III-199 |
| T1-525 | I-1 | II-3 | III-200 |
| T1-526 | I-1 | II-3 | III-201 |
| T1-527 | I-1 | II-3 | III-202 |
| T1-528 | I-1 | II-3 | III-203 |
| T1-529 | I-1 | II-4 | III-27 |
| T1-530 | I-1 | II-4 | III-28 |
| T1-531 | I-1 | II-4 | III-29 |
| T1-532 | I-1 | II-4 | III-30 |

| composition | I | II | III |
|---|---|---|---|
| T1-533 | I-1 | II-4 | III-31 |
| T1-534 | I-1 | II-4 | III-32 |
| T1-535 | I-1 | II-4 | III-33 |
| T1-536 | I-1 | II-4 | III-34 |
| T1-537 | I-1 | II-4 | III-35 |
| T1-538 | I-1 | II-4 | III-36 |
| T1-539 | I-1 | II-4 | III-37 |
| T1-540 | I-1 | II-4 | III-38 |
| T1-541 | I-1 | II-4 | III-39 |
| T1-542 | I-1 | II-4 | III-40 |
| T1-543 | I-1 | II-4 | III-41 |
| T1-544 | I-1 | II-4 | III-42 |
| T1-545 | I-1 | II-4 | III-43 |
| T1-546 | I-1 | II-4 | III-44 |
| T1-547 | I-1 | II-4 | III-45 |
| T1-548 | I-1 | II-4 | III-46 |
| T1-549 | I-1 | II-4 | III-47 |
| T1-550 | I-1 | II-4 | III-48 |
| T1-551 | I-1 | II-4 | III-49 |
| T1-552 | I-1 | II-4 | III-50 |
| T1-553 | I-1 | II-4 | III-51 |
| T1-554 | I-1 | II-4 | III-52 |
| T1-555 | I-1 | II-4 | III-53 |
| T1-556 | I-1 | II-4 | III-54 |
| T1-557 | I-1 | II-4 | III-55 |
| T1-558 | I-1 | II-4 | III-56 |
| T1-559 | I-1 | II-4 | III-57 |
| T1-560 | I-1 | II-4 | III-58 |
| T1-561 | I-1 | II-4 | III-59 |
| T1-562 | I-1 | II-4 | III-60 |
| T1-563 | I-1 | II-4 | III-61 |
| T1-564 | I-1 | II-4 | III-62 |
| T1-565 | I-1 | II-4 | III-63 |
| T1-566 | I-1 | II-4 | III-64 |
| T1-567 | I-1 | II-4 | III-65 |
| T1-568 | I-1 | II-4 | III-66 |
| T1-569 | I-1 | II-4 | III-67 |
| T1-570 | I-1 | II-4 | III-68 |
| T1-571 | I-1 | II-4 | III-69 |
| T1-572 | I-1 | II-4 | III-70 |

| composition | I | II | III |
|---|---|---|---|
| T1-573 | I-1 | II-4 | III-71 |
| T1-574 | I-1 | II-4 | III-72 |
| T1-575 | I-1 | II-4 | III-73 |
| T1-576 | I-1 | II-4 | III-74 |
| T1-577 | I-1 | II-4 | III-75 |
| T1-578 | I-1 | II-4 | III-76 |
| T1-579 | I-1 | II-4 | III-77 |
| T1-580 | I-1 | II-4 | III-78 |
| T1-581 | I-1 | II-4 | III-79 |
| T1-582 | I-1 | II-4 | III-80 |
| T1-583 | I-1 | II-4 | III-81 |
| T1-584 | I-1 | II-4 | III-82 |
| T1-585 | I-1 | II-4 | III-83 |
| T1-586 | I-1 | II-4 | III-84 |
| T1-587 | I-1 | II-4 | III-85 |
| T1-588 | I-1 | II-4 | III-86 |
| T1-589 | I-1 | II-4 | III-87 |
| T1-590 | I-1 | II-4 | III-88 |
| T1-591 | I-1 | II-4 | III-89 |
| T1-592 | I-1 | II-4 | III-90 |
| T1-593 | I-1 | II-4 | III-91 |
| T1-594 | I-1 | II-4 | III-92 |
| T1-595 | I-1 | II-4 | III-93 |
| T1-596 | I-1 | II-4 | III-94 |
| T1-597 | I-1 | II-4 | III-95 |
| T1-598 | I-1 | II-4 | III-96 |
| T1-599 | I-1 | II-4 | III-97 |
| T1-600 | I-1 | II-4 | III-98 |
| T1-601 | I-1 | II-4 | III-99 |
| T1-602 | I-1 | II-4 | III-100 |
| T1-603 | I-1 | II-4 | III-101 |
| T1-604 | I-1 | II-4 | III-102 |
| T1-605 | I-1 | II-4 | III-103 |
| T1-606 | I-1 | II-4 | III-104 |
| T1-607 | I-1 | II-4 | III-105 |
| T1-608 | I-1 | II-4 | III-106 |
| T1-609 | I-1 | II-4 | III-107 |
| T1-610 | I-1 | II-4 | III-108 |
| T1-611 | I-1 | II-4 | III-109 |
| T1-612 | I-1 | II-4 | III-110 |

| composition | I | II | III |
|---|---|---|---|
| T1-613 | I-1 | II-4 | III-111 |
| T1-614 | I-1 | II-4 | III-112 |
| T1-615 | I-1 | II-4 | III-113 |
| T1-616 | I-1 | II-4 | III-114 |
| T1-617 | I-1 | II-4 | III-115 |
| T1-618 | I-1 | II-4 | III-116 |
| T1-619 | I-1 | II-4 | III-117 |
| T1-620 | I-1 | II-4 | III-118 |
| T1-621 | I-1 | II-4 | III-119 |
| T1-622 | I-1 | II-4 | III-120 |
| T1-623 | I-1 | II-4 | III-121 |
| T1-624 | I-1 | II-4 | III-122 |
| T1-625 | I-1 | II-4 | III-123 |
| T1-626 | I-1 | II-4 | III-124 |
| T1-627 | I-1 | II-4 | III-125 |
| T1-628 | I-1 | II-4 | III-126 |
| T1-629 | I-1 | II-4 | III-127 |
| T1-630 | I-1 | II-4 | III-128 |
| T1-631 | I-1 | II-4 | III-129 |
| T1-632 | I-1 | II-4 | III-130 |
| T1-633 | I-1 | II-4 | III-131 |
| T1-634 | I-1 | II-4 | III-132 |
| T1-635 | I-1 | II-4 | III-133 |
| T1-636 | I-1 | II-4 | III-134 |
| T1-637 | I-1 | II-4 | III-135 |
| T1-638 | I-1 | II-4 | III-136 |
| T1-639 | I-1 | II-4 | III-137 |
| T1-640 | I-1 | II-4 | III-138 |
| T1-641 | I-1 | II-4 | III-140 |
| T1-642 | I-1 | II-4 | III-141 |
| T1-643 | I-1 | II-4 | III-142 |
| T1-644 | I-1 | II-4 | III-143 |
| T1-645 | I-1 | II-4 | III-144 |
| T1-646 | I-1 | II-4 | III-145 |
| T1-647 | I-1 | II-4 | III-146 |
| T1-648 | I-1 | II-4 | III-147 |
| T1-649 | I-1 | II-4 | III-148 |
| T1-650 | I-1 | II-4 | III-149 |
| T1-651 | I-1 | II-4 | III-150 |
| T1-652 | I-1 | II-4 | III-151 |

| composition | I | II | III |
|---|---|---|---|
| T1-653 | I-1 | II-4 | III-152 |
| T1-654 | I-1 | II-4 | III-153 |
| T1-655 | I-1 | II-4 | III-154 |
| T1-656 | I-1 | II-4 | III-155 |
| T1-657 | I-1 | II-4 | III-156 |
| T1-658 | I-1 | II-4 | III-157 |
| T1-659 | I-1 | II-4 | III-158 |
| T1-660 | I-1 | II-4 | III-159 |
| T1-661 | I-1 | II-4 | III-160 |
| T1-662 | I-1 | II-4 | III-161 |
| T1-663 | I-1 | II-4 | III-162 |
| T1-664 | I-1 | II-4 | III-163 |
| T1-665 | I-1 | II-4 | III-164 |
| T1-666 | I-1 | II-4 | III-165 |
| T1-667 | I-1 | II-4 | III-166 |
| T1-668 | I-1 | II-4 | III-167 |
| T1-669 | I-1 | II-4 | III-168 |
| T1-670 | I-1 | II-4 | III-169 |
| T1-671 | I-1 | II-4 | III-170 |
| T1-672 | I-1 | II-4 | III-171 |
| T1-673 | I-1 | II-4 | III-172 |
| T1-674 | I-1 | II-4 | III-173 |
| T1-675 | I-1 | II-4 | III-174 |
| T1-676 | I-1 | II-4 | III-175 |
| T1-677 | I-1 | II-4 | III-176 |
| T1-678 | I-1 | II-4 | III-177 |
| T1-679 | I-1 | II-4 | III-178 |
| T1-680 | I-1 | II-4 | III-179 |
| T1-681 | I-1 | II-4 | III-180 |
| T1-682 | I-1 | II-4 | III-181 |
| T1-683 | I-1 | II-4 | III-182 |
| T1-684 | I-1 | II-4 | III-183 |
| T1-685 | I-1 | II-4 | III-184 |
| T1-686 | I-1 | II-4 | III-185 |
| T1-687 | I-1 | II-4 | III-186 |
| T1-688 | I-1 | II-4 | III-187 |
| T1-689 | I-1 | II-4 | III-188 |
| T1-690 | I-1 | II-4 | III-189 |
| T1-691 | I-1 | II-4 | III-190 |
| T1-692 | I-1 | II-4 | III-191 |

| composition | I | II | III |
|---|---|---|---|
| T1-693 | I-1 | II-4 | III-192 |
| T1-694 | I-1 | II-4 | III-193 |
| T1-695 | I-1 | II-4 | III-194 |
| T1-696 | I-1 | II-4 | III-195 |
| T1-697 | I-1 | II-4 | III-196 |
| T1-698 | I-1 | II-4 | III-197 |
| T1-699 | I-1 | II-4 | III-198 |
| T1-700 | I-1 | II-4 | III-199 |
| T1-701 | I-1 | II-4 | III-200 |
| T1-702 | I-1 | II-4 | III-201 |
| T1-703 | I-1 | II-4 | III-202 |
| T1-704 | I-1 | II-4 | III-203 |
| T1-705 | I-1 | II-5 | III-27 |
| T1-706 | I-1 | II-5 | III-28 |
| T1-707 | I-1 | II-5 | III-29 |
| T1-708 | I-1 | II-5 | III-30 |
| T1-709 | I-1 | II-5 | III-31 |
| T1-710 | I-1 | II-5 | III-32 |
| T1-711 | I-1 | II-5 | III-33 |
| T1-712 | I-1 | II-5 | III-34 |
| T1-713 | I-1 | II-5 | III-35 |
| T1-714 | I-1 | II-5 | III-36 |
| T1-715 | I-1 | II-5 | III-37 |
| T1-716 | I-1 | II-5 | III-38 |
| T1-717 | I-1 | II-5 | III-39 |
| T1-718 | I-1 | II-5 | III-40 |
| T1-719 | I-1 | II-5 | III-41 |
| T1-720 | I-1 | II-5 | III-42 |
| T1-721 | I-1 | II-5 | III-43 |
| T1-722 | I-1 | II-5 | III-44 |
| T1-723 | I-1 | II-5 | III-45 |
| T1-724 | I-1 | II-5 | III-46 |
| T1-725 | I-1 | II-5 | III-47 |
| T1-726 | I-1 | II-5 | III-48 |
| T1-727 | I-1 | II-5 | III-49 |
| T1-728 | I-1 | II-5 | III-50 |
| T1-729 | I-1 | II-5 | III-51 |
| T1-730 | I-1 | II-5 | III-52 |
| T1-731 | I-1 | II-5 | III-53 |
| T1-732 | I-1 | II-5 | III-54 |

| composition | I | II | III |
|---|---|---|---|
| T1-733 | I-1 | II-5 | III-55 |
| T1-734 | I-1 | II-5 | III-56 |
| T1-735 | I-1 | II-5 | III-57 |
| T1-736 | I-1 | II-5 | III-58 |
| T1-737 | I-1 | II-5 | III-59 |
| T1-738 | I-1 | II-5 | III-60 |
| T1-739 | I-1 | II-5 | III-61 |
| T1-740 | I-1 | II-5 | III-62 |
| T1-741 | I-1 | II-5 | III-63 |
| T1-742 | I-1 | II-5 | III-64 |
| T1-743 | I-1 | II-5 | III-65 |
| T1-744 | I-1 | II-5 | III-66 |
| T1-745 | I-1 | II-5 | III-67 |
| T1-746 | I-1 | II-5 | III-68 |
| T1-747 | I-1 | II-5 | III-69 |
| T1-748 | I-1 | II-5 | III-70 |
| T1-749 | I-1 | II-5 | III-71 |
| T1-750 | I-1 | II-5 | III-72 |
| T1-751 | I-1 | II-5 | III-73 |
| T1-752 | I-1 | II-5 | III-74 |
| T1-753 | I-1 | II-5 | III-75 |
| T1-754 | I-1 | II-5 | III-76 |
| T1-755 | I-1 | II-5 | III-77 |
| T1-756 | I-1 | II-5 | III-78 |
| T1-757 | I-1 | II-5 | III-79 |
| T1-758 | I-1 | II-5 | III-80 |
| T1-759 | I-1 | II-5 | III-81 |
| T1-760 | I-1 | II-5 | III-82 |
| T1-761 | I-1 | II-5 | III-83 |
| T1-762 | I-1 | II-5 | III-84 |
| T1-763 | I-1 | II-5 | III-85 |
| T1-764 | I-1 | II-5 | III-86 |
| T1-765 | I-1 | II-5 | III-87 |
| T1-766 | I-1 | II-5 | III-88 |
| T1-767 | I-1 | II-5 | III-89 |
| T1-768 | I-1 | II-5 | III-90 |
| T1-769 | I-1 | II-5 | III-91 |
| T1-770 | I-1 | II-5 | III-92 |
| T1-771 | I-1 | II-5 | III-93 |
| T1-772 | I-1 | II-5 | III-94 |

| composition | I | II | III |
|---|---|---|---|
| T1-773 | I-1 | II-5 | III-95 |
| T1-774 | I-1 | II-5 | III-96 |
| T1-775 | I-1 | II-5 | III-97 |
| T1-776 | I-1 | II-5 | III-98 |
| T1-777 | I-1 | II-5 | III-99 |
| T1-778 | I-1 | II-5 | III-100 |
| T1-779 | I-1 | II-5 | III-101 |
| T1-780 | I-1 | II-5 | III-102 |
| T1-781 | I-1 | II-5 | III-103 |
| T1-782 | I-1 | II-5 | III-104 |
| T1-783 | I-1 | II-5 | III-105 |
| T1-784 | I-1 | II-5 | III-106 |
| T1-785 | I-1 | II-5 | III-107 |
| T1-786 | I-1 | II-5 | III-108 |
| T1-787 | I-1 | II-5 | III-109 |
| T1-788 | I-1 | II-5 | III-110 |
| T1-789 | I-1 | II-5 | III-111 |
| T1-790 | I-1 | II-5 | III-112 |
| T1-791 | I-1 | II-5 | III-113 |
| T1-792 | I-1 | II-5 | III-114 |
| T1-793 | I-1 | II-5 | III-115 |
| T1-794 | I-1 | II-5 | III-116 |
| T1-795 | I-1 | II-5 | III-117 |
| T1-796 | I-1 | II-5 | III-118 |
| T1-797 | I-1 | II-5 | III-119 |
| T1-798 | I-1 | II-5 | III-120 |
| T1-799 | I-1 | II-5 | III-121 |
| T1-800 | I-1 | II-5 | III-122 |
| T1-801 | I-1 | II-5 | III-123 |
| T1-802 | I-1 | II-5 | III-124 |
| T1-803 | I-1 | II-5 | III-125 |
| T1-804 | I-1 | II-5 | III-126 |
| T1-805 | I-1 | II-5 | III-127 |
| T1-806 | I-1 | II-5 | III-128 |
| T1-807 | I-1 | II-5 | III-129 |
| T1-808 | I-1 | II-5 | III-130 |
| T1-809 | I-1 | II-5 | III-131 |
| T1-810 | I-1 | II-5 | III-132 |
| T1-811 | I-1 | II-5 | III-133 |
| T1-812 | I-1 | II-5 | III-134 |

| composition | I | II | III |
|---|---|---|---|
| T1-813 | I-1 | II-5 | III-135 |
| T1-814 | I-1 | II-5 | III-136 |
| T1-815 | I-1 | II-5 | III-137 |
| T1-816 | I-1 | II-5 | III-138 |
| T1-817 | I-1 | II-5 | III-140 |
| T1-818 | I-1 | II-5 | III-141 |
| T1-819 | I-1 | II-5 | III-142 |
| T1-820 | I-1 | II-5 | III-143 |
| T1-821 | I-1 | II-5 | III-144 |
| T1-822 | I-1 | II-5 | III-145 |
| T1-823 | I-1 | II-5 | III-146 |
| T1-824 | I-1 | II-5 | III-147 |
| T1-825 | I-1 | II-5 | III-148 |
| T1-826 | I-1 | II-5 | III-149 |
| T1-827 | I-1 | II-5 | III-150 |
| T1-828 | I-1 | II-5 | III-151 |
| T1-829 | I-1 | II-5 | III-152 |
| T1-830 | I-1 | II-5 | III-153 |
| T1-831 | I-1 | II-5 | III-154 |
| T1-832 | I-1 | II-5 | III-155 |
| T1-833 | I-1 | II-5 | III-156 |
| T1-834 | I-1 | II-5 | III-157 |
| T1-835 | I-1 | II-5 | III-158 |
| T1-836 | I-1 | II-5 | III-159 |
| T1-837 | I-1 | II-5 | III-160 |
| T1-838 | I-1 | II-5 | III-161 |
| T1-839 | I-1 | II-5 | III-162 |
| T1-840 | I-1 | II-5 | III-163 |
| T1-841 | I-1 | II-5 | III-164 |
| T1-842 | I-1 | II-5 | III-165 |
| T1-843 | I-1 | II-5 | III-166 |
| T1-844 | I-1 | II-5 | III-167 |
| T1-845 | I-1 | II-5 | III-168 |
| T1-846 | I-1 | II-5 | III-169 |
| T1-847 | I-1 | II-5 | III-170 |
| T1-848 | I-1 | II-5 | III-171 |
| T1-849 | I-1 | II-5 | III-172 |
| T1-850 | I-1 | II-5 | III-173 |
| T1-851 | I-1 | II-5 | III-174 |
| T1-852 | I-1 | II-5 | III-175 |

| composition | I | II | III |
|---|---|---|---|
| T1-853 | I-1 | II-5 | III-176 |
| T1-854 | I-1 | II-5 | III-177 |
| T1-855 | I-1 | II-5 | III-178 |
| T1-856 | I-1 | II-5 | III-179 |
| T1-857 | I-1 | II-5 | III-180 |
| T1-858 | I-1 | II-5 | III-181 |
| T1-859 | I-1 | II-5 | III-182 |
| T1-860 | I-1 | II-5 | III-183 |
| T1-861 | I-1 | II-5 | III-184 |
| T1-862 | I-1 | II-5 | III-185 |
| T1-863 | I-1 | II-5 | III-186 |
| T1-864 | I-1 | II-5 | III-187 |
| T1-865 | I-1 | II-5 | III-188 |
| T1-866 | I-1 | II-5 | III-189 |
| T1-867 | I-1 | II-5 | III-190 |
| T1-868 | I-1 | II-5 | III-191 |
| T1-869 | I-1 | II-5 | III-192 |
| T1-870 | I-1 | II-5 | III-193 |
| T1-871 | I-1 | II-5 | III-194 |
| T1-872 | I-1 | II-5 | III-195 |
| T1-873 | I-1 | II-5 | III-196 |
| T1-874 | I-1 | II-5 | III-197 |
| T1-875 | I-1 | II-5 | III-198 |
| T1-876 | I-1 | II-5 | III-199 |
| T1-877 | I-1 | II-5 | III-200 |
| T1-878 | I-1 | II-5 | III-201 |
| T1-879 | I-1 | II-5 | III-202 |
| T1-880 | I-1 | II-5 | III-203 |
| T1-881 | I-1 | II-6 | III-27 |
| T1-882 | I-1 | II-6 | III-28 |
| T1-883 | I-1 | II-6 | III-29 |
| T1-884 | I-1 | II-6 | III-30 |
| T1-885 | I-1 | II-6 | III-31 |
| T1-886 | I-1 | II-6 | III-32 |
| T1-887 | I-1 | II-6 | III-33 |
| T1-888 | I-1 | II-6 | III-34 |
| T1-889 | I-1 | II-6 | III-35 |
| T1-890 | I-1 | II-6 | III-36 |
| T1-891 | I-1 | II-6 | III-37 |
| T1-892 | I-1 | II-6 | III-38 |

| composition | I | II | III |
|---|---|---|---|
| T1-893 | I-1 | II-6 | III-39 |
| T1-894 | I-1 | II-6 | III-40 |
| T1-895 | I-1 | II-6 | III-41 |
| T1-896 | I-1 | II-6 | III-42 |
| T1-897 | I-1 | II-6 | III-43 |
| T1-898 | I-1 | II-6 | III-44 |
| T1-899 | I-1 | II-6 | III-45 |
| T1-900 | I-1 | II-6 | III-46 |
| T1-901 | I-1 | II-6 | III-47 |
| T1-902 | I-1 | II-6 | III-48 |
| T1-903 | I-1 | II-6 | III-49 |
| T1-904 | I-1 | II-6 | III-50 |
| T1-905 | I-1 | II-6 | III-51 |
| T1-906 | I-1 | II-6 | III-52 |
| T1-907 | I-1 | II-6 | III-53 |
| T1-908 | I-1 | II-6 | III-54 |
| T1-909 | I-1 | II-6 | III-55 |
| T1-910 | I-1 | II-6 | III-56 |
| T1-911 | I-1 | II-6 | III-57 |
| T1-912 | I-1 | II-6 | III-58 |
| T1-913 | I-1 | II-6 | III-59 |
| T1-914 | I-1 | II-6 | III-60 |
| T1-915 | I-1 | II-6 | III-61 |
| T1-916 | I-1 | II-6 | III-62 |
| T1-917 | I-1 | II-6 | III-63 |
| T1-918 | I-1 | II-6 | III-64 |
| T1-919 | I-1 | II-6 | III-65 |
| T1-920 | I-1 | II-6 | III-66 |
| T1-921 | I-1 | II-6 | III-67 |
| T1-922 | I-1 | II-6 | III-68 |
| T1-923 | I-1 | II-6 | III-69 |
| T1-924 | I-1 | II-6 | III-70 |
| T1-925 | I-1 | II-6 | III-71 |
| T1-926 | I-1 | II-6 | III-72 |
| T1-927 | I-1 | II-6 | III-73 |
| T1-928 | I-1 | II-6 | III-74 |
| T1-929 | I-1 | II-6 | III-75 |
| T1-930 | I-1 | II-6 | III-76 |
| T1-931 | I-1 | II-6 | III-77 |
| T1-932 | I-1 | II-6 | III-78 |

| composition | I | II | III |
|---|---|---|---|
| T1-933 | I-1 | II-6 | III-79 |
| T1-934 | I-1 | II-6 | III-80 |
| T1-935 | I-1 | II-6 | III-81 |
| T1-936 | I-1 | II-6 | III-82 |
| T1-937 | I-1 | II-6 | III-83 |
| T1-938 | I-1 | II-6 | III-84 |
| T1-939 | I-1 | II-6 | III-85 |
| T1-940 | I-1 | II-6 | III-86 |
| T1-941 | I-1 | II-6 | III-87 |
| T1-942 | I-1 | II-6 | III-88 |
| T1-943 | I-1 | II-6 | III-89 |
| T1-944 | I-1 | II-6 | III-90 |
| T1-945 | I-1 | II-6 | III-91 |
| T1-946 | I-1 | II-6 | III-92 |
| T1-947 | I-1 | II-6 | III-93 |
| T1-948 | I-1 | II-6 | III-94 |
| T1-949 | I-1 | II-6 | III-95 |
| T1-950 | I-1 | II-6 | III-96 |
| T1-951 | I-1 | II-6 | III-97 |
| T1-952 | I-1 | II-6 | III-98 |
| T1-953 | I-1 | II-6 | III-99 |
| T1-954 | I-1 | II-6 | III-100 |
| T1-955 | I-1 | II-6 | III-101 |
| T1-956 | I-1 | II-6 | III-102 |
| T1-957 | I-1 | II-6 | III-103 |
| T1-958 | I-1 | II-6 | III-104 |
| T1-959 | I-1 | II-6 | III-105 |
| T1-960 | I-1 | II-6 | III-106 |
| T1-961 | I-1 | II-6 | III-107 |
| T1-962 | I-1 | II-6 | III-108 |
| T1-963 | I-1 | II-6 | III-109 |
| T1-964 | I-1 | II-6 | III-110 |
| T1-965 | I-1 | II-6 | III-111 |
| T1-966 | I-1 | II-6 | III-112 |
| T1-967 | I-1 | II-6 | III-113 |
| T1-968 | I-1 | II-6 | III-114 |
| T1-969 | I-1 | II-6 | III-115 |
| T1-970 | I-1 | II-6 | III-116 |
| T1-971 | I-1 | II-6 | III-117 |
| T1-972 | I-1 | II-6 | III-118 |

| composition | I | II | III |
|---|---|---|---|
| T1-973 | I-1 | II-6 | III-119 |
| T1-974 | I-1 | II-6 | III-120 |
| T1-975 | I-1 | II-6 | III-121 |
| T1-976 | I-1 | II-6 | III-122 |
| T1-977 | I-1 | II-6 | III-123 |
| T1-978 | I-1 | II-6 | III-124 |
| T1-979 | I-1 | II-6 | III-125 |
| T1-980 | I-1 | II-6 | III-126 |
| T1-981 | I-1 | II-6 | III-127 |
| T1-982 | I-1 | II-6 | III-128 |
| T1-983 | I-1 | II-6 | III-129 |
| T1-984 | I-1 | II-6 | III-130 |
| T1-985 | I-1 | II-6 | III-131 |
| T1-986 | I-1 | II-6 | III-132 |
| T1-987 | I-1 | II-6 | III-133 |
| T1-988 | I-1 | II-6 | III-134 |
| T1-989 | I-1 | II-6 | III-135 |
| T1-990 | I-1 | II-6 | III-136 |
| T1-991 | I-1 | II-6 | III-137 |
| T1-992 | I-1 | II-6 | III-138 |
| T1-993 | I-1 | II-6 | III-140 |
| T1-994 | I-1 | II-6 | III-141 |
| T1-995 | I-1 | II-6 | III-142 |
| T1-996 | I-1 | II-6 | III-143 |
| T1-997 | I-1 | II-6 | III-144 |
| T1-998 | I-1 | II-6 | III-145 |
| T1-999 | I-1 | II-6 | III-146 |
| T1-1000 | I-1 | II-6 | III-147 |
| T1-1001 | I-1 | II-6 | III-148 |
| T1-1002 | I-1 | II-6 | III-149 |
| T1-1003 | I-1 | II-6 | III-150 |
| T1-1004 | I-1 | II-6 | III-151 |
| T1-1005 | I-1 | II-6 | III-152 |
| T1-1006 | I-1 | II-6 | III-153 |
| T1-1007 | I-1 | II-6 | III-154 |
| T1-1008 | I-1 | II-6 | III-155 |
| T1-1009 | I-1 | II-6 | III-156 |
| T1-1010 | I-1 | II-6 | III-157 |
| T1-1011 | I-1 | II-6 | III-158 |
| T1-1012 | I-1 | II-6 | III-159 |

| composition | I | II | III |
|---|---|---|---|
| T1-1013 | I-1 | II-6 | III-160 |
| T1-1014 | I-1 | II-6 | III-161 |
| T1-1015 | I-1 | II-6 | III-162 |
| T1-1016 | I-1 | II-6 | III-163 |
| T1-1017 | I-1 | II-6 | III-164 |
| T1-1018 | I-1 | II-6 | III-165 |
| T1-1019 | I-1 | II-6 | III-166 |
| T1-1020 | I-1 | II-6 | III-167 |
| T1-1021 | I-1 | II-6 | III-168 |
| T1-1022 | I-1 | II-6 | III-169 |
| T1-1023 | I-1 | II-6 | III-170 |
| T1-1024 | I-1 | II-6 | III-171 |
| T1-1025 | I-1 | II-6 | III-172 |
| T1-1026 | I-1 | II-6 | III-173 |
| T1-1027 | I-1 | II-6 | III-174 |
| T1-1028 | I-1 | II-6 | III-175 |
| T1-1029 | I-1 | II-6 | III-176 |
| T1-1030 | I-1 | II-6 | III-177 |
| T1-1031 | I-1 | II-6 | III-178 |
| T1-1032 | I-1 | II-6 | III-179 |
| T1-1033 | I-1 | II-6 | III-180 |
| T1-1034 | I-1 | II-6 | III-181 |
| T1-1035 | I-1 | II-6 | III-182 |
| T1-1036 | I-1 | II-6 | III-183 |
| T1-1037 | I-1 | II-6 | III-184 |
| T1-1038 | I-1 | II-6 | III-185 |
| T1-1039 | I-1 | II-6 | III-186 |
| T1-1040 | I-1 | II-6 | III-187 |
| T1-1041 | I-1 | II-6 | III-188 |
| T1-1042 | I-1 | II-6 | III-189 |
| T1-1043 | I-1 | II-6 | III-190 |
| T1-1044 | I-1 | II-6 | III-191 |
| T1-1045 | I-1 | II-6 | III-192 |
| T1-1046 | I-1 | II-6 | III-193 |
| T1-1047 | I-1 | II-6 | III-194 |
| T1-1048 | I-1 | II-6 | III-195 |
| T1-1049 | I-1 | II-6 | III-196 |
| T1-1050 | I-1 | II-6 | III-197 |
| T1-1051 | I-1 | II-6 | III-198 |
| T1-1052 | I-1 | II-6 | III-199 |

| composition | I | II | III |
|---|---|---|---|
| T1-1053 | I-1 | II-6 | III-200 |
| T1-1054 | I-1 | II-6 | III-201 |
| T1-1055 | I-1 | II-6 | III-202 |
| T1-1056 | I-1 | II-6 | III-203 |
| T1-1057 | I-1 | II-7 | III-27 |
| T1-1058 | I-1 | II-7 | III-28 |
| T1-1059 | I-1 | II-7 | III-29 |
| T1-1060 | I-1 | II-7 | III-30 |
| T1-1061 | I-1 | II-7 | III-31 |
| T1-1062 | I-1 | II-7 | III-32 |
| T1-1063 | I-1 | II-7 | III-33 |
| T1-1064 | I-1 | II-7 | III-34 |
| T1-1065 | I-1 | II-7 | III-35 |
| T1-1066 | I-1 | II-7 | III-36 |
| T1-1067 | I-1 | II-7 | III-37 |
| T1-1068 | I-1 | II-7 | III-38 |
| T1-1069 | I-1 | II-7 | III-39 |
| T1-1070 | I-1 | II-7 | III-40 |
| T1-1071 | I-1 | II-7 | III-41 |
| T1-1072 | I-1 | II-7 | III-42 |
| T1-1073 | I-1 | II-7 | III-43 |
| T1-1074 | I-1 | II-7 | III-44 |
| T1-1075 | I-1 | II-7 | III-45 |
| T1-1076 | I-1 | II-7 | III-46 |
| T1-1077 | I-1 | II-7 | III-47 |
| T1-1078 | I-1 | II-7 | III-48 |
| T1-1079 | I-1 | II-7 | III-49 |
| T1-1080 | I-1 | II-7 | III-50 |
| T1-1081 | I-1 | II-7 | III-51 |
| T1-1082 | I-1 | II-7 | III-52 |
| T1-1083 | I-1 | II-7 | III-53 |
| T1-1084 | I-1 | II-7 | III-54 |
| T1-1085 | I-1 | II-7 | III-55 |
| T1-1086 | I-1 | II-7 | III-56 |
| T1-1087 | I-1 | II-7 | III-57 |
| T1-1088 | I-1 | II-7 | III-58 |
| T1-1089 | I-1 | II-7 | III-59 |
| T1-1090 | I-1 | II-7 | III-60 |
| T1-1091 | I-1 | II-7 | III-61 |
| T1-1092 | I-1 | II-7 | III-62 |

| composition | I | II | III |
|---|---|---|---|
| T1-1093 | I-1 | II-7 | III-63 |
| T1-1094 | I-1 | II-7 | III-64 |
| T1-1095 | I-1 | II-7 | III-65 |
| T1-1096 | I-1 | II-7 | III-66 |
| T1-1097 | I-1 | II-7 | III-67 |
| T1-1098 | I-1 | II-7 | III-68 |
| T1-1099 | I-1 | II-7 | III-69 |
| T1-1100 | I-1 | II-7 | III-70 |
| T1-1101 | I-1 | II-7 | III-71 |
| T1-1102 | I-1 | II-7 | III-72 |
| T1-1103 | I-1 | II-7 | III-73 |
| T1-1104 | I-1 | II-7 | III-74 |
| T1-1105 | I-1 | II-7 | III-75 |
| T1-1106 | I-1 | II-7 | III-76 |
| T1-1107 | I-1 | II-7 | III-77 |
| T1-1108 | I-1 | II-7 | III-78 |
| T1-1109 | I-1 | II-7 | III-79 |
| T1-1110 | I-1 | II-7 | III-80 |
| T1-1111 | I-1 | II-7 | III-81 |
| T1-1112 | I-1 | II-7 | III-82 |
| T1-1113 | I-1 | II-7 | III-83 |
| T1-1114 | I-1 | II-7 | III-84 |
| T1-1115 | I-1 | II-7 | III-85 |
| T1-1116 | I-1 | II-7 | III-86 |
| T1-1117 | I-1 | II-7 | III-87 |
| T1-1118 | I-1 | II-7 | III-88 |
| T1-1119 | I-1 | II-7 | III-89 |
| T1-1120 | I-1 | II-7 | III-90 |
| T1-1121 | I-1 | II-7 | III-91 |
| T1-1122 | I-1 | II-7 | III-92 |
| T1-1123 | I-1 | II-7 | III-93 |
| T1-1124 | I-1 | II-7 | III-94 |
| T1-1125 | I-1 | II-7 | III-95 |
| T1-1126 | I-1 | II-7 | III-96 |
| T1-1127 | I-1 | II-7 | III-97 |
| T1-1128 | I-1 | II-7 | III-98 |
| T1-1129 | I-1 | II-7 | III-99 |
| T1-1130 | I-1 | II-7 | III-100 |
| T1-1131 | I-1 | II-7 | III-101 |
| T1-1132 | I-1 | II-7 | III-102 |

| composition | I | II | III |
|---|---|---|---|
| T1-1133 | I-1 | II-7 | III-103 |
| T1-1134 | I-1 | II-7 | III-104 |
| T1-1135 | I-1 | II-7 | III-105 |
| T1-1136 | I-1 | II-7 | III-106 |
| T1-1137 | I-1 | II-7 | III-107 |
| T1-1138 | I-1 | II-7 | III-108 |
| T1-1139 | I-1 | II-7 | III-109 |
| T1-1140 | I-1 | II-7 | III-110 |
| T1-1141 | I-1 | II-7 | III-111 |
| T1-1142 | I-1 | II-7 | III-112 |
| T1-1143 | I-1 | II-7 | III-113 |
| T1-1144 | I-1 | II-7 | III-114 |
| T1-1145 | I-1 | II-7 | III-115 |
| T1-1146 | I-1 | II-7 | III-116 |
| T1-1147 | I-1 | II-7 | III-117 |
| T1-1148 | I-1 | II-7 | III-118 |
| T1-1149 | I-1 | II-7 | III-119 |
| T1-1150 | I-1 | II-7 | III-120 |
| T1-1151 | I-1 | II-7 | III-121 |
| T1-1152 | I-1 | II-7 | III-122 |
| T1-1153 | I-1 | II-7 | III-123 |
| T1-1154 | I-1 | II-7 | III-124 |
| T1-1155 | I-1 | II-7 | III-125 |
| T1-1156 | I-1 | II-7 | III-126 |
| T1-1157 | I-1 | II-7 | III-127 |
| T1-1158 | I-1 | II-7 | III-128 |
| T1-1159 | I-1 | II-7 | III-129 |
| T1-1160 | I-1 | II-7 | III-130 |
| T1-1161 | I-1 | II-7 | III-131 |
| T1-1162 | I-1 | II-7 | III-132 |
| T1-1163 | I-1 | II-7 | III-133 |
| T1-1164 | I-1 | II-7 | III-134 |
| T1-1165 | I-1 | II-7 | III-135 |
| T1-1166 | I-1 | II-7 | III-136 |
| T1-1167 | I-1 | II-7 | III-137 |
| T1-1168 | I-1 | II-7 | III-138 |
| T1-1169 | I-1 | II-7 | III-140 |
| T1-1170 | I-1 | II-7 | III-141 |
| T1-1171 | I-1 | II-7 | III-142 |
| T1-1172 | I-1 | II-7 | III-143 |

| composition | I | II | III |
|---|---|---|---|
| T1-1173 | I-1 | II-7 | III-144 |
| T1-1174 | I-1 | II-7 | III-145 |
| T1-1175 | I-1 | II-7 | III-146 |
| T1-1176 | I-1 | II-7 | III-147 |
| T1-1177 | I-1 | II-7 | III-148 |
| T1-1178 | I-1 | II-7 | III-149 |
| T1-1179 | I-1 | II-7 | III-150 |
| T1-1180 | I-1 | II-7 | III-151 |
| T1-1181 | I-1 | II-7 | III-152 |
| T1-1182 | I-1 | II-7 | III-153 |
| T1-1183 | I-1 | II-7 | III-154 |
| T1-1184 | I-1 | II-7 | III-155 |
| T1-1185 | I-1 | II-7 | III-156 |
| T1-1186 | I-1 | II-7 | III-157 |
| T1-1187 | I-1 | II-7 | III-158 |
| T1-1188 | I-1 | II-7 | III-159 |
| T1-1189 | I-1 | II-7 | III-160 |
| T1-1190 | I-1 | II-7 | III-161 |
| T1-1191 | I-1 | II-7 | III-162 |
| T1-1192 | I-1 | II-7 | III-163 |
| T1-1193 | I-1 | II-7 | III-164 |
| T1-1194 | I-1 | II-7 | III-165 |
| T1-1195 | I-1 | II-7 | III-166 |
| T1-1196 | I-1 | II-7 | III-167 |
| T1-1197 | I-1 | II-7 | III-168 |
| T1-1198 | I-1 | II-7 | III-169 |
| T1-1199 | I-1 | II-7 | III-170 |
| T1-1200 | I-1 | II-7 | III-171 |
| T1-1201 | I-1 | II-7 | III-172 |
| T1-1202 | I-1 | II-7 | III-173 |
| T1-1203 | I-1 | II-7 | III-174 |
| T1-1204 | I-1 | II-7 | III-175 |
| T1-1205 | I-1 | II-7 | III-176 |
| T1-1206 | I-1 | II-7 | III-177 |
| T1-1207 | I-1 | II-7 | III-178 |
| T1-1208 | I-1 | II-7 | III-179 |
| T1-1209 | I-1 | II-7 | III-180 |
| T1-1210 | I-1 | II-7 | III-181 |
| T1-1211 | I-1 | II-7 | III-182 |
| T1-1212 | I-1 | II-7 | III-183 |

| composition | I | II | III |
|---|---|---|---|
| T1-1213 | I-1 | II-7 | III-184 |
| T1-1214 | I-1 | II-7 | III-185 |
| T1-1215 | I-1 | II-7 | III-186 |
| T1-1216 | I-1 | II-7 | III-187 |
| T1-1217 | I-1 | II-7 | III-188 |
| T1-1218 | I-1 | II-7 | III-189 |
| T1-1219 | I-1 | II-7 | III-190 |
| T1-1220 | I-1 | II-7 | III-191 |
| T1-1221 | I-1 | II-7 | III-192 |
| T1-1222 | I-1 | II-7 | III-193 |
| T1-1223 | I-1 | II-7 | III-194 |
| T1-1224 | I-1 | II-7 | III-195 |
| T1-1225 | I-1 | II-7 | III-196 |
| T1-1226 | I-1 | II-7 | III-197 |
| T1-1227 | I-1 | II-7 | III-198 |
| T1-1228 | I-1 | II-7 | III-199 |
| T1-1229 | I-1 | II-7 | III-200 |
| T1-1230 | I-1 | II-7 | III-201 |
| T1-1231 | I-1 | II-7 | III-202 |
| T1-1232 | I-1 | II-7 | III-203 |
| T1-1233 | I-1 | II-8 | III-27 |
| T1-1234 | I-1 | II-8 | III-28 |
| T1-1235 | I-1 | II-8 | III-29 |
| T1-1236 | I-1 | II-8 | III-30 |
| T1-1237 | I-1 | II-8 | III-31 |
| T1-1238 | I-1 | II-8 | III-32 |
| T1-1239 | I-1 | II-8 | III-33 |
| T1-1240 | I-1 | II-8 | III-34 |
| T1-1241 | I-1 | II-8 | III-35 |
| T1-1242 | I-1 | II-8 | III-36 |
| T1-1243 | I-1 | II-8 | III-37 |
| T1-1244 | I-1 | II-8 | III-38 |
| T1-1245 | I-1 | II-8 | III-39 |
| T1-1246 | I-1 | II-8 | III-40 |
| T1-1247 | I-1 | II-8 | III-41 |
| T1-1248 | I-1 | II-8 | III-42 |
| T1-1249 | I-1 | II-8 | III-43 |
| T1-1250 | I-1 | II-8 | III-44 |
| T1-1251 | I-1 | II-8 | III-45 |
| T1-1252 | I-1 | II-8 | III-46 |

| composition | I | II | III |
|---|---|---|---|
| T1-1253 | I-1 | II-8 | III-47 |
| T1-1254 | I-1 | II-8 | III-48 |
| T1-1255 | I-1 | II-8 | III-49 |
| T1-1256 | I-1 | II-8 | III-50 |
| T1-1257 | I-1 | II-8 | III-51 |
| T1-1258 | I-1 | II-8 | III-52 |
| T1-1259 | I-1 | II-8 | III-53 |
| T1-1260 | I-1 | II-8 | III-54 |
| T1-1261 | I-1 | II-8 | III-55 |
| T1-1262 | I-1 | II-8 | III-56 |
| T1-1263 | I-1 | II-8 | III-57 |
| T1-1264 | I-1 | II-8 | III-58 |
| T1-1265 | I-1 | II-8 | III-59 |
| T1-1266 | I-1 | II-8 | III-60 |
| T1-1267 | I-1 | II-8 | III-61 |
| T1-1268 | I-1 | II-8 | III-62 |
| T1-1269 | I-1 | II-8 | III-63 |
| T1-1270 | I-1 | II-8 | III-64 |
| T1-1271 | I-1 | II-8 | III-65 |
| T1-1272 | I-1 | II-8 | III-66 |
| T1-1273 | I-1 | II-8 | III-67 |
| T1-1274 | I-1 | II-8 | III-68 |
| T1-1275 | I-1 | II-8 | III-69 |
| T1-1276 | I-1 | II-8 | III-70 |
| T1-1277 | I-1 | II-8 | III-71 |
| T1-1278 | I-1 | II-8 | III-72 |
| T1-1279 | I-1 | II-8 | III-73 |
| T1-1280 | I-1 | II-8 | III-74 |
| T1-1281 | I-1 | II-8 | III-75 |
| T1-1282 | I-1 | II-8 | III-76 |
| T1-1283 | I-1 | II-8 | III-77 |
| T1-1284 | I-1 | II-8 | III-78 |
| T1-1285 | I-1 | II-8 | III-79 |
| T1-1286 | I-1 | II-8 | III-80 |
| T1-1287 | I-1 | II-8 | III-81 |
| T1-1288 | I-1 | II-8 | III-82 |
| T1-1289 | I-1 | II-8 | III-83 |
| T1-1290 | I-1 | II-8 | III-84 |
| T1-1291 | I-1 | II-8 | III-85 |
| T1-1292 | I-1 | II-8 | III-86 |
| T1-1293 | I-1 | II-8 | III-87 |
| T1-1294 | I-1 | II-8 | III-88 |
| T1-1295 | I-1 | II-8 | III-89 |
| T1-1296 | I-1 | II-8 | III-90 |
| T1-1297 | I-1 | II-8 | III-91 |
| T1-1298 | I-1 | II-8 | III-92 |
| T1-1299 | I-1 | II-8 | III-93 |
| T1-1300 | I-1 | II-8 | III-94 |
| T1-1301 | I-1 | II-8 | III-95 |
| T1-1302 | I-1 | II-8 | III-96 |
| T1-1303 | I-1 | II-8 | III-97 |
| T1-1304 | I-1 | II-8 | III-98 |
| T1-1305 | I-1 | II-8 | III-99 |
| T1-1306 | I-1 | II-8 | III-100 |
| T1-1307 | I-1 | II-8 | III-101 |
| T1-1308 | I-1 | II-8 | III-102 |
| T1-1309 | I-1 | II-8 | III-103 |
| T1-1310 | I-1 | II-8 | III-104 |
| T1-1311 | I-1 | II-8 | III-105 |
| T1-1312 | I-1 | II-8 | III-106 |
| T1-1313 | I-1 | II-8 | III-107 |
| T1-1314 | I-1 | II-8 | III-108 |
| T1-1315 | I-1 | II-8 | III-109 |
| T1-1316 | I-1 | II-8 | III-110 |
| T1-1317 | I-1 | II-8 | III-111 |
| T1-1318 | I-1 | II-8 | III-112 |
| T1-1319 | I-1 | II-8 | III-113 |
| T1-1320 | I-1 | II-8 | III-114 |
| T1-1321 | I-1 | II-8 | III-115 |
| T1-1322 | I-1 | II-8 | III-116 |
| T1-1323 | I-1 | II-8 | III-117 |
| T1-1324 | I-1 | II-8 | III-118 |
| T1-1325 | I-1 | II-8 | III-119 |
| T1-1326 | I-1 | II-8 | III-120 |
| T1-1327 | I-1 | II-8 | III-121 |
| T1-1328 | I-1 | II-8 | III-122 |
| T1-1329 | I-1 | II-8 | III-123 |
| T1-1330 | I-1 | II-8 | III-124 |
| T1-1331 | I-1 | II-8 | III-125 |
| T1-1332 | I-1 | II-8 | III-126 |

| composition | I | II | III |
|---|---|---|---|
| T1-1333 | I-1 | II-8 | III-127 |
| T1-1334 | I-1 | II-8 | III-128 |
| T1-1335 | I-1 | II-8 | III-129 |
| T1-1336 | I-1 | II-8 | III-130 |
| T1-1337 | I-1 | II-8 | III-131 |
| T1-1338 | I-1 | II-8 | III-132 |
| T1-1339 | I-1 | II-8 | III-133 |
| T1-1340 | I-1 | II-8 | III-134 |
| T1-1341 | I-1 | II-8 | III-135 |
| T1-1342 | I-1 | II-8 | III-136 |
| T1-1343 | I-1 | II-8 | III-137 |
| T1-1344 | I-1 | II-8 | III-138 |
| T1-1345 | I-1 | II-8 | III-140 |
| T1-1346 | I-1 | II-8 | III-141 |
| T1-1347 | I-1 | II-8 | III-142 |
| T1-1348 | I-1 | II-8 | III-143 |
| T1-1349 | I-1 | II-8 | III-144 |
| T1-1350 | I-1 | II-8 | III-145 |
| T1-1351 | I-1 | II-8 | III-146 |
| T1-1352 | I-1 | II-8 | III-147 |
| T1-1353 | I-1 | II-8 | III-148 |
| T1-1354 | I-1 | II-8 | III-149 |
| T1-1355 | I-1 | II-8 | III-150 |
| T1-1356 | I-1 | II-8 | III-151 |
| T1-1357 | I-1 | II-8 | III-152 |
| T1-1358 | I-1 | II-8 | III-153 |
| T1-1359 | I-1 | II-8 | III-154 |
| T1-1360 | I-1 | II-8 | III-155 |
| T1-1361 | I-1 | II-8 | III-156 |
| T1-1362 | I-1 | II-8 | III-157 |
| T1-1363 | I-1 | II-8 | III-158 |
| T1-1364 | I-1 | II-8 | III-159 |
| T1-1365 | I-1 | II-8 | III-160 |
| T1-1366 | I-1 | II-8 | III-161 |
| T1-1367 | I-1 | II-8 | III-162 |
| T1-1368 | I-1 | II-8 | III-163 |
| T1-1369 | I-1 | II-8 | III-164 |
| T1-1370 | I-1 | II-8 | III-165 |
| T1-1371 | I-1 | II-8 | III-166 |
| T1-1372 | I-1 | II-8 | III-167 |

| composition | I | II | III |
|---|---|---|---|
| T1-1373 | I-1 | II-8 | III-168 |
| T1-1374 | I-1 | II-8 | III-169 |
| T1-1375 | I-1 | II-8 | III-170 |
| T1-1376 | I-1 | II-8 | III-171 |
| T1-1377 | I-1 | II-8 | III-172 |
| T1-1378 | I-1 | II-8 | III-173 |
| T1-1379 | I-1 | II-8 | III-174 |
| T1-1380 | I-1 | II-8 | III-175 |
| T1-1381 | I-1 | II-8 | III-176 |
| T1-1382 | I-1 | II-8 | III-177 |
| T1-1383 | I-1 | II-8 | III-178 |
| T1-1384 | I-1 | II-8 | III-179 |
| T1-1385 | I-1 | II-8 | III-180 |
| T1-1386 | I-1 | II-8 | III-181 |
| T1-1387 | I-1 | II-8 | III-182 |
| T1-1388 | I-1 | II-8 | III-183 |
| T1-1389 | I-1 | II-8 | III-184 |
| T1-1390 | I-1 | II-8 | III-185 |
| T1-1391 | I-1 | II-8 | III-186 |
| T1-1392 | I-1 | II-8 | III-187 |
| T1-1393 | I-1 | II-8 | III-188 |
| T1-1394 | I-1 | II-8 | III-189 |
| T1-1395 | I-1 | II-8 | III-190 |
| T1-1396 | I-1 | II-8 | III-191 |
| T1-1397 | I-1 | II-8 | III-192 |
| T1-1398 | I-1 | II-8 | III-193 |
| T1-1399 | I-1 | II-8 | III-194 |
| T1-1400 | I-1 | II-8 | III-195 |
| T1-1401 | I-1 | II-8 | III-196 |
| T1-1402 | I-1 | II-8 | III-197 |
| T1-1403 | I-1 | II-8 | III-198 |
| T1-1404 | I-1 | II-8 | III-199 |
| T1-1405 | I-1 | II-8 | III-200 |
| T1-1406 | I-1 | II-8 | III-201 |
| T1-1407 | I-1 | II-8 | III-202 |
| T1-1408 | I-1 | II-8 | III-203 |
| T1-1409 | I-1 | II-9 | III-27 |
| T1-1410 | I-1 | II-9 | III-28 |
| T1-1411 | I-1 | II-9 | III-29 |
| T1-1412 | I-1 | II-9 | III-30 |

| composition | I | II | III |
|---|---|---|---|
| T1-1413 | I-1 | II-9 | III-31 |
| T1-1414 | I-1 | II-9 | III-32 |
| T1-1415 | I-1 | II-9 | III-33 |
| T1-1416 | I-1 | II-9 | III-34 |
| T1-1417 | I-1 | II-9 | III-35 |
| T1-1418 | I-1 | II-9 | III-36 |
| T1-1419 | I-1 | II-9 | III-37 |
| T1-1420 | I-1 | II-9 | III-38 |
| T1-1421 | I-1 | II-9 | III-39 |
| T1-1422 | I-1 | II-9 | III-40 |
| T1-1423 | I-1 | II-9 | III-41 |
| T1-1424 | I-1 | II-9 | III-42 |
| T1-1425 | I-1 | II-9 | III-43 |
| T1-1426 | I-1 | II-9 | III-44 |
| T1-1427 | I-1 | II-9 | III-45 |
| T1-1428 | I-1 | II-9 | III-46 |
| T1-1429 | I-1 | II-9 | III-47 |
| T1-1430 | I-1 | II-9 | III-48 |
| T1-1431 | I-1 | II-9 | III-49 |
| T1-1432 | I-1 | II-9 | III-50 |
| T1-1433 | I-1 | II-9 | III-51 |
| T1-1434 | I-1 | II-9 | III-52 |
| T1-1435 | I-1 | II-9 | III-53 |
| T1-1436 | I-1 | II-9 | III-54 |
| T1-1437 | I-1 | II-9 | III-55 |
| T1-1438 | I-1 | II-9 | III-56 |
| T1-1439 | I-1 | II-9 | III-57 |
| T1-1440 | I-1 | II-9 | III-58 |
| T1-1441 | I-1 | II-9 | III-59 |
| T1-1442 | I-1 | II-9 | III-60 |
| T1-1443 | I-1 | II-9 | III-61 |
| T1-1444 | I-1 | II-9 | III-62 |
| T1-1445 | I-1 | II-9 | III-63 |
| T1-1446 | I-1 | II-9 | III-64 |
| T1-1447 | I-1 | II-9 | III-65 |
| T1-1448 | I-1 | II-9 | III-66 |
| T1-1449 | I-1 | II-9 | III-67 |
| T1-1450 | I-1 | II-9 | III-68 |
| T1-1451 | I-1 | II-9 | III-69 |
| T1-1452 | I-1 | II-9 | III-70 |

| composition | I | II | III |
|---|---|---|---|
| T1-1453 | I-1 | II-9 | III-71 |
| T1-1454 | I-1 | II-9 | III-72 |
| T1-1455 | I-1 | II-9 | III-73 |
| T1-1456 | I-1 | II-9 | III-74 |
| T1-1457 | I-1 | II-9 | III-75 |
| T1-1458 | I-1 | II-9 | III-76 |
| T1-1459 | I-1 | II-9 | III-77 |
| T1-1460 | I-1 | II-9 | III-78 |
| T1-1461 | I-1 | II-9 | III-79 |
| T1-1462 | I-1 | II-9 | III-80 |
| T1-1463 | I-1 | II-9 | III-81 |
| T1-1464 | I-1 | II-9 | III-82 |
| T1-1465 | I-1 | II-9 | III-83 |
| T1-1466 | I-1 | II-9 | III-84 |
| T1-1467 | I-1 | II-9 | III-85 |
| T1-1468 | I-1 | II-9 | III-86 |
| T1-1469 | I-1 | II-9 | III-87 |
| T1-1470 | I-1 | II-9 | III-88 |
| T1-1471 | I-1 | II-9 | III-89 |
| T1-1472 | I-1 | II-9 | III-90 |
| T1-1473 | I-1 | II-9 | III-91 |
| T1-1474 | I-1 | II-9 | III-92 |
| T1-1475 | I-1 | II-9 | III-93 |
| T1-1476 | I-1 | II-9 | III-94 |
| T1-1477 | I-1 | II-9 | III-95 |
| T1-1478 | I-1 | II-9 | III-96 |
| T1-1479 | I-1 | II-9 | III-97 |
| T1-1480 | I-1 | II-9 | III-98 |
| T1-1481 | I-1 | II-9 | III-99 |
| T1-1482 | I-1 | II-9 | III-100 |
| T1-1483 | I-1 | II-9 | III-101 |
| T1-1484 | I-1 | II-9 | III-102 |
| T1-1485 | I-1 | II-9 | III-103 |
| T1-1486 | I-1 | II-9 | III-104 |
| T1-1487 | I-1 | II-9 | III-105 |
| T1-1488 | I-1 | II-9 | III-106 |
| T1-1489 | I-1 | II-9 | III-107 |
| T1-1490 | I-1 | II-9 | III-108 |
| T1-1491 | I-1 | II-9 | III-109 |
| T1-1492 | I-1 | II-9 | III-110 |

| composition | I | II | III |
|---|---|---|---|
| T1-1493 | I-1 | II-9 | III-111 |
| T1-1494 | I-1 | II-9 | III-112 |
| T1-1495 | I-1 | II-9 | III-113 |
| T1-1496 | I-1 | II-9 | III-114 |
| T1-1497 | I-1 | II-9 | III-115 |
| T1-1498 | I-1 | II-9 | III-116 |
| T1-1499 | I-1 | II-9 | III-117 |
| T1-1500 | I-1 | II-9 | III-118 |
| T1-1501 | I-1 | II-9 | III-119 |
| T1-1502 | I-1 | II-9 | III-120 |
| T1-1503 | I-1 | II-9 | III-121 |
| T1-1504 | I-1 | II-9 | III-122 |
| T1-1505 | I-1 | II-9 | III-123 |
| T1-1506 | I-1 | II-9 | III-124 |
| T1-1507 | I-1 | II-9 | III-125 |
| T1-1508 | I-1 | II-9 | III-126 |
| T1-1509 | I-1 | II-9 | III-127 |
| T1-1510 | I-1 | II-9 | III-128 |
| T1-1511 | I-1 | II-9 | III-129 |
| T1-1512 | I-1 | II-9 | III-130 |
| T1-1513 | I-1 | II-9 | III-131 |
| T1-1514 | I-1 | II-9 | III-132 |
| T1-1515 | I-1 | II-9 | III-133 |
| T1-1516 | I-1 | II-9 | III-134 |
| T1-1517 | I-1 | II-9 | III-135 |
| T1-1518 | I-1 | II-9 | III-136 |
| T1-1519 | I-1 | II-9 | III-137 |
| T1-1520 | I-1 | II-9 | III-138 |
| T1-1521 | I-1 | II-9 | III-140 |
| T1-1522 | I-1 | II-9 | III-141 |
| T1-1523 | I-1 | II-9 | III-142 |
| T1-1524 | I-1 | II-9 | III-143 |
| T1-1525 | I-1 | II-9 | III-144 |
| T1-1526 | I-1 | II-9 | III-145 |
| T1-1527 | I-1 | II-9 | III-146 |
| T1-1528 | I-1 | II-9 | III-147 |
| T1-1529 | I-1 | II-9 | III-148 |
| T1-1530 | I-1 | II-9 | III-149 |
| T1-1531 | I-1 | II-9 | III-150 |
| T1-1532 | I-1 | II-9 | III-151 |

| composition | I | II | III |
|---|---|---|---|
| T1-1533 | I-1 | II-9 | III-152 |
| T1-1534 | I-1 | II-9 | III-153 |
| T1-1535 | I-1 | II-9 | III-154 |
| T1-1536 | I-1 | II-9 | III-155 |
| T1-1537 | I-1 | II-9 | III-156 |
| T1-1538 | I-1 | II-9 | III-157 |
| T1-1539 | I-1 | II-9 | III-158 |
| T1-1540 | I-1 | II-9 | III-159 |
| T1-1541 | I-1 | II-9 | III-160 |
| T1-1542 | I-1 | II-9 | III-161 |
| T1-1543 | I-1 | II-9 | III-162 |
| T1-1544 | I-1 | II-9 | III-163 |
| T1-1545 | I-1 | II-9 | III-164 |
| T1-1546 | I-1 | II-9 | III-165 |
| T1-1547 | I-1 | II-9 | III-166 |
| T1-1548 | I-1 | II-9 | III-167 |
| T1-1549 | I-1 | II-9 | III-168 |
| T1-1550 | I-1 | II-9 | III-169 |
| T1-1551 | I-1 | II-9 | III-170 |
| T1-1552 | I-1 | II-9 | III-171 |
| T1-1553 | I-1 | II-9 | III-172 |
| T1-1554 | I-1 | II-9 | III-173 |
| T1-1555 | I-1 | II-9 | III-174 |
| T1-1556 | I-1 | II-9 | III-175 |
| T1-1557 | I-1 | II-9 | III-176 |
| T1-1558 | I-1 | II-9 | III-177 |
| T1-1559 | I-1 | II-9 | III-178 |
| T1-1560 | I-1 | II-9 | III-179 |
| T1-1561 | I-1 | II-9 | III-180 |
| T1-1562 | I-1 | II-9 | III-181 |
| T1-1563 | I-1 | II-9 | III-182 |
| T1-1564 | I-1 | II-9 | III-183 |
| T1-1565 | I-1 | II-9 | III-184 |
| T1-1566 | I-1 | II-9 | III-185 |
| T1-1567 | I-1 | II-9 | III-186 |
| T1-1568 | I-1 | II-9 | III-187 |
| T1-1569 | I-1 | II-9 | III-188 |
| T1-1570 | I-1 | II-9 | III-189 |
| T1-1571 | I-1 | II-9 | III-190 |
| T1-1572 | I-1 | II-9 | III-191 |

| composition | I | II | III |
|---|---|---|---|
| T1-1573 | I-1 | II-9 | III-192 |
| T1-1574 | I-1 | II-9 | III-193 |
| T1-1575 | I-1 | II-9 | III-194 |
| T1-1576 | I-1 | II-9 | III-195 |
| T1-1577 | I-1 | II-9 | III-196 |
| T1-1578 | I-1 | II-9 | III-197 |
| T1-1579 | I-1 | II-9 | III-198 |
| T1-1580 | I-1 | II-9 | III-199 |
| T1-1581 | I-1 | II-9 | III-200 |
| T1-1582 | I-1 | II-9 | III-201 |
| T1-1583 | I-1 | II-9 | III-202 |
| T1-1584 | I-1 | II-9 | III-203 |
| T1-1585 | I-1 | II-10 | III-27 |
| T1-1586 | I-1 | II-10 | III-28 |
| T1-1587 | I-1 | II-10 | III-29 |
| T1-1588 | I-1 | II-10 | III-30 |
| T1-1589 | I-1 | II-10 | III-31 |
| T1-1590 | I-1 | II-10 | III-32 |
| T1-1591 | I-1 | II-10 | III-33 |
| T1-1592 | I-1 | II-10 | III-34 |
| T1-1593 | I-1 | II-10 | III-35 |
| T1-1594 | I-1 | II-10 | III-36 |
| T1-1595 | I-1 | II-10 | III-37 |
| T1-1596 | I-1 | II-10 | III-38 |
| T1-1597 | I-1 | II-10 | III-39 |
| T1-1598 | I-1 | II-10 | III-40 |
| T1-1599 | I-1 | II-10 | III-41 |
| T1-1600 | I-1 | II-10 | III-42 |
| T1-1601 | I-1 | II-10 | III-43 |
| T1-1602 | I-1 | II-10 | III-44 |
| T1-1603 | I-1 | II-10 | III-45 |
| T1-1604 | I-1 | II-10 | III-46 |
| T1-1605 | I-1 | II-10 | III-47 |
| T1-1606 | I-1 | II-10 | III-48 |
| T1-1607 | I-1 | II-10 | III-49 |
| T1-1608 | I-1 | II-10 | III-50 |
| T1-1609 | I-1 | II-10 | III-51 |
| T1-1610 | I-1 | II-10 | III-52 |
| T1-1611 | I-1 | II-10 | III-53 |
| T1-1612 | I-1 | II-10 | III-54 |

| composition | I | II | III |
|---|---|---|---|
| T1-1613 | I-1 | II-10 | III-55 |
| T1-1614 | I-1 | II-10 | III-56 |
| T1-1615 | I-1 | II-10 | III-57 |
| T1-1616 | I-1 | II-10 | III-58 |
| T1-1617 | I-1 | II-10 | III-59 |
| T1-1618 | I-1 | II-10 | III-60 |
| T1-1619 | I-1 | II-10 | III-61 |
| T1-1620 | I-1 | II-10 | III-62 |
| T1-1621 | I-1 | II-10 | III-63 |
| T1-1622 | I-1 | II-10 | III-64 |
| T1-1623 | I-1 | II-10 | III-65 |
| T1-1624 | I-1 | II-10 | III-66 |
| T1-1625 | I-1 | II-10 | III-67 |
| T1-1626 | I-1 | II-10 | III-68 |
| T1-1627 | I-1 | II-10 | III-69 |
| T1-1628 | I-1 | II-10 | III-70 |
| T1-1629 | I-1 | II-10 | III-71 |
| T1-1630 | I-1 | II-10 | III-72 |
| T1-1631 | I-1 | II-10 | III-73 |
| T1-1632 | I-1 | II-10 | III-74 |
| T1-1633 | I-1 | II-10 | III-75 |
| T1-1634 | I-1 | II-10 | III-76 |
| T1-1635 | I-1 | II-10 | III-77 |
| T1-1636 | I-1 | II-10 | III-78 |
| T1-1637 | I-1 | II-10 | III-79 |
| T1-1638 | I-1 | II-10 | III-80 |
| T1-1639 | I-1 | II-10 | III-81 |
| T1-1640 | I-1 | II-10 | III-82 |
| T1-1641 | I-1 | II-10 | III-83 |
| T1-1642 | I-1 | II-10 | III-84 |
| T1-1643 | I-1 | II-10 | III-85 |
| T1-1644 | I-1 | II-10 | III-86 |
| T1-1645 | I-1 | II-10 | III-87 |
| T1-1646 | I-1 | II-10 | III-88 |
| T1-1647 | I-1 | II-10 | III-89 |
| T1-1648 | I-1 | II-10 | III-90 |
| T1-1649 | I-1 | II-10 | III-91 |
| T1-1650 | I-1 | II-10 | III-92 |
| T1-1651 | I-1 | II-10 | III-93 |
| T1-1652 | I-1 | II-10 | III-94 |

| composition | I | II | III |
|---|---|---|---|
| T1-1653 | I-1 | II-10 | III-95 |
| T1-1654 | I-1 | II-10 | III-96 |
| T1-1655 | I-1 | II-10 | III-97 |
| T1-1656 | I-1 | II-10 | III-98 |
| T1-1657 | I-1 | II-10 | III-99 |
| T1-1658 | I-1 | II-10 | III-100 |
| T1-1659 | I-1 | II-10 | III-101 |
| T1-1660 | I-1 | II-10 | III-102 |
| T1-1661 | I-1 | II-10 | III-103 |
| T1-1662 | I-1 | II-10 | III-104 |
| T1-1663 | I-1 | II-10 | III-105 |
| T1-1664 | I-1 | II-10 | III-106 |
| T1-1665 | I-1 | II-10 | III-107 |
| T1-1666 | I-1 | II-10 | III-108 |
| T1-1667 | I-1 | II-10 | III-109 |
| T1-1668 | I-1 | II-10 | III-110 |
| T1-1669 | I-1 | II-10 | III-111 |
| T1-1670 | I-1 | II-10 | III-112 |
| T1-1671 | I-1 | II-10 | III-113 |
| T1-1672 | I-1 | II-10 | III-114 |
| T1-1673 | I-1 | II-10 | III-115 |
| T1-1674 | I-1 | II-10 | III-116 |
| T1-1675 | I-1 | II-10 | III-117 |
| T1-1676 | I-1 | II-10 | III-118 |
| T1-1677 | I-1 | II-10 | III-119 |
| T1-1678 | I-1 | II-10 | III-120 |
| T1-1679 | I-1 | II-10 | III-121 |
| T1-1680 | I-1 | II-10 | III-122 |
| T1-1681 | I-1 | II-10 | III-123 |
| T1-1682 | I-1 | II-10 | III-124 |
| T1-1683 | I-1 | II-10 | III-125 |
| T1-1684 | I-1 | II-10 | III-126 |
| T1-1685 | I-1 | II-10 | III-127 |
| T1-1686 | I-1 | II-10 | III-128 |
| T1-1687 | I-1 | II-10 | III-129 |
| T1-1688 | I-1 | II-10 | III-130 |
| T1-1689 | I-1 | II-10 | III-131 |
| T1-1690 | I-1 | II-10 | III-132 |
| T1-1691 | I-1 | II-10 | III-133 |
| T1-1692 | I-1 | II-10 | III-134 |

| composition | I | II | III |
|---|---|---|---|
| T1-1693 | I-1 | II-10 | III-135 |
| T1-1694 | I-1 | II-10 | III-136 |
| T1-1695 | I-1 | II-10 | III-137 |
| T1-1696 | I-1 | II-10 | III-138 |
| T1-1697 | I-1 | II-10 | III-140 |
| T1-1698 | I-1 | II-10 | III-141 |
| T1-1699 | I-1 | II-10 | III-142 |
| T1-1700 | I-1 | II-10 | III-143 |
| T1-1701 | I-1 | II-10 | III-144 |
| T1-1702 | I-1 | II-10 | III-145 |
| T1-1703 | I-1 | II-10 | III-146 |
| T1-1704 | I-1 | II-10 | III-147 |
| T1-1705 | I-1 | II-10 | III-148 |
| T1-1706 | I-1 | II-10 | III-149 |
| T1-1707 | I-1 | II-10 | III-150 |
| T1-1708 | I-1 | II-10 | III-151 |
| T1-1709 | I-1 | II-10 | III-152 |
| T1-1710 | I-1 | II-10 | III-153 |
| T1-1711 | I-1 | II-10 | III-154 |
| T1-1712 | I-1 | II-10 | III-155 |
| T1-1713 | I-1 | II-10 | III-156 |
| T1-1714 | I-1 | II-10 | III-157 |
| T1-1715 | I-1 | II-10 | III-158 |
| T1-1716 | I-1 | II-10 | III-159 |
| T1-1717 | I-1 | II-10 | III-160 |
| T1-1718 | I-1 | II-10 | III-161 |
| T1-1719 | I-1 | II-10 | III-162 |
| T1-1720 | I-1 | II-10 | III-163 |
| T1-1721 | I-1 | II-10 | III-164 |
| T1-1722 | I-1 | II-10 | III-165 |
| T1-1723 | I-1 | II-10 | III-166 |
| T1-1724 | I-1 | II-10 | III-167 |
| T1-1725 | I-1 | II-10 | III-168 |
| T1-1726 | I-1 | II-10 | III-169 |
| T1-1727 | I-1 | II-10 | III-170 |
| T1-1728 | I-1 | II-10 | III-171 |
| T1-1729 | I-1 | II-10 | III-172 |
| T1-1730 | I-1 | II-10 | III-173 |
| T1-1731 | I-1 | II-10 | III-174 |
| T1-1732 | I-1 | II-10 | III-175 |

| composition | I | II | III |
|---|---|---|---|
| T1-1733 | I-1 | II-10 | III-176 |
| T1-1734 | I-1 | II-10 | III-177 |
| T1-1735 | I-1 | II-10 | III-178 |
| T1-1736 | I-1 | II-10 | III-179 |
| T1-1737 | I-1 | II-10 | III-180 |
| T1-1738 | I-1 | II-10 | III-181 |
| T1-1739 | I-1 | II-10 | III-182 |
| T1-1740 | I-1 | II-10 | III-183 |
| T1-1741 | I-1 | II-10 | III-184 |
| T1-1742 | I-1 | II-10 | III-185 |
| T1-1743 | I-1 | II-10 | III-186 |
| T1-1744 | I-1 | II-10 | III-187 |
| T1-1745 | I-1 | II-10 | III-188 |
| T1-1746 | I-1 | II-10 | III-189 |
| T1-1747 | I-1 | II-10 | III-190 |
| T1-1748 | I-1 | II-10 | III-191 |
| T1-1749 | I-1 | II-10 | III-192 |
| T1-1750 | I-1 | II-10 | III-193 |
| T1-1751 | I-1 | II-10 | III-194 |
| T1-1752 | I-1 | II-10 | III-195 |
| T1-1753 | I-1 | II-10 | III-196 |
| T1-1754 | I-1 | II-10 | III-197 |
| T1-1755 | I-1 | II-10 | III-198 |
| T1-1756 | I-1 | II-10 | III-199 |
| T1-1757 | I-1 | II-10 | III-200 |
| T1-1758 | I-1 | II-10 | III-201 |
| T1-1759 | I-1 | II-10 | III-202 |
| T1-1760 | I-1 | II-10 | III-203 |
| T1-1761 | I-1 | II-11 | III-27 |
| T1-1762 | I-1 | II-11 | III-28 |
| T1-1763 | I-1 | II-11 | III-29 |
| T1-1764 | I-1 | II-11 | III-30 |
| T1-1765 | I-1 | II-11 | III-31 |
| T1-1766 | I-1 | II-11 | III-32 |
| T1-1767 | I-1 | II-11 | III-33 |
| T1-1768 | I-1 | II-11 | III-34 |
| T1-1769 | I-1 | II-11 | III-35 |
| T1-1770 | I-1 | II-11 | III-36 |
| T1-1771 | I-1 | II-11 | III-37 |
| T1-1772 | I-1 | II-11 | III-38 |

| composition | I | II | III |
|---|---|---|---|
| T1-1773 | I-1 | II-11 | III-39 |
| T1-1774 | I-1 | II-11 | III-40 |
| T1-1775 | I-1 | II-11 | III-41 |
| T1-1776 | I-1 | II-11 | III-42 |
| T1-1777 | I-1 | II-11 | III-43 |
| T1-1778 | I-1 | II-11 | III-44 |
| T1-1779 | I-1 | II-11 | III-45 |
| T1-1780 | I-1 | II-11 | III-46 |
| T1-1781 | I-1 | II-11 | III-47 |
| T1-1782 | I-1 | II-11 | III-48 |
| T1-1783 | I-1 | II-11 | III-49 |
| T1-1784 | I-1 | II-11 | III-50 |
| T1-1785 | I-1 | II-11 | III-51 |
| T1-1786 | I-1 | II-11 | III-52 |
| T1-1787 | I-1 | II-11 | III-53 |
| T1-1788 | I-1 | II-11 | III-54 |
| T1-1789 | I-1 | II-11 | III-55 |
| T1-1790 | I-1 | II-11 | III-56 |
| T1-1791 | I-1 | II-11 | III-57 |
| T1-1792 | I-1 | II-11 | III-58 |
| T1-1793 | I-1 | II-11 | III-59 |
| T1-1794 | I-1 | II-11 | III-60 |
| T1-1795 | I-1 | II-11 | III-61 |
| T1-1796 | I-1 | II-11 | III-62 |
| T1-1797 | I-1 | II-11 | III-63 |
| T1-1798 | I-1 | II-11 | III-64 |
| T1-1799 | I-1 | II-11 | III-65 |
| T1-1800 | I-1 | II-11 | III-66 |
| T1-1801 | I-1 | II-11 | III-67 |
| T1-1802 | I-1 | II-11 | III-68 |
| T1-1803 | I-1 | II-11 | III-69 |
| T1-1804 | I-1 | II-11 | III-70 |
| T1-1805 | I-1 | II-11 | III-71 |
| T1-1806 | I-1 | II-11 | III-72 |
| T1-1807 | I-1 | II-11 | III-73 |
| T1-1808 | I-1 | II-11 | III-74 |
| T1-1809 | I-1 | II-11 | III-75 |
| T1-1810 | I-1 | II-11 | III-76 |
| T1-1811 | I-1 | II-11 | III-77 |
| T1-1812 | I-1 | II-11 | III-78 |

| composition | I | II | III |
|---|---|---|---|
| T1-1813 | I-1 | II-11 | III-79 |
| T1-1814 | I-1 | II-11 | III-80 |
| T1-1815 | I-1 | II-11 | III-81 |
| T1-1816 | I-1 | II-11 | III-82 |
| T1-1817 | I-1 | II-11 | III-83 |
| T1-1818 | I-1 | II-11 | III-84 |
| T1-1819 | I-1 | II-11 | III-85 |
| T1-1820 | I-1 | II-11 | III-86 |
| T1-1821 | I-1 | II-11 | III-87 |
| T1-1822 | I-1 | II-11 | III-88 |
| T1-1823 | I-1 | II-11 | III-89 |
| T1-1824 | I-1 | II-11 | III-90 |
| T1-1825 | I-1 | II-11 | III-91 |
| T1-1826 | I-1 | II-11 | III-92 |
| T1-1827 | I-1 | II-11 | III-93 |
| T1-1828 | I-1 | II-11 | III-94 |
| T1-1829 | I-1 | II-11 | III-95 |
| T1-1830 | I-1 | II-11 | III-96 |
| T1-1831 | I-1 | II-11 | III-97 |
| T1-1832 | I-1 | II-11 | III-98 |
| T1-1833 | I-1 | II-11 | III-99 |
| T1-1834 | I-1 | II-11 | III-100 |
| T1-1835 | I-1 | II-11 | III-101 |
| T1-1836 | I-1 | II-11 | III-102 |
| T1-1837 | I-1 | II-11 | III-103 |
| T1-1838 | I-1 | II-11 | III-104 |
| T1-1839 | I-1 | II-11 | III-105 |
| T1-1840 | I-1 | II-11 | III-106 |
| T1-1841 | I-1 | II-11 | III-107 |
| T1-1842 | I-1 | II-11 | III-108 |
| T1-1843 | I-1 | II-11 | III-109 |
| T1-1844 | I-1 | II-11 | III-110 |
| T1-1845 | I-1 | II-11 | III-111 |
| T1-1846 | I-1 | II-11 | III-112 |
| T1-1847 | I-1 | II-11 | III-113 |
| T1-1848 | I-1 | II-11 | III-114 |
| T1-1849 | I-1 | II-11 | III-115 |
| T1-1850 | I-1 | II-11 | III-116 |
| T1-1851 | I-1 | II-11 | III-117 |
| T1-1852 | I-1 | II-11 | III-118 |

| composition | I | II | III |
|---|---|---|---|
| T1-1853 | I-1 | II-11 | III-119 |
| T1-1854 | I-1 | II-11 | III-120 |
| T1-1855 | I-1 | II-11 | III-121 |
| T1-1856 | I-1 | II-11 | III-122 |
| T1-1857 | I-1 | II-11 | III-123 |
| T1-1858 | I-1 | II-11 | III-124 |
| T1-1859 | I-1 | II-11 | III-125 |
| T1-1860 | I-1 | II-11 | III-126 |
| T1-1861 | I-1 | II-11 | III-127 |
| T1-1862 | I-1 | II-11 | III-128 |
| T1-1863 | I-1 | II-11 | III-129 |
| T1-1864 | I-1 | II-11 | III-130 |
| T1-1865 | I-1 | II-11 | III-131 |
| T1-1866 | I-1 | II-11 | III-132 |
| T1-1867 | I-1 | II-11 | III-133 |
| T1-1868 | I-1 | II-11 | III-134 |
| T1-1869 | I-1 | II-11 | III-135 |
| T1-1870 | I-1 | II-11 | III-136 |
| T1-1871 | I-1 | II-11 | III-137 |
| T1-1872 | I-1 | II-11 | III-138 |
| T1-1873 | I-1 | II-11 | III-140 |
| T1-1874 | I-1 | II-11 | III-141 |
| T1-1875 | I-1 | II-11 | III-142 |
| T1-1876 | I-1 | II-11 | III-143 |
| T1-1877 | I-1 | II-11 | III-144 |
| T1-1878 | I-1 | II-11 | III-145 |
| T1-1879 | I-1 | II-11 | III-146 |
| T1-1880 | I-1 | II-11 | III-147 |
| T1-1881 | I-1 | II-11 | III-148 |
| T1-1882 | I-1 | II-11 | III-149 |
| T1-1883 | I-1 | II-11 | III-150 |
| T1-1884 | I-1 | II-11 | III-151 |
| T1-1885 | I-1 | II-11 | III-152 |
| T1-1886 | I-1 | II-11 | III-153 |
| T1-1887 | I-1 | II-11 | III-154 |
| T1-1888 | I-1 | II-11 | III-155 |
| T1-1889 | I-1 | II-11 | III-156 |
| T1-1890 | I-1 | II-11 | III-157 |
| T1-1891 | I-1 | II-11 | III-158 |
| T1-1892 | I-1 | II-11 | III-159 |

| composition | I | II | III |
|---|---|---|---|
| T1-1893 | I-1 | II-11 | III-160 |
| T1-1894 | I-1 | II-11 | III-161 |
| T1-1895 | I-1 | II-11 | III-162 |
| T1-1896 | I-1 | II-11 | III-163 |
| T1-1897 | I-1 | II-11 | III-164 |
| T1-1898 | I-1 | II-11 | III-165 |
| T1-1899 | I-1 | II-11 | III-166 |
| T1-1900 | I-1 | II-11 | III-167 |
| T1-1901 | I-1 | II-11 | III-168 |
| T1-1902 | I-1 | II-11 | III-169 |
| T1-1903 | I-1 | II-11 | III-170 |
| T1-1904 | I-1 | II-11 | III-171 |
| T1-1905 | I-1 | II-11 | III-172 |
| T1-1906 | I-1 | II-11 | III-173 |
| T1-1907 | I-1 | II-11 | III-174 |
| T1-1908 | I-1 | II-11 | III-175 |
| T1-1909 | I-1 | II-11 | III-176 |
| T1-1910 | I-1 | II-11 | III-177 |
| T1-1911 | I-1 | II-11 | III-178 |
| T1-1912 | I-1 | II-11 | III-179 |
| T1-1913 | I-1 | II-11 | III-180 |
| T1-1914 | I-1 | II-11 | III-181 |
| T1-1915 | I-1 | II-11 | III-182 |
| T1-1916 | I-1 | II-11 | III-183 |
| T1-1917 | I-1 | II-11 | III-184 |
| T1-1918 | I-1 | II-11 | III-185 |
| T1-1919 | I-1 | II-11 | III-186 |
| T1-1920 | I-1 | II-11 | III-187 |
| T1-1921 | I-1 | II-11 | III-188 |
| T1-1922 | I-1 | II-11 | III-189 |
| T1-1923 | I-1 | II-11 | III-190 |
| T1-1924 | I-1 | II-11 | III-191 |
| T1-1925 | I-1 | II-11 | III-192 |
| T1-1926 | I-1 | II-11 | III-193 |
| T1-1927 | I-1 | II-11 | III-194 |
| T1-1928 | I-1 | II-11 | III-195 |
| T1-1929 | I-1 | II-11 | III-196 |
| T1-1930 | I-1 | II-11 | III-197 |
| T1-1931 | I-1 | II-11 | III-198 |
| T1-1932 | I-1 | II-11 | III-199 |

| composition | I | II | III |
|---|---|---|---|
| T1-1933 | I-1 | II-11 | III-200 |
| T1-1934 | I-1 | II-11 | III-201 |
| T1-1935 | I-1 | II-11 | III-202 |
| T1-1936 | I-1 | II-11 | III-203 |
| T1-1937 | I-1 | II-12 | III-27 |
| T1-1938 | I-1 | II-12 | III-28 |
| T1-1939 | I-1 | II-12 | III-29 |
| T1-1940 | I-1 | II-12 | III-30 |
| T1-1941 | I-1 | II-12 | III-31 |
| T1-1942 | I-1 | II-12 | III-32 |
| T1-1943 | I-1 | II-12 | III-33 |
| T1-1944 | I-1 | II-12 | III-34 |
| T1-1945 | I-1 | II-12 | III-35 |
| T1-1946 | I-1 | II-12 | III-36 |
| T1-1947 | I-1 | II-12 | III-37 |
| T1-1948 | I-1 | II-12 | III-38 |
| T1-1949 | I-1 | II-12 | III-39 |
| T1-1950 | I-1 | II-12 | III-40 |
| T1-1951 | I-1 | II-12 | III-41 |
| T1-1952 | I-1 | II-12 | III-42 |
| T1-1953 | I-1 | II-12 | III-43 |
| T1-1954 | I-1 | II-12 | III-44 |
| T1-1955 | I-1 | II-12 | III-45 |
| T1-1956 | I-1 | II-12 | III-46 |
| T1-1957 | I-1 | II-12 | III-47 |
| T1-1958 | I-1 | II-12 | III-48 |
| T1-1959 | I-1 | II-12 | III-49 |
| T1-1960 | I-1 | II-12 | III-50 |
| T1-1961 | I-1 | II-12 | III-51 |
| T1-1962 | I-1 | II-12 | III-52 |
| T1-1963 | I-1 | II-12 | III-53 |
| T1-1964 | I-1 | II-12 | III-54 |
| T1-1965 | I-1 | II-12 | III-55 |
| T1-1966 | I-1 | II-12 | III-56 |
| T1-1967 | I-1 | II-12 | III-57 |
| T1-1968 | I-1 | II-12 | III-58 |
| T1-1969 | I-1 | II-12 | III-59 |
| T1-1970 | I-1 | II-12 | III-60 |
| T1-1971 | I-1 | II-12 | III-61 |
| T1-1972 | I-1 | II-12 | III-62 |

| composition | I | II | III |
|---|---|---|---|
| T1-1973 | I-1 | II-12 | III-63 |
| T1-1974 | I-1 | II-12 | III-64 |
| T1-1975 | I-1 | II-12 | III-65 |
| T1-1976 | I-1 | II-12 | III-66 |
| T1-1977 | I-1 | II-12 | III-67 |
| T1-1978 | I-1 | II-12 | III-68 |
| T1-1979 | I-1 | II-12 | III-69 |
| T1-1980 | I-1 | II-12 | III-70 |
| T1-1981 | I-1 | II-12 | III-71 |
| T1-1982 | I-1 | II-12 | III-72 |
| T1-1983 | I-1 | II-12 | III-73 |
| T1-1984 | I-1 | II-12 | III-74 |
| T1-1985 | I-1 | II-12 | III-75 |
| T1-1986 | I-1 | II-12 | III-76 |
| T1-1987 | I-1 | II-12 | III-77 |
| T1-1988 | I-1 | II-12 | III-78 |
| T1-1989 | I-1 | II-12 | III-79 |
| T1-1990 | I-1 | II-12 | III-80 |
| T1-1991 | I-1 | II-12 | III-81 |
| T1-1992 | I-1 | II-12 | III-82 |
| T1-1993 | I-1 | II-12 | III-83 |
| T1-1994 | I-1 | II-12 | III-84 |
| T1-1995 | I-1 | II-12 | III-85 |
| T1-1996 | I-1 | II-12 | III-86 |
| T1-1997 | I-1 | II-12 | III-87 |
| T1-1998 | I-1 | II-12 | III-88 |
| T1-1999 | I-1 | II-12 | III-89 |
| T1-2000 | I-1 | II-12 | III-90 |
| T1-2001 | I-1 | II-12 | III-91 |
| T1-2002 | I-1 | II-12 | III-92 |
| T1-2003 | I-1 | II-12 | III-93 |
| T1-2004 | I-1 | II-12 | III-94 |
| T1-2005 | I-1 | II-12 | III-95 |
| T1-2006 | I-1 | II-12 | III-96 |
| T1-2007 | I-1 | II-12 | III-97 |
| T1-2008 | I-1 | II-12 | III-98 |
| T1-2009 | I-1 | II-12 | III-99 |
| T1-2010 | I-1 | II-12 | III-100 |
| T1-2011 | I-1 | II-12 | III-101 |
| T1-2012 | I-1 | II-12 | III-102 |

| composition | I | II | III |
|---|---|---|---|
| T1-2013 | I-1 | II-12 | III-103 |
| T1-2014 | I-1 | II-12 | III-104 |
| T1-2015 | I-1 | II-12 | III-105 |
| T1-2016 | I-1 | II-12 | III-106 |
| T1-2017 | I-1 | II-12 | III-107 |
| T1-2018 | I-1 | II-12 | III-108 |
| T1-2019 | I-1 | II-12 | III-109 |
| T1-2020 | I-1 | II-12 | III-110 |
| T1-2021 | I-1 | II-12 | III-111 |
| T1-2022 | I-1 | II-12 | III-112 |
| T1-2023 | I-1 | II-12 | III-113 |
| T1-2024 | I-1 | II-12 | III-114 |
| T1-2025 | I-1 | II-12 | III-115 |
| T1-2026 | I-1 | II-12 | III-116 |
| T1-2027 | I-1 | II-12 | III-117 |
| T1-2028 | I-1 | II-12 | III-118 |
| T1-2029 | I-1 | II-12 | III-119 |
| T1-2030 | I-1 | II-12 | III-120 |
| T1-2031 | I-1 | II-12 | III-121 |
| T1-2032 | I-1 | II-12 | III-122 |
| T1-2033 | I-1 | II-12 | III-123 |
| T1-2034 | I-1 | II-12 | III-124 |
| T1-2035 | I-1 | II-12 | III-125 |
| T1-2036 | I-1 | II-12 | III-126 |
| T1-2037 | I-1 | II-12 | III-127 |
| T1-2038 | I-1 | II-12 | III-128 |
| T1-2039 | I-1 | II-12 | III-129 |
| T1-2040 | I-1 | II-12 | III-130 |
| T1-2041 | I-1 | II-12 | III-131 |
| T1-2042 | I-1 | II-12 | III-132 |
| T1-2043 | I-1 | II-12 | III-133 |
| T1-2044 | I-1 | II-12 | III-134 |
| T1-2045 | I-1 | II-12 | III-135 |
| T1-2046 | I-1 | II-12 | III-136 |
| T1-2047 | I-1 | II-12 | III-137 |
| T1-2048 | I-1 | II-12 | III-138 |
| T1-2049 | I-1 | II-12 | III-140 |
| T1-2050 | I-1 | II-12 | III-141 |
| T1-2051 | I-1 | II-12 | III-142 |
| T1-2052 | I-1 | II-12 | III-143 |

| composition | I | II | III |
|---|---|---|---|
| T1-2053 | I-1 | II-12 | III-144 |
| T1-2054 | I-1 | II-12 | III-145 |
| T1-2055 | I-1 | II-12 | III-146 |
| T1-2056 | I-1 | II-12 | III-147 |
| T1-2057 | I-1 | II-12 | III-148 |
| T1-2058 | I-1 | II-12 | III-149 |
| T1-2059 | I-1 | II-12 | III-150 |
| T1-2060 | I-1 | II-12 | III-151 |
| T1-2061 | I-1 | II-12 | III-152 |
| T1-2062 | I-1 | II-12 | III-153 |
| T1-2063 | I-1 | II-12 | III-154 |
| T1-2064 | I-1 | II-12 | III-155 |
| T1-2065 | I-1 | II-12 | III-156 |
| T1-2066 | I-1 | II-12 | III-157 |
| T1-2067 | I-1 | II-12 | III-158 |
| T1-2068 | I-1 | II-12 | III-159 |
| T1-2069 | I-1 | II-12 | III-160 |
| T1-2070 | I-1 | II-12 | III-161 |
| T1-2071 | I-1 | II-12 | III-162 |
| T1-2072 | I-1 | II-12 | III-163 |
| T1-2073 | I-1 | II-12 | III-164 |
| T1-2074 | I-1 | II-12 | III-165 |
| T1-2075 | I-1 | II-12 | III-166 |
| T1-2076 | I-1 | II-12 | III-167 |
| T1-2077 | I-1 | II-12 | III-168 |
| T1-2078 | I-1 | II-12 | III-169 |
| T1-2079 | I-1 | II-12 | III-170 |
| T1-2080 | I-1 | II-12 | III-171 |
| T1-2081 | I-1 | II-12 | III-172 |
| T1-2082 | I-1 | II-12 | III-173 |
| T1-2083 | I-1 | II-12 | III-174 |
| T1-2084 | I-1 | II-12 | III-175 |
| T1-2085 | I-1 | II-12 | III-176 |
| T1-2086 | I-1 | II-12 | III-177 |
| T1-2087 | I-1 | II-12 | III-178 |
| T1-2088 | I-1 | II-12 | III-179 |
| T1-2089 | I-1 | II-12 | III-180 |
| T1-2090 | I-1 | II-12 | III-181 |
| T1-2091 | I-1 | II-12 | III-182 |
| T1-2092 | I-1 | II-12 | III-183 |

| composition | I | II | III |
|---|---|---|---|
| T1-2093 | I-1 | II-12 | III-184 |
| T1-2094 | I-1 | II-12 | III-185 |
| T1-2095 | I-1 | II-12 | III-186 |
| T1-2096 | I-1 | II-12 | III-187 |
| T1-2097 | I-1 | II-12 | III-188 |
| T1-2098 | I-1 | II-12 | III-189 |
| T1-2099 | I-1 | II-12 | III-190 |
| T1-2100 | I-1 | II-12 | III-191 |
| T1-2101 | I-1 | II-12 | III-192 |
| T1-2102 | I-1 | II-12 | III-193 |
| T1-2103 | I-1 | II-12 | III-194 |
| T1-2104 | I-1 | II-12 | III-195 |
| T1-2105 | I-1 | II-12 | III-196 |
| T1-2106 | I-1 | II-12 | III-197 |
| T1-2107 | I-1 | II-12 | III-198 |
| T1-2108 | I-1 | II-12 | III-199 |
| T1-2109 | I-1 | II-12 | III-200 |
| T1-2110 | I-1 | II-12 | III-201 |
| T1-2111 | I-1 | II-12 | III-202 |
| T1-2112 | I-1 | II-12 | III-203 |
| T1-2113 | I-1 | II-13 | III-27 |
| T1-2114 | I-1 | II-13 | III-28 |
| T1-2115 | I-1 | II-13 | III-29 |
| T1-2116 | I-1 | II-13 | III-30 |
| T1-2117 | I-1 | II-13 | III-31 |
| T1-2118 | I-1 | II-13 | III-32 |
| T1-2119 | I-1 | II-13 | III-33 |
| T1-2120 | I-1 | II-13 | III-34 |
| T1-2121 | I-1 | II-13 | III-35 |
| T1-2122 | I-1 | II-13 | III-36 |
| T1-2123 | I-1 | II-13 | III-37 |
| T1-2124 | I-1 | II-13 | III-38 |
| T1-2125 | I-1 | II-13 | III-39 |
| T1-2126 | I-1 | II-13 | III-40 |
| T1-2127 | I-1 | II-13 | III-41 |
| T1-2128 | I-1 | II-13 | III-42 |
| T1-2129 | I-1 | II-13 | III-43 |
| T1-2130 | I-1 | II-13 | III-44 |
| T1-2131 | I-1 | II-13 | III-45 |
| T1-2132 | I-1 | II-13 | III-46 |

| composition | I | II | III |
|---|---|---|---|
| T1-2133 | I-1 | II-13 | III-47 |
| T1-2134 | I-1 | II-13 | III-48 |
| T1-2135 | I-1 | II-13 | III-49 |
| T1-2136 | I-1 | II-13 | III-50 |
| T1-2137 | I-1 | II-13 | III-51 |
| T1-2138 | I-1 | II-13 | III-52 |
| T1-2139 | I-1 | II-13 | III-53 |
| T1-2140 | I-1 | II-13 | III-54 |
| T1-2141 | I-1 | II-13 | III-55 |
| T1-2142 | I-1 | II-13 | III-56 |
| T1-2143 | I-1 | II-13 | III-57 |
| T1-2144 | I-1 | II-13 | III-58 |
| T1-2145 | I-1 | II-13 | III-59 |
| T1-2146 | I-1 | II-13 | III-60 |
| T1-2147 | I-1 | II-13 | III-61 |
| T1-2148 | I-1 | II-13 | III-62 |
| T1-2149 | I-1 | II-13 | III-63 |
| T1-2150 | I-1 | II-13 | III-64 |
| T1-2151 | I-1 | II-13 | III-65 |
| T1-2152 | I-1 | II-13 | III-66 |
| T1-2153 | I-1 | II-13 | III-67 |
| T1-2154 | I-1 | II-13 | III-68 |
| T1-2155 | I-1 | II-13 | III-69 |
| T1-2156 | I-1 | II-13 | III-70 |
| T1-2157 | I-1 | II-13 | III-71 |
| T1-2158 | I-1 | II-13 | III-72 |
| T1-2159 | I-1 | II-13 | III-73 |
| T1-2160 | I-1 | II-13 | III-74 |
| T1-2161 | I-1 | II-13 | III-75 |
| T1-2162 | I-1 | II-13 | III-76 |
| T1-2163 | I-1 | II-13 | III-77 |
| T1-2164 | I-1 | II-13 | III-78 |
| T1-2165 | I-1 | II-13 | III-79 |
| T1-2166 | I-1 | II-13 | III-80 |
| T1-2167 | I-1 | II-13 | III-81 |
| T1-2168 | I-1 | II-13 | III-82 |
| T1-2169 | I-1 | II-13 | III-83 |
| T1-2170 | I-1 | II-13 | III-84 |
| T1-2171 | I-1 | II-13 | III-85 |
| T1-2172 | I-1 | II-13 | III-86 |

| composition | I | II | III |
|---|---|---|---|
| T1-2173 | I-1 | II-13 | III-87 |
| T1-2174 | I-1 | II-13 | III-88 |
| T1-2175 | I-1 | II-13 | III-89 |
| T1-2176 | I-1 | II-13 | III-90 |
| T1-2177 | I-1 | II-13 | III-91 |
| T1-2178 | I-1 | II-13 | III-92 |
| T1-2179 | I-1 | II-13 | III-93 |
| T1-2180 | I-1 | II-13 | III-94 |
| T1-2181 | I-1 | II-13 | III-95 |
| T1-2182 | I-1 | II-13 | III-96 |
| T1-2183 | I-1 | II-13 | III-97 |
| T1-2184 | I-1 | II-13 | III-98 |
| T1-2185 | I-1 | II-13 | III-99 |
| T1-2186 | I-1 | II-13 | III-100 |
| T1-2187 | I-1 | II-13 | III-101 |
| T1-2188 | I-1 | II-13 | III-102 |
| T1-2189 | I-1 | II-13 | III-103 |
| T1-2190 | I-1 | II-13 | III-104 |
| T1-2191 | I-1 | II-13 | III-105 |
| T1-2192 | I-1 | II-13 | III-106 |
| T1-2193 | I-1 | II-13 | III-107 |
| T1-2194 | I-1 | II-13 | III-108 |
| T1-2195 | I-1 | II-13 | III-109 |
| T1-2196 | I-1 | II-13 | III-110 |
| T1-2197 | I-1 | II-13 | III-111 |
| T1-2198 | I-1 | II-13 | III-112 |
| T1-2199 | I-1 | II-13 | III-113 |
| T1-2200 | I-1 | II-13 | III-114 |
| T1-2201 | I-1 | II-13 | III-115 |
| T1-2202 | I-1 | II-13 | III-116 |
| T1-2203 | I-1 | II-13 | III-117 |
| T1-2204 | I-1 | II-13 | III-118 |
| T1-2205 | I-1 | II-13 | III-119 |
| T1-2206 | I-1 | II-13 | III-120 |
| T1-2207 | I-1 | II-13 | III-121 |
| T1-2208 | I-1 | II-13 | III-122 |
| T1-2209 | I-1 | II-13 | III-123 |
| T1-2210 | I-1 | II-13 | III-124 |
| T1-2211 | I-1 | II-13 | III-125 |
| T1-2212 | I-1 | II-13 | III-126 |

| composition | I | II | III |
|---|---|---|---|
| T1-2213 | I-1 | II-13 | III-127 |
| T1-2214 | I-1 | II-13 | III-128 |
| T1-2215 | I-1 | II-13 | III-129 |
| T1-2216 | I-1 | II-13 | III-130 |
| T1-2217 | I-1 | II-13 | III-131 |
| T1-2218 | I-1 | II-13 | III-132 |
| T1-2219 | I-1 | II-13 | III-133 |
| T1-2220 | I-1 | II-13 | III-134 |
| T1-2221 | I-1 | II-13 | III-135 |
| T1-2222 | I-1 | II-13 | III-136 |
| T1-2223 | I-1 | II-13 | III-137 |
| T1-2224 | I-1 | II-13 | III-138 |
| T1-2225 | I-1 | II-13 | III-140 |
| T1-2226 | I-1 | II-13 | III-141 |
| T1-2227 | I-1 | II-13 | III-142 |
| T1-2228 | I-1 | II-13 | III-143 |
| T1-2229 | I-1 | II-13 | III-144 |
| T1-2230 | I-1 | II-13 | III-145 |
| T1-2231 | I-1 | II-13 | III-146 |
| T1-2232 | I-1 | II-13 | III-147 |
| T1-2233 | I-1 | II-13 | III-148 |
| T1-2234 | I-1 | II-13 | III-149 |
| T1-2235 | I-1 | II-13 | III-150 |
| T1-2236 | I-1 | II-13 | III-151 |
| T1-2237 | I-1 | II-13 | III-152 |
| T1-2238 | I-1 | II-13 | III-153 |
| T1-2239 | I-1 | II-13 | III-154 |
| T1-2240 | I-1 | II-13 | III-155 |
| T1-2241 | I-1 | II-13 | III-156 |
| T1-2242 | I-1 | II-13 | III-157 |
| T1-2243 | I-1 | II-13 | III-158 |
| T1-2244 | I-1 | II-13 | III-159 |
| T1-2245 | I-1 | II-13 | III-160 |
| T1-2246 | I-1 | II-13 | III-161 |
| T1-2247 | I-1 | II-13 | III-162 |
| T1-2248 | I-1 | II-13 | III-163 |
| T1-2249 | I-1 | II-13 | III-164 |
| T1-2250 | I-1 | II-13 | III-165 |
| T1-2251 | I-1 | II-13 | III-166 |
| T1-2252 | I-1 | II-13 | III-167 |

| composition | I | II | III |
|---|---|---|---|
| T1-2253 | I-1 | II-13 | III-168 |
| T1-2254 | I-1 | II-13 | III-169 |
| T1-2255 | I-1 | II-13 | III-170 |
| T1-2256 | I-1 | II-13 | III-171 |
| T1-2257 | I-1 | II-13 | III-172 |
| T1-2258 | I-1 | II-13 | III-173 |
| T1-2259 | I-1 | II-13 | III-174 |
| T1-2260 | I-1 | II-13 | III-175 |
| T1-2261 | I-1 | II-13 | III-176 |
| T1-2262 | I-1 | II-13 | III-177 |
| T1-2263 | I-1 | II-13 | III-178 |
| T1-2264 | I-1 | II-13 | III-179 |
| T1-2265 | I-1 | II-13 | III-180 |
| T1-2266 | I-1 | II-13 | III-181 |
| T1-2267 | I-1 | II-13 | III-182 |
| T1-2268 | I-1 | II-13 | III-183 |
| T1-2269 | I-1 | II-13 | III-184 |
| T1-2270 | I-1 | II-13 | III-185 |
| T1-2271 | I-1 | II-13 | III-186 |
| T1-2272 | I-1 | II-13 | III-187 |
| T1-2273 | I-1 | II-13 | III-188 |
| T1-2274 | I-1 | II-13 | III-189 |
| T1-2275 | I-1 | II-13 | III-190 |
| T1-2276 | I-1 | II-13 | III-191 |
| T1-2277 | I-1 | II-13 | III-192 |
| T1-2278 | I-1 | II-13 | III-193 |
| T1-2279 | I-1 | II-13 | III-194 |
| T1-2280 | I-1 | II-13 | III-195 |
| T1-2281 | I-1 | II-13 | III-196 |
| T1-2282 | I-1 | II-13 | III-197 |
| T1-2283 | I-1 | II-13 | III-198 |
| T1-2284 | I-1 | II-13 | III-199 |
| T1-2285 | I-1 | II-13 | III-200 |
| T1-2286 | I-1 | II-13 | III-201 |
| T1-2287 | I-1 | II-13 | III-202 |
| T1-2288 | I-1 | II-13 | III-203 |
| T1-2289 | I-1 | II-14 | III-27 |
| T1-2290 | I-1 | II-14 | III-28 |
| T1-2291 | I-1 | II-14 | III-29 |
| T1-2292 | I-1 | II-14 | III-30 |

| composition | I | II | III |
|---|---|---|---|
| T1-2293 | I-1 | II-14 | III-31 |
| T1-2294 | I-1 | II-14 | III-32 |
| T1-2295 | I-1 | II-14 | III-33 |
| T1-2296 | I-1 | II-14 | III-34 |
| T1-2297 | I-1 | II-14 | III-35 |
| T1-2298 | I-1 | II-14 | III-36 |
| T1-2299 | I-1 | II-14 | III-37 |
| T1-2300 | I-1 | II-14 | III-38 |
| T1-2301 | I-1 | II-14 | III-39 |
| T1-2302 | I-1 | II-14 | III-40 |
| T1-2303 | I-1 | II-14 | III-41 |
| T1-2304 | I-1 | II-14 | III-42 |
| T1-2305 | I-1 | II-14 | III-43 |
| T1-2306 | I-1 | II-14 | III-44 |
| T1-2307 | I-1 | II-14 | III-45 |
| T1-2308 | I-1 | II-14 | III-46 |
| T1-2309 | I-1 | II-14 | III-47 |
| T1-2310 | I-1 | II-14 | III-48 |
| T1-2311 | I-1 | II-14 | III-49 |
| T1-2312 | I-1 | II-14 | III-50 |
| T1-2313 | I-1 | II-14 | III-51 |
| T1-2314 | I-1 | II-14 | III-52 |
| T1-2315 | I-1 | II-14 | III-53 |
| T1-2316 | I-1 | II-14 | III-54 |
| T1-2317 | I-1 | II-14 | III-55 |
| T1-2318 | I-1 | II-14 | III-56 |
| T1-2319 | I-1 | II-14 | III-57 |
| T1-2320 | I-1 | II-14 | III-58 |
| T1-2321 | I-1 | II-14 | III-59 |
| T1-2322 | I-1 | II-14 | III-60 |
| T1-2323 | I-1 | II-14 | III-61 |
| T1-2324 | I-1 | II-14 | III-62 |
| T1-2325 | I-1 | II-14 | III-63 |
| T1-2326 | I-1 | II-14 | III-64 |
| T1-2327 | I-1 | II-14 | III-65 |
| T1-2328 | I-1 | II-14 | III-66 |
| T1-2329 | I-1 | II-14 | III-67 |
| T1-2330 | I-1 | II-14 | III-68 |
| T1-2331 | I-1 | II-14 | III-69 |
| T1-2332 | I-1 | II-14 | III-70 |

| composition | I | II | III |
|---|---|---|---|
| T1-2333 | I-1 | II-14 | III-71 |
| T1-2334 | I-1 | II-14 | III-72 |
| T1-2335 | I-1 | II-14 | III-73 |
| T1-2336 | I-1 | II-14 | III-74 |
| T1-2337 | I-1 | II-14 | III-75 |
| T1-2338 | I-1 | II-14 | III-76 |
| T1-2339 | I-1 | II-14 | III-77 |
| T1-2340 | I-1 | II-14 | III-78 |
| T1-2341 | I-1 | II-14 | III-79 |
| T1-2342 | I-1 | II-14 | III-80 |
| T1-2343 | I-1 | II-14 | III-81 |
| T1-2344 | I-1 | II-14 | III-82 |
| T1-2345 | I-1 | II-14 | III-83 |
| T1-2346 | I-1 | II-14 | III-84 |
| T1-2347 | I-1 | II-14 | III-85 |
| T1-2348 | I-1 | II-14 | III-86 |
| T1-2349 | I-1 | II-14 | III-87 |
| T1-2350 | I-1 | II-14 | III-88 |
| T1-2351 | I-1 | II-14 | III-89 |
| T1-2352 | I-1 | II-14 | III-90 |
| T1-2353 | I-1 | II-14 | III-91 |
| T1-2354 | I-1 | II-14 | III-92 |
| T1-2355 | I-1 | II-14 | III-93 |
| T1-2356 | I-1 | II-14 | III-94 |
| T1-2357 | I-1 | II-14 | III-95 |
| T1-2358 | I-1 | II-14 | III-96 |
| T1-2359 | I-1 | II-14 | III-97 |
| T1-2360 | I-1 | II-14 | III-98 |
| T1-2361 | I-1 | II-14 | III-99 |
| T1-2362 | I-1 | II-14 | III-100 |
| T1-2363 | I-1 | II-14 | III-101 |
| T1-2364 | I-1 | II-14 | III-102 |
| T1-2365 | I-1 | II-14 | III-103 |
| T1-2366 | I-1 | II-14 | III-104 |
| T1-2367 | I-1 | II-14 | III-105 |
| T1-2368 | I-1 | II-14 | III-106 |
| T1-2369 | I-1 | II-14 | III-107 |
| T1-2370 | I-1 | II-14 | III-108 |
| T1-2371 | I-1 | II-14 | III-109 |
| T1-2372 | I-1 | II-14 | III-110 |

| composition | I | II | III |
|---|---|---|---|
| T1-2373 | I-1 | II-14 | III-111 |
| T1-2374 | I-1 | II-14 | III-112 |
| T1-2375 | I-1 | II-14 | III-113 |
| T1-2376 | I-1 | II-14 | III-114 |
| T1-2377 | I-1 | II-14 | III-115 |
| T1-2378 | I-1 | II-14 | III-116 |
| T1-2379 | I-1 | II-14 | III-117 |
| T1-2380 | I-1 | II-14 | III-118 |
| T1-2381 | I-1 | II-14 | III-119 |
| T1-2382 | I-1 | II-14 | III-120 |
| T1-2383 | I-1 | II-14 | III-121 |
| T1-2384 | I-1 | II-14 | III-122 |
| T1-2385 | I-1 | II-14 | III-123 |
| T1-2386 | I-1 | II-14 | III-124 |
| T1-2387 | I-1 | II-14 | III-125 |
| T1-2388 | I-1 | II-14 | III-126 |
| T1-2389 | I-1 | II-14 | III-127 |
| T1-2390 | I-1 | II-14 | III-128 |
| T1-2391 | I-1 | II-14 | III-129 |
| T1-2392 | I-1 | II-14 | III-130 |
| T1-2393 | I-1 | II-14 | III-131 |
| T1-2394 | I-1 | II-14 | III-132 |
| T1-2395 | I-1 | II-14 | III-133 |
| T1-2396 | I-1 | II-14 | III-134 |
| T1-2397 | I-1 | II-14 | III-135 |
| T1-2398 | I-1 | II-14 | III-136 |
| T1-2399 | I-1 | II-14 | III-137 |
| T1-2400 | I-1 | II-14 | III-138 |
| T1-2401 | I-1 | II-14 | III-140 |
| T1-2402 | I-1 | II-14 | III-141 |
| T1-2403 | I-1 | II-14 | III-142 |
| T1-2404 | I-1 | II-14 | III-143 |
| T1-2405 | I-1 | II-14 | III-144 |
| T1-2406 | I-1 | II-14 | III-145 |
| T1-2407 | I-1 | II-14 | III-146 |
| T1-2408 | I-1 | II-14 | III-147 |
| T1-2409 | I-1 | II-14 | III-148 |
| T1-2410 | I-1 | II-14 | III-149 |
| T1-2411 | I-1 | II-14 | III-150 |
| T1-2412 | I-1 | II-14 | III-151 |

| composition | I | II | III |
|---|---|---|---|
| T1-2413 | I-1 | II-14 | III-152 |
| T1-2414 | I-1 | II-14 | III-153 |
| T1-2415 | I-1 | II-14 | III-154 |
| T1-2416 | I-1 | II-14 | III-155 |
| T1-2417 | I-1 | II-14 | III-156 |
| T1-2418 | I-1 | II-14 | III-157 |
| T1-2419 | I-1 | II-14 | III-158 |
| T1-2420 | I-1 | II-14 | III-159 |
| T1-2421 | I-1 | II-14 | III-160 |
| T1-2422 | I-1 | II-14 | III-161 |
| T1-2423 | I-1 | II-14 | III-162 |
| T1-2424 | I-1 | II-14 | III-163 |
| T1-2425 | I-1 | II-14 | III-164 |
| T1-2426 | I-1 | II-14 | III-165 |
| T1-2427 | I-1 | II-14 | III-166 |
| T1-2428 | I-1 | II-14 | III-167 |
| T1-2429 | I-1 | II-14 | III-168 |
| T1-2430 | I-1 | II-14 | III-169 |
| T1-2431 | I-1 | II-14 | III-170 |
| T1-2432 | I-1 | II-14 | III-171 |
| T1-2433 | I-1 | II-14 | III-172 |
| T1-2434 | I-1 | II-14 | III-173 |
| T1-2435 | I-1 | II-14 | III-174 |
| T1-2436 | I-1 | II-14 | III-175 |
| T1-2437 | I-1 | II-14 | III-176 |
| T1-2438 | I-1 | II-14 | III-177 |
| T1-2439 | I-1 | II-14 | III-178 |
| T1-2440 | I-1 | II-14 | III-179 |
| T1-2441 | I-1 | II-14 | III-180 |
| T1-2442 | I-1 | II-14 | III-181 |
| T1-2443 | I-1 | II-14 | III-182 |
| T1-2444 | I-1 | II-14 | III-183 |
| T1-2445 | I-1 | II-14 | III-184 |
| T1-2446 | I-1 | II-14 | III-185 |
| T1-2447 | I-1 | II-14 | III-186 |
| T1-2448 | I-1 | II-14 | III-187 |
| T1-2449 | I-1 | II-14 | III-188 |
| T1-2450 | I-1 | II-14 | III-189 |
| T1-2451 | I-1 | II-14 | III-190 |
| T1-2452 | I-1 | II-14 | III-191 |

| composition | I | II | III |
|---|---|---|---|
| T1-2453 | I-1 | II-14 | III-192 |
| T1-2454 | I-1 | II-14 | III-193 |
| T1-2455 | I-1 | II-14 | III-194 |
| T1-2456 | I-1 | II-14 | III-195 |
| T1-2457 | I-1 | II-14 | III-196 |
| T1-2458 | I-1 | II-14 | III-197 |
| T1-2459 | I-1 | II-14 | III-198 |
| T1-2460 | I-1 | II-14 | III-199 |
| T1-2461 | I-1 | II-14 | III-200 |
| T1-2462 | I-1 | II-14 | III-201 |
| T1-2463 | I-1 | II-14 | III-202 |
| T1-2464 | I-1 | II-14 | III-203 |
| T1-2465 | I-1 | II-15 | III-27 |
| T1-2466 | I-1 | II-15 | III-28 |
| T1-2467 | I-1 | II-15 | III-29 |
| T1-2468 | I-1 | II-15 | III-30 |
| T1-2469 | I-1 | II-15 | III-31 |
| T1-2470 | I-1 | II-15 | III-32 |
| T1-2471 | I-1 | II-15 | III-33 |
| T1-2472 | I-1 | II-15 | III-34 |
| T1-2473 | I-1 | II-15 | III-35 |
| T1-2474 | I-1 | II-15 | III-36 |
| T1-2475 | I-1 | II-15 | III-37 |
| T1-2476 | I-1 | II-15 | III-38 |
| T1-2477 | I-1 | II-15 | III-39 |
| T1-2478 | I-1 | II-15 | III-40 |
| T1-2479 | I-1 | II-15 | III-41 |
| T1-2480 | I-1 | II-15 | III-42 |
| T1-2481 | I-1 | II-15 | III-43 |
| T1-2482 | I-1 | II-15 | III-44 |
| T1-2483 | I-1 | II-15 | III-45 |
| T1-2484 | I-1 | II-15 | III-46 |
| T1-2485 | I-1 | II-15 | III-47 |
| T1-2486 | I-1 | II-15 | III-48 |
| T1-2487 | I-1 | II-15 | III-49 |
| T1-2488 | I-1 | II-15 | III-50 |
| T1-2489 | I-1 | II-15 | III-51 |
| T1-2490 | I-1 | II-15 | III-52 |
| T1-2491 | I-1 | II-15 | III-53 |
| T1-2492 | I-1 | II-15 | III-54 |

| composition | I | II | III |
|---|---|---|---|
| T1-2493 | I-1 | II-15 | III-55 |
| T1-2494 | I-1 | II-15 | III-56 |
| T1-2495 | I-1 | II-15 | III-57 |
| T1-2496 | I-1 | II-15 | III-58 |
| T1-2497 | I-1 | II-15 | III-59 |
| T1-2498 | I-1 | II-15 | III-60 |
| T1-2499 | I-1 | II-15 | III-61 |
| T1-2500 | I-1 | II-15 | III-62 |
| T1-2501 | I-1 | II-15 | III-63 |
| T1-2502 | I-1 | II-15 | III-64 |
| T1-2503 | I-1 | II-15 | III-65 |
| T1-2504 | I-1 | II-15 | III-66 |
| T1-2505 | I-1 | II-15 | III-67 |
| T1-2506 | I-1 | II-15 | III-68 |
| T1-2507 | I-1 | II-15 | III-69 |
| T1-2508 | I-1 | II-15 | III-70 |
| T1-2509 | I-1 | II-15 | III-71 |
| T1-2510 | I-1 | II-15 | III-72 |
| T1-2511 | I-1 | II-15 | III-73 |
| T1-2512 | I-1 | II-15 | III-74 |
| T1-2513 | I-1 | II-15 | III-75 |
| T1-2514 | I-1 | II-15 | III-76 |
| T1-2515 | I-1 | II-15 | III-77 |
| T1-2516 | I-1 | II-15 | III-78 |
| T1-2517 | I-1 | II-15 | III-79 |
| T1-2518 | I-1 | II-15 | III-80 |
| T1-2519 | I-1 | II-15 | III-81 |
| T1-2520 | I-1 | II-15 | III-82 |
| T1-2521 | I-1 | II-15 | III-83 |
| T1-2522 | I-1 | II-15 | III-84 |
| T1-2523 | I-1 | II-15 | III-85 |
| T1-2524 | I-1 | II-15 | III-86 |
| T1-2525 | I-1 | II-15 | III-87 |
| T1-2526 | I-1 | II-15 | III-88 |
| T1-2527 | I-1 | II-15 | III-89 |
| T1-2528 | I-1 | II-15 | III-90 |
| T1-2529 | I-1 | II-15 | III-91 |
| T1-2530 | I-1 | II-15 | III-92 |
| T1-2531 | I-1 | II-15 | III-93 |
| T1-2532 | I-1 | II-15 | III-94 |

| composition | I | II | III |
|---|---|---|---|
| T1-2533 | I-1 | II-15 | III-95 |
| T1-2534 | I-1 | II-15 | III-96 |
| T1-2535 | I-1 | II-15 | III-97 |
| T1-2536 | I-1 | II-15 | III-98 |
| T1-2537 | I-1 | II-15 | III-99 |
| T1-2538 | I-1 | II-15 | III-100 |
| T1-2539 | I-1 | II-15 | III-101 |
| T1-2540 | I-1 | II-15 | III-102 |
| T1-2541 | I-1 | II-15 | III-103 |
| T1-2542 | I-1 | II-15 | III-104 |
| T1-2543 | I-1 | II-15 | III-105 |
| T1-2544 | I-1 | II-15 | III-106 |
| T1-2545 | I-1 | II-15 | III-107 |
| T1-2546 | I-1 | II-15 | III-108 |
| T1-2547 | I-1 | II-15 | III-109 |
| T1-2548 | I-1 | II-15 | III-110 |
| T1-2549 | I-1 | II-15 | III-111 |
| T1-2550 | I-1 | II-15 | III-112 |
| T1-2551 | I-1 | II-15 | III-113 |
| T1-2552 | I-1 | II-15 | III-114 |
| T1-2553 | I-1 | II-15 | III-115 |
| T1-2554 | I-1 | II-15 | III-116 |
| T1-2555 | I-1 | II-15 | III-117 |
| T1-2556 | I-1 | II-15 | III-118 |
| T1-2557 | I-1 | II-15 | III-119 |
| T1-2558 | I-1 | II-15 | III-120 |
| T1-2559 | I-1 | II-15 | III-121 |
| T1-2560 | I-1 | II-15 | III-122 |
| T1-2561 | I-1 | II-15 | III-123 |
| T1-2562 | I-1 | II-15 | III-124 |
| T1-2563 | I-1 | II-15 | III-125 |
| T1-2564 | I-1 | II-15 | III-126 |
| T1-2565 | I-1 | II-15 | III-127 |
| T1-2566 | I-1 | II-15 | III-128 |
| T1-2567 | I-1 | II-15 | III-129 |
| T1-2568 | I-1 | II-15 | III-130 |
| T1-2569 | I-1 | II-15 | III-131 |
| T1-2570 | I-1 | II-15 | III-132 |
| T1-2571 | I-1 | II-15 | III-133 |
| T1-2572 | I-1 | II-15 | III-134 |

| composition | I | II | III |
|---|---|---|---|
| T1-2573 | I-1 | II-15 | III-135 |
| T1-2574 | I-1 | II-15 | III-136 |
| T1-2575 | I-1 | II-15 | III-137 |
| T1-2576 | I-1 | II-15 | III-138 |
| T1-2577 | I-1 | II-15 | III-140 |
| T1-2578 | I-1 | II-15 | III-141 |
| T1-2579 | I-1 | II-15 | III-142 |
| T1-2580 | I-1 | II-15 | III-143 |
| T1-2581 | I-1 | II-15 | III-144 |
| T1-2582 | I-1 | II-15 | III-145 |
| T1-2583 | I-1 | II-15 | III-146 |
| T1-2584 | I-1 | II-15 | III-147 |
| T1-2585 | I-1 | II-15 | III-148 |
| T1-2586 | I-1 | II-15 | III-149 |
| T1-2587 | I-1 | II-15 | III-150 |
| T1-2588 | I-1 | II-15 | III-151 |
| T1-2589 | I-1 | II-15 | III-152 |
| T1-2590 | I-1 | II-15 | III-153 |
| T1-2591 | I-1 | II-15 | III-154 |
| T1-2592 | I-1 | II-15 | III-155 |
| T1-2593 | I-1 | II-15 | III-156 |
| T1-2594 | I-1 | II-15 | III-157 |
| T1-2595 | I-1 | II-15 | III-158 |
| T1-2596 | I-1 | II-15 | III-159 |
| T1-2597 | I-1 | II-15 | III-160 |
| T1-2598 | I-1 | II-15 | III-161 |
| T1-2599 | I-1 | II-15 | III-162 |
| T1-2600 | I-1 | II-15 | III-163 |
| T1-2601 | I-1 | II-15 | III-164 |
| T1-2602 | I-1 | II-15 | III-165 |
| T1-2603 | I-1 | II-15 | III-166 |
| T1-2604 | I-1 | II-15 | III-167 |
| T1-2605 | I-1 | II-15 | III-168 |
| T1-2606 | I-1 | II-15 | III-169 |
| T1-2607 | I-1 | II-15 | III-170 |
| T1-2608 | I-1 | II-15 | III-171 |
| T1-2609 | I-1 | II-15 | III-172 |
| T1-2610 | I-1 | II-15 | III-173 |
| T1-2611 | I-1 | II-15 | III-174 |
| T1-2612 | I-1 | II-15 | III-175 |

| composition | I | II | III |
|---|---|---|---|
| T1-2613 | I-1 | II-15 | III-176 |
| T1-2614 | I-1 | II-15 | III-177 |
| T1-2615 | I-1 | II-15 | III-178 |
| T1-2616 | I-1 | II-15 | III-179 |
| T1-2617 | I-1 | II-15 | III-180 |
| T1-2618 | I-1 | II-15 | III-181 |
| T1-2619 | I-1 | II-15 | III-182 |
| T1-2620 | I-1 | II-15 | III-183 |
| T1-2621 | I-1 | II-15 | III-184 |
| T1-2622 | I-1 | II-15 | III-185 |
| T1-2623 | I-1 | II-15 | III-186 |
| T1-2624 | I-1 | II-15 | III-187 |
| T1-2625 | I-1 | II-15 | III-188 |
| T1-2626 | I-1 | II-15 | III-189 |
| T1-2627 | I-1 | II-15 | III-190 |
| T1-2628 | I-1 | II-15 | III-191 |
| T1-2629 | I-1 | II-15 | III-192 |
| T1-2630 | I-1 | II-15 | III-193 |
| T1-2631 | I-1 | II-15 | III-194 |
| T1-2632 | I-1 | II-15 | III-195 |
| T1-2633 | I-1 | II-15 | III-196 |
| T1-2634 | I-1 | II-15 | III-197 |
| T1-2635 | I-1 | II-15 | III-198 |
| T1-2636 | I-1 | II-15 | III-199 |
| T1-2637 | I-1 | II-15 | III-200 |
| T1-2638 | I-1 | II-15 | III-201 |
| T1-2639 | I-1 | II-15 | III-202 |
| T1-2640 | I-1 | II-15 | III-203 |
| T1-2641 | I-1 | II-16 | III-27 |
| T1-2642 | I-1 | II-16 | III-28 |
| T1-2643 | I-1 | II-16 | III-29 |
| T1-2644 | I-1 | II-16 | III-30 |
| T1-2645 | I-1 | II-16 | III-31 |
| T1-2646 | I-1 | II-16 | III-32 |
| T1-2647 | I-1 | II-16 | III-33 |
| T1-2648 | I-1 | II-16 | III-34 |
| T1-2649 | I-1 | II-16 | III-35 |
| T1-2650 | I-1 | II-16 | III-36 |
| T1-2651 | I-1 | II-16 | III-37 |
| T1-2652 | I-1 | II-16 | III-38 |

| composition | I | II | III |
|---|---|---|---|
| T1-2653 | I-1 | II-16 | III-39 |
| T1-2654 | I-1 | II-16 | III-40 |
| T1-2655 | I-1 | II-16 | III-41 |
| T1-2656 | I-1 | II-16 | III-42 |
| T1-2657 | I-1 | II-16 | III-43 |
| T1-2658 | I-1 | II-16 | III-44 |
| T1-2659 | I-1 | II-16 | III-45 |
| T1-2660 | I-1 | II-16 | III-46 |
| T1-2661 | I-1 | II-16 | III-47 |
| T1-2662 | I-1 | II-16 | III-48 |
| T1-2663 | I-1 | II-16 | III-49 |
| T1-2664 | I-1 | II-16 | III-50 |
| T1-2665 | I-1 | II-16 | III-51 |
| T1-2666 | I-1 | II-16 | III-52 |
| T1-2667 | I-1 | II-16 | III-53 |
| T1-2668 | I-1 | II-16 | III-54 |
| T1-2669 | I-1 | II-16 | III-55 |
| T1-2670 | I-1 | II-16 | III-56 |
| T1-2671 | I-1 | II-16 | III-57 |
| T1-2672 | I-1 | II-16 | III-58 |
| T1-2673 | I-1 | II-16 | III-59 |
| T1-2674 | I-1 | II-16 | III-60 |
| T1-2675 | I-1 | II-16 | III-61 |
| T1-2676 | I-1 | II-16 | III-62 |
| T1-2677 | I-1 | II-16 | III-63 |
| T1-2678 | I-1 | II-16 | III-64 |
| T1-2679 | I-1 | II-16 | III-65 |
| T1-2680 | I-1 | II-16 | III-66 |
| T1-2681 | I-1 | II-16 | III-67 |
| T1-2682 | I-1 | II-16 | III-68 |
| T1-2683 | I-1 | II-16 | III-69 |
| T1-2684 | I-1 | II-16 | III-70 |
| T1-2685 | I-1 | II-16 | III-71 |
| T1-2686 | I-1 | II-16 | III-72 |
| T1-2687 | I-1 | II-16 | III-73 |
| T1-2688 | I-1 | II-16 | III-74 |
| T1-2689 | I-1 | II-16 | III-75 |
| T1-2690 | I-1 | II-16 | III-76 |
| T1-2691 | I-1 | II-16 | III-77 |
| T1-2692 | I-1 | II-16 | III-78 |

| composition | I | II | III |
|---|---|---|---|
| T1-2693 | I-1 | II-16 | III-79 |
| T1-2694 | I-1 | II-16 | III-80 |
| T1-2695 | I-1 | II-16 | III-81 |
| T1-2696 | I-1 | II-16 | III-82 |
| T1-2697 | I-1 | II-16 | III-83 |
| T1-2698 | I-1 | II-16 | III-84 |
| T1-2699 | I-1 | II-16 | III-85 |
| T1-2700 | I-1 | II-16 | III-86 |
| T1-2701 | I-1 | II-16 | III-87 |
| T1-2702 | I-1 | II-16 | III-88 |
| T1-2703 | I-1 | II-16 | III-89 |
| T1-2704 | I-1 | II-16 | III-90 |
| T1-2705 | I-1 | II-16 | III-91 |
| T1-2706 | I-1 | II-16 | III-92 |
| T1-2707 | I-1 | II-16 | III-93 |
| T1-2708 | I-1 | II-16 | III-94 |
| T1-2709 | I-1 | II-16 | III-95 |
| T1-2710 | I-1 | II-16 | III-96 |
| T1-2711 | I-1 | II-16 | III-97 |
| T1-2712 | I-1 | II-16 | III-98 |
| T1-2713 | I-1 | II-16 | III-99 |
| T1-2714 | I-1 | II-16 | III-100 |
| T1-2715 | I-1 | II-16 | III-101 |
| T1-2716 | I-1 | II-16 | III-102 |
| T1-2717 | I-1 | II-16 | III-103 |
| T1-2718 | I-1 | II-16 | III-104 |
| T1-2719 | I-1 | II-16 | III-105 |
| T1-2720 | I-1 | II-16 | III-106 |
| T1-2721 | I-1 | II-16 | III-107 |
| T1-2722 | I-1 | II-16 | III-108 |
| T1-2723 | I-1 | II-16 | III-109 |
| T1-2724 | I-1 | II-16 | III-110 |
| T1-2725 | I-1 | II-16 | III-111 |
| T1-2726 | I-1 | II-16 | III-112 |
| T1-2727 | I-1 | II-16 | III-113 |
| T1-2728 | I-1 | II-16 | III-114 |
| T1-2729 | I-1 | II-16 | III-115 |
| T1-2730 | I-1 | II-16 | III-116 |
| T1-2731 | I-1 | II-16 | III-117 |
| T1-2732 | I-1 | II-16 | III-118 |

| composition | I | II | III |
|---|---|---|---|
| T1-2733 | I-1 | II-16 | III-119 |
| T1-2734 | I-1 | II-16 | III-120 |
| T1-2735 | I-1 | II-16 | III-121 |
| T1-2736 | I-1 | II-16 | III-122 |
| T1-2737 | I-1 | II-16 | III-123 |
| T1-2738 | I-1 | II-16 | III-124 |
| T1-2739 | I-1 | II-16 | III-125 |
| T1-2740 | I-1 | II-16 | III-126 |
| T1-2741 | I-1 | II-16 | III-127 |
| T1-2742 | I-1 | II-16 | III-128 |
| T1-2743 | I-1 | II-16 | III-129 |
| T1-2744 | I-1 | II-16 | III-130 |
| T1-2745 | I-1 | II-16 | III-131 |
| T1-2746 | I-1 | II-16 | III-132 |
| T1-2747 | I-1 | II-16 | III-133 |
| T1-2748 | I-1 | II-16 | III-134 |
| T1-2749 | I-1 | II-16 | III-135 |
| T1-2750 | I-1 | II-16 | III-136 |
| T1-2751 | I-1 | II-16 | III-137 |
| T1-2752 | I-1 | II-16 | III-138 |
| T1-2753 | I-1 | II-16 | III-140 |
| T1-2754 | I-1 | II-16 | III-141 |
| T1-2755 | I-1 | II-16 | III-142 |
| T1-2756 | I-1 | II-16 | III-143 |
| T1-2757 | I-1 | II-16 | III-144 |
| T1-2758 | I-1 | II-16 | III-145 |
| T1-2759 | I-1 | II-16 | III-146 |
| T1-2760 | I-1 | II-16 | III-147 |
| T1-2761 | I-1 | II-16 | III-148 |
| T1-2762 | I-1 | II-16 | III-149 |
| T1-2763 | I-1 | II-16 | III-150 |
| T1-2764 | I-1 | II-16 | III-151 |
| T1-2765 | I-1 | II-16 | III-152 |
| T1-2766 | I-1 | II-16 | III-153 |
| T1-2767 | I-1 | II-16 | III-154 |
| T1-2768 | I-1 | II-16 | III-155 |
| T1-2769 | I-1 | II-16 | III-156 |
| T1-2770 | I-1 | II-16 | III-157 |
| T1-2771 | I-1 | II-16 | III-158 |
| T1-2772 | I-1 | II-16 | III-159 |

| composition | I | II | III |
|---|---|---|---|
| T1-2773 | I-1 | II-16 | III-160 |
| T1-2774 | I-1 | II-16 | III-161 |
| T1-2775 | I-1 | II-16 | III-162 |
| T1-2776 | I-1 | II-16 | III-163 |
| T1-2777 | I-1 | II-16 | III-164 |
| T1-2778 | I-1 | II-16 | III-165 |
| T1-2779 | I-1 | II-16 | III-166 |
| T1-2780 | I-1 | II-16 | III-167 |
| T1-2781 | I-1 | II-16 | III-168 |
| T1-2782 | I-1 | II-16 | III-169 |
| T1-2783 | I-1 | II-16 | III-170 |
| T1-2784 | I-1 | II-16 | III-171 |
| T1-2785 | I-1 | II-16 | III-172 |
| T1-2786 | I-1 | II-16 | III-173 |
| T1-2787 | I-1 | II-16 | III-174 |
| T1-2788 | I-1 | II-16 | III-175 |
| T1-2789 | I-1 | II-16 | III-176 |
| T1-2790 | I-1 | II-16 | III-177 |
| T1-2791 | I-1 | II-16 | III-178 |
| T1-2792 | I-1 | II-16 | III-179 |
| T1-2793 | I-1 | II-16 | III-180 |
| T1-2794 | I-1 | II-16 | III-181 |
| T1-2795 | I-1 | II-16 | III-182 |
| T1-2796 | I-1 | II-16 | III-183 |
| T1-2797 | I-1 | II-16 | III-184 |
| T1-2798 | I-1 | II-16 | III-185 |
| T1-2799 | I-1 | II-16 | III-186 |
| T1-2800 | I-1 | II-16 | III-187 |
| T1-2801 | I-1 | II-16 | III-188 |
| T1-2802 | I-1 | II-16 | III-189 |
| T1-2803 | I-1 | II-16 | III-190 |
| T1-2804 | I-1 | II-16 | III-191 |
| T1-2805 | I-1 | II-16 | III-192 |
| T1-2806 | I-1 | II-16 | III-193 |
| T1-2807 | I-1 | II-16 | III-194 |
| T1-2808 | I-1 | II-16 | III-195 |
| T1-2809 | I-1 | II-16 | III-196 |
| T1-2810 | I-1 | II-16 | III-197 |
| T1-2811 | I-1 | II-16 | III-198 |
| T1-2812 | I-1 | II-16 | III-199 |
| T1-2813 | I-1 | II-16 | III-200 |
| T1-2814 | I-1 | II-16 | III-201 |
| T1-2815 | I-1 | II-16 | III-202 |
| T1-2816 | I-1 | II-16 | III-203 |
| T1-2817 | I-1 | II-17 | III-27 |
| T1-2818 | I-1 | II-17 | III-28 |
| T1-2819 | I-1 | II-17 | III-29 |
| T1-2820 | I-1 | II-17 | III-30 |
| T1-2821 | I-1 | II-17 | III-31 |
| T1-2822 | I-1 | II-17 | III-32 |
| T1-2823 | I-1 | II-17 | III-33 |
| T1-2824 | I-1 | II-17 | III-34 |
| T1-2825 | I-1 | II-17 | III-35 |
| T1-2826 | I-1 | II-17 | III-36 |
| T1-2827 | I-1 | II-17 | III-37 |
| T1-2828 | I-1 | II-17 | III-38 |
| T1-2829 | I-1 | II-17 | III-39 |
| T1-2830 | I-1 | II-17 | III-40 |
| T1-2831 | I-1 | II-17 | III-41 |
| T1-2832 | I-1 | II-17 | III-42 |
| T1-2833 | I-1 | II-17 | III-43 |
| T1-2834 | I-1 | II-17 | III-44 |
| T1-2835 | I-1 | II-17 | III-45 |
| T1-2836 | I-1 | II-17 | III-46 |
| T1-2837 | I-1 | II-17 | III-47 |
| T1-2838 | I-1 | II-17 | III-48 |
| T1-2839 | I-1 | II-17 | III-49 |
| T1-2840 | I-1 | II-17 | III-50 |
| T1-2841 | I-1 | II-17 | III-51 |
| T1-2842 | I-1 | II-17 | III-52 |
| T1-2843 | I-1 | II-17 | III-53 |
| T1-2844 | I-1 | II-17 | III-54 |
| T1-2845 | I-1 | II-17 | III-55 |
| T1-2846 | I-1 | II-17 | III-56 |
| T1-2847 | I-1 | II-17 | III-57 |
| T1-2848 | I-1 | II-17 | III-58 |
| T1-2849 | I-1 | II-17 | III-59 |
| T1-2850 | I-1 | II-17 | III-60 |
| T1-2851 | I-1 | II-17 | III-61 |
| T1-2852 | I-1 | II-17 | III-62 |

| composition | I | II | III |
|---|---|---|---|
| T1-2853 | I-1 | II-17 | III-63 |
| T1-2854 | I-1 | II-17 | III-64 |
| T1-2855 | I-1 | II-17 | III-65 |
| T1-2856 | I-1 | II-17 | III-66 |
| T1-2857 | I-1 | II-17 | III-67 |
| T1-2858 | I-1 | II-17 | III-68 |
| T1-2859 | I-1 | II-17 | III-69 |
| T1-2860 | I-1 | II-17 | III-70 |
| T1-2861 | I-1 | II-17 | III-71 |
| T1-2862 | I-1 | II-17 | III-72 |
| T1-2863 | I-1 | II-17 | III-73 |
| T1-2864 | I-1 | II-17 | III-74 |
| T1-2865 | I-1 | II-17 | III-75 |
| T1-2866 | I-1 | II-17 | III-76 |
| T1-2867 | I-1 | II-17 | III-77 |
| T1-2868 | I-1 | II-17 | III-78 |
| T1-2869 | I-1 | II-17 | III-79 |
| T1-2870 | I-1 | II-17 | III-80 |
| T1-2871 | I-1 | II-17 | III-81 |
| T1-2872 | I-1 | II-17 | III-82 |
| T1-2873 | I-1 | II-17 | III-83 |
| T1-2874 | I-1 | II-17 | III-84 |
| T1-2875 | I-1 | II-17 | III-85 |
| T1-2876 | I-1 | II-17 | III-86 |
| T1-2877 | I-1 | II-17 | III-87 |
| T1-2878 | I-1 | II-17 | III-88 |
| T1-2879 | I-1 | II-17 | III-89 |
| T1-2880 | I-1 | II-17 | III-90 |
| T1-2881 | I-1 | II-17 | III-91 |
| T1-2882 | I-1 | II-17 | III-92 |
| T1-2883 | I-1 | II-17 | III-93 |
| T1-2884 | I-1 | II-17 | III-94 |
| T1-2885 | I-1 | II-17 | III-95 |
| T1-2886 | I-1 | II-17 | III-96 |
| T1-2887 | I-1 | II-17 | III-97 |
| T1-2888 | I-1 | II-17 | III-98 |
| T1-2889 | I-1 | II-17 | III-99 |
| T1-2890 | I-1 | II-17 | III-100 |
| T1-2891 | I-1 | II-17 | III-101 |
| T1-2892 | I-1 | II-17 | III-102 |

| composition | I | II | III |
|---|---|---|---|
| T1-2893 | I-1 | II-17 | III-103 |
| T1-2894 | I-1 | II-17 | III-104 |
| T1-2895 | I-1 | II-17 | III-105 |
| T1-2896 | I-1 | II-17 | III-106 |
| T1-2897 | I-1 | II-17 | III-107 |
| T1-2898 | I-1 | II-17 | III-108 |
| T1-2899 | I-1 | II-17 | III-109 |
| T1-2900 | I-1 | II-17 | III-110 |
| T1-2901 | I-1 | II-17 | III-111 |
| T1-2902 | I-1 | II-17 | III-112 |
| T1-2903 | I-1 | II-17 | III-113 |
| T1-2904 | I-1 | II-17 | III-114 |
| T1-2905 | I-1 | II-17 | III-115 |
| T1-2906 | I-1 | II-17 | III-116 |
| T1-2907 | I-1 | II-17 | III-117 |
| T1-2908 | I-1 | II-17 | III-118 |
| T1-2909 | I-1 | II-17 | III-119 |
| T1-2910 | I-1 | II-17 | III-120 |
| T1-2911 | I-1 | II-17 | III-121 |
| T1-2912 | I-1 | II-17 | III-122 |
| T1-2913 | I-1 | II-17 | III-123 |
| T1-2914 | I-1 | II-17 | III-124 |
| T1-2915 | I-1 | II-17 | III-125 |
| T1-2916 | I-1 | II-17 | III-126 |
| T1-2917 | I-1 | II-17 | III-127 |
| T1-2918 | I-1 | II-17 | III-128 |
| T1-2919 | I-1 | II-17 | III-129 |
| T1-2920 | I-1 | II-17 | III-130 |
| T1-2921 | I-1 | II-17 | III-131 |
| T1-2922 | I-1 | II-17 | III-132 |
| T1-2923 | I-1 | II-17 | III-133 |
| T1-2924 | I-1 | II-17 | III-134 |
| T1-2925 | I-1 | II-17 | III-135 |
| T1-2926 | I-1 | II-17 | III-136 |
| T1-2927 | I-1 | II-17 | III-137 |
| T1-2928 | I-1 | II-17 | III-138 |
| T1-2929 | I-1 | II-17 | III-140 |
| T1-2930 | I-1 | II-17 | III-141 |
| T1-2931 | I-1 | II-17 | III-142 |
| T1-2932 | I-1 | II-17 | III-143 |

| composition | I | II | III |
|---|---|---|---|
| T1-2933 | I-1 | II-17 | III-144 |
| T1-2934 | I-1 | II-17 | III-145 |
| T1-2935 | I-1 | II-17 | III-146 |
| T1-2936 | I-1 | II-17 | III-147 |
| T1-2937 | I-1 | II-17 | III-148 |
| T1-2938 | I-1 | II-17 | III-149 |
| T1-2939 | I-1 | II-17 | III-150 |
| T1-2940 | I-1 | II-17 | III-151 |
| T1-2941 | I-1 | II-17 | III-152 |
| T1-2942 | I-1 | II-17 | III-153 |
| T1-2943 | I-1 | II-17 | III-154 |
| T1-2944 | I-1 | II-17 | III-155 |
| T1-2945 | I-1 | II-17 | III-156 |
| T1-2946 | I-1 | II-17 | III-157 |
| T1-2947 | I-1 | II-17 | III-158 |
| T1-2948 | I-1 | II-17 | III-159 |
| T1-2949 | I-1 | II-17 | III-160 |
| T1-2950 | I-1 | II-17 | III-161 |
| T1-2951 | I-1 | II-17 | III-162 |
| T1-2952 | I-1 | II-17 | III-163 |
| T1-2953 | I-1 | II-17 | III-164 |
| T1-2954 | I-1 | II-17 | III-165 |
| T1-2955 | I-1 | II-17 | III-166 |
| T1-2956 | I-1 | II-17 | III-167 |
| T1-2957 | I-1 | II-17 | III-168 |
| T1-2958 | I-1 | II-17 | III-169 |
| T1-2959 | I-1 | II-17 | III-170 |
| T1-2960 | I-1 | II-17 | III-171 |
| T1-2961 | I-1 | II-17 | III-172 |
| T1-2962 | I-1 | II-17 | III-173 |
| T1-2963 | I-1 | II-17 | III-174 |
| T1-2964 | I-1 | II-17 | III-175 |
| T1-2965 | I-1 | II-17 | III-176 |
| T1-2966 | I-1 | II-17 | III-177 |
| T1-2967 | I-1 | II-17 | III-178 |
| T1-2968 | I-1 | II-17 | III-179 |
| T1-2969 | I-1 | II-17 | III-180 |
| T1-2970 | I-1 | II-17 | III-181 |
| T1-2971 | I-1 | II-17 | III-182 |
| T1-2972 | I-1 | II-17 | III-183 |

| composition | I | II | III |
|---|---|---|---|
| T1-2973 | I-1 | II-17 | III-184 |
| T1-2974 | I-1 | II-17 | III-185 |
| T1-2975 | I-1 | II-17 | III-186 |
| T1-2976 | I-1 | II-17 | III-187 |
| T1-2977 | I-1 | II-17 | III-188 |
| T1-2978 | I-1 | II-17 | III-189 |
| T1-2979 | I-1 | II-17 | III-190 |
| T1-2980 | I-1 | II-17 | III-191 |
| T1-2981 | I-1 | II-17 | III-192 |
| T1-2982 | I-1 | II-17 | III-193 |
| T1-2983 | I-1 | II-17 | III-194 |
| T1-2984 | I-1 | II-17 | III-195 |
| T1-2985 | I-1 | II-17 | III-196 |
| T1-2986 | I-1 | II-17 | III-197 |
| T1-2987 | I-1 | II-17 | III-198 |
| T1-2988 | I-1 | II-17 | III-199 |
| T1-2989 | I-1 | II-17 | III-200 |
| T1-2990 | I-1 | II-17 | III-201 |
| T1-2991 | I-1 | II-17 | III-202 |
| T1-2992 | I-1 | II-17 | III-203 |
| T1-2993 | I-1 | II-18 | III-27 |
| T1-2994 | I-1 | II-18 | III-28 |
| T1-2995 | I-1 | II-18 | III-29 |
| T1-2996 | I-1 | II-18 | III-30 |
| T1-2997 | I-1 | II-18 | III-31 |
| T1-2998 | I-1 | II-18 | III-32 |
| T1-2999 | I-1 | II-18 | III-33 |
| T1-3000 | I-1 | II-18 | III-34 |
| T1-3001 | I-1 | II-18 | III-35 |
| T1-3002 | I-1 | II-18 | III-36 |
| T1-3003 | I-1 | II-18 | III-37 |
| T1-3004 | I-1 | II-18 | III-38 |
| T1-3005 | I-1 | II-18 | III-39 |
| T1-3006 | I-1 | II-18 | III-40 |
| T1-3007 | I-1 | II-18 | III-41 |
| T1-3008 | I-1 | II-18 | III-42 |
| T1-3009 | I-1 | II-18 | III-43 |
| T1-3010 | I-1 | II-18 | III-44 |
| T1-3011 | I-1 | II-18 | III-45 |
| T1-3012 | I-1 | II-18 | III-46 |

| composition | I | II | III |
|---|---|---|---|
| T1-3013 | I-1 | II-18 | III-47 |
| T1-3014 | I-1 | II-18 | III-48 |
| T1-3015 | I-1 | II-18 | III-49 |
| T1-3016 | I-1 | II-18 | III-50 |
| T1-3017 | I-1 | II-18 | III-51 |
| T1-3018 | I-1 | II-18 | III-52 |
| T1-3019 | I-1 | II-18 | III-53 |
| T1-3020 | I-1 | II-18 | III-54 |
| T1-3021 | I-1 | II-18 | III-55 |
| T1-3022 | I-1 | II-18 | III-56 |
| T1-3023 | I-1 | II-18 | III-57 |
| T1-3024 | I-1 | II-18 | III-58 |
| T1-3025 | I-1 | II-18 | III-59 |
| T1-3026 | I-1 | II-18 | III-60 |
| T1-3027 | I-1 | II-18 | III-61 |
| T1-3028 | I-1 | II-18 | III-62 |
| T1-3029 | I-1 | II-18 | III-63 |
| T1-3030 | I-1 | II-18 | III-64 |
| T1-3031 | I-1 | II-18 | III-65 |
| T1-3032 | I-1 | II-18 | III-66 |
| T1-3033 | I-1 | II-18 | III-67 |
| T1-3034 | I-1 | II-18 | III-68 |
| T1-3035 | I-1 | II-18 | III-69 |
| T1-3036 | I-1 | II-18 | III-70 |
| T1-3037 | I-1 | II-18 | III-71 |
| T1-3038 | I-1 | II-18 | III-72 |
| T1-3039 | I-1 | II-18 | III-73 |
| T1-3040 | I-1 | II-18 | III-74 |
| T1-3041 | I-1 | II-18 | III-75 |
| T1-3042 | I-1 | II-18 | III-76 |
| T1-3043 | I-1 | II-18 | III-77 |
| T1-3044 | I-1 | II-18 | III-78 |
| T1-3045 | I-1 | II-18 | III-79 |
| T1-3046 | I-1 | II-18 | III-80 |
| T1-3047 | I-1 | II-18 | III-81 |
| T1-3048 | I-1 | II-18 | III-82 |
| T1-3049 | I-1 | II-18 | III-83 |
| T1-3050 | I-1 | II-18 | III-84 |
| T1-3051 | I-1 | II-18 | III-85 |
| T1-3052 | I-1 | II-18 | III-86 |

| composition | I | II | III |
|---|---|---|---|
| T1-3053 | I-1 | II-18 | III-87 |
| T1-3054 | I-1 | II-18 | III-88 |
| T1-3055 | I-1 | II-18 | III-89 |
| T1-3056 | I-1 | II-18 | III-90 |
| T1-3057 | I-1 | II-18 | III-91 |
| T1-3058 | I-1 | II-18 | III-92 |
| T1-3059 | I-1 | II-18 | III-93 |
| T1-3060 | I-1 | II-18 | III-94 |
| T1-3061 | I-1 | II-18 | III-95 |
| T1-3062 | I-1 | II-18 | III-96 |
| T1-3063 | I-1 | II-18 | III-97 |
| T1-3064 | I-1 | II-18 | III-98 |
| T1-3065 | I-1 | II-18 | III-99 |
| T1-3066 | I-1 | II-18 | III-100 |
| T1-3067 | I-1 | II-18 | III-101 |
| T1-3068 | I-1 | II-18 | III-102 |
| T1-3069 | I-1 | II-18 | III-103 |
| T1-3070 | I-1 | II-18 | III-104 |
| T1-3071 | I-1 | II-18 | III-105 |
| T1-3072 | I-1 | II-18 | III-106 |
| T1-3073 | I-1 | II-18 | III-107 |
| T1-3074 | I-1 | II-18 | III-108 |
| T1-3075 | I-1 | II-18 | III-109 |
| T1-3076 | I-1 | II-18 | III-110 |
| T1-3077 | I-1 | II-18 | III-111 |
| T1-3078 | I-1 | II-18 | III-112 |
| T1-3079 | I-1 | II-18 | III-113 |
| T1-3080 | I-1 | II-18 | III-114 |
| T1-3081 | I-1 | II-18 | III-115 |
| T1-3082 | I-1 | II-18 | III-116 |
| T1-3083 | I-1 | II-18 | III-117 |
| T1-3084 | I-1 | II-18 | III-118 |
| T1-3085 | I-1 | II-18 | III-119 |
| T1-3086 | I-1 | II-18 | III-120 |
| T1-3087 | I-1 | II-18 | III-121 |
| T1-3088 | I-1 | II-18 | III-122 |
| T1-3089 | I-1 | II-18 | III-123 |
| T1-3090 | I-1 | II-18 | III-124 |
| T1-3091 | I-1 | II-18 | III-125 |
| T1-3092 | I-1 | II-18 | III-126 |

| composition | I | II | III |
|---|---|---|---|
| T1-3093 | I-1 | II-18 | III-127 |
| T1-3094 | I-1 | II-18 | III-128 |
| T1-3095 | I-1 | II-18 | III-129 |
| T1-3096 | I-1 | II-18 | III-130 |
| T1-3097 | I-1 | II-18 | III-131 |
| T1-3098 | I-1 | II-18 | III-132 |
| T1-3099 | I-1 | II-18 | III-133 |
| T1-3100 | I-1 | II-18 | III-134 |
| T1-3101 | I-1 | II-18 | III-135 |
| T1-3102 | I-1 | II-18 | III-136 |
| T1-3103 | I-1 | II-18 | III-137 |
| T1-3104 | I-1 | II-18 | III-138 |
| T1-3105 | I-1 | II-18 | III-140 |
| T1-3106 | I-1 | II-18 | III-141 |
| T1-3107 | I-1 | II-18 | III-142 |
| T1-3108 | I-1 | II-18 | III-143 |
| T1-3109 | I-1 | II-18 | III-144 |
| T1-3110 | I-1 | II-18 | III-145 |
| T1-3111 | I-1 | II-18 | III-146 |
| T1-3112 | I-1 | II-18 | III-147 |
| T1-3113 | I-1 | II-18 | III-148 |
| T1-3114 | I-1 | II-18 | III-149 |
| T1-3115 | I-1 | II-18 | III-150 |
| T1-3116 | I-1 | II-18 | III-151 |
| T1-3117 | I-1 | II-18 | III-152 |
| T1-3118 | I-1 | II-18 | III-153 |
| T1-3119 | I-1 | II-18 | III-154 |
| T1-3120 | I-1 | II-18 | III-155 |
| T1-3121 | I-1 | II-18 | III-156 |
| T1-3122 | I-1 | II-18 | III-157 |
| T1-3123 | I-1 | II-18 | III-158 |
| T1-3124 | I-1 | II-18 | III-159 |
| T1-3125 | I-1 | II-18 | III-160 |
| T1-3126 | I-1 | II-18 | III-161 |
| T1-3127 | I-1 | II-18 | III-162 |
| T1-3128 | I-1 | II-18 | III-163 |
| T1-3129 | I-1 | II-18 | III-164 |
| T1-3130 | I-1 | II-18 | III-165 |
| T1-3131 | I-1 | II-18 | III-166 |

| composition | I | II | III |
|---|---|---|---|
| T1-3132 | I-1 | II-18 | III-167 |
| T1-3133 | I-1 | II-18 | III-168 |
| T1-3134 | I-1 | II-18 | III-169 |
| T1-3135 | I-1 | II-18 | III-170 |
| T1-3136 | I-1 | II-18 | III-171 |
| T1-3137 | I-1 | II-18 | III-172 |
| T1-3138 | I-1 | II-18 | III-173 |
| T1-3139 | I-1 | II-18 | III-174 |
| T1-3140 | I-1 | II-18 | III-175 |
| T1-3141 | I-1 | II-18 | III-176 |
| T1-3142 | I-1 | II-18 | III-177 |
| T1-3143 | I-1 | II-18 | III-178 |
| T1-3144 | I-1 | II-18 | III-179 |
| T1-3145 | I-1 | II-18 | III-180 |
| T1-3146 | I-1 | II-18 | III-181 |
| T1-3147 | I-1 | II-18 | III-182 |
| T1-3148 | I-1 | II-18 | III-183 |
| T1-3149 | I-1 | II-18 | III-184 |
| T1-3150 | I-1 | II-18 | III-185 |
| T1-3151 | I-1 | II-18 | III-186 |
| T1-3152 | I-1 | II-18 | III-187 |
| T1-3153 | I-1 | II-18 | III-188 |
| T1-3154 | I-1 | II-18 | III-189 |
| T1-3155 | I-1 | II-18 | III-190 |
| T1-3156 | I-1 | II-18 | III-191 |
| T1-3157 | I-1 | II-18 | III-192 |
| T1-3158 | I-1 | II-18 | III-193 |
| T1-3159 | I-1 | II-18 | III-194 |
| T1-3160 | I-1 | II-18 | III-195 |
| T1-3161 | I-1 | II-18 | III-196 |
| T1-3162 | I-1 | II-18 | III-197 |
| T1-3163 | I-1 | II-18 | III-198 |
| T1-3164 | I-1 | II-18 | III-199 |
| T1-3165 | I-1 | II-18 | III-200 |
| T1-3166 | I-1 | II-18 | III-201 |
| T1-3167 | I-1 | II-18 | III-202 |
| T1-3168 | I-1 | II-18 | III-203 |

In Table T2, further specific compositions according to the invention are individualized.

Table T2: Three-component compositions comprising one component I ("I"), one component II ("II") and one component III ("III"), in particular ternary compositions containing the respective components I, II and III as only active ingredients.

| composition | I | II | III |
|---|---|---|---|
| T2-1 | I-3 | II-1 | III-27 |
| T2-2 | I-3 | II-1 | III-28 |
| T2-3 | I-3 | II-1 | III-29 |
| T2-4 | I-3 | II-1 | III-30 |
| T2-5 | I-3 | II-1 | III-31 |
| T2-6 | I-3 | II-1 | III-32 |
| T2-7 | I-3 | II-1 | III-33 |
| T2-8 | I-3 | II-1 | III-34 |
| T2-9 | I-3 | II-1 | III-35 |
| T2-10 | I-3 | II-1 | III-36 |
| T2-11 | I-3 | II-1 | III-37 |
| T2-12 | I-3 | II-1 | III-38 |
| T2-13 | I-3 | II-1 | III-39 |
| T2-14 | I-3 | II-1 | III-40 |
| T2-15 | I-3 | II-1 | III-41 |
| T2-16 | I-3 | II-1 | III-42 |
| T2-17 | I-3 | II-1 | III-43 |
| T2-18 | I-3 | II-1 | III-44 |
| T2-19 | I-3 | II-1 | III-45 |
| T2-20 | I-3 | II-1 | III-46 |
| T2-21 | I-3 | II-1 | III-47 |
| T2-22 | I-3 | II-1 | III-48 |
| T2-23 | I-3 | II-1 | III-49 |
| T2-24 | I-3 | II-1 | III-50 |
| T2-25 | I-3 | II-1 | III-51 |
| T2-26 | I-3 | II-1 | III-52 |
| T2-27 | I-3 | II-1 | III-53 |
| T2-28 | I-3 | II-1 | III-54 |
| T2-29 | I-3 | II-1 | III-55 |
| T2-30 | I-3 | II-1 | III-56 |
| T2-31 | I-3 | II-1 | III-57 |
| T2-32 | I-3 | II-1 | III-58 |
| T2-33 | I-3 | II-1 | III-59 |
| T2-34 | I-3 | II-1 | III-60 |

| composition | I | II | III |
|---|---|---|---|
| T2-35 | I-3 | II-1 | III-61 |
| T2-36 | I-3 | II-1 | III-62 |
| T2-37 | I-3 | II-1 | III-63 |
| T2-38 | I-3 | II-1 | III-64 |
| T2-39 | I-3 | II-1 | III-65 |
| T2-40 | I-3 | II-1 | III-66 |
| T2-41 | I-3 | II-1 | III-67 |
| T2-42 | I-3 | II-1 | III-68 |
| T2-43 | I-3 | II-1 | III-69 |
| T2-44 | I-3 | II-1 | III-70 |
| T2-45 | I-3 | II-1 | III-71 |
| T2-46 | I-3 | II-1 | III-72 |
| T2-47 | I-3 | II-1 | III-73 |
| T2-48 | I-3 | II-1 | III-74 |
| T2-49 | I-3 | II-1 | III-75 |
| T2-50 | I-3 | II-1 | III-76 |
| T2-51 | I-3 | II-1 | III-77 |
| T2-52 | I-3 | II-1 | III-78 |
| T2-53 | I-3 | II-1 | III-79 |
| T2-54 | I-3 | II-1 | III-80 |
| T2-55 | I-3 | II-1 | III-81 |
| T2-56 | I-3 | II-1 | III-82 |
| T2-57 | I-3 | II-1 | III-83 |
| T2-58 | I-3 | II-1 | III-84 |
| T2-59 | I-3 | II-1 | III-85 |
| T2-60 | I-3 | II-1 | III-86 |
| T2-61 | I-3 | II-1 | III-87 |
| T2-62 | I-3 | II-1 | III-88 |
| T2-63 | I-3 | II-1 | III-89 |
| T2-64 | I-3 | II-1 | III-90 |
| T2-65 | I-3 | II-1 | III-91 |
| T2-66 | I-3 | II-1 | III-92 |
| T2-67 | I-3 | II-1 | III-93 |
| T2-68 | I-3 | II-1 | III-94 |

| composition | I | II | III |
|---|---|---|---|
| T2-69 | I-3 | II-1 | III-95 |
| T2-70 | I-3 | II-1 | III-96 |
| T2-71 | I-3 | II-1 | III-97 |
| T2-72 | I-3 | II-1 | III-98 |
| T2-73 | I-3 | II-1 | III-99 |
| T2-74 | I-3 | II-1 | III-100 |
| T2-75 | I-3 | II-1 | III-101 |
| T2-76 | I-3 | II-1 | III-102 |
| T2-77 | I-3 | II-1 | III-103 |
| T2-78 | I-3 | II-1 | III-104 |
| T2-79 | I-3 | II-1 | III-105 |
| T2-80 | I-3 | II-1 | III-106 |
| T2-81 | I-3 | II-1 | III-107 |
| T2-82 | I-3 | II-1 | III-108 |
| T2-83 | I-3 | II-1 | III-109 |
| T2-84 | I-3 | II-1 | III-110 |
| T2-85 | I-3 | II-1 | III-111 |
| T2-86 | I-3 | II-1 | III-112 |
| T2-87 | I-3 | II-1 | III-113 |
| T2-88 | I-3 | II-1 | III-114 |
| T2-89 | I-3 | II-1 | III-115 |
| T2-90 | I-3 | II-1 | III-116 |
| T2-91 | I-3 | II-1 | III-117 |
| T2-92 | I-3 | II-1 | III-118 |
| T2-93 | I-3 | II-1 | III-119 |
| T2-94 | I-3 | II-1 | III-120 |
| T2-95 | I-3 | II-1 | III-121 |
| T2-96 | I-3 | II-1 | III-122 |
| T2-97 | I-3 | II-1 | III-123 |
| T2-98 | I-3 | II-1 | III-124 |
| T2-99 | I-3 | II-1 | III-125 |
| T2-100 | I-3 | II-1 | III-126 |
| T2-101 | I-3 | II-1 | III-127 |
| T2-102 | I-3 | II-1 | III-128 |
| T2-103 | I-3 | II-1 | III-129 |
| T2-104 | I-3 | II-1 | III-130 |
| T2-105 | I-3 | II-1 | III-131 |
| T2-106 | I-3 | II-1 | III-132 |
| T2-107 | I-3 | II-1 | III-133 |
| T2-108 | I-3 | II-1 | III-134 |

| composition | I | II | III |
|---|---|---|---|
| T2-109 | I-3 | II-1 | III-135 |
| T2-110 | I-3 | II-1 | III-136 |
| T2-111 | I-3 | II-1 | III-137 |
| T2-112 | I-3 | II-1 | III-138 |
| T2-113 | I-3 | II-1 | III-140 |
| T2-114 | I-3 | II-1 | III-141 |
| T2-115 | I-3 | II-1 | III-142 |
| T2-116 | I-3 | II-1 | III-143 |
| T2-117 | I-3 | II-1 | III-144 |
| T2-118 | I-3 | II-1 | III-145 |
| T2-119 | I-3 | II-1 | III-146 |
| T2-120 | I-3 | II-1 | III-147 |
| T2-121 | I-3 | II-1 | III-148 |
| T2-122 | I-3 | II-1 | III-149 |
| T2-123 | I-3 | II-1 | III-150 |
| T2-124 | I-3 | II-1 | III-151 |
| T2-125 | I-3 | II-1 | III-152 |
| T2-126 | I-3 | II-1 | III-153 |
| T2-127 | I-3 | II-1 | III-154 |
| T2-128 | I-3 | II-1 | III-155 |
| T2-129 | I-3 | II-1 | III-156 |
| T2-130 | I-3 | II-1 | III-157 |
| T2-131 | I-3 | II-1 | III-158 |
| T2-132 | I-3 | II-1 | III-159 |
| T2-133 | I-3 | II-1 | III-160 |
| T2-134 | I-3 | II-1 | III-161 |
| T2-135 | I-3 | II-1 | III-162 |
| T2-136 | I-3 | II-1 | III-163 |
| T2-137 | I-3 | II-1 | III-164 |
| T2-138 | I-3 | II-1 | III-165 |
| T2-139 | I-3 | II-1 | III-166 |
| T2-140 | I-3 | II-1 | III-167 |
| T2-141 | I-3 | II-1 | III-168 |
| T2-142 | I-3 | II-1 | III-169 |
| T2-143 | I-3 | II-1 | III-170 |
| T2-144 | I-3 | II-1 | III-171 |
| T2-145 | I-3 | II-1 | III-172 |
| T2-146 | I-3 | II-1 | III-173 |
| T2-147 | I-3 | II-1 | III-174 |
| T2-148 | I-3 | II-1 | III-175 |

| composition | I | II | III |
|---|---|---|---|
| T2-149 | I-3 | II-1 | III-176 |
| T2-150 | I-3 | II-1 | III-177 |
| T2-151 | I-3 | II-1 | III-178 |
| T2-152 | I-3 | II-1 | III-179 |
| T2-153 | I-3 | II-1 | III-180 |
| T2-154 | I-3 | II-1 | III-181 |
| T2-155 | I-3 | II-1 | III-182 |
| T2-156 | I-3 | II-1 | III-183 |
| T2-157 | I-3 | II-1 | III-184 |
| T2-158 | I-3 | II-1 | III-185 |
| T2-159 | I-3 | II-1 | III-186 |
| T2-160 | I-3 | II-1 | III-187 |
| T2-161 | I-3 | II-1 | III-188 |
| T2-162 | I-3 | II-1 | III-189 |
| T2-163 | I-3 | II-1 | III-190 |
| T2-164 | I-3 | II-1 | III-191 |
| T2-165 | I-3 | II-1 | III-192 |
| T2-166 | I-3 | II-1 | III-193 |
| T2-167 | I-3 | II-1 | III-194 |
| T2-168 | I-3 | II-1 | III-195 |
| T2-169 | I-3 | II-1 | III-196 |
| T2-170 | I-3 | II-1 | III-197 |
| T2-171 | I-3 | II-1 | III-198 |
| T2-172 | I-3 | II-1 | III-199 |
| T2-173 | I-3 | II-1 | III-200 |
| T2-174 | I-3 | II-1 | III-201 |
| T2-175 | I-3 | II-1 | III-202 |
| T2-176 | I-3 | II-1 | III-203 |
| T2-177 | I-3 | II-2 | III-27 |
| T2-178 | I-3 | II-2 | III-28 |
| T2-179 | I-3 | II-2 | III-29 |
| T2-180 | I-3 | II-2 | III-30 |
| T2-181 | I-3 | II-2 | III-31 |
| T2-182 | I-3 | II-2 | III-32 |
| T2-183 | I-3 | II-2 | III-33 |
| T2-184 | I-3 | II-2 | III-34 |
| T2-185 | I-3 | II-2 | III-35 |
| T2-186 | I-3 | II-2 | III-36 |
| T2-187 | I-3 | II-2 | III-37 |
| T2-188 | I-3 | II-2 | III-38 |

| composition | I | II | III |
|---|---|---|---|
| T2-189 | I-3 | II-2 | III-39 |
| T2-190 | I-3 | II-2 | III-40 |
| T2-191 | I-3 | II-2 | III-41 |
| T2-192 | I-3 | II-2 | III-42 |
| T2-193 | I-3 | II-2 | III-43 |
| T2-194 | I-3 | II-2 | III-44 |
| T2-195 | I-3 | II-2 | III-45 |
| T2-196 | I-3 | II-2 | III-46 |
| T2-197 | I-3 | II-2 | III-47 |
| T2-198 | I-3 | II-2 | III-48 |
| T2-199 | I-3 | II-2 | III-49 |
| T2-200 | I-3 | II-2 | III-50 |
| T2-201 | I-3 | II-2 | III-51 |
| T2-202 | I-3 | II-2 | III-52 |
| T2-203 | I-3 | II-2 | III-53 |
| T2-204 | I-3 | II-2 | III-54 |
| T2-205 | I-3 | II-2 | III-55 |
| T2-206 | I-3 | II-2 | III-56 |
| T2-207 | I-3 | II-2 | III-57 |
| T2-208 | I-3 | II-2 | III-58 |
| T2-209 | I-3 | II-2 | III-59 |
| T2-210 | I-3 | II-2 | III-60 |
| T2-211 | I-3 | II-2 | III-61 |
| T2-212 | I-3 | II-2 | III-62 |
| T2-213 | I-3 | II-2 | III-63 |
| T2-214 | I-3 | II-2 | III-64 |
| T2-215 | I-3 | II-2 | III-65 |
| T2-216 | I-3 | II-2 | III-66 |
| T2-217 | I-3 | II-2 | III-67 |
| T2-218 | I-3 | II-2 | III-68 |
| T2-219 | I-3 | II-2 | III-69 |
| T2-220 | I-3 | II-2 | III-70 |
| T2-221 | I-3 | II-2 | III-71 |
| T2-222 | I-3 | II-2 | III-72 |
| T2-223 | I-3 | II-2 | III-73 |
| T2-224 | I-3 | II-2 | III-74 |
| T2-225 | I-3 | II-2 | III-75 |
| T2-226 | I-3 | II-2 | III-76 |
| T2-227 | I-3 | II-2 | III-77 |
| T2-228 | I-3 | II-2 | III-78 |

| composition | I | II | III |
|---|---|---|---|
| T2-229 | I-3 | II-2 | III-79 |
| T2-230 | I-3 | II-2 | III-80 |
| T2-231 | I-3 | II-2 | III-81 |
| T2-232 | I-3 | II-2 | III-82 |
| T2-233 | I-3 | II-2 | III-83 |
| T2-234 | I-3 | II-2 | III-84 |
| T2-235 | I-3 | II-2 | III-85 |
| T2-236 | I-3 | II-2 | III-86 |
| T2-237 | I-3 | II-2 | III-87 |
| T2-238 | I-3 | II-2 | III-88 |
| T2-239 | I-3 | II-2 | III-89 |
| T2-240 | I-3 | II-2 | III-90 |
| T2-241 | I-3 | II-2 | III-91 |
| T2-242 | I-3 | II-2 | III-92 |
| T2-243 | I-3 | II-2 | III-93 |
| T2-244 | I-3 | II-2 | III-94 |
| T2-245 | I-3 | II-2 | III-95 |
| T2-246 | I-3 | II-2 | III-96 |
| T2-247 | I-3 | II-2 | III-97 |
| T2-248 | I-3 | II-2 | III-98 |
| T2-249 | I-3 | II-2 | III-99 |
| T2-250 | I-3 | II-2 | III-100 |
| T2-251 | I-3 | II-2 | III-101 |
| T2-252 | I-3 | II-2 | III-102 |
| T2-253 | I-3 | II-2 | III-103 |
| T2-254 | I-3 | II-2 | III-104 |
| T2-255 | I-3 | II-2 | III-105 |
| T2-256 | I-3 | II-2 | III-106 |
| T2-257 | I-3 | II-2 | III-107 |
| T2-258 | I-3 | II-2 | III-108 |
| T2-259 | I-3 | II-2 | III-109 |
| T2-260 | I-3 | II-2 | III-110 |
| T2-261 | I-3 | II-2 | III-111 |
| T2-262 | I-3 | II-2 | III-112 |
| T2-263 | I-3 | II-2 | III-113 |
| T2-264 | I-3 | II-2 | III-114 |
| T2-265 | I-3 | II-2 | III-115 |
| T2-266 | I-3 | II-2 | III-116 |
| T2-267 | I-3 | II-2 | III-117 |
| T2-268 | I-3 | II-2 | III-118 |

| composition | I | II | III |
|---|---|---|---|
| T2-269 | I-3 | II-2 | III-119 |
| T2-270 | I-3 | II-2 | III-120 |
| T2-271 | I-3 | II-2 | III-121 |
| T2-272 | I-3 | II-2 | III-122 |
| T2-273 | I-3 | II-2 | III-123 |
| T2-274 | I-3 | II-2 | III-124 |
| T2-275 | I-3 | II-2 | III-125 |
| T2-276 | I-3 | II-2 | III-126 |
| T2-277 | I-3 | II-2 | III-127 |
| T2-278 | I-3 | II-2 | III-128 |
| T2-279 | I-3 | II-2 | III-129 |
| T2-280 | I-3 | II-2 | III-130 |
| T2-281 | I-3 | II-2 | III-131 |
| T2-282 | I-3 | II-2 | III-132 |
| T2-283 | I-3 | II-2 | III-133 |
| T2-284 | I-3 | II-2 | III-134 |
| T2-285 | I-3 | II-2 | III-135 |
| T2-286 | I-3 | II-2 | III-136 |
| T2-287 | I-3 | II-2 | III-137 |
| T2-288 | I-3 | II-2 | III-138 |
| T2-289 | I-3 | II-2 | III-140 |
| T2-290 | I-3 | II-2 | III-141 |
| T2-291 | I-3 | II-2 | III-142 |
| T2-292 | I-3 | II-2 | III-143 |
| T2-293 | I-3 | II-2 | III-144 |
| T2-294 | I-3 | II-2 | III-145 |
| T2-295 | I-3 | II-2 | III-146 |
| T2-296 | I-3 | II-2 | III-147 |
| T2-297 | I-3 | II-2 | III-148 |
| T2-298 | I-3 | II-2 | III-149 |
| T2-299 | I-3 | II-2 | III-150 |
| T2-300 | I-3 | II-2 | III-151 |
| T2-301 | I-3 | II-2 | III-152 |
| T2-302 | I-3 | II-2 | III-153 |
| T2-303 | I-3 | II-2 | III-154 |
| T2-304 | I-3 | II-2 | III-155 |
| T2-305 | I-3 | II-2 | III-156 |
| T2-306 | I-3 | II-2 | III-157 |
| T2-307 | I-3 | II-2 | III-158 |
| T2-308 | I-3 | II-2 | III-159 |

| composition | I | II | III |
|---|---|---|---|
| T2-309 | I-3 | II-2 | III-160 |
| T2-310 | I-3 | II-2 | III-161 |
| T2-311 | I-3 | II-2 | III-162 |
| T2-312 | I-3 | II-2 | III-163 |
| T2-313 | I-3 | II-2 | III-164 |
| T2-314 | I-3 | II-2 | III-165 |
| T2-315 | I-3 | II-2 | III-166 |
| T2-316 | I-3 | II-2 | III-167 |
| T2-317 | I-3 | II-2 | III-168 |
| T2-318 | I-3 | II-2 | III-169 |
| T2-319 | I-3 | II-2 | III-170 |
| T2-320 | I-3 | II-2 | III-171 |
| T2-321 | I-3 | II-2 | III-172 |
| T2-322 | I-3 | II-2 | III-173 |
| T2-323 | I-3 | II-2 | III-174 |
| T2-324 | I-3 | II-2 | III-175 |
| T2-325 | I-3 | II-2 | III-176 |
| T2-326 | I-3 | II-2 | III-177 |
| T2-327 | I-3 | II-2 | III-178 |
| T2-328 | I-3 | II-2 | III-179 |
| T2-329 | I-3 | II-2 | III-180 |
| T2-330 | I-3 | II-2 | III-181 |
| T2-331 | I-3 | II-2 | III-182 |
| T2-332 | I-3 | II-2 | III-183 |
| T2-333 | I-3 | II-2 | III-184 |
| T2-334 | I-3 | II-2 | III-185 |
| T2-335 | I-3 | II-2 | III-186 |
| T2-336 | I-3 | II-2 | III-187 |
| T2-337 | I-3 | II-2 | III-188 |
| T2-338 | I-3 | II-2 | III-189 |
| T2-339 | I-3 | II-2 | III-190 |
| T2-340 | I-3 | II-2 | III-191 |
| T2-341 | I-3 | II-2 | III-192 |
| T2-342 | I-3 | II-2 | III-193 |
| T2-343 | I-3 | II-2 | III-194 |
| T2-344 | I-3 | II-2 | III-195 |
| T2-345 | I-3 | II-2 | III-196 |
| T2-346 | I-3 | II-2 | III-197 |
| T2-347 | I-3 | II-2 | III-198 |
| T2-348 | I-3 | II-2 | III-199 |

| composition | I | II | III |
|---|---|---|---|
| T2-349 | I-3 | II-2 | III-200 |
| T2-350 | I-3 | II-2 | III-201 |
| T2-351 | I-3 | II-2 | III-202 |
| T2-352 | I-3 | II-2 | III-203 |
| T2-353 | I-3 | II-3 | III-27 |
| T2-354 | I-3 | II-3 | III-28 |
| T2-355 | I-3 | II-3 | III-29 |
| T2-356 | I-3 | II-3 | III-30 |
| T2-357 | I-3 | II-3 | III-31 |
| T2-358 | I-3 | II-3 | III-32 |
| T2-359 | I-3 | II-3 | III-33 |
| T2-360 | I-3 | II-3 | III-34 |
| T2-361 | I-3 | II-3 | III-35 |
| T2-362 | I-3 | II-3 | III-36 |
| T2-363 | I-3 | II-3 | III-37 |
| T2-364 | I-3 | II-3 | III-38 |
| T2-365 | I-3 | II-3 | III-39 |
| T2-366 | I-3 | II-3 | III-40 |
| T2-367 | I-3 | II-3 | III-41 |
| T2-368 | I-3 | II-3 | III-42 |
| T2-369 | I-3 | II-3 | III-43 |
| T2-370 | I-3 | II-3 | III-44 |
| T2-371 | I-3 | II-3 | III-45 |
| T2-372 | I-3 | II-3 | III-46 |
| T2-373 | I-3 | II-3 | III-47 |
| T2-374 | I-3 | II-3 | III-48 |
| T2-375 | I-3 | II-3 | III-49 |
| T2-376 | I-3 | II-3 | III-50 |
| T2-377 | I-3 | II-3 | III-51 |
| T2-378 | I-3 | II-3 | III-52 |
| T2-379 | I-3 | II-3 | III-53 |
| T2-380 | I-3 | II-3 | III-54 |
| T2-381 | I-3 | II-3 | III-55 |
| T2-382 | I-3 | II-3 | III-56 |
| T2-383 | I-3 | II-3 | III-57 |
| T2-384 | I-3 | II-3 | III-58 |
| T2-385 | I-3 | II-3 | III-59 |
| T2-386 | I-3 | II-3 | III-60 |
| T2-387 | I-3 | II-3 | III-61 |
| T2-388 | I-3 | II-3 | III-62 |

| composition | I | II | III |
|---|---|---|---|
| T2-389 | I-3 | II-3 | III-63 |
| T2-390 | I-3 | II-3 | III-64 |
| T2-391 | I-3 | II-3 | III-65 |
| T2-392 | I-3 | II-3 | III-66 |
| T2-393 | I-3 | II-3 | III-67 |
| T2-394 | I-3 | II-3 | III-68 |
| T2-395 | I-3 | II-3 | III-69 |
| T2-396 | I-3 | II-3 | III-70 |
| T2-397 | I-3 | II-3 | III-71 |
| T2-398 | I-3 | II-3 | III-72 |
| T2-399 | I-3 | II-3 | III-73 |
| T2-400 | I-3 | II-3 | III-74 |
| T2-401 | I-3 | II-3 | III-75 |
| T2-402 | I-3 | II-3 | III-76 |
| T2-403 | I-3 | II-3 | III-77 |
| T2-404 | I-3 | II-3 | III-78 |
| T2-405 | I-3 | II-3 | III-79 |
| T2-406 | I-3 | II-3 | III-80 |
| T2-407 | I-3 | II-3 | III-81 |
| T2-408 | I-3 | II-3 | III-82 |
| T2-409 | I-3 | II-3 | III-83 |
| T2-410 | I-3 | II-3 | III-84 |
| T2-411 | I-3 | II-3 | III-85 |
| T2-412 | I-3 | II-3 | III-86 |
| T2-413 | I-3 | II-3 | III-87 |
| T2-414 | I-3 | II-3 | III-88 |
| T2-415 | I-3 | II-3 | III-89 |
| T2-416 | I-3 | II-3 | III-90 |
| T2-417 | I-3 | II-3 | III-91 |
| T2-418 | I-3 | II-3 | III-92 |
| T2-419 | I-3 | II-3 | III-93 |
| T2-420 | I-3 | II-3 | III-94 |
| T2-421 | I-3 | II-3 | III-95 |
| T2-422 | I-3 | II-3 | III-96 |
| T2-423 | I-3 | II-3 | III-97 |
| T2-424 | I-3 | II-3 | III-98 |
| T2-425 | I-3 | II-3 | III-99 |
| T2-426 | I-3 | II-3 | III-100 |
| T2-427 | I-3 | II-3 | III-101 |
| T2-428 | I-3 | II-3 | III-102 |

| composition | I | II | III |
|---|---|---|---|
| T2-429 | I-3 | II-3 | III-103 |
| T2-430 | I-3 | II-3 | III-104 |
| T2-431 | I-3 | II-3 | III-105 |
| T2-432 | I-3 | II-3 | III-106 |
| T2-433 | I-3 | II-3 | III-107 |
| T2-434 | I-3 | II-3 | III-108 |
| T2-435 | I-3 | II-3 | III-109 |
| T2-436 | I-3 | II-3 | III-110 |
| T2-437 | I-3 | II-3 | III-111 |
| T2-438 | I-3 | II-3 | III-112 |
| T2-439 | I-3 | II-3 | III-113 |
| T2-440 | I-3 | II-3 | III-114 |
| T2-441 | I-3 | II-3 | III-115 |
| T2-442 | I-3 | II-3 | III-116 |
| T2-443 | I-3 | II-3 | III-117 |
| T2-444 | I-3 | II-3 | III-118 |
| T2-445 | I-3 | II-3 | III-119 |
| T2-446 | I-3 | II-3 | III-120 |
| T2-447 | I-3 | II-3 | III-121 |
| T2-448 | I-3 | II-3 | III-122 |
| T2-449 | I-3 | II-3 | III-123 |
| T2-450 | I-3 | II-3 | III-124 |
| T2-451 | I-3 | II-3 | III-125 |
| T2-452 | I-3 | II-3 | III-126 |
| T2-453 | I-3 | II-3 | III-127 |
| T2-454 | I-3 | II-3 | III-128 |
| T2-455 | I-3 | II-3 | III-129 |
| T2-456 | I-3 | II-3 | III-130 |
| T2-457 | I-3 | II-3 | III-131 |
| T2-458 | I-3 | II-3 | III-132 |
| T2-459 | I-3 | II-3 | III-133 |
| T2-460 | I-3 | II-3 | III-134 |
| T2-461 | I-3 | II-3 | III-135 |
| T2-462 | I-3 | II-3 | III-136 |
| T2-463 | I-3 | II-3 | III-137 |
| T2-464 | I-3 | II-3 | III-138 |
| T2-465 | I-3 | II-3 | III-140 |
| T2-466 | I-3 | II-3 | III-141 |
| T2-467 | I-3 | II-3 | III-142 |
| T2-468 | I-3 | II-3 | III-143 |

| composition | I | II | III |
|---|---|---|---|
| T2-469 | I-3 | II-3 | III-144 |
| T2-470 | I-3 | II-3 | III-145 |
| T2-471 | I-3 | II-3 | III-146 |
| T2-472 | I-3 | II-3 | III-147 |
| T2-473 | I-3 | II-3 | III-148 |
| T2-474 | I-3 | II-3 | III-149 |
| T2-475 | I-3 | II-3 | III-150 |
| T2-476 | I-3 | II-3 | III-151 |
| T2-477 | I-3 | II-3 | III-152 |
| T2-478 | I-3 | II-3 | III-153 |
| T2-479 | I-3 | II-3 | III-154 |
| T2-480 | I-3 | II-3 | III-155 |
| T2-481 | I-3 | II-3 | III-156 |
| T2-482 | I-3 | II-3 | III-157 |
| T2-483 | I-3 | II-3 | III-158 |
| T2-484 | I-3 | II-3 | III-159 |
| T2-485 | I-3 | II-3 | III-160 |
| T2-486 | I-3 | II-3 | III-161 |
| T2-487 | I-3 | II-3 | III-162 |
| T2-488 | I-3 | II-3 | III-163 |
| T2-489 | I-3 | II-3 | III-164 |
| T2-490 | I-3 | II-3 | III-165 |
| T2-491 | I-3 | II-3 | III-166 |
| T2-492 | I-3 | II-3 | III-167 |
| T2-493 | I-3 | II-3 | III-168 |
| T2-494 | I-3 | II-3 | III-169 |
| T2-495 | I-3 | II-3 | III-170 |
| T2-496 | I-3 | II-3 | III-171 |
| T2-497 | I-3 | II-3 | III-172 |
| T2-498 | I-3 | II-3 | III-173 |
| T2-499 | I-3 | II-3 | III-174 |
| T2-500 | I-3 | II-3 | III-175 |
| T2-501 | I-3 | II-3 | III-176 |
| T2-502 | I-3 | II-3 | III-177 |
| T2-503 | I-3 | II-3 | III-178 |
| T2-504 | I-3 | II-3 | III-179 |
| T2-505 | I-3 | II-3 | III-180 |
| T2-506 | I-3 | II-3 | III-181 |
| T2-507 | I-3 | II-3 | III-182 |
| T2-508 | I-3 | II-3 | III-183 |
| T2-509 | I-3 | II-3 | III-184 |
| T2-510 | I-3 | II-3 | III-185 |
| T2-511 | I-3 | II-3 | III-186 |
| T2-512 | I-3 | II-3 | III-187 |
| T2-513 | I-3 | II-3 | III-188 |
| T2-514 | I-3 | II-3 | III-189 |
| T2-515 | I-3 | II-3 | III-190 |
| T2-516 | I-3 | II-3 | III-191 |
| T2-517 | I-3 | II-3 | III-192 |
| T2-518 | I-3 | II-3 | III-193 |
| T2-519 | I-3 | II-3 | III-194 |
| T2-520 | I-3 | II-3 | III-195 |
| T2-521 | I-3 | II-3 | III-196 |
| T2-522 | I-3 | II-3 | III-197 |
| T2-523 | I-3 | II-3 | III-198 |
| T2-524 | I-3 | II-3 | III-199 |
| T2-525 | I-3 | II-3 | III-200 |
| T2-526 | I-3 | II-3 | III-201 |
| T2-527 | I-3 | II-3 | III-202 |
| T2-528 | I-3 | II-3 | III-203 |
| T2-529 | I-3 | II-4 | III-27 |
| T2-530 | I-3 | II-4 | III-28 |
| T2-531 | I-3 | II-4 | III-29 |
| T2-532 | I-3 | II-4 | III-30 |
| T2-533 | I-3 | II-4 | III-31 |
| T2-534 | I-3 | II-4 | III-32 |
| T2-535 | I-3 | II-4 | III-33 |
| T2-536 | I-3 | II-4 | III-34 |
| T2-537 | I-3 | II-4 | III-35 |
| T2-538 | I-3 | II-4 | III-36 |
| T2-539 | I-3 | II-4 | III-37 |
| T2-540 | I-3 | II-4 | III-38 |
| T2-541 | I-3 | II-4 | III-39 |
| T2-542 | I-3 | II-4 | III-40 |
| T2-543 | I-3 | II-4 | III-41 |
| T2-544 | I-3 | II-4 | III-42 |
| T2-545 | I-3 | II-4 | III-43 |
| T2-546 | I-3 | II-4 | III-44 |
| T2-547 | I-3 | II-4 | III-45 |
| T2-548 | I-3 | II-4 | III-46 |

| composition | I | II | III |
|---|---|---|---|
| T2-549 | I-3 | II-4 | III-47 |
| T2-550 | I-3 | II-4 | III-48 |
| T2-551 | I-3 | II-4 | III-49 |
| T2-552 | I-3 | II-4 | III-50 |
| T2-553 | I-3 | II-4 | III-51 |
| T2-554 | I-3 | II-4 | III-52 |
| T2-555 | I-3 | II-4 | III-53 |
| T2-556 | I-3 | II-4 | III-54 |
| T2-557 | I-3 | II-4 | III-55 |
| T2-558 | I-3 | II-4 | III-56 |
| T2-559 | I-3 | II-4 | III-57 |
| T2-560 | I-3 | II-4 | III-58 |
| T2-561 | I-3 | II-4 | III-59 |
| T2-562 | I-3 | II-4 | III-60 |
| T2-563 | I-3 | II-4 | III-61 |
| T2-564 | I-3 | II-4 | III-62 |
| T2-565 | I-3 | II-4 | III-63 |
| T2-566 | I-3 | II-4 | III-64 |
| T2-567 | I-3 | II-4 | III-65 |
| T2-568 | I-3 | II-4 | III-66 |
| T2-569 | I-3 | II-4 | III-67 |
| T2-570 | I-3 | II-4 | III-68 |
| T2-571 | I-3 | II-4 | III-69 |
| T2-572 | I-3 | II-4 | III-70 |
| T2-573 | I-3 | II-4 | III-71 |
| T2-574 | I-3 | II-4 | III-72 |
| T2-575 | I-3 | II-4 | III-73 |
| T2-576 | I-3 | II-4 | III-74 |
| T2-577 | I-3 | II-4 | III-75 |
| T2-578 | I-3 | II-4 | III-76 |
| T2-579 | I-3 | II-4 | III-77 |
| T2-580 | I-3 | II-4 | III-78 |
| T2-581 | I-3 | II-4 | III-79 |
| T2-582 | I-3 | II-4 | III-80 |
| T2-583 | I-3 | II-4 | III-81 |
| T2-584 | I-3 | II-4 | III-82 |
| T2-585 | I-3 | II-4 | III-83 |
| T2-586 | I-3 | II-4 | III-84 |
| T2-587 | I-3 | II-4 | III-85 |
| T2-588 | I-3 | II-4 | III-86 |

| composition | I | II | III |
|---|---|---|---|
| T2-589 | I-3 | II-4 | III-87 |
| T2-590 | I-3 | II-4 | III-88 |
| T2-591 | I-3 | II-4 | III-89 |
| T2-592 | I-3 | II-4 | III-90 |
| T2-593 | I-3 | II-4 | III-91 |
| T2-594 | I-3 | II-4 | III-92 |
| T2-595 | I-3 | II-4 | III-93 |
| T2-596 | I-3 | II-4 | III-94 |
| T2-597 | I-3 | II-4 | III-95 |
| T2-598 | I-3 | II-4 | III-96 |
| T2-599 | I-3 | II-4 | III-97 |
| T2-600 | I-3 | II-4 | III-98 |
| T2-601 | I-3 | II-4 | III-99 |
| T2-602 | I-3 | II-4 | III-100 |
| T2-603 | I-3 | II-4 | III-101 |
| T2-604 | I-3 | II-4 | III-102 |
| T2-605 | I-3 | II-4 | III-103 |
| T2-606 | I-3 | II-4 | III-104 |
| T2-607 | I-3 | II-4 | III-105 |
| T2-608 | I-3 | II-4 | III-106 |
| T2-609 | I-3 | II-4 | III-107 |
| T2-610 | I-3 | II-4 | III-108 |
| T2-611 | I-3 | II-4 | III-109 |
| T2-612 | I-3 | II-4 | III-110 |
| T2-613 | I-3 | II-4 | III-111 |
| T2-614 | I-3 | II-4 | III-112 |
| T2-615 | I-3 | II-4 | III-113 |
| T2-616 | I-3 | II-4 | III-114 |
| T2-617 | I-3 | II-4 | III-115 |
| T2-618 | I-3 | II-4 | III-116 |
| T2-619 | I-3 | II-4 | III-117 |
| T2-620 | I-3 | II-4 | III-118 |
| T2-621 | I-3 | II-4 | III-119 |
| T2-622 | I-3 | II-4 | III-120 |
| T2-623 | I-3 | II-4 | III-121 |
| T2-624 | I-3 | II-4 | III-122 |
| T2-625 | I-3 | II-4 | III-123 |
| T2-626 | I-3 | II-4 | III-124 |
| T2-627 | I-3 | II-4 | III-125 |
| T2-628 | I-3 | II-4 | III-126 |

| composition | I | II | III |
|---|---|---|---|
| T2-629 | I-3 | II-4 | III-127 |
| T2-630 | I-3 | II-4 | III-128 |
| T2-631 | I-3 | II-4 | III-129 |
| T2-632 | I-3 | II-4 | III-130 |
| T2-633 | I-3 | II-4 | III-131 |
| T2-634 | I-3 | II-4 | III-132 |
| T2-635 | I-3 | II-4 | III-133 |
| T2-636 | I-3 | II-4 | III-134 |
| T2-637 | I-3 | II-4 | III-135 |
| T2-638 | I-3 | II-4 | III-136 |
| T2-639 | I-3 | II-4 | III-137 |
| T2-640 | I-3 | II-4 | III-138 |
| T2-641 | I-3 | II-4 | III-140 |
| T2-642 | I-3 | II-4 | III-141 |
| T2-643 | I-3 | II-4 | III-142 |
| T2-644 | I-3 | II-4 | III-143 |
| T2-645 | I-3 | II-4 | III-144 |
| T2-646 | I-3 | II-4 | III-145 |
| T2-647 | I-3 | II-4 | III-146 |
| T2-648 | I-3 | II-4 | III-147 |
| T2-649 | I-3 | II-4 | III-148 |
| T2-650 | I-3 | II-4 | III-149 |
| T2-651 | I-3 | II-4 | III-150 |
| T2-652 | I-3 | II-4 | III-151 |
| T2-653 | I-3 | II-4 | III-152 |
| T2-654 | I-3 | II-4 | III-153 |
| T2-655 | I-3 | II-4 | III-154 |
| T2-656 | I-3 | II-4 | III-155 |
| T2-657 | I-3 | II-4 | III-156 |
| T2-658 | I-3 | II-4 | III-157 |
| T2-659 | I-3 | II-4 | III-158 |
| T2-660 | I-3 | II-4 | III-159 |
| T2-661 | I-3 | II-4 | III-160 |
| T2-662 | I-3 | II-4 | III-161 |
| T2-663 | I-3 | II-4 | III-162 |
| T2-664 | I-3 | II-4 | III-163 |
| T2-665 | I-3 | II-4 | III-164 |
| T2-666 | I-3 | II-4 | III-165 |
| T2-667 | I-3 | II-4 | III-166 |
| T2-668 | I-3 | II-4 | III-167 |

| composition | I | II | III |
|---|---|---|---|
| T2-669 | I-3 | II-4 | III-168 |
| T2-670 | I-3 | II-4 | III-169 |
| T2-671 | I-3 | II-4 | III-170 |
| T2-672 | I-3 | II-4 | III-171 |
| T2-673 | I-3 | II-4 | III-172 |
| T2-674 | I-3 | II-4 | III-173 |
| T2-675 | I-3 | II-4 | III-174 |
| T2-676 | I-3 | II-4 | III-175 |
| T2-677 | I-3 | II-4 | III-176 |
| T2-678 | I-3 | II-4 | III-177 |
| T2-679 | I-3 | II-4 | III-178 |
| T2-680 | I-3 | II-4 | III-179 |
| T2-681 | I-3 | II-4 | III-180 |
| T2-682 | I-3 | II-4 | III-181 |
| T2-683 | I-3 | II-4 | III-182 |
| T2-684 | I-3 | II-4 | III-183 |
| T2-685 | I-3 | II-4 | III-184 |
| T2-686 | I-3 | II-4 | III-185 |
| T2-687 | I-3 | II-4 | III-186 |
| T2-688 | I-3 | II-4 | III-187 |
| T2-689 | I-3 | II-4 | III-188 |
| T2-690 | I-3 | II-4 | III-189 |
| T2-691 | I-3 | II-4 | III-190 |
| T2-692 | I-3 | II-4 | III-191 |
| T2-693 | I-3 | II-4 | III-192 |
| T2-694 | I-3 | II-4 | III-193 |
| T2-695 | I-3 | II-4 | III-194 |
| T2-696 | I-3 | II-4 | III-195 |
| T2-697 | I-3 | II-4 | III-196 |
| T2-698 | I-3 | II-4 | III-197 |
| T2-699 | I-3 | II-4 | III-198 |
| T2-700 | I-3 | II-4 | III-199 |
| T2-701 | I-3 | II-4 | III-200 |
| T2-702 | I-3 | II-4 | III-201 |
| T2-703 | I-3 | II-4 | III-202 |
| T2-704 | I-3 | II-4 | III-203 |
| T2-705 | I-3 | II-5 | III-27 |
| T2-706 | I-3 | II-5 | III-28 |
| T2-707 | I-3 | II-5 | III-29 |
| T2-708 | I-3 | II-5 | III-30 |

| composition | I | II | III |
|---|---|---|---|
| T2-709 | I-3 | II-5 | III-31 |
| T2-710 | I-3 | II-5 | III-32 |
| T2-711 | I-3 | II-5 | III-33 |
| T2-712 | I-3 | II-5 | III-34 |
| T2-713 | I-3 | II-5 | III-35 |
| T2-714 | I-3 | II-5 | III-36 |
| T2-715 | I-3 | II-5 | III-37 |
| T2-716 | I-3 | II-5 | III-38 |
| T2-717 | I-3 | II-5 | III-39 |
| T2-718 | I-3 | II-5 | III-40 |
| T2-719 | I-3 | II-5 | III-41 |
| T2-720 | I-3 | II-5 | III-42 |
| T2-721 | I-3 | II-5 | III-43 |
| T2-722 | I-3 | II-5 | III-44 |
| T2-723 | I-3 | II-5 | III-45 |
| T2-724 | I-3 | II-5 | III-46 |
| T2-725 | I-3 | II-5 | III-47 |
| T2-726 | I-3 | II-5 | III-48 |
| T2-727 | I-3 | II-5 | III-49 |
| T2-728 | I-3 | II-5 | III-50 |
| T2-729 | I-3 | II-5 | III-51 |
| T2-730 | I-3 | II-5 | III-52 |
| T2-731 | I-3 | II-5 | III-53 |
| T2-732 | I-3 | II-5 | III-54 |
| T2-733 | I-3 | II-5 | III-55 |
| T2-734 | I-3 | II-5 | III-56 |
| T2-735 | I-3 | II-5 | III-57 |
| T2-736 | I-3 | II-5 | III-58 |
| T2-737 | I-3 | II-5 | III-59 |
| T2-738 | I-3 | II-5 | III-60 |
| T2-739 | I-3 | II-5 | III-61 |
| T2-740 | I-3 | II-5 | III-62 |
| T2-741 | I-3 | II-5 | III-63 |
| T2-742 | I-3 | II-5 | III-64 |
| T2-743 | I-3 | II-5 | III-65 |
| T2-744 | I-3 | II-5 | III-66 |
| T2-745 | I-3 | II-5 | III-67 |
| T2-746 | I-3 | II-5 | III-68 |
| T2-747 | I-3 | II-5 | III-69 |
| T2-748 | I-3 | II-5 | III-70 |

| composition | I | II | III |
|---|---|---|---|
| T2-749 | I-3 | II-5 | III-71 |
| T2-750 | I-3 | II-5 | III-72 |
| T2-751 | I-3 | II-5 | III-73 |
| T2-752 | I-3 | II-5 | III-74 |
| T2-753 | I-3 | II-5 | III-75 |
| T2-754 | I-3 | II-5 | III-76 |
| T2-755 | I-3 | II-5 | III-77 |
| T2-756 | I-3 | II-5 | III-78 |
| T2-757 | I-3 | II-5 | III-79 |
| T2-758 | I-3 | II-5 | III-80 |
| T2-759 | I-3 | II-5 | III-81 |
| T2-760 | I-3 | II-5 | III-82 |
| T2-761 | I-3 | II-5 | III-83 |
| T2-762 | I-3 | II-5 | III-84 |
| T2-763 | I-3 | II-5 | III-85 |
| T2-764 | I-3 | II-5 | III-86 |
| T2-765 | I-3 | II-5 | III-87 |
| T2-766 | I-3 | II-5 | III-88 |
| T2-767 | I-3 | II-5 | III-89 |
| T2-768 | I-3 | II-5 | III-90 |
| T2-769 | I-3 | II-5 | III-91 |
| T2-770 | I-3 | II-5 | III-92 |
| T2-771 | I-3 | II-5 | III-93 |
| T2-772 | I-3 | II-5 | III-94 |
| T2-773 | I-3 | II-5 | III-95 |
| T2-774 | I-3 | II-5 | III-96 |
| T2-775 | I-3 | II-5 | III-97 |
| T2-776 | I-3 | II-5 | III-98 |
| T2-777 | I-3 | II-5 | III-99 |
| T2-778 | I-3 | II-5 | III-100 |
| T2-779 | I-3 | II-5 | III-101 |
| T2-780 | I-3 | II-5 | III-102 |
| T2-781 | I-3 | II-5 | III-103 |
| T2-782 | I-3 | II-5 | III-104 |
| T2-783 | I-3 | II-5 | III-105 |
| T2-784 | I-3 | II-5 | III-106 |
| T2-785 | I-3 | II-5 | III-107 |
| T2-786 | I-3 | II-5 | III-108 |
| T2-787 | I-3 | II-5 | III-109 |
| T2-788 | I-3 | II-5 | III-110 |

| composition | I | II | III |
|---|---|---|---|
| T2-789 | I-3 | II-5 | III-111 |
| T2-790 | I-3 | II-5 | III-112 |
| T2-791 | I-3 | II-5 | III-113 |
| T2-792 | I-3 | II-5 | III-114 |
| T2-793 | I-3 | II-5 | III-115 |
| T2-794 | I-3 | II-5 | III-116 |
| T2-795 | I-3 | II-5 | III-117 |
| T2-796 | I-3 | II-5 | III-118 |
| T2-797 | I-3 | II-5 | III-119 |
| T2-798 | I-3 | II-5 | III-120 |
| T2-799 | I-3 | II-5 | III-121 |
| T2-800 | I-3 | II-5 | III-122 |
| T2-801 | I-3 | II-5 | III-123 |
| T2-802 | I-3 | II-5 | III-124 |
| T2-803 | I-3 | II-5 | III-125 |
| T2-804 | I-3 | II-5 | III-126 |
| T2-805 | I-3 | II-5 | III-127 |
| T2-806 | I-3 | II-5 | III-128 |
| T2-807 | I-3 | II-5 | III-129 |
| T2-808 | I-3 | II-5 | III-130 |
| T2-809 | I-3 | II-5 | III-131 |
| T2-810 | I-3 | II-5 | III-132 |
| T2-811 | I-3 | II-5 | III-133 |
| T2-812 | I-3 | II-5 | III-134 |
| T2-813 | I-3 | II-5 | III-135 |
| T2-814 | I-3 | II-5 | III-136 |
| T2-815 | I-3 | II-5 | III-137 |
| T2-816 | I-3 | II-5 | III-138 |
| T2-817 | I-3 | II-5 | III-140 |
| T2-818 | I-3 | II-5 | III-141 |
| T2-819 | I-3 | II-5 | III-142 |
| T2-820 | I-3 | II-5 | III-143 |
| T2-821 | I-3 | II-5 | III-144 |
| T2-822 | I-3 | II-5 | III-145 |
| T2-823 | I-3 | II-5 | III-146 |
| T2-824 | I-3 | II-5 | III-147 |
| T2-825 | I-3 | II-5 | III-148 |
| T2-826 | I-3 | II-5 | III-149 |
| T2-827 | I-3 | II-5 | III-150 |
| T2-828 | I-3 | II-5 | III-151 |

| composition | I | II | III |
|---|---|---|---|
| T2-829 | I-3 | II-5 | III-152 |
| T2-830 | I-3 | II-5 | III-153 |
| T2-831 | I-3 | II-5 | III-154 |
| T2-832 | I-3 | II-5 | III-155 |
| T2-833 | I-3 | II-5 | III-156 |
| T2-834 | I-3 | II-5 | III-157 |
| T2-835 | I-3 | II-5 | III-158 |
| T2-836 | I-3 | II-5 | III-159 |
| T2-837 | I-3 | II-5 | III-160 |
| T2-838 | I-3 | II-5 | III-161 |
| T2-839 | I-3 | II-5 | III-162 |
| T2-840 | I-3 | II-5 | III-163 |
| T2-841 | I-3 | II-5 | III-164 |
| T2-842 | I-3 | II-5 | III-165 |
| T2-843 | I-3 | II-5 | III-166 |
| T2-844 | I-3 | II-5 | III-167 |
| T2-845 | I-3 | II-5 | III-168 |
| T2-846 | I-3 | II-5 | III-169 |
| T2-847 | I-3 | II-5 | III-170 |
| T2-848 | I-3 | II-5 | III-171 |
| T2-849 | I-3 | II-5 | III-172 |
| T2-850 | I-3 | II-5 | III-173 |
| T2-851 | I-3 | II-5 | III-174 |
| T2-852 | I-3 | II-5 | III-175 |
| T2-853 | I-3 | II-5 | III-176 |
| T2-854 | I-3 | II-5 | III-177 |
| T2-855 | I-3 | II-5 | III-178 |
| T2-856 | I-3 | II-5 | III-179 |
| T2-857 | I-3 | II-5 | III-180 |
| T2-858 | I-3 | II-5 | III-181 |
| T2-859 | I-3 | II-5 | III-182 |
| T2-860 | I-3 | II-5 | III-183 |
| T2-861 | I-3 | II-5 | III-184 |
| T2-862 | I-3 | II-5 | III-185 |
| T2-863 | I-3 | II-5 | III-186 |
| T2-864 | I-3 | II-5 | III-187 |
| T2-865 | I-3 | II-5 | III-188 |
| T2-866 | I-3 | II-5 | III-189 |
| T2-867 | I-3 | II-5 | III-190 |
| T2-868 | I-3 | II-5 | III-191 |

| composition | I | II | III |
|---|---|---|---|
| T2-869 | I-3 | II-5 | III-192 |
| T2-870 | I-3 | II-5 | III-193 |
| T2-871 | I-3 | II-5 | III-194 |
| T2-872 | I-3 | II-5 | III-195 |
| T2-873 | I-3 | II-5 | III-196 |
| T2-874 | I-3 | II-5 | III-197 |
| T2-875 | I-3 | II-5 | III-198 |
| T2-876 | I-3 | II-5 | III-199 |
| T2-877 | I-3 | II-5 | III-200 |
| T2-878 | I-3 | II-5 | III-201 |
| T2-879 | I-3 | II-5 | III-202 |
| T2-880 | I-3 | II-5 | III-203 |
| T2-881 | I-3 | II-6 | III-27 |
| T2-882 | I-3 | II-6 | III-28 |
| T2-883 | I-3 | II-6 | III-29 |
| T2-884 | I-3 | II-6 | III-30 |
| T2-885 | I-3 | II-6 | III-31 |
| T2-886 | I-3 | II-6 | III-32 |
| T2-887 | I-3 | II-6 | III-33 |
| T2-888 | I-3 | II-6 | III-34 |
| T2-889 | I-3 | II-6 | III-35 |
| T2-890 | I-3 | II-6 | III-36 |
| T2-891 | I-3 | II-6 | III-37 |
| T2-892 | I-3 | II-6 | III-38 |
| T2-893 | I-3 | II-6 | III-39 |
| T2-894 | I-3 | II-6 | III-40 |
| T2-895 | I-3 | II-6 | III-41 |
| T2-896 | I-3 | II-6 | III-42 |
| T2-897 | I-3 | II-6 | III-43 |
| T2-898 | I-3 | II-6 | III-44 |
| T2-899 | I-3 | II-6 | III-45 |
| T2-900 | I-3 | II-6 | III-46 |
| T2-901 | I-3 | II-6 | III-47 |
| T2-902 | I-3 | II-6 | III-48 |
| T2-903 | I-3 | II-6 | III-49 |
| T2-904 | I-3 | II-6 | III-50 |
| T2-905 | I-3 | II-6 | III-51 |
| T2-906 | I-3 | II-6 | III-52 |
| T2-907 | I-3 | II-6 | III-53 |
| T2-908 | I-3 | II-6 | III-54 |

| composition | I | II | III |
|---|---|---|---|
| T2-909 | I-3 | II-6 | III-55 |
| T2-910 | I-3 | II-6 | III-56 |
| T2-911 | I-3 | II-6 | III-57 |
| T2-912 | I-3 | II-6 | III-58 |
| T2-913 | I-3 | II-6 | III-59 |
| T2-914 | I-3 | II-6 | III-60 |
| T2-915 | I-3 | II-6 | III-61 |
| T2-916 | I-3 | II-6 | III-62 |
| T2-917 | I-3 | II-6 | III-63 |
| T2-918 | I-3 | II-6 | III-64 |
| T2-919 | I-3 | II-6 | III-65 |
| T2-920 | I-3 | II-6 | III-66 |
| T2-921 | I-3 | II-6 | III-67 |
| T2-922 | I-3 | II-6 | III-68 |
| T2-923 | I-3 | II-6 | III-69 |
| T2-924 | I-3 | II-6 | III-70 |
| T2-925 | I-3 | II-6 | III-71 |
| T2-926 | I-3 | II-6 | III-72 |
| T2-927 | I-3 | II-6 | III-73 |
| T2-928 | I-3 | II-6 | III-74 |
| T2-929 | I-3 | II-6 | III-75 |
| T2-930 | I-3 | II-6 | III-76 |
| T2-931 | I-3 | II-6 | III-77 |
| T2-932 | I-3 | II-6 | III-78 |
| T2-933 | I-3 | II-6 | III-79 |
| T2-934 | I-3 | II-6 | III-80 |
| T2-935 | I-3 | II-6 | III-81 |
| T2-936 | I-3 | II-6 | III-82 |
| T2-937 | I-3 | II-6 | III-83 |
| T2-938 | I-3 | II-6 | III-84 |
| T2-939 | I-3 | II-6 | III-85 |
| T2-940 | I-3 | II-6 | III-86 |
| T2-941 | I-3 | II-6 | III-87 |
| T2-942 | I-3 | II-6 | III-88 |
| T2-943 | I-3 | II-6 | III-89 |
| T2-944 | I-3 | II-6 | III-90 |
| T2-945 | I-3 | II-6 | III-91 |
| T2-946 | I-3 | II-6 | III-92 |
| T2-947 | I-3 | II-6 | III-93 |
| T2-948 | I-3 | II-6 | III-94 |

| composition | I | II | III |
|---|---|---|---|
| T2-949 | I-3 | II-6 | III-95 |
| T2-950 | I-3 | II-6 | III-96 |
| T2-951 | I-3 | II-6 | III-97 |
| T2-952 | I-3 | II-6 | III-98 |
| T2-953 | I-3 | II-6 | III-99 |
| T2-954 | I-3 | II-6 | III-100 |
| T2-955 | I-3 | II-6 | III-101 |
| T2-956 | I-3 | II-6 | III-102 |
| T2-957 | I-3 | II-6 | III-103 |
| T2-958 | I-3 | II-6 | III-104 |
| T2-959 | I-3 | II-6 | III-105 |
| T2-960 | I-3 | II-6 | III-106 |
| T2-961 | I-3 | II-6 | III-107 |
| T2-962 | I-3 | II-6 | III-108 |
| T2-963 | I-3 | II-6 | III-109 |
| T2-964 | I-3 | II-6 | III-110 |
| T2-965 | I-3 | II-6 | III-111 |
| T2-966 | I-3 | II-6 | III-112 |
| T2-967 | I-3 | II-6 | III-113 |
| T2-968 | I-3 | II-6 | III-114 |
| T2-969 | I-3 | II-6 | III-115 |
| T2-970 | I-3 | II-6 | III-116 |
| T2-971 | I-3 | II-6 | III-117 |
| T2-972 | I-3 | II-6 | III-118 |
| T2-973 | I-3 | II-6 | III-119 |
| T2-974 | I-3 | II-6 | III-120 |
| T2-975 | I-3 | II-6 | III-121 |
| T2-976 | I-3 | II-6 | III-122 |
| T2-977 | I-3 | II-6 | III-123 |
| T2-978 | I-3 | II-6 | III-124 |
| T2-979 | I-3 | II-6 | III-125 |
| T2-980 | I-3 | II-6 | III-126 |
| T2-981 | I-3 | II-6 | III-127 |
| T2-982 | I-3 | II-6 | III-128 |
| T2-983 | I-3 | II-6 | III-129 |
| T2-984 | I-3 | II-6 | III-130 |
| T2-985 | I-3 | II-6 | III-131 |
| T2-986 | I-3 | II-6 | III-132 |
| T2-987 | I-3 | II-6 | III-133 |
| T2-988 | I-3 | II-6 | III-134 |

| composition | I | II | III |
|---|---|---|---|
| T2-989 | I-3 | II-6 | III-135 |
| T2-990 | I-3 | II-6 | III-136 |
| T2-991 | I-3 | II-6 | III-137 |
| T2-992 | I-3 | II-6 | III-138 |
| T2-993 | I-3 | II-6 | III-140 |
| T2-994 | I-3 | II-6 | III-141 |
| T2-995 | I-3 | II-6 | III-142 |
| T2-996 | I-3 | II-6 | III-143 |
| T2-997 | I-3 | II-6 | III-144 |
| T2-998 | I-3 | II-6 | III-145 |
| T2-999 | I-3 | II-6 | III-146 |
| T2-1000 | I-3 | II-6 | III-147 |
| T2-1001 | I-3 | II-6 | III-148 |
| T2-1002 | I-3 | II-6 | III-149 |
| T2-1003 | I-3 | II-6 | III-150 |
| T2-1004 | I-3 | II-6 | III-151 |
| T2-1005 | I-3 | II-6 | III-152 |
| T2-1006 | I-3 | II-6 | III-153 |
| T2-1007 | I-3 | II-6 | III-154 |
| T2-1008 | I-3 | II-6 | III-155 |
| T2-1009 | I-3 | II-6 | III-156 |
| T2-1010 | I-3 | II-6 | III-157 |
| T2-1011 | I-3 | II-6 | III-158 |
| T2-1012 | I-3 | II-6 | III-159 |
| T2-1013 | I-3 | II-6 | III-160 |
| T2-1014 | I-3 | II-6 | III-161 |
| T2-1015 | I-3 | II-6 | III-162 |
| T2-1016 | I-3 | II-6 | III-163 |
| T2-1017 | I-3 | II-6 | III-164 |
| T2-1018 | I-3 | II-6 | III-165 |
| T2-1019 | I-3 | II-6 | III-166 |
| T2-1020 | I-3 | II-6 | III-167 |
| T2-1021 | I-3 | II-6 | III-168 |
| T2-1022 | I-3 | II-6 | III-169 |
| T2-1023 | I-3 | II-6 | III-170 |
| T2-1024 | I-3 | II-6 | III-171 |
| T2-1025 | I-3 | II-6 | III-172 |
| T2-1026 | I-3 | II-6 | III-173 |
| T2-1027 | I-3 | II-6 | III-174 |
| T2-1028 | I-3 | II-6 | III-175 |

| composition | I | II | III |
|---|---|---|---|
| T2-1029 | I-3 | II-6 | III-176 |
| T2-1030 | I-3 | II-6 | III-177 |
| T2-1031 | I-3 | II-6 | III-178 |
| T2-1032 | I-3 | II-6 | III-179 |
| T2-1033 | I-3 | II-6 | III-180 |
| T2-1034 | I-3 | II-6 | III-181 |
| T2-1035 | I-3 | II-6 | III-182 |
| T2-1036 | I-3 | II-6 | III-183 |
| T2-1037 | I-3 | II-6 | III-184 |
| T2-1038 | I-3 | II-6 | III-185 |
| T2-1039 | I-3 | II-6 | III-186 |
| T2-1040 | I-3 | II-6 | III-187 |
| T2-1041 | I-3 | II-6 | III-188 |
| T2-1042 | I-3 | II-6 | III-189 |
| T2-1043 | I-3 | II-6 | III-190 |
| T2-1044 | I-3 | II-6 | III-191 |
| T2-1045 | I-3 | II-6 | III-192 |
| T2-1046 | I-3 | II-6 | III-193 |
| T2-1047 | I-3 | II-6 | III-194 |
| T2-1048 | I-3 | II-6 | III-195 |
| T2-1049 | I-3 | II-6 | III-196 |
| T2-1050 | I-3 | II-6 | III-197 |
| T2-1051 | I-3 | II-6 | III-198 |
| T2-1052 | I-3 | II-6 | III-199 |
| T2-1053 | I-3 | II-6 | III-200 |
| T2-1054 | I-3 | II-6 | III-201 |
| T2-1055 | I-3 | II-6 | III-202 |
| T2-1056 | I-3 | II-6 | III-203 |
| T2-1057 | I-3 | II-7 | III-27 |
| T2-1058 | I-3 | II-7 | III-28 |
| T2-1059 | I-3 | II-7 | III-29 |
| T2-1060 | I-3 | II-7 | III-30 |
| T2-1061 | I-3 | II-7 | III-31 |
| T2-1062 | I-3 | II-7 | III-32 |
| T2-1063 | I-3 | II-7 | III-33 |
| T2-1064 | I-3 | II-7 | III-34 |
| T2-1065 | I-3 | II-7 | III-35 |
| T2-1066 | I-3 | II-7 | III-36 |
| T2-1067 | I-3 | II-7 | III-37 |
| T2-1068 | I-3 | II-7 | III-38 |

| composition | I | II | III |
|---|---|---|---|
| T2-1069 | I-3 | II-7 | III-39 |
| T2-1070 | I-3 | II-7 | III-40 |
| T2-1071 | I-3 | II-7 | III-41 |
| T2-1072 | I-3 | II-7 | III-42 |
| T2-1073 | I-3 | II-7 | III-43 |
| T2-1074 | I-3 | II-7 | III-44 |
| T2-1075 | I-3 | II-7 | III-45 |
| T2-1076 | I-3 | II-7 | III-46 |
| T2-1077 | I-3 | II-7 | III-47 |
| T2-1078 | I-3 | II-7 | III-48 |
| T2-1079 | I-3 | II-7 | III-49 |
| T2-1080 | I-3 | II-7 | III-50 |
| T2-1081 | I-3 | II-7 | III-51 |
| T2-1082 | I-3 | II-7 | III-52 |
| T2-1083 | I-3 | II-7 | III-53 |
| T2-1084 | I-3 | II-7 | III-54 |
| T2-1085 | I-3 | II-7 | III-55 |
| T2-1086 | I-3 | II-7 | III-56 |
| T2-1087 | I-3 | II-7 | III-57 |
| T2-1088 | I-3 | II-7 | III-58 |
| T2-1089 | I-3 | II-7 | III-59 |
| T2-1090 | I-3 | II-7 | III-60 |
| T2-1091 | I-3 | II-7 | III-61 |
| T2-1092 | I-3 | II-7 | III-62 |
| T2-1093 | I-3 | II-7 | III-63 |
| T2-1094 | I-3 | II-7 | III-64 |
| T2-1095 | I-3 | II-7 | III-65 |
| T2-1096 | I-3 | II-7 | III-66 |
| T2-1097 | I-3 | II-7 | III-67 |
| T2-1098 | I-3 | II-7 | III-68 |
| T2-1099 | I-3 | II-7 | III-69 |
| T2-1100 | I-3 | II-7 | III-70 |
| T2-1101 | I-3 | II-7 | III-71 |
| T2-1102 | I-3 | II-7 | III-72 |
| T2-1103 | I-3 | II-7 | III-73 |
| T2-1104 | I-3 | II-7 | III-74 |
| T2-1105 | I-3 | II-7 | III-75 |
| T2-1106 | I-3 | II-7 | III-76 |
| T2-1107 | I-3 | II-7 | III-77 |
| T2-1108 | I-3 | II-7 | III-78 |

| composition | I | II | III |
|---|---|---|---|
| T2-1109 | I-3 | II-7 | III-79 |
| T2-1110 | I-3 | II-7 | III-80 |
| T2-1111 | I-3 | II-7 | III-81 |
| T2-1112 | I-3 | II-7 | III-82 |
| T2-1113 | I-3 | II-7 | III-83 |
| T2-1114 | I-3 | II-7 | III-84 |
| T2-1115 | I-3 | II-7 | III-85 |
| T2-1116 | I-3 | II-7 | III-86 |
| T2-1117 | I-3 | II-7 | III-87 |
| T2-1118 | I-3 | II-7 | III-88 |
| T2-1119 | I-3 | II-7 | III-89 |
| T2-1120 | I-3 | II-7 | III-90 |
| T2-1121 | I-3 | II-7 | III-91 |
| T2-1122 | I-3 | II-7 | III-92 |
| T2-1123 | I-3 | II-7 | III-93 |
| T2-1124 | I-3 | II-7 | III-94 |
| T2-1125 | I-3 | II-7 | III-95 |
| T2-1126 | I-3 | II-7 | III-96 |
| T2-1127 | I-3 | II-7 | III-97 |
| T2-1128 | I-3 | II-7 | III-98 |
| T2-1129 | I-3 | II-7 | III-99 |
| T2-1130 | I-3 | II-7 | III-100 |
| T2-1131 | I-3 | II-7 | III-101 |
| T2-1132 | I-3 | II-7 | III-102 |
| T2-1133 | I-3 | II-7 | III-103 |
| T2-1134 | I-3 | II-7 | III-104 |
| T2-1135 | I-3 | II-7 | III-105 |
| T2-1136 | I-3 | II-7 | III-106 |
| T2-1137 | I-3 | II-7 | III-107 |
| T2-1138 | I-3 | II-7 | III-108 |
| T2-1139 | I-3 | II-7 | III-109 |
| T2-1140 | I-3 | II-7 | III-110 |
| T2-1141 | I-3 | II-7 | III-111 |
| T2-1142 | I-3 | II-7 | III-112 |
| T2-1143 | I-3 | II-7 | III-113 |
| T2-1144 | I-3 | II-7 | III-114 |
| T2-1145 | I-3 | II-7 | III-115 |
| T2-1146 | I-3 | II-7 | III-116 |
| T2-1147 | I-3 | II-7 | III-117 |
| T2-1148 | I-3 | II-7 | III-118 |

| composition | I | II | III |
|---|---|---|---|
| T2-1149 | I-3 | II-7 | III-119 |
| T2-1150 | I-3 | II-7 | III-120 |
| T2-1151 | I-3 | II-7 | III-121 |
| T2-1152 | I-3 | II-7 | III-122 |
| T2-1153 | I-3 | II-7 | III-123 |
| T2-1154 | I-3 | II-7 | III-124 |
| T2-1155 | I-3 | II-7 | III-125 |
| T2-1156 | I-3 | II-7 | III-126 |
| T2-1157 | I-3 | II-7 | III-127 |
| T2-1158 | I-3 | II-7 | III-128 |
| T2-1159 | I-3 | II-7 | III-129 |
| T2-1160 | I-3 | II-7 | III-130 |
| T2-1161 | I-3 | II-7 | III-131 |
| T2-1162 | I-3 | II-7 | III-132 |
| T2-1163 | I-3 | II-7 | III-133 |
| T2-1164 | I-3 | II-7 | III-134 |
| T2-1165 | I-3 | II-7 | III-135 |
| T2-1166 | I-3 | II-7 | III-136 |
| T2-1167 | I-3 | II-7 | III-137 |
| T2-1168 | I-3 | II-7 | III-138 |
| T2-1169 | I-3 | II-7 | III-140 |
| T2-1170 | I-3 | II-7 | III-141 |
| T2-1171 | I-3 | II-7 | III-142 |
| T2-1172 | I-3 | II-7 | III-143 |
| T2-1173 | I-3 | II-7 | III-144 |
| T2-1174 | I-3 | II-7 | III-145 |
| T2-1175 | I-3 | II-7 | III-146 |
| T2-1176 | I-3 | II-7 | III-147 |
| T2-1177 | I-3 | II-7 | III-148 |
| T2-1178 | I-3 | II-7 | III-149 |
| T2-1179 | I-3 | II-7 | III-150 |
| T2-1180 | I-3 | II-7 | III-151 |
| T2-1181 | I-3 | II-7 | III-152 |
| T2-1182 | I-3 | II-7 | III-153 |
| T2-1183 | I-3 | II-7 | III-154 |
| T2-1184 | I-3 | II-7 | III-155 |
| T2-1185 | I-3 | II-7 | III-156 |
| T2-1186 | I-3 | II-7 | III-157 |
| T2-1187 | I-3 | II-7 | III-158 |
| T2-1188 | I-3 | II-7 | III-159 |

| composition | I | II | III |
|---|---|---|---|
| T2-1189 | I-3 | II-7 | III-160 |
| T2-1190 | I-3 | II-7 | III-161 |
| T2-1191 | I-3 | II-7 | III-162 |
| T2-1192 | I-3 | II-7 | III-163 |
| T2-1193 | I-3 | II-7 | III-164 |
| T2-1194 | I-3 | II-7 | III-165 |
| T2-1195 | I-3 | II-7 | III-166 |
| T2-1196 | I-3 | II-7 | III-167 |
| T2-1197 | I-3 | II-7 | III-168 |
| T2-1198 | I-3 | II-7 | III-169 |
| T2-1199 | I-3 | II-7 | III-170 |
| T2-1200 | I-3 | II-7 | III-171 |
| T2-1201 | I-3 | II-7 | III-172 |
| T2-1202 | I-3 | II-7 | III-173 |
| T2-1203 | I-3 | II-7 | III-174 |
| T2-1204 | I-3 | II-7 | III-175 |
| T2-1205 | I-3 | II-7 | III-176 |
| T2-1206 | I-3 | II-7 | III-177 |
| T2-1207 | I-3 | II-7 | III-178 |
| T2-1208 | I-3 | II-7 | III-179 |
| T2-1209 | I-3 | II-7 | III-180 |
| T2-1210 | I-3 | II-7 | III-181 |
| T2-1211 | I-3 | II-7 | III-182 |
| T2-1212 | I-3 | II-7 | III-183 |
| T2-1213 | I-3 | II-7 | III-184 |
| T2-1214 | I-3 | II-7 | III-185 |
| T2-1215 | I-3 | II-7 | III-186 |
| T2-1216 | I-3 | II-7 | III-187 |
| T2-1217 | I-3 | II-7 | III-188 |
| T2-1218 | I-3 | II-7 | III-189 |
| T2-1219 | I-3 | II-7 | III-190 |
| T2-1220 | I-3 | II-7 | III-191 |
| T2-1221 | I-3 | II-7 | III-192 |
| T2-1222 | I-3 | II-7 | III-193 |
| T2-1223 | I-3 | II-7 | III-194 |
| T2-1224 | I-3 | II-7 | III-195 |
| T2-1225 | I-3 | II-7 | III-196 |
| T2-1226 | I-3 | II-7 | III-197 |
| T2-1227 | I-3 | II-7 | III-198 |
| T2-1228 | I-3 | II-7 | III-199 |

| composition | I | II | III |
|---|---|---|---|
| T2-1229 | I-3 | II-7 | III-200 |
| T2-1230 | I-3 | II-7 | III-201 |
| T2-1231 | I-3 | II-7 | III-202 |
| T2-1232 | I-3 | II-7 | III-203 |
| T2-1233 | I-3 | II-8 | III-27 |
| T2-1234 | I-3 | II-8 | III-28 |
| T2-1235 | I-3 | II-8 | III-29 |
| T2-1236 | I-3 | II-8 | III-30 |
| T2-1237 | I-3 | II-8 | III-31 |
| T2-1238 | I-3 | II-8 | III-32 |
| T2-1239 | I-3 | II-8 | III-33 |
| T2-1240 | I-3 | II-8 | III-34 |
| T2-1241 | I-3 | II-8 | III-35 |
| T2-1242 | I-3 | II-8 | III-36 |
| T2-1243 | I-3 | II-8 | III-37 |
| T2-1244 | I-3 | II-8 | III-38 |
| T2-1245 | I-3 | II-8 | III-39 |
| T2-1246 | I-3 | II-8 | III-40 |
| T2-1247 | I-3 | II-8 | III-41 |
| T2-1248 | I-3 | II-8 | III-42 |
| T2-1249 | I-3 | II-8 | III-43 |
| T2-1250 | I-3 | II-8 | III-44 |
| T2-1251 | I-3 | II-8 | III-45 |
| T2-1252 | I-3 | II-8 | III-46 |
| T2-1253 | I-3 | II-8 | III-47 |
| T2-1254 | I-3 | II-8 | III-48 |
| T2-1255 | I-3 | II-8 | III-49 |
| T2-1256 | I-3 | II-8 | III-50 |
| T2-1257 | I-3 | II-8 | III-51 |
| T2-1258 | I-3 | II-8 | III-52 |
| T2-1259 | I-3 | II-8 | III-53 |
| T2-1260 | I-3 | II-8 | III-54 |
| T2-1261 | I-3 | II-8 | III-55 |
| T2-1262 | I-3 | II-8 | III-56 |
| T2-1263 | I-3 | II-8 | III-57 |
| T2-1264 | I-3 | II-8 | III-58 |
| T2-1265 | I-3 | II-8 | III-59 |
| T2-1266 | I-3 | II-8 | III-60 |
| T2-1267 | I-3 | II-8 | III-61 |
| T2-1268 | I-3 | II-8 | III-62 |

| composition | I | II | III |
|---|---|---|---|
| T2-1269 | I-3 | II-8 | III-63 |
| T2-1270 | I-3 | II-8 | III-64 |
| T2-1271 | I-3 | II-8 | III-65 |
| T2-1272 | I-3 | II-8 | III-66 |
| T2-1273 | I-3 | II-8 | III-67 |
| T2-1274 | I-3 | II-8 | III-68 |
| T2-1275 | I-3 | II-8 | III-69 |
| T2-1276 | I-3 | II-8 | III-70 |
| T2-1277 | I-3 | II-8 | III-71 |
| T2-1278 | I-3 | II-8 | III-72 |
| T2-1279 | I-3 | II-8 | III-73 |
| T2-1280 | I-3 | II-8 | III-74 |
| T2-1281 | I-3 | II-8 | III-75 |
| T2-1282 | I-3 | II-8 | III-76 |
| T2-1283 | I-3 | II-8 | III-77 |
| T2-1284 | I-3 | II-8 | III-78 |
| T2-1285 | I-3 | II-8 | III-79 |
| T2-1286 | I-3 | II-8 | III-80 |
| T2-1287 | I-3 | II-8 | III-81 |
| T2-1288 | I-3 | II-8 | III-82 |
| T2-1289 | I-3 | II-8 | III-83 |
| T2-1290 | I-3 | II-8 | III-84 |
| T2-1291 | I-3 | II-8 | III-85 |
| T2-1292 | I-3 | II-8 | III-86 |
| T2-1293 | I-3 | II-8 | III-87 |
| T2-1294 | I-3 | II-8 | III-88 |
| T2-1295 | I-3 | II-8 | III-89 |
| T2-1296 | I-3 | II-8 | III-90 |
| T2-1297 | I-3 | II-8 | III-91 |
| T2-1298 | I-3 | II-8 | III-92 |
| T2-1299 | I-3 | II-8 | III-93 |
| T2-1300 | I-3 | II-8 | III-94 |
| T2-1301 | I-3 | II-8 | III-95 |
| T2-1302 | I-3 | II-8 | III-96 |
| T2-1303 | I-3 | II-8 | III-97 |
| T2-1304 | I-3 | II-8 | III-98 |
| T2-1305 | I-3 | II-8 | III-99 |
| T2-1306 | I-3 | II-8 | III-100 |
| T2-1307 | I-3 | II-8 | III-101 |
| T2-1308 | I-3 | II-8 | III-102 |

| composition | I | II | III |
|---|---|---|---|
| T2-1309 | I-3 | II-8 | III-103 |
| T2-1310 | I-3 | II-8 | III-104 |
| T2-1311 | I-3 | II-8 | III-105 |
| T2-1312 | I-3 | II-8 | III-106 |
| T2-1313 | I-3 | II-8 | III-107 |
| T2-1314 | I-3 | II-8 | III-108 |
| T2-1315 | I-3 | II-8 | III-109 |
| T2-1316 | I-3 | II-8 | III-110 |
| T2-1317 | I-3 | II-8 | III-111 |
| T2-1318 | I-3 | II-8 | III-112 |
| T2-1319 | I-3 | II-8 | III-113 |
| T2-1320 | I-3 | II-8 | III-114 |
| T2-1321 | I-3 | II-8 | III-115 |
| T2-1322 | I-3 | II-8 | III-116 |
| T2-1323 | I-3 | II-8 | III-117 |
| T2-1324 | I-3 | II-8 | III-118 |
| T2-1325 | I-3 | II-8 | III-119 |
| T2-1326 | I-3 | II-8 | III-120 |
| T2-1327 | I-3 | II-8 | III-121 |
| T2-1328 | I-3 | II-8 | III-122 |
| T2-1329 | I-3 | II-8 | III-123 |
| T2-1330 | I-3 | II-8 | III-124 |
| T2-1331 | I-3 | II-8 | III-125 |
| T2-1332 | I-3 | II-8 | III-126 |
| T2-1333 | I-3 | II-8 | III-127 |
| T2-1334 | I-3 | II-8 | III-128 |
| T2-1335 | I-3 | II-8 | III-129 |
| T2-1336 | I-3 | II-8 | III-130 |
| T2-1337 | I-3 | II-8 | III-131 |
| T2-1338 | I-3 | II-8 | III-132 |
| T2-1339 | I-3 | II-8 | III-133 |
| T2-1340 | I-3 | II-8 | III-134 |
| T2-1341 | I-3 | II-8 | III-135 |
| T2-1342 | I-3 | II-8 | III-136 |
| T2-1343 | I-3 | II-8 | III-137 |
| T2-1344 | I-3 | II-8 | III-138 |
| T2-1345 | I-3 | II-8 | III-140 |
| T2-1346 | I-3 | II-8 | III-141 |
| T2-1347 | I-3 | II-8 | III-142 |
| T2-1348 | I-3 | II-8 | III-143 |

| composition | I | II | III |
|---|---|---|---|
| T2-1349 | I-3 | II-8 | III-144 |
| T2-1350 | I-3 | II-8 | III-145 |
| T2-1351 | I-3 | II-8 | III-146 |
| T2-1352 | I-3 | II-8 | III-147 |
| T2-1353 | I-3 | II-8 | III-148 |
| T2-1354 | I-3 | II-8 | III-149 |
| T2-1355 | I-3 | II-8 | III-150 |
| T2-1356 | I-3 | II-8 | III-151 |
| T2-1357 | I-3 | II-8 | III-152 |
| T2-1358 | I-3 | II-8 | III-153 |
| T2-1359 | I-3 | II-8 | III-154 |
| T2-1360 | I-3 | II-8 | III-155 |
| T2-1361 | I-3 | II-8 | III-156 |
| T2-1362 | I-3 | II-8 | III-157 |
| T2-1363 | I-3 | II-8 | III-158 |
| T2-1364 | I-3 | II-8 | III-159 |
| T2-1365 | I-3 | II-8 | III-160 |
| T2-1366 | I-3 | II-8 | III-161 |
| T2-1367 | I-3 | II-8 | III-162 |
| T2-1368 | I-3 | II-8 | III-163 |
| T2-1369 | I-3 | II-8 | III-164 |
| T2-1370 | I-3 | II-8 | III-165 |
| T2-1371 | I-3 | II-8 | III-166 |
| T2-1372 | I-3 | II-8 | III-167 |
| T2-1373 | I-3 | II-8 | III-168 |
| T2-1374 | I-3 | II-8 | III-169 |
| T2-1375 | I-3 | II-8 | III-170 |
| T2-1376 | I-3 | II-8 | III-171 |
| T2-1377 | I-3 | II-8 | III-172 |
| T2-1378 | I-3 | II-8 | III-173 |
| T2-1379 | I-3 | II-8 | III-174 |
| T2-1380 | I-3 | II-8 | III-175 |
| T2-1381 | I-3 | II-8 | III-176 |
| T2-1382 | I-3 | II-8 | III-177 |
| T2-1383 | I-3 | II-8 | III-178 |
| T2-1384 | I-3 | II-8 | III-179 |
| T2-1385 | I-3 | II-8 | III-180 |
| T2-1386 | I-3 | II-8 | III-181 |
| T2-1387 | I-3 | II-8 | III-182 |
| T2-1388 | I-3 | II-8 | III-183 |

| composition | I | II | III |
|---|---|---|---|
| T2-1389 | I-3 | II-8 | III-184 |
| T2-1390 | I-3 | II-8 | III-185 |
| T2-1391 | I-3 | II-8 | III-186 |
| T2-1392 | I-3 | II-8 | III-187 |
| T2-1393 | I-3 | II-8 | III-188 |
| T2-1394 | I-3 | II-8 | III-189 |
| T2-1395 | I-3 | II-8 | III-190 |
| T2-1396 | I-3 | II-8 | III-191 |
| T2-1397 | I-3 | II-8 | III-192 |
| T2-1398 | I-3 | II-8 | III-193 |
| T2-1399 | I-3 | II-8 | III-194 |
| T2-1400 | I-3 | II-8 | III-195 |
| T2-1401 | I-3 | II-8 | III-196 |
| T2-1402 | I-3 | II-8 | III-197 |
| T2-1403 | I-3 | II-8 | III-198 |
| T2-1404 | I-3 | II-8 | III-199 |
| T2-1405 | I-3 | II-8 | III-200 |
| T2-1406 | I-3 | II-8 | III-201 |
| T2-1407 | I-3 | II-8 | III-202 |
| T2-1408 | I-3 | II-8 | III-203 |
| T2-1409 | I-3 | II-9 | III-27 |
| T2-1410 | I-3 | II-9 | III-28 |
| T2-1411 | I-3 | II-9 | III-29 |
| T2-1412 | I-3 | II-9 | III-30 |
| T2-1413 | I-3 | II-9 | III-31 |
| T2-1414 | I-3 | II-9 | III-32 |
| T2-1415 | I-3 | II-9 | III-33 |
| T2-1416 | I-3 | II-9 | III-34 |
| T2-1417 | I-3 | II-9 | III-35 |
| T2-1418 | I-3 | II-9 | III-36 |
| T2-1419 | I-3 | II-9 | III-37 |
| T2-1420 | I-3 | II-9 | III-38 |
| T2-1421 | I-3 | II-9 | III-39 |
| T2-1422 | I-3 | II-9 | III-40 |
| T2-1423 | I-3 | II-9 | III-41 |
| T2-1424 | I-3 | II-9 | III-42 |
| T2-1425 | I-3 | II-9 | III-43 |
| T2-1426 | I-3 | II-9 | III-44 |
| T2-1427 | I-3 | II-9 | III-45 |
| T2-1428 | I-3 | II-9 | III-46 |

| composition | I | II | III |
|---|---|---|---|
| T2-1429 | I-3 | II-9 | III-47 |
| T2-1430 | I-3 | II-9 | III-48 |
| T2-1431 | I-3 | II-9 | III-49 |
| T2-1432 | I-3 | II-9 | III-50 |
| T2-1433 | I-3 | II-9 | III-51 |
| T2-1434 | I-3 | II-9 | III-52 |
| T2-1435 | I-3 | II-9 | III-53 |
| T2-1436 | I-3 | II-9 | III-54 |
| T2-1437 | I-3 | II-9 | III-55 |
| T2-1438 | I-3 | II-9 | III-56 |
| T2-1439 | I-3 | II-9 | III-57 |
| T2-1440 | I-3 | II-9 | III-58 |
| T2-1441 | I-3 | II-9 | III-59 |
| T2-1442 | I-3 | II-9 | III-60 |
| T2-1443 | I-3 | II-9 | III-61 |
| T2-1444 | I-3 | II-9 | III-62 |
| T2-1445 | I-3 | II-9 | III-63 |
| T2-1446 | I-3 | II-9 | III-64 |
| T2-1447 | I-3 | II-9 | III-65 |
| T2-1448 | I-3 | II-9 | III-66 |
| T2-1449 | I-3 | II-9 | III-67 |
| T2-1450 | I-3 | II-9 | III-68 |
| T2-1451 | I-3 | II-9 | III-69 |
| T2-1452 | I-3 | II-9 | III-70 |
| T2-1453 | I-3 | II-9 | III-71 |
| T2-1454 | I-3 | II-9 | III-72 |
| T2-1455 | I-3 | II-9 | III-73 |
| T2-1456 | I-3 | II-9 | III-74 |
| T2-1457 | I-3 | II-9 | III-75 |
| T2-1458 | I-3 | II-9 | III-76 |
| T2-1459 | I-3 | II-9 | III-77 |
| T2-1460 | I-3 | II-9 | III-78 |
| T2-1461 | I-3 | II-9 | III-79 |
| T2-1462 | I-3 | II-9 | III-80 |
| T2-1463 | I-3 | II-9 | III-81 |
| T2-1464 | I-3 | II-9 | III-82 |
| T2-1465 | I-3 | II-9 | III-83 |
| T2-1466 | I-3 | II-9 | III-84 |
| T2-1467 | I-3 | II-9 | III-85 |
| T2-1468 | I-3 | II-9 | III-86 |

| composition | I | II | III |
|---|---|---|---|
| T2-1469 | I-3 | II-9 | III-87 |
| T2-1470 | I-3 | II-9 | III-88 |
| T2-1471 | I-3 | II-9 | III-89 |
| T2-1472 | I-3 | II-9 | III-90 |
| T2-1473 | I-3 | II-9 | III-91 |
| T2-1474 | I-3 | II-9 | III-92 |
| T2-1475 | I-3 | II-9 | III-93 |
| T2-1476 | I-3 | II-9 | III-94 |
| T2-1477 | I-3 | II-9 | III-95 |
| T2-1478 | I-3 | II-9 | III-96 |
| T2-1479 | I-3 | II-9 | III-97 |
| T2-1480 | I-3 | II-9 | III-98 |
| T2-1481 | I-3 | II-9 | III-99 |
| T2-1482 | I-3 | II-9 | III-100 |
| T2-1483 | I-3 | II-9 | III-101 |
| T2-1484 | I-3 | II-9 | III-102 |
| T2-1485 | I-3 | II-9 | III-103 |
| T2-1486 | I-3 | II-9 | III-104 |
| T2-1487 | I-3 | II-9 | III-105 |
| T2-1488 | I-3 | II-9 | III-106 |
| T2-1489 | I-3 | II-9 | III-107 |
| T2-1490 | I-3 | II-9 | III-108 |
| T2-1491 | I-3 | II-9 | III-109 |
| T2-1492 | I-3 | II-9 | III-110 |
| T2-1493 | I-3 | II-9 | III-111 |
| T2-1494 | I-3 | II-9 | III-112 |
| T2-1495 | I-3 | II-9 | III-113 |
| T2-1496 | I-3 | II-9 | III-114 |
| T2-1497 | I-3 | II-9 | III-115 |
| T2-1498 | I-3 | II-9 | III-116 |
| T2-1499 | I-3 | II-9 | III-117 |
| T2-1500 | I-3 | II-9 | III-118 |
| T2-1501 | I-3 | II-9 | III-119 |
| T2-1502 | I-3 | II-9 | III-120 |
| T2-1503 | I-3 | II-9 | III-121 |
| T2-1504 | I-3 | II-9 | III-122 |
| T2-1505 | I-3 | II-9 | III-123 |
| T2-1506 | I-3 | II-9 | III-124 |
| T2-1507 | I-3 | II-9 | III-125 |
| T2-1508 | I-3 | II-9 | III-126 |

| composition | I | II | III |
|---|---|---|---|
| T2-1509 | I-3 | II-9 | III-127 |
| T2-1510 | I-3 | II-9 | III-128 |
| T2-1511 | I-3 | II-9 | III-129 |
| T2-1512 | I-3 | II-9 | III-130 |
| T2-1513 | I-3 | II-9 | III-131 |
| T2-1514 | I-3 | II-9 | III-132 |
| T2-1515 | I-3 | II-9 | III-133 |
| T2-1516 | I-3 | II-9 | III-134 |
| T2-1517 | I-3 | II-9 | III-135 |
| T2-1518 | I-3 | II-9 | III-136 |
| T2-1519 | I-3 | II-9 | III-137 |
| T2-1520 | I-3 | II-9 | III-138 |
| T2-1521 | I-3 | II-9 | III-140 |
| T2-1522 | I-3 | II-9 | III-141 |
| T2-1523 | I-3 | II-9 | III-142 |
| T2-1524 | I-3 | II-9 | III-143 |
| T2-1525 | I-3 | II-9 | III-144 |
| T2-1526 | I-3 | II-9 | III-145 |
| T2-1527 | I-3 | II-9 | III-146 |
| T2-1528 | I-3 | II-9 | III-147 |
| T2-1529 | I-3 | II-9 | III-148 |
| T2-1530 | I-3 | II-9 | III-149 |
| T2-1531 | I-3 | II-9 | III-150 |
| T2-1532 | I-3 | II-9 | III-151 |
| T2-1533 | I-3 | II-9 | III-152 |
| T2-1534 | I-3 | II-9 | III-153 |
| T2-1535 | I-3 | II-9 | III-154 |
| T2-1536 | I-3 | II-9 | III-155 |
| T2-1537 | I-3 | II-9 | III-156 |
| T2-1538 | I-3 | II-9 | III-157 |
| T2-1539 | I-3 | II-9 | III-158 |
| T2-1540 | I-3 | II-9 | III-159 |
| T2-1541 | I-3 | II-9 | III-160 |
| T2-1542 | I-3 | II-9 | III-161 |
| T2-1543 | I-3 | II-9 | III-162 |
| T2-1544 | I-3 | II-9 | III-163 |
| T2-1545 | I-3 | II-9 | III-164 |
| T2-1546 | I-3 | II-9 | III-165 |
| T2-1547 | I-3 | II-9 | III-166 |
| T2-1548 | I-3 | II-9 | III-167 |

| composition | I | II | III |
|---|---|---|---|
| T2-1549 | I-3 | II-9 | III-168 |
| T2-1550 | I-3 | II-9 | III-169 |
| T2-1551 | I-3 | II-9 | III-170 |
| T2-1552 | I-3 | II-9 | III-171 |
| T2-1553 | I-3 | II-9 | III-172 |
| T2-1554 | I-3 | II-9 | III-173 |
| T2-1555 | I-3 | II-9 | III-174 |
| T2-1556 | I-3 | II-9 | III-175 |
| T2-1557 | I-3 | II-9 | III-176 |
| T2-1558 | I-3 | II-9 | III-177 |
| T2-1559 | I-3 | II-9 | III-178 |
| T2-1560 | I-3 | II-9 | III-179 |
| T2-1561 | I-3 | II-9 | III-180 |
| T2-1562 | I-3 | II-9 | III-181 |
| T2-1563 | I-3 | II-9 | III-182 |
| T2-1564 | I-3 | II-9 | III-183 |
| T2-1565 | I-3 | II-9 | III-184 |
| T2-1566 | I-3 | II-9 | III-185 |
| T2-1567 | I-3 | II-9 | III-186 |
| T2-1568 | I-3 | II-9 | III-187 |
| T2-1569 | I-3 | II-9 | III-188 |
| T2-1570 | I-3 | II-9 | III-189 |
| T2-1571 | I-3 | II-9 | III-190 |
| T2-1572 | I-3 | II-9 | III-191 |
| T2-1573 | I-3 | II-9 | III-192 |
| T2-1574 | I-3 | II-9 | III-193 |
| T2-1575 | I-3 | II-9 | III-194 |
| T2-1576 | I-3 | II-9 | III-195 |
| T2-1577 | I-3 | II-9 | III-196 |
| T2-1578 | I-3 | II-9 | III-197 |
| T2-1579 | I-3 | II-9 | III-198 |
| T2-1580 | I-3 | II-9 | III-199 |
| T2-1581 | I-3 | II-9 | III-200 |
| T2-1582 | I-3 | II-9 | III-201 |
| T2-1583 | I-3 | II-9 | III-202 |
| T2-1584 | I-3 | II-9 | III-203 |
| T2-1585 | I-3 | II-10 | III-27 |
| T2-1586 | I-3 | II-10 | III-28 |
| T2-1587 | I-3 | II-10 | III-29 |
| T2-1588 | I-3 | II-10 | III-30 |

| composition | I | II | III |
|---|---|---|---|
| T2-1589 | I-3 | II-10 | III-31 |
| T2-1590 | I-3 | II-10 | III-32 |
| T2-1591 | I-3 | II-10 | III-33 |
| T2-1592 | I-3 | II-10 | III-34 |
| T2-1593 | I-3 | II-10 | III-35 |
| T2-1594 | I-3 | II-10 | III-36 |
| T2-1595 | I-3 | II-10 | III-37 |
| T2-1596 | I-3 | II-10 | III-38 |
| T2-1597 | I-3 | II-10 | III-39 |
| T2-1598 | I-3 | II-10 | III-40 |
| T2-1599 | I-3 | II-10 | III-41 |
| T2-1600 | I-3 | II-10 | III-42 |
| T2-1601 | I-3 | II-10 | III-43 |
| T2-1602 | I-3 | II-10 | III-44 |
| T2-1603 | I-3 | II-10 | III-45 |
| T2-1604 | I-3 | II-10 | III-46 |
| T2-1605 | I-3 | II-10 | III-47 |
| T2-1606 | I-3 | II-10 | III-48 |
| T2-1607 | I-3 | II-10 | III-49 |
| T2-1608 | I-3 | II-10 | III-50 |
| T2-1609 | I-3 | II-10 | III-51 |
| T2-1610 | I-3 | II-10 | III-52 |
| T2-1611 | I-3 | II-10 | III-53 |
| T2-1612 | I-3 | II-10 | III-54 |
| T2-1613 | I-3 | II-10 | III-55 |
| T2-1614 | I-3 | II-10 | III-56 |
| T2-1615 | I-3 | II-10 | III-57 |
| T2-1616 | I-3 | II-10 | III-58 |
| T2-1617 | I-3 | II-10 | III-59 |
| T2-1618 | I-3 | II-10 | III-60 |
| T2-1619 | I-3 | II-10 | III-61 |
| T2-1620 | I-3 | II-10 | III-62 |
| T2-1621 | I-3 | II-10 | III-63 |
| T2-1622 | I-3 | II-10 | III-64 |
| T2-1623 | I-3 | II-10 | III-65 |
| T2-1624 | I-3 | II-10 | III-66 |
| T2-1625 | I-3 | II-10 | III-67 |
| T2-1626 | I-3 | II-10 | III-68 |
| T2-1627 | I-3 | II-10 | III-69 |
| T2-1628 | I-3 | II-10 | III-70 |
| T2-1629 | I-3 | II-10 | III-71 |
| T2-1630 | I-3 | II-10 | III-72 |
| T2-1631 | I-3 | II-10 | III-73 |
| T2-1632 | I-3 | II-10 | III-74 |
| T2-1633 | I-3 | II-10 | III-75 |
| T2-1634 | I-3 | II-10 | III-76 |
| T2-1635 | I-3 | II-10 | III-77 |
| T2-1636 | I-3 | II-10 | III-78 |
| T2-1637 | I-3 | II-10 | III-79 |
| T2-1638 | I-3 | II-10 | III-80 |
| T2-1639 | I-3 | II-10 | III-81 |
| T2-1640 | I-3 | II-10 | III-82 |
| T2-1641 | I-3 | II-10 | III-83 |
| T2-1642 | I-3 | II-10 | III-84 |
| T2-1643 | I-3 | II-10 | III-85 |
| T2-1644 | I-3 | II-10 | III-86 |
| T2-1645 | I-3 | II-10 | III-87 |
| T2-1646 | I-3 | II-10 | III-88 |
| T2-1647 | I-3 | II-10 | III-89 |
| T2-1648 | I-3 | II-10 | III-90 |
| T2-1649 | I-3 | II-10 | III-91 |
| T2-1650 | I-3 | II-10 | III-92 |
| T2-1651 | I-3 | II-10 | III-93 |
| T2-1652 | I-3 | II-10 | III-94 |
| T2-1653 | I-3 | II-10 | III-95 |
| T2-1654 | I-3 | II-10 | III-96 |
| T2-1655 | I-3 | II-10 | III-97 |
| T2-1656 | I-3 | II-10 | III-98 |
| T2-1657 | I-3 | II-10 | III-99 |
| T2-1658 | I-3 | II-10 | III-100 |
| T2-1659 | I-3 | II-10 | III-101 |
| T2-1660 | I-3 | II-10 | III-102 |
| T2-1661 | I-3 | II-10 | III-103 |
| T2-1662 | I-3 | II-10 | III-104 |
| T2-1663 | I-3 | II-10 | III-105 |
| T2-1664 | I-3 | II-10 | III-106 |
| T2-1665 | I-3 | II-10 | III-107 |
| T2-1666 | I-3 | II-10 | III-108 |
| T2-1667 | I-3 | II-10 | III-109 |
| T2-1668 | I-3 | II-10 | III-110 |

| composition | I | II | III |
|---|---|---|---|
| T2-1669 | I-3 | II-10 | III-111 |
| T2-1670 | I-3 | II-10 | III-112 |
| T2-1671 | I-3 | II-10 | III-113 |
| T2-1672 | I-3 | II-10 | III-114 |
| T2-1673 | I-3 | II-10 | III-115 |
| T2-1674 | I-3 | II-10 | III-116 |
| T2-1675 | I-3 | II-10 | III-117 |
| T2-1676 | I-3 | II-10 | III-118 |
| T2-1677 | I-3 | II-10 | III-119 |
| T2-1678 | I-3 | II-10 | III-120 |
| T2-1679 | I-3 | II-10 | III-121 |
| T2-1680 | I-3 | II-10 | III-122 |
| T2-1681 | I-3 | II-10 | III-123 |
| T2-1682 | I-3 | II-10 | III-124 |
| T2-1683 | I-3 | II-10 | III-125 |
| T2-1684 | I-3 | II-10 | III-126 |
| T2-1685 | I-3 | II-10 | III-127 |
| T2-1686 | I-3 | II-10 | III-128 |
| T2-1687 | I-3 | II-10 | III-129 |
| T2-1688 | I-3 | II-10 | III-130 |
| T2-1689 | I-3 | II-10 | III-131 |
| T2-1690 | I-3 | II-10 | III-132 |
| T2-1691 | I-3 | II-10 | III-133 |
| T2-1692 | I-3 | II-10 | III-134 |
| T2-1693 | I-3 | II-10 | III-135 |
| T2-1694 | I-3 | II-10 | III-136 |
| T2-1695 | I-3 | II-10 | III-137 |
| T2-1696 | I-3 | II-10 | III-138 |
| T2-1697 | I-3 | II-10 | III-140 |
| T2-1698 | I-3 | II-10 | III-141 |
| T2-1699 | I-3 | II-10 | III-142 |
| T2-1700 | I-3 | II-10 | III-143 |
| T2-1701 | I-3 | II-10 | III-144 |
| T2-1702 | I-3 | II-10 | III-145 |
| T2-1703 | I-3 | II-10 | III-146 |
| T2-1704 | I-3 | II-10 | III-147 |
| T2-1705 | I-3 | II-10 | III-148 |
| T2-1706 | I-3 | II-10 | III-149 |
| T2-1707 | I-3 | II-10 | III-150 |
| T2-1708 | I-3 | II-10 | III-151 |

| composition | I | II | III |
|---|---|---|---|
| T2-1709 | I-3 | II-10 | III-152 |
| T2-1710 | I-3 | II-10 | III-153 |
| T2-1711 | I-3 | II-10 | III-154 |
| T2-1712 | I-3 | II-10 | III-155 |
| T2-1713 | I-3 | II-10 | III-156 |
| T2-1714 | I-3 | II-10 | III-157 |
| T2-1715 | I-3 | II-10 | III-158 |
| T2-1716 | I-3 | II-10 | III-159 |
| T2-1717 | I-3 | II-10 | III-160 |
| T2-1718 | I-3 | II-10 | III-161 |
| T2-1719 | I-3 | II-10 | III-162 |
| T2-1720 | I-3 | II-10 | III-163 |
| T2-1721 | I-3 | II-10 | III-164 |
| T2-1722 | I-3 | II-10 | III-165 |
| T2-1723 | I-3 | II-10 | III-166 |
| T2-1724 | I-3 | II-10 | III-167 |
| T2-1725 | I-3 | II-10 | III-168 |
| T2-1726 | I-3 | II-10 | III-169 |
| T2-1727 | I-3 | II-10 | III-170 |
| T2-1728 | I-3 | II-10 | III-171 |
| T2-1729 | I-3 | II-10 | III-172 |
| T2-1730 | I-3 | II-10 | III-173 |
| T2-1731 | I-3 | II-10 | III-174 |
| T2-1732 | I-3 | II-10 | III-175 |
| T2-1733 | I-3 | II-10 | III-176 |
| T2-1734 | I-3 | II-10 | III-177 |
| T2-1735 | I-3 | II-10 | III-178 |
| T2-1736 | I-3 | II-10 | III-179 |
| T2-1737 | I-3 | II-10 | III-180 |
| T2-1738 | I-3 | II-10 | III-181 |
| T2-1739 | I-3 | II-10 | III-182 |
| T2-1740 | I-3 | II-10 | III-183 |
| T2-1741 | I-3 | II-10 | III-184 |
| T2-1742 | I-3 | II-10 | III-185 |
| T2-1743 | I-3 | II-10 | III-186 |
| T2-1744 | I-3 | II-10 | III-187 |
| T2-1745 | I-3 | II-10 | III-188 |
| T2-1746 | I-3 | II-10 | III-189 |
| T2-1747 | I-3 | II-10 | III-190 |
| T2-1748 | I-3 | II-10 | III-191 |

| composition | I | II | III |
|---|---|---|---|
| T2-1749 | I-3 | II-10 | III-192 |
| T2-1750 | I-3 | II-10 | III-193 |
| T2-1751 | I-3 | II-10 | III-194 |
| T2-1752 | I-3 | II-10 | III-195 |
| T2-1753 | I-3 | II-10 | III-196 |
| T2-1754 | I-3 | II-10 | III-197 |
| T2-1755 | I-3 | II-10 | III-198 |
| T2-1756 | I-3 | II-10 | III-199 |
| T2-1757 | I-3 | II-10 | III-200 |
| T2-1758 | I-3 | II-10 | III-201 |
| T2-1759 | I-3 | II-10 | III-202 |
| T2-1760 | I-3 | II-10 | III-203 |
| T2-1761 | I-3 | II-11 | III-27 |
| T2-1762 | I-3 | II-11 | III-28 |
| T2-1763 | I-3 | II-11 | III-29 |
| T2-1764 | I-3 | II-11 | III-30 |
| T2-1765 | I-3 | II-11 | III-31 |
| T2-1766 | I-3 | II-11 | III-32 |
| T2-1767 | I-3 | II-11 | III-33 |
| T2-1768 | I-3 | II-11 | III-34 |
| T2-1769 | I-3 | II-11 | III-35 |
| T2-1770 | I-3 | II-11 | III-36 |
| T2-1771 | I-3 | II-11 | III-37 |
| T2-1772 | I-3 | II-11 | III-38 |
| T2-1773 | I-3 | II-11 | III-39 |
| T2-1774 | I-3 | II-11 | III-40 |
| T2-1775 | I-3 | II-11 | III-41 |
| T2-1776 | I-3 | II-11 | III-42 |
| T2-1777 | I-3 | II-11 | III-43 |
| T2-1778 | I-3 | II-11 | III-44 |
| T2-1779 | I-3 | II-11 | III-45 |
| T2-1780 | I-3 | II-11 | III-46 |
| T2-1781 | I-3 | II-11 | III-47 |
| T2-1782 | I-3 | II-11 | III-48 |
| T2-1783 | I-3 | II-11 | III-49 |
| T2-1784 | I-3 | II-11 | III-50 |
| T2-1785 | I-3 | II-11 | III-51 |
| T2-1786 | I-3 | II-11 | III-52 |
| T2-1787 | I-3 | II-11 | III-53 |
| T2-1788 | I-3 | II-11 | III-54 |
| T2-1789 | I-3 | II-11 | III-55 |
| T2-1790 | I-3 | II-11 | III-56 |
| T2-1791 | I-3 | II-11 | III-57 |
| T2-1792 | I-3 | II-11 | III-58 |
| T2-1793 | I-3 | II-11 | III-59 |
| T2-1794 | I-3 | II-11 | III-60 |
| T2-1795 | I-3 | II-11 | III-61 |
| T2-1796 | I-3 | II-11 | III-62 |
| T2-1797 | I-3 | II-11 | III-63 |
| T2-1798 | I-3 | II-11 | III-64 |
| T2-1799 | I-3 | II-11 | III-65 |
| T2-1800 | I-3 | II-11 | III-66 |
| T2-1801 | I-3 | II-11 | III-67 |
| T2-1802 | I-3 | II-11 | III-68 |
| T2-1803 | I-3 | II-11 | III-69 |
| T2-1804 | I-3 | II-11 | III-70 |
| T2-1805 | I-3 | II-11 | III-71 |
| T2-1806 | I-3 | II-11 | III-72 |
| T2-1807 | I-3 | II-11 | III-73 |
| T2-1808 | I-3 | II-11 | III-74 |
| T2-1809 | I-3 | II-11 | III-75 |
| T2-1810 | I-3 | II-11 | III-76 |
| T2-1811 | I-3 | II-11 | III-77 |
| T2-1812 | I-3 | II-11 | III-78 |
| T2-1813 | I-3 | II-11 | III-79 |
| T2-1814 | I-3 | II-11 | III-80 |
| T2-1815 | I-3 | II-11 | III-81 |
| T2-1816 | I-3 | II-11 | III-82 |
| T2-1817 | I-3 | II-11 | III-83 |
| T2-1818 | I-3 | II-11 | III-84 |
| T2-1819 | I-3 | II-11 | III-85 |
| T2-1820 | I-3 | II-11 | III-86 |
| T2-1821 | I-3 | II-11 | III-87 |
| T2-1822 | I-3 | II-11 | III-88 |
| T2-1823 | I-3 | II-11 | III-89 |
| T2-1824 | I-3 | II-11 | III-90 |
| T2-1825 | I-3 | II-11 | III-91 |
| T2-1826 | I-3 | II-11 | III-92 |
| T2-1827 | I-3 | II-11 | III-93 |
| T2-1828 | I-3 | II-11 | III-94 |

| composition | I | II | III |
|---|---|---|---|
| T2-1829 | I-3 | II-11 | III-95 |
| T2-1830 | I-3 | II-11 | III-96 |
| T2-1831 | I-3 | II-11 | III-97 |
| T2-1832 | I-3 | II-11 | III-98 |
| T2-1833 | I-3 | II-11 | III-99 |
| T2-1834 | I-3 | II-11 | III-100 |
| T2-1835 | I-3 | II-11 | III-101 |
| T2-1836 | I-3 | II-11 | III-102 |
| T2-1837 | I-3 | II-11 | III-103 |
| T2-1838 | I-3 | II-11 | III-104 |
| T2-1839 | I-3 | II-11 | III-105 |
| T2-1840 | I-3 | II-11 | III-106 |
| T2-1841 | I-3 | II-11 | III-107 |
| T2-1842 | I-3 | II-11 | III-108 |
| T2-1843 | I-3 | II-11 | III-109 |
| T2-1844 | I-3 | II-11 | III-110 |
| T2-1845 | I-3 | II-11 | III-111 |
| T2-1846 | I-3 | II-11 | III-112 |
| T2-1847 | I-3 | II-11 | III-113 |
| T2-1848 | I-3 | II-11 | III-114 |
| T2-1849 | I-3 | II-11 | III-115 |
| T2-1850 | I-3 | II-11 | III-116 |
| T2-1851 | I-3 | II-11 | III-117 |
| T2-1852 | I-3 | II-11 | III-118 |
| T2-1853 | I-3 | II-11 | III-119 |
| T2-1854 | I-3 | II-11 | III-120 |
| T2-1855 | I-3 | II-11 | III-121 |
| T2-1856 | I-3 | II-11 | III-122 |
| T2-1857 | I-3 | II-11 | III-123 |
| T2-1858 | I-3 | II-11 | III-124 |
| T2-1859 | I-3 | II-11 | III-125 |
| T2-1860 | I-3 | II-11 | III-126 |
| T2-1861 | I-3 | II-11 | III-127 |
| T2-1862 | I-3 | II-11 | III-128 |
| T2-1863 | I-3 | II-11 | III-129 |
| T2-1864 | I-3 | II-11 | III-130 |
| T2-1865 | I-3 | II-11 | III-131 |
| T2-1866 | I-3 | II-11 | III-132 |
| T2-1867 | I-3 | II-11 | III-133 |
| T2-1868 | I-3 | II-11 | III-134 |

| composition | I | II | III |
|---|---|---|---|
| T2-1869 | I-3 | II-11 | III-135 |
| T2-1870 | I-3 | II-11 | III-136 |
| T2-1871 | I-3 | II-11 | III-137 |
| T2-1872 | I-3 | II-11 | III-138 |
| T2-1873 | I-3 | II-11 | III-140 |
| T2-1874 | I-3 | II-11 | III-141 |
| T2-1875 | I-3 | II-11 | III-142 |
| T2-1876 | I-3 | II-11 | III-143 |
| T2-1877 | I-3 | II-11 | III-144 |
| T2-1878 | I-3 | II-11 | III-145 |
| T2-1879 | I-3 | II-11 | III-146 |
| T2-1880 | I-3 | II-11 | III-147 |
| T2-1881 | I-3 | II-11 | III-148 |
| T2-1882 | I-3 | II-11 | III-149 |
| T2-1883 | I-3 | II-11 | III-150 |
| T2-1884 | I-3 | II-11 | III-151 |
| T2-1885 | I-3 | II-11 | III-152 |
| T2-1886 | I-3 | II-11 | III-153 |
| T2-1887 | I-3 | II-11 | III-154 |
| T2-1888 | I-3 | II-11 | III-155 |
| T2-1889 | I-3 | II-11 | III-156 |
| T2-1890 | I-3 | II-11 | III-157 |
| T2-1891 | I-3 | II-11 | III-158 |
| T2-1892 | I-3 | II-11 | III-159 |
| T2-1893 | I-3 | II-11 | III-160 |
| T2-1894 | I-3 | II-11 | III-161 |
| T2-1895 | I-3 | II-11 | III-162 |
| T2-1896 | I-3 | II-11 | III-163 |
| T2-1897 | I-3 | II-11 | III-164 |
| T2-1898 | I-3 | II-11 | III-165 |
| T2-1899 | I-3 | II-11 | III-166 |
| T2-1900 | I-3 | II-11 | III-167 |
| T2-1901 | I-3 | II-11 | III-168 |
| T2-1902 | I-3 | II-11 | III-169 |
| T2-1903 | I-3 | II-11 | III-170 |
| T2-1904 | I-3 | II-11 | III-171 |
| T2-1905 | I-3 | II-11 | III-172 |
| T2-1906 | I-3 | II-11 | III-173 |
| T2-1907 | I-3 | II-11 | III-174 |
| T2-1908 | I-3 | II-11 | III-175 |

| composition | I | II | III |
|---|---|---|---|
| T2-1909 | I-3 | II-11 | III-176 |
| T2-1910 | I-3 | II-11 | III-177 |
| T2-1911 | I-3 | II-11 | III-178 |
| T2-1912 | I-3 | II-11 | III-179 |
| T2-1913 | I-3 | II-11 | III-180 |
| T2-1914 | I-3 | II-11 | III-181 |
| T2-1915 | I-3 | II-11 | III-182 |
| T2-1916 | I-3 | II-11 | III-183 |
| T2-1917 | I-3 | II-11 | III-184 |
| T2-1918 | I-3 | II-11 | III-185 |
| T2-1919 | I-3 | II-11 | III-186 |
| T2-1920 | I-3 | II-11 | III-187 |
| T2-1921 | I-3 | II-11 | III-188 |
| T2-1922 | I-3 | II-11 | III-189 |
| T2-1923 | I-3 | II-11 | III-190 |
| T2-1924 | I-3 | II-11 | III-191 |
| T2-1925 | I-3 | II-11 | III-192 |
| T2-1926 | I-3 | II-11 | III-193 |
| T2-1927 | I-3 | II-11 | III-194 |
| T2-1928 | I-3 | II-11 | III-195 |
| T2-1929 | I-3 | II-11 | III-196 |
| T2-1930 | I-3 | II-11 | III-197 |
| T2-1931 | I-3 | II-11 | III-198 |
| T2-1932 | I-3 | II-11 | III-199 |
| T2-1933 | I-3 | II-11 | III-200 |
| T2-1934 | I-3 | II-11 | III-201 |
| T2-1935 | I-3 | II-11 | III-202 |
| T2-1936 | I-3 | II-11 | III-203 |
| T2-1937 | I-3 | II-12 | III-27 |
| T2-1938 | I-3 | II-12 | III-28 |
| T2-1939 | I-3 | II-12 | III-29 |
| T2-1940 | I-3 | II-12 | III-30 |
| T2-1941 | I-3 | II-12 | III-31 |
| T2-1942 | I-3 | II-12 | III-32 |
| T2-1943 | I-3 | II-12 | III-33 |
| T2-1944 | I-3 | II-12 | III-34 |
| T2-1945 | I-3 | II-12 | III-35 |
| T2-1946 | I-3 | II-12 | III-36 |
| T2-1947 | I-3 | II-12 | III-37 |
| T2-1948 | I-3 | II-12 | III-38 |

| composition | I | II | III |
|---|---|---|---|
| T2-1949 | I-3 | II-12 | III-39 |
| T2-1950 | I-3 | II-12 | III-40 |
| T2-1951 | I-3 | II-12 | III-41 |
| T2-1952 | I-3 | II-12 | III-42 |
| T2-1953 | I-3 | II-12 | III-43 |
| T2-1954 | I-3 | II-12 | III-44 |
| T2-1955 | I-3 | II-12 | III-45 |
| T2-1956 | I-3 | II-12 | III-46 |
| T2-1957 | I-3 | II-12 | III-47 |
| T2-1958 | I-3 | II-12 | III-48 |
| T2-1959 | I-3 | II-12 | III-49 |
| T2-1960 | I-3 | II-12 | III-50 |
| T2-1961 | I-3 | II-12 | III-51 |
| T2-1962 | I-3 | II-12 | III-52 |
| T2-1963 | I-3 | II-12 | III-53 |
| T2-1964 | I-3 | II-12 | III-54 |
| T2-1965 | I-3 | II-12 | III-55 |
| T2-1966 | I-3 | II-12 | III-56 |
| T2-1967 | I-3 | II-12 | III-57 |
| T2-1968 | I-3 | II-12 | III-58 |
| T2-1969 | I-3 | II-12 | III-59 |
| T2-1970 | I-3 | II-12 | III-60 |
| T2-1971 | I-3 | II-12 | III-61 |
| T2-1972 | I-3 | II-12 | III-62 |
| T2-1973 | I-3 | II-12 | III-63 |
| T2-1974 | I-3 | II-12 | III-64 |
| T2-1975 | I-3 | II-12 | III-65 |
| T2-1976 | I-3 | II-12 | III-66 |
| T2-1977 | I-3 | II-12 | III-67 |
| T2-1978 | I-3 | II-12 | III-68 |
| T2-1979 | I-3 | II-12 | III-69 |
| T2-1980 | I-3 | II-12 | III-70 |
| T2-1981 | I-3 | II-12 | III-71 |
| T2-1982 | I-3 | II-12 | III-72 |
| T2-1983 | I-3 | II-12 | III-73 |
| T2-1984 | I-3 | II-12 | III-74 |
| T2-1985 | I-3 | II-12 | III-75 |
| T2-1986 | I-3 | II-12 | III-76 |
| T2-1987 | I-3 | II-12 | III-77 |
| T2-1988 | I-3 | II-12 | III-78 |

| composition | I | II | III |
|---|---|---|---|
| T2-1989 | I-3 | II-12 | III-79 |
| T2-1990 | I-3 | II-12 | III-80 |
| T2-1991 | I-3 | II-12 | III-81 |
| T2-1992 | I-3 | II-12 | III-82 |
| T2-1993 | I-3 | II-12 | III-83 |
| T2-1994 | I-3 | II-12 | III-84 |
| T2-1995 | I-3 | II-12 | III-85 |
| T2-1996 | I-3 | II-12 | III-86 |
| T2-1997 | I-3 | II-12 | III-87 |
| T2-1998 | I-3 | II-12 | III-88 |
| T2-1999 | I-3 | II-12 | III-89 |
| T2-2000 | I-3 | II-12 | III-90 |
| T2-2001 | I-3 | II-12 | III-91 |
| T2-2002 | I-3 | II-12 | III-92 |
| T2-2003 | I-3 | II-12 | III-93 |
| T2-2004 | I-3 | II-12 | III-94 |
| T2-2005 | I-3 | II-12 | III-95 |
| T2-2006 | I-3 | II-12 | III-96 |
| T2-2007 | I-3 | II-12 | III-97 |
| T2-2008 | I-3 | II-12 | III-98 |
| T2-2009 | I-3 | II-12 | III-99 |
| T2-2010 | I-3 | II-12 | III-100 |
| T2-2011 | I-3 | II-12 | III-101 |
| T2-2012 | I-3 | II-12 | III-102 |
| T2-2013 | I-3 | II-12 | III-103 |
| T2-2014 | I-3 | II-12 | III-104 |
| T2-2015 | I-3 | II-12 | III-105 |
| T2-2016 | I-3 | II-12 | III-106 |
| T2-2017 | I-3 | II-12 | III-107 |
| T2-2018 | I-3 | II-12 | III-108 |
| T2-2019 | I-3 | II-12 | III-109 |
| T2-2020 | I-3 | II-12 | III-110 |
| T2-2021 | I-3 | II-12 | III-111 |
| T2-2022 | I-3 | II-12 | III-112 |
| T2-2023 | I-3 | II-12 | III-113 |
| T2-2024 | I-3 | II-12 | III-114 |
| T2-2025 | I-3 | II-12 | III-115 |
| T2-2026 | I-3 | II-12 | III-116 |
| T2-2027 | I-3 | II-12 | III-117 |
| T2-2028 | I-3 | II-12 | III-118 |

| composition | I | II | III |
|---|---|---|---|
| T2-2029 | I-3 | II-12 | III-119 |
| T2-2030 | I-3 | II-12 | III-120 |
| T2-2031 | I-3 | II-12 | III-121 |
| T2-2032 | I-3 | II-12 | III-122 |
| T2-2033 | I-3 | II-12 | III-123 |
| T2-2034 | I-3 | II-12 | III-124 |
| T2-2035 | I-3 | II-12 | III-125 |
| T2-2036 | I-3 | II-12 | III-126 |
| T2-2037 | I-3 | II-12 | III-127 |
| T2-2038 | I-3 | II-12 | III-128 |
| T2-2039 | I-3 | II-12 | III-129 |
| T2-2040 | I-3 | II-12 | III-130 |
| T2-2041 | I-3 | II-12 | III-131 |
| T2-2042 | I-3 | II-12 | III-132 |
| T2-2043 | I-3 | II-12 | III-133 |
| T2-2044 | I-3 | II-12 | III-134 |
| T2-2045 | I-3 | II-12 | III-135 |
| T2-2046 | I-3 | II-12 | III-136 |
| T2-2047 | I-3 | II-12 | III-137 |
| T2-2048 | I-3 | II-12 | III-138 |
| T2-2049 | I-3 | II-12 | III-140 |
| T2-2050 | I-3 | II-12 | III-141 |
| T2-2051 | I-3 | II-12 | III-142 |
| T2-2052 | I-3 | II-12 | III-143 |
| T2-2053 | I-3 | II-12 | III-144 |
| T2-2054 | I-3 | II-12 | III-145 |
| T2-2055 | I-3 | II-12 | III-146 |
| T2-2056 | I-3 | II-12 | III-147 |
| T2-2057 | I-3 | II-12 | III-148 |
| T2-2058 | I-3 | II-12 | III-149 |
| T2-2059 | I-3 | II-12 | III-150 |
| T2-2060 | I-3 | II-12 | III-151 |
| T2-2061 | I-3 | II-12 | III-152 |
| T2-2062 | I-3 | II-12 | III-153 |
| T2-2063 | I-3 | II-12 | III-154 |
| T2-2064 | I-3 | II-12 | III-155 |
| T2-2065 | I-3 | II-12 | III-156 |
| T2-2066 | I-3 | II-12 | III-157 |
| T2-2067 | I-3 | II-12 | III-158 |
| T2-2068 | I-3 | II-12 | III-159 |

| compo-sition | I | II | III |
|---|---|---|---|
| T2-2069 | I-3 | II-12 | III-160 |
| T2-2070 | I-3 | II-12 | III-161 |
| T2-2071 | I-3 | II-12 | III-162 |
| T2-2072 | I-3 | II-12 | III-163 |
| T2-2073 | I-3 | II-12 | III-164 |
| T2-2074 | I-3 | II-12 | III-165 |
| T2-2075 | I-3 | II-12 | III-166 |
| T2-2076 | I-3 | II-12 | III-167 |
| T2-2077 | I-3 | II-12 | III-168 |
| T2-2078 | I-3 | II-12 | III-169 |
| T2-2079 | I-3 | II-12 | III-170 |
| T2-2080 | I-3 | II-12 | III-171 |
| T2-2081 | I-3 | II-12 | III-172 |
| T2-2082 | I-3 | II-12 | III-173 |
| T2-2083 | I-3 | II-12 | III-174 |
| T2-2084 | I-3 | II-12 | III-175 |
| T2-2085 | I-3 | II-12 | III-176 |
| T2-2086 | I-3 | II-12 | III-177 |
| T2-2087 | I-3 | II-12 | III-178 |
| T2-2088 | I-3 | II-12 | III-179 |
| T2-2089 | I-3 | II-12 | III-180 |
| T2-2090 | I-3 | II-12 | III-181 |
| T2-2091 | I-3 | II-12 | III-182 |
| T2-2092 | I-3 | II-12 | III-183 |
| T2-2093 | I-3 | II-12 | III-184 |
| T2-2094 | I-3 | II-12 | III-185 |
| T2-2095 | I-3 | II-12 | III-186 |
| T2-2096 | I-3 | II-12 | III-187 |
| T2-2097 | I-3 | II-12 | III-188 |
| T2-2098 | I-3 | II-12 | III-189 |
| T2-2099 | I-3 | II-12 | III-190 |
| T2-2100 | I-3 | II-12 | III-191 |
| T2-2101 | I-3 | II-12 | III-192 |
| T2-2102 | I-3 | II-12 | III-193 |
| T2-2103 | I-3 | II-12 | III-194 |
| T2-2104 | I-3 | II-12 | III-195 |
| T2-2105 | I-3 | II-12 | III-196 |
| T2-2106 | I-3 | II-12 | III-197 |
| T2-2107 | I-3 | II-12 | III-198 |
| T2-2108 | I-3 | II-12 | III-199 |

| compo-sition | I | II | III |
|---|---|---|---|
| T2-2109 | I-3 | II-12 | III-200 |
| T2-2110 | I-3 | II-12 | III-201 |
| T2-2111 | I-3 | II-12 | III-202 |
| T2-2112 | I-3 | II-12 | III-203 |
| T2-2113 | I-3 | II-13 | III-27 |
| T2-2114 | I-3 | II-13 | III-28 |
| T2-2115 | I-3 | II-13 | III-29 |
| T2-2116 | I-3 | II-13 | III-30 |
| T2-2117 | I-3 | II-13 | III-31 |
| T2-2118 | I-3 | II-13 | III-32 |
| T2-2119 | I-3 | II-13 | III-33 |
| T2-2120 | I-3 | II-13 | III-34 |
| T2-2121 | I-3 | II-13 | III-35 |
| T2-2122 | I-3 | II-13 | III-36 |
| T2-2123 | I-3 | II-13 | III-37 |
| T2-2124 | I-3 | II-13 | III-38 |
| T2-2125 | I-3 | II-13 | III-39 |
| T2-2126 | I-3 | II-13 | III-40 |
| T2-2127 | I-3 | II-13 | III-41 |
| T2-2128 | I-3 | II-13 | III-42 |
| T2-2129 | I-3 | II-13 | III-43 |
| T2-2130 | I-3 | II-13 | III-44 |
| T2-2131 | I-3 | II-13 | III-45 |
| T2-2132 | I-3 | II-13 | III-46 |
| T2-2133 | I-3 | II-13 | III-47 |
| T2-2134 | I-3 | II-13 | III-48 |
| T2-2135 | I-3 | II-13 | III-49 |
| T2-2136 | I-3 | II-13 | III-50 |
| T2-2137 | I-3 | II-13 | III-51 |
| T2-2138 | I-3 | II-13 | III-52 |
| T2-2139 | I-3 | II-13 | III-53 |
| T2-2140 | I-3 | II-13 | III-54 |
| T2-2141 | I-3 | II-13 | III-55 |
| T2-2142 | I-3 | II-13 | III-56 |
| T2-2143 | I-3 | II-13 | III-57 |
| T2-2144 | I-3 | II-13 | III-58 |
| T2-2145 | I-3 | II-13 | III-59 |
| T2-2146 | I-3 | II-13 | III-60 |
| T2-2147 | I-3 | II-13 | III-61 |
| T2-2148 | I-3 | II-13 | III-62 |

| composition | I | II | III |
|---|---|---|---|
| T2-2149 | I-3 | II-13 | III-63 |
| T2-2150 | I-3 | II-13 | III-64 |
| T2-2151 | I-3 | II-13 | III-65 |
| T2-2152 | I-3 | II-13 | III-66 |
| T2-2153 | I-3 | II-13 | III-67 |
| T2-2154 | I-3 | II-13 | III-68 |
| T2-2155 | I-3 | II-13 | III-69 |
| T2-2156 | I-3 | II-13 | III-70 |
| T2-2157 | I-3 | II-13 | III-71 |
| T2-2158 | I-3 | II-13 | III-72 |
| T2-2159 | I-3 | II-13 | III-73 |
| T2-2160 | I-3 | II-13 | III-74 |
| T2-2161 | I-3 | II-13 | III-75 |
| T2-2162 | I-3 | II-13 | III-76 |
| T2-2163 | I-3 | II-13 | III-77 |
| T2-2164 | I-3 | II-13 | III-78 |
| T2-2165 | I-3 | II-13 | III-79 |
| T2-2166 | I-3 | II-13 | III-80 |
| T2-2167 | I-3 | II-13 | III-81 |
| T2-2168 | I-3 | II-13 | III-82 |
| T2-2169 | I-3 | II-13 | III-83 |
| T2-2170 | I-3 | II-13 | III-84 |
| T2-2171 | I-3 | II-13 | III-85 |
| T2-2172 | I-3 | II-13 | III-86 |
| T2-2173 | I-3 | II-13 | III-87 |
| T2-2174 | I-3 | II-13 | III-88 |
| T2-2175 | I-3 | II-13 | III-89 |
| T2-2176 | I-3 | II-13 | III-90 |
| T2-2177 | I-3 | II-13 | III-91 |
| T2-2178 | I-3 | II-13 | III-92 |
| T2-2179 | I-3 | II-13 | III-93 |
| T2-2180 | I-3 | II-13 | III-94 |
| T2-2181 | I-3 | II-13 | III-95 |
| T2-2182 | I-3 | II-13 | III-96 |
| T2-2183 | I-3 | II-13 | III-97 |
| T2-2184 | I-3 | II-13 | III-98 |
| T2-2185 | I-3 | II-13 | III-99 |
| T2-2186 | I-3 | II-13 | III-100 |
| T2-2187 | I-3 | II-13 | III-101 |
| T2-2188 | I-3 | II-13 | III-102 |

| composition | I | II | III |
|---|---|---|---|
| T2-2189 | I-3 | II-13 | III-103 |
| T2-2190 | I-3 | II-13 | III-104 |
| T2-2191 | I-3 | II-13 | III-105 |
| T2-2192 | I-3 | II-13 | III-106 |
| T2-2193 | I-3 | II-13 | III-107 |
| T2-2194 | I-3 | II-13 | III-108 |
| T2-2195 | I-3 | II-13 | III-109 |
| T2-2196 | I-3 | II-13 | III-110 |
| T2-2197 | I-3 | II-13 | III-111 |
| T2-2198 | I-3 | II-13 | III-112 |
| T2-2199 | I-3 | II-13 | III-113 |
| T2-2200 | I-3 | II-13 | III-114 |
| T2-2201 | I-3 | II-13 | III-115 |
| T2-2202 | I-3 | II-13 | III-116 |
| T2-2203 | I-3 | II-13 | III-117 |
| T2-2204 | I-3 | II-13 | III-118 |
| T2-2205 | I-3 | II-13 | III-119 |
| T2-2206 | I-3 | II-13 | III-120 |
| T2-2207 | I-3 | II-13 | III-121 |
| T2-2208 | I-3 | II-13 | III-122 |
| T2-2209 | I-3 | II-13 | III-123 |
| T2-2210 | I-3 | II-13 | III-124 |
| T2-2211 | I-3 | II-13 | III-125 |
| T2-2212 | I-3 | II-13 | III-126 |
| T2-2213 | I-3 | II-13 | III-127 |
| T2-2214 | I-3 | II-13 | III-128 |
| T2-2215 | I-3 | II-13 | III-129 |
| T2-2216 | I-3 | II-13 | III-130 |
| T2-2217 | I-3 | II-13 | III-131 |
| T2-2218 | I-3 | II-13 | III-132 |
| T2-2219 | I-3 | II-13 | III-133 |
| T2-2220 | I-3 | II-13 | III-134 |
| T2-2221 | I-3 | II-13 | III-135 |
| T2-2222 | I-3 | II-13 | III-136 |
| T2-2223 | I-3 | II-13 | III-137 |
| T2-2224 | I-3 | II-13 | III-138 |
| T2-2225 | I-3 | II-13 | III-140 |
| T2-2226 | I-3 | II-13 | III-141 |
| T2-2227 | I-3 | II-13 | III-142 |
| T2-2228 | I-3 | II-13 | III-143 |

| composition | I | II | III |
|---|---|---|---|
| T2-2229 | I-3 | II-13 | III-144 |
| T2-2230 | I-3 | II-13 | III-145 |
| T2-2231 | I-3 | II-13 | III-146 |
| T2-2232 | I-3 | II-13 | III-147 |
| T2-2233 | I-3 | II-13 | III-148 |
| T2-2234 | I-3 | II-13 | III-149 |
| T2-2235 | I-3 | II-13 | III-150 |
| T2-2236 | I-3 | II-13 | III-151 |
| T2-2237 | I-3 | II-13 | III-152 |
| T2-2238 | I-3 | II-13 | III-153 |
| T2-2239 | I-3 | II-13 | III-154 |
| T2-2240 | I-3 | II-13 | III-155 |
| T2-2241 | I-3 | II-13 | III-156 |
| T2-2242 | I-3 | II-13 | III-157 |
| T2-2243 | I-3 | II-13 | III-158 |
| T2-2244 | I-3 | II-13 | III-159 |
| T2-2245 | I-3 | II-13 | III-160 |
| T2-2246 | I-3 | II-13 | III-161 |
| T2-2247 | I-3 | II-13 | III-162 |
| T2-2248 | I-3 | II-13 | III-163 |
| T2-2249 | I-3 | II-13 | III-164 |
| T2-2250 | I-3 | II-13 | III-165 |
| T2-2251 | I-3 | II-13 | III-166 |
| T2-2252 | I-3 | II-13 | III-167 |
| T2-2253 | I-3 | II-13 | III-168 |
| T2-2254 | I-3 | II-13 | III-169 |
| T2-2255 | I-3 | II-13 | III-170 |
| T2-2256 | I-3 | II-13 | III-171 |
| T2-2257 | I-3 | II-13 | III-172 |
| T2-2258 | I-3 | II-13 | III-173 |
| T2-2259 | I-3 | II-13 | III-174 |
| T2-2260 | I-3 | II-13 | III-175 |
| T2-2261 | I-3 | II-13 | III-176 |
| T2-2262 | I-3 | II-13 | III-177 |
| T2-2263 | I-3 | II-13 | III-178 |
| T2-2264 | I-3 | II-13 | III-179 |
| T2-2265 | I-3 | II-13 | III-180 |
| T2-2266 | I-3 | II-13 | III-181 |
| T2-2267 | I-3 | II-13 | III-182 |
| T2-2268 | I-3 | II-13 | III-183 |

| composition | I | II | III |
|---|---|---|---|
| T2-2269 | I-3 | II-13 | III-184 |
| T2-2270 | I-3 | II-13 | III-185 |
| T2-2271 | I-3 | II-13 | III-186 |
| T2-2272 | I-3 | II-13 | III-187 |
| T2-2273 | I-3 | II-13 | III-188 |
| T2-2274 | I-3 | II-13 | III-189 |
| T2-2275 | I-3 | II-13 | III-190 |
| T2-2276 | I-3 | II-13 | III-191 |
| T2-2277 | I-3 | II-13 | III-192 |
| T2-2278 | I-3 | II-13 | III-193 |
| T2-2279 | I-3 | II-13 | III-194 |
| T2-2280 | I-3 | II-13 | III-195 |
| T2-2281 | I-3 | II-13 | III-196 |
| T2-2282 | I-3 | II-13 | III-197 |
| T2-2283 | I-3 | II-13 | III-198 |
| T2-2284 | I-3 | II-13 | III-199 |
| T2-2285 | I-3 | II-13 | III-200 |
| T2-2286 | I-3 | II-13 | III-201 |
| T2-2287 | I-3 | II-13 | III-202 |
| T2-2288 | I-3 | II-13 | III-203 |
| T2-2289 | I-3 | II-14 | III-27 |
| T2-2290 | I-3 | II-14 | III-28 |
| T2-2291 | I-3 | II-14 | III-29 |
| T2-2292 | I-3 | II-14 | III-30 |
| T2-2293 | I-3 | II-14 | III-31 |
| T2-2294 | I-3 | II-14 | III-32 |
| T2-2295 | I-3 | II-14 | III-33 |
| T2-2296 | I-3 | II-14 | III-34 |
| T2-2297 | I-3 | II-14 | III-35 |
| T2-2298 | I-3 | II-14 | III-36 |
| T2-2299 | I-3 | II-14 | III-37 |
| T2-2300 | I-3 | II-14 | III-38 |
| T2-2301 | I-3 | II-14 | III-39 |
| T2-2302 | I-3 | II-14 | III-40 |
| T2-2303 | I-3 | II-14 | III-41 |
| T2-2304 | I-3 | II-14 | III-42 |
| T2-2305 | I-3 | II-14 | III-43 |
| T2-2306 | I-3 | II-14 | III-44 |
| T2-2307 | I-3 | II-14 | III-45 |
| T2-2308 | I-3 | II-14 | III-46 |

| composition | I | II | III |
|---|---|---|---|
| T2-2309 | I-3 | II-14 | III-47 |
| T2-2310 | I-3 | II-14 | III-48 |
| T2-2311 | I-3 | II-14 | III-49 |
| T2-2312 | I-3 | II-14 | III-50 |
| T2-2313 | I-3 | II-14 | III-51 |
| T2-2314 | I-3 | II-14 | III-52 |
| T2-2315 | I-3 | II-14 | III-53 |
| T2-2316 | I-3 | II-14 | III-54 |
| T2-2317 | I-3 | II-14 | III-55 |
| T2-2318 | I-3 | II-14 | III-56 |
| T2-2319 | I-3 | II-14 | III-57 |
| T2-2320 | I-3 | II-14 | III-58 |
| T2-2321 | I-3 | II-14 | III-59 |
| T2-2322 | I-3 | II-14 | III-60 |
| T2-2323 | I-3 | II-14 | III-61 |
| T2-2324 | I-3 | II-14 | III-62 |
| T2-2325 | I-3 | II-14 | III-63 |
| T2-2326 | I-3 | II-14 | III-64 |
| T2-2327 | I-3 | II-14 | III-65 |
| T2-2328 | I-3 | II-14 | III-66 |
| T2-2329 | I-3 | II-14 | III-67 |
| T2-2330 | I-3 | II-14 | III-68 |
| T2-2331 | I-3 | II-14 | III-69 |
| T2-2332 | I-3 | II-14 | III-70 |
| T2-2333 | I-3 | II-14 | III-71 |
| T2-2334 | I-3 | II-14 | III-72 |
| T2-2335 | I-3 | II-14 | III-73 |
| T2-2336 | I-3 | II-14 | III-74 |
| T2-2337 | I-3 | II-14 | III-75 |
| T2-2338 | I-3 | II-14 | III-76 |
| T2-2339 | I-3 | II-14 | III-77 |
| T2-2340 | I-3 | II-14 | III-78 |
| T2-2341 | I-3 | II-14 | III-79 |
| T2-2342 | I-3 | II-14 | III-80 |
| T2-2343 | I-3 | II-14 | III-81 |
| T2-2344 | I-3 | II-14 | III-82 |
| T2-2345 | I-3 | II-14 | III-83 |
| T2-2346 | I-3 | II-14 | III-84 |
| T2-2347 | I-3 | II-14 | III-85 |
| T2-2348 | I-3 | II-14 | III-86 |

| composition | I | II | III |
|---|---|---|---|
| T2-2349 | I-3 | II-14 | III-87 |
| T2-2350 | I-3 | II-14 | III-88 |
| T2-2351 | I-3 | II-14 | III-89 |
| T2-2352 | I-3 | II-14 | III-90 |
| T2-2353 | I-3 | II-14 | III-91 |
| T2-2354 | I-3 | II-14 | III-92 |
| T2-2355 | I-3 | II-14 | III-93 |
| T2-2356 | I-3 | II-14 | III-94 |
| T2-2357 | I-3 | II-14 | III-95 |
| T2-2358 | I-3 | II-14 | III-96 |
| T2-2359 | I-3 | II-14 | III-97 |
| T2-2360 | I-3 | II-14 | III-98 |
| T2-2361 | I-3 | II-14 | III-99 |
| T2-2362 | I-3 | II-14 | III-100 |
| T2-2363 | I-3 | II-14 | III-101 |
| T2-2364 | I-3 | II-14 | III-102 |
| T2-2365 | I-3 | II-14 | III-103 |
| T2-2366 | I-3 | II-14 | III-104 |
| T2-2367 | I-3 | II-14 | III-105 |
| T2-2368 | I-3 | II-14 | III-106 |
| T2-2369 | I-3 | II-14 | III-107 |
| T2-2370 | I-3 | II-14 | III-108 |
| T2-2371 | I-3 | II-14 | III-109 |
| T2-2372 | I-3 | II-14 | III-110 |
| T2-2373 | I-3 | II-14 | III-111 |
| T2-2374 | I-3 | II-14 | III-112 |
| T2-2375 | I-3 | II-14 | III-113 |
| T2-2376 | I-3 | II-14 | III-114 |
| T2-2377 | I-3 | II-14 | III-115 |
| T2-2378 | I-3 | II-14 | III-116 |
| T2-2379 | I-3 | II-14 | III-117 |
| T2-2380 | I-3 | II-14 | III-118 |
| T2-2381 | I-3 | II-14 | III-119 |
| T2-2382 | I-3 | II-14 | III-120 |
| T2-2383 | I-3 | II-14 | III-121 |
| T2-2384 | I-3 | II-14 | III-122 |
| T2-2385 | I-3 | II-14 | III-123 |
| T2-2386 | I-3 | II-14 | III-124 |
| T2-2387 | I-3 | II-14 | III-125 |
| T2-2388 | I-3 | II-14 | III-126 |

| composition | I | II | III |
|---|---|---|---|
| T2-2389 | I-3 | II-14 | III-127 |
| T2-2390 | I-3 | II-14 | III-128 |
| T2-2391 | I-3 | II-14 | III-129 |
| T2-2392 | I-3 | II-14 | III-130 |
| T2-2393 | I-3 | II-14 | III-131 |
| T2-2394 | I-3 | II-14 | III-132 |
| T2-2395 | I-3 | II-14 | III-133 |
| T2-2396 | I-3 | II-14 | III-134 |
| T2-2397 | I-3 | II-14 | III-135 |
| T2-2398 | I-3 | II-14 | III-136 |
| T2-2399 | I-3 | II-14 | III-137 |
| T2-2400 | I-3 | II-14 | III-138 |
| T2-2401 | I-3 | II-14 | III-140 |
| T2-2402 | I-3 | II-14 | III-141 |
| T2-2403 | I-3 | II-14 | III-142 |
| T2-2404 | I-3 | II-14 | III-143 |
| T2-2405 | I-3 | II-14 | III-144 |
| T2-2406 | I-3 | II-14 | III-145 |
| T2-2407 | I-3 | II-14 | III-146 |
| T2-2408 | I-3 | II-14 | III-147 |
| T2-2409 | I-3 | II-14 | III-148 |
| T2-2410 | I-3 | II-14 | III-149 |
| T2-2411 | I-3 | II-14 | III-150 |
| T2-2412 | I-3 | II-14 | III-151 |
| T2-2413 | I-3 | II-14 | III-152 |
| T2-2414 | I-3 | II-14 | III-153 |
| T2-2415 | I-3 | II-14 | III-154 |
| T2-2416 | I-3 | II-14 | III-155 |
| T2-2417 | I-3 | II-14 | III-156 |
| T2-2418 | I-3 | II-14 | III-157 |
| T2-2419 | I-3 | II-14 | III-158 |
| T2-2420 | I-3 | II-14 | III-159 |
| T2-2421 | I-3 | II-14 | III-160 |
| T2-2422 | I-3 | II-14 | III-161 |
| T2-2423 | I-3 | II-14 | III-162 |
| T2-2424 | I-3 | II-14 | III-163 |
| T2-2425 | I-3 | II-14 | III-164 |
| T2-2426 | I-3 | II-14 | III-165 |
| T2-2427 | I-3 | II-14 | III-166 |
| T2-2428 | I-3 | II-14 | III-167 |
| T2-2429 | I-3 | II-14 | III-168 |
| T2-2430 | I-3 | II-14 | III-169 |
| T2-2431 | I-3 | II-14 | III-170 |
| T2-2432 | I-3 | II-14 | III-171 |
| T2-2433 | I-3 | II-14 | III-172 |
| T2-2434 | I-3 | II-14 | III-173 |
| T2-2435 | I-3 | II-14 | III-174 |
| T2-2436 | I-3 | II-14 | III-175 |
| T2-2437 | I-3 | II-14 | III-176 |
| T2-2438 | I-3 | II-14 | III-177 |
| T2-2439 | I-3 | II-14 | III-178 |
| T2-2440 | I-3 | II-14 | III-179 |
| T2-2441 | I-3 | II-14 | III-180 |
| T2-2442 | I-3 | II-14 | III-181 |
| T2-2443 | I-3 | II-14 | III-182 |
| T2-2444 | I-3 | II-14 | III-183 |
| T2-2445 | I-3 | II-14 | III-184 |
| T2-2446 | I-3 | II-14 | III-185 |
| T2-2447 | I-3 | II-14 | III-186 |
| T2-2448 | I-3 | II-14 | III-187 |
| T2-2449 | I-3 | II-14 | III-188 |
| T2-2450 | I-3 | II-14 | III-189 |
| T2-2451 | I-3 | II-14 | III-190 |
| T2-2452 | I-3 | II-14 | III-191 |
| T2-2453 | I-3 | II-14 | III-192 |
| T2-2454 | I-3 | II-14 | III-193 |
| T2-2455 | I-3 | II-14 | III-194 |
| T2-2456 | I-3 | II-14 | III-195 |
| T2-2457 | I-3 | II-14 | III-196 |
| T2-2458 | I-3 | II-14 | III-197 |
| T2-2459 | I-3 | II-14 | III-198 |
| T2-2460 | I-3 | II-14 | III-199 |
| T2-2461 | I-3 | II-14 | III-200 |
| T2-2462 | I-3 | II-14 | III-201 |
| T2-2463 | I-3 | II-14 | III-202 |
| T2-2464 | I-3 | II-14 | III-203 |
| T2-2465 | I-3 | II-15 | III-27 |
| T2-2466 | I-3 | II-15 | III-28 |
| T2-2467 | I-3 | II-15 | III-29 |
| T2-2468 | I-3 | II-15 | III-30 |

| composition | I | II | III |
|---|---|---|---|
| T2-2469 | I-3 | II-15 | III-31 |
| T2-2470 | I-3 | II-15 | III-32 |
| T2-2471 | I-3 | II-15 | III-33 |
| T2-2472 | I-3 | II-15 | III-34 |
| T2-2473 | I-3 | II-15 | III-35 |
| T2-2474 | I-3 | II-15 | III-36 |
| T2-2475 | I-3 | II-15 | III-37 |
| T2-2476 | I-3 | II-15 | III-38 |
| T2-2477 | I-3 | II-15 | III-39 |
| T2-2478 | I-3 | II-15 | III-40 |
| T2-2479 | I-3 | II-15 | III-41 |
| T2-2480 | I-3 | II-15 | III-42 |
| T2-2481 | I-3 | II-15 | III-43 |
| T2-2482 | I-3 | II-15 | III-44 |
| T2-2483 | I-3 | II-15 | III-45 |
| T2-2484 | I-3 | II-15 | III-46 |
| T2-2485 | I-3 | II-15 | III-47 |
| T2-2486 | I-3 | II-15 | III-48 |
| T2-2487 | I-3 | II-15 | III-49 |
| T2-2488 | I-3 | II-15 | III-50 |
| T2-2489 | I-3 | II-15 | III-51 |
| T2-2490 | I-3 | II-15 | III-52 |
| T2-2491 | I-3 | II-15 | III-53 |
| T2-2492 | I-3 | II-15 | III-54 |
| T2-2493 | I-3 | II-15 | III-55 |
| T2-2494 | I-3 | II-15 | III-56 |
| T2-2495 | I-3 | II-15 | III-57 |
| T2-2496 | I-3 | II-15 | III-58 |
| T2-2497 | I-3 | II-15 | III-59 |
| T2-2498 | I-3 | II-15 | III-60 |
| T2-2499 | I-3 | II-15 | III-61 |
| T2-2500 | I-3 | II-15 | III-62 |
| T2-2501 | I-3 | II-15 | III-63 |
| T2-2502 | I-3 | II-15 | III-64 |
| T2-2503 | I-3 | II-15 | III-65 |
| T2-2504 | I-3 | II-15 | III-66 |
| T2-2505 | I-3 | II-15 | III-67 |
| T2-2506 | I-3 | II-15 | III-68 |
| T2-2507 | I-3 | II-15 | III-69 |
| T2-2508 | I-3 | II-15 | III-70 |

| composition | I | II | III |
|---|---|---|---|
| T2-2509 | I-3 | II-15 | III-71 |
| T2-2510 | I-3 | II-15 | III-72 |
| T2-2511 | I-3 | II-15 | III-73 |
| T2-2512 | I-3 | II-15 | III-74 |
| T2-2513 | I-3 | II-15 | III-75 |
| T2-2514 | I-3 | II-15 | III-76 |
| T2-2515 | I-3 | II-15 | III-77 |
| T2-2516 | I-3 | II-15 | III-78 |
| T2-2517 | I-3 | II-15 | III-79 |
| T2-2518 | I-3 | II-15 | III-80 |
| T2-2519 | I-3 | II-15 | III-81 |
| T2-2520 | I-3 | II-15 | III-82 |
| T2-2521 | I-3 | II-15 | III-83 |
| T2-2522 | I-3 | II-15 | III-84 |
| T2-2523 | I-3 | II-15 | III-85 |
| T2-2524 | I-3 | II-15 | III-86 |
| T2-2525 | I-3 | II-15 | III-87 |
| T2-2526 | I-3 | II-15 | III-88 |
| T2-2527 | I-3 | II-15 | III-89 |
| T2-2528 | I-3 | II-15 | III-90 |
| T2-2529 | I-3 | II-15 | III-91 |
| T2-2530 | I-3 | II-15 | III-92 |
| T2-2531 | I-3 | II-15 | III-93 |
| T2-2532 | I-3 | II-15 | III-94 |
| T2-2533 | I-3 | II-15 | III-95 |
| T2-2534 | I-3 | II-15 | III-96 |
| T2-2535 | I-3 | II-15 | III-97 |
| T2-2536 | I-3 | II-15 | III-98 |
| T2-2537 | I-3 | II-15 | III-99 |
| T2-2538 | I-3 | II-15 | III-100 |
| T2-2539 | I-3 | II-15 | III-101 |
| T2-2540 | I-3 | II-15 | III-102 |
| T2-2541 | I-3 | II-15 | III-103 |
| T2-2542 | I-3 | II-15 | III-104 |
| T2-2543 | I-3 | II-15 | III-105 |
| T2-2544 | I-3 | II-15 | III-106 |
| T2-2545 | I-3 | II-15 | III-107 |
| T2-2546 | I-3 | II-15 | III-108 |
| T2-2547 | I-3 | II-15 | III-109 |
| T2-2548 | I-3 | II-15 | III-110 |

| composition | I | II | III |
|---|---|---|---|
| T2-2549 | I-3 | II-15 | III-111 |
| T2-2550 | I-3 | II-15 | III-112 |
| T2-2551 | I-3 | II-15 | III-113 |
| T2-2552 | I-3 | II-15 | III-114 |
| T2-2553 | I-3 | II-15 | III-115 |
| T2-2554 | I-3 | II-15 | III-116 |
| T2-2555 | I-3 | II-15 | III-117 |
| T2-2556 | I-3 | II-15 | III-118 |
| T2-2557 | I-3 | II-15 | III-119 |
| T2-2558 | I-3 | II-15 | III-120 |
| T2-2559 | I-3 | II-15 | III-121 |
| T2-2560 | I-3 | II-15 | III-122 |
| T2-2561 | I-3 | II-15 | III-123 |
| T2-2562 | I-3 | II-15 | III-124 |
| T2-2563 | I-3 | II-15 | III-125 |
| T2-2564 | I-3 | II-15 | III-126 |
| T2-2565 | I-3 | II-15 | III-127 |
| T2-2566 | I-3 | II-15 | III-128 |
| T2-2567 | I-3 | II-15 | III-129 |
| T2-2568 | I-3 | II-15 | III-130 |
| T2-2569 | I-3 | II-15 | III-131 |
| T2-2570 | I-3 | II-15 | III-132 |
| T2-2571 | I-3 | II-15 | III-133 |
| T2-2572 | I-3 | II-15 | III-134 |
| T2-2573 | I-3 | II-15 | III-135 |
| T2-2574 | I-3 | II-15 | III-136 |
| T2-2575 | I-3 | II-15 | III-137 |
| T2-2576 | I-3 | II-15 | III-138 |
| T2-2577 | I-3 | II-15 | III-140 |
| T2-2578 | I-3 | II-15 | III-141 |
| T2-2579 | I-3 | II-15 | III-142 |
| T2-2580 | I-3 | II-15 | III-143 |
| T2-2581 | I-3 | II-15 | III-144 |
| T2-2582 | I-3 | II-15 | III-145 |
| T2-2583 | I-3 | II-15 | III-146 |
| T2-2584 | I-3 | II-15 | III-147 |
| T2-2585 | I-3 | II-15 | III-148 |
| T2-2586 | I-3 | II-15 | III-149 |
| T2-2587 | I-3 | II-15 | III-150 |
| T2-2588 | I-3 | II-15 | III-151 |

| composition | I | II | III |
|---|---|---|---|
| T2-2589 | I-3 | II-15 | III-152 |
| T2-2590 | I-3 | II-15 | III-153 |
| T2-2591 | I-3 | II-15 | III-154 |
| T2-2592 | I-3 | II-15 | III-155 |
| T2-2593 | I-3 | II-15 | III-156 |
| T2-2594 | I-3 | II-15 | III-157 |
| T2-2595 | I-3 | II-15 | III-158 |
| T2-2596 | I-3 | II-15 | III-159 |
| T2-2597 | I-3 | II-15 | III-160 |
| T2-2598 | I-3 | II-15 | III-161 |
| T2-2599 | I-3 | II-15 | III-162 |
| T2-2600 | I-3 | II-15 | III-163 |
| T2-2601 | I-3 | II-15 | III-164 |
| T2-2602 | I-3 | II-15 | III-165 |
| T2-2603 | I-3 | II-15 | III-166 |
| T2-2604 | I-3 | II-15 | III-167 |
| T2-2605 | I-3 | II-15 | III-168 |
| T2-2606 | I-3 | II-15 | III-169 |
| T2-2607 | I-3 | II-15 | III-170 |
| T2-2608 | I-3 | II-15 | III-171 |
| T2-2609 | I-3 | II-15 | III-172 |
| T2-2610 | I-3 | II-15 | III-173 |
| T2-2611 | I-3 | II-15 | III-174 |
| T2-2612 | I-3 | II-15 | III-175 |
| T2-2613 | I-3 | II-15 | III-176 |
| T2-2614 | I-3 | II-15 | III-177 |
| T2-2615 | I-3 | II-15 | III-178 |
| T2-2616 | I-3 | II-15 | III-179 |
| T2-2617 | I-3 | II-15 | III-180 |
| T2-2618 | I-3 | II-15 | III-181 |
| T2-2619 | I-3 | II-15 | III-182 |
| T2-2620 | I-3 | II-15 | III-183 |
| T2-2621 | I-3 | II-15 | III-184 |
| T2-2622 | I-3 | II-15 | III-185 |
| T2-2623 | I-3 | II-15 | III-186 |
| T2-2624 | I-3 | II-15 | III-187 |
| T2-2625 | I-3 | II-15 | III-188 |
| T2-2626 | I-3 | II-15 | III-189 |
| T2-2627 | I-3 | II-15 | III-190 |
| T2-2628 | I-3 | II-15 | III-191 |

| composition | I | II | III |
|---|---|---|---|
| T2-2629 | I-3 | II-15 | III-192 |
| T2-2630 | I-3 | II-15 | III-193 |
| T2-2631 | I-3 | II-15 | III-194 |
| T2-2632 | I-3 | II-15 | III-195 |
| T2-2633 | I-3 | II-15 | III-196 |
| T2-2634 | I-3 | II-15 | III-197 |
| T2-2635 | I-3 | II-15 | III-198 |
| T2-2636 | I-3 | II-15 | III-199 |
| T2-2637 | I-3 | II-15 | III-200 |
| T2-2638 | I-3 | II-15 | III-201 |
| T2-2639 | I-3 | II-15 | III-202 |
| T2-2640 | I-3 | II-15 | III-203 |
| T2-2641 | I-3 | II-16 | III-27 |
| T2-2642 | I-3 | II-16 | III-28 |
| T2-2643 | I-3 | II-16 | III-29 |
| T2-2644 | I-3 | II-16 | III-30 |
| T2-2645 | I-3 | II-16 | III-31 |
| T2-2646 | I-3 | II-16 | III-32 |
| T2-2647 | I-3 | II-16 | III-33 |
| T2-2648 | I-3 | II-16 | III-34 |
| T2-2649 | I-3 | II-16 | III-35 |
| T2-2650 | I-3 | II-16 | III-36 |
| T2-2651 | I-3 | II-16 | III-37 |
| T2-2652 | I-3 | II-16 | III-38 |
| T2-2653 | I-3 | II-16 | III-39 |
| T2-2654 | I-3 | II-16 | III-40 |
| T2-2655 | I-3 | II-16 | III-41 |
| T2-2656 | I-3 | II-16 | III-42 |
| T2-2657 | I-3 | II-16 | III-43 |
| T2-2658 | I-3 | II-16 | III-44 |
| T2-2659 | I-3 | II-16 | III-45 |
| T2-2660 | I-3 | II-16 | III-46 |
| T2-2661 | I-3 | II-16 | III-47 |
| T2-2662 | I-3 | II-16 | III-48 |
| T2-2663 | I-3 | II-16 | III-49 |
| T2-2664 | I-3 | II-16 | III-50 |
| T2-2665 | I-3 | II-16 | III-51 |
| T2-2666 | I-3 | II-16 | III-52 |
| T2-2667 | I-3 | II-16 | III-53 |
| T2-2668 | I-3 | II-16 | III-54 |

| composition | I | II | III |
|---|---|---|---|
| T2-2669 | I-3 | II-16 | III-55 |
| T2-2670 | I-3 | II-16 | III-56 |
| T2-2671 | I-3 | II-16 | III-57 |
| T2-2672 | I-3 | II-16 | III-58 |
| T2-2673 | I-3 | II-16 | III-59 |
| T2-2674 | I-3 | II-16 | III-60 |
| T2-2675 | I-3 | II-16 | III-61 |
| T2-2676 | I-3 | II-16 | III-62 |
| T2-2677 | I-3 | II-16 | III-63 |
| T2-2678 | I-3 | II-16 | III-64 |
| T2-2679 | I-3 | II-16 | III-65 |
| T2-2680 | I-3 | II-16 | III-66 |
| T2-2681 | I-3 | II-16 | III-67 |
| T2-2682 | I-3 | II-16 | III-68 |
| T2-2683 | I-3 | II-16 | III-69 |
| T2-2684 | I-3 | II-16 | III-70 |
| T2-2685 | I-3 | II-16 | III-71 |
| T2-2686 | I-3 | II-16 | III-72 |
| T2-2687 | I-3 | II-16 | III-73 |
| T2-2688 | I-3 | II-16 | III-74 |
| T2-2689 | I-3 | II-16 | III-75 |
| T2-2690 | I-3 | II-16 | III-76 |
| T2-2691 | I-3 | II-16 | III-77 |
| T2-2692 | I-3 | II-16 | III-78 |
| T2-2693 | I-3 | II-16 | III-79 |
| T2-2694 | I-3 | II-16 | III-80 |
| T2-2695 | I-3 | II-16 | III-81 |
| T2-2696 | I-3 | II-16 | III-82 |
| T2-2697 | I-3 | II-16 | III-83 |
| T2-2698 | I-3 | II-16 | III-84 |
| T2-2699 | I-3 | II-16 | III-85 |
| T2-2700 | I-3 | II-16 | III-86 |
| T2-2701 | I-3 | II-16 | III-87 |
| T2-2702 | I-3 | II-16 | III-88 |
| T2-2703 | I-3 | II-16 | III-89 |
| T2-2704 | I-3 | II-16 | III-90 |
| T2-2705 | I-3 | II-16 | III-91 |
| T2-2706 | I-3 | II-16 | III-92 |
| T2-2707 | I-3 | II-16 | III-93 |
| T2-2708 | I-3 | II-16 | III-94 |

| composition | I | II | III |
|---|---|---|---|
| T2-2709 | I-3 | II-16 | III-95 |
| T2-2710 | I-3 | II-16 | III-96 |
| T2-2711 | I-3 | II-16 | III-97 |
| T2-2712 | I-3 | II-16 | III-98 |
| T2-2713 | I-3 | II-16 | III-99 |
| T2-2714 | I-3 | II-16 | III-100 |
| T2-2715 | I-3 | II-16 | III-101 |
| T2-2716 | I-3 | II-16 | III-102 |
| T2-2717 | I-3 | II-16 | III-103 |
| T2-2718 | I-3 | II-16 | III-104 |
| T2-2719 | I-3 | II-16 | III-105 |
| T2-2720 | I-3 | II-16 | III-106 |
| T2-2721 | I-3 | II-16 | III-107 |
| T2-2722 | I-3 | II-16 | III-108 |
| T2-2723 | I-3 | II-16 | III-109 |
| T2-2724 | I-3 | II-16 | III-110 |
| T2-2725 | I-3 | II-16 | III-111 |
| T2-2726 | I-3 | II-16 | III-112 |
| T2-2727 | I-3 | II-16 | III-113 |
| T2-2728 | I-3 | II-16 | III-114 |
| T2-2729 | I-3 | II-16 | III-115 |
| T2-2730 | I-3 | II-16 | III-116 |
| T2-2731 | I-3 | II-16 | III-117 |
| T2-2732 | I-3 | II-16 | III-118 |
| T2-2733 | I-3 | II-16 | III-119 |
| T2-2734 | I-3 | II-16 | III-120 |
| T2-2735 | I-3 | II-16 | III-121 |
| T2-2736 | I-3 | II-16 | III-122 |
| T2-2737 | I-3 | II-16 | III-123 |
| T2-2738 | I-3 | II-16 | III-124 |
| T2-2739 | I-3 | II-16 | III-125 |
| T2-2740 | I-3 | II-16 | III-126 |
| T2-2741 | I-3 | II-16 | III-127 |
| T2-2742 | I-3 | II-16 | III-128 |
| T2-2743 | I-3 | II-16 | III-129 |
| T2-2744 | I-3 | II-16 | III-130 |
| T2-2745 | I-3 | II-16 | III-131 |
| T2-2746 | I-3 | II-16 | III-132 |
| T2-2747 | I-3 | II-16 | III-133 |
| T2-2748 | I-3 | II-16 | III-134 |

| composition | I | II | III |
|---|---|---|---|
| T2-2749 | I-3 | II-16 | III-135 |
| T2-2750 | I-3 | II-16 | III-136 |
| T2-2751 | I-3 | II-16 | III-137 |
| T2-2752 | I-3 | II-16 | III-138 |
| T2-2753 | I-3 | II-16 | III-140 |
| T2-2754 | I-3 | II-16 | III-141 |
| T2-2755 | I-3 | II-16 | III-142 |
| T2-2756 | I-3 | II-16 | III-143 |
| T2-2757 | I-3 | II-16 | III-144 |
| T2-2758 | I-3 | II-16 | III-145 |
| T2-2759 | I-3 | II-16 | III-146 |
| T2-2760 | I-3 | II-16 | III-147 |
| T2-2761 | I-3 | II-16 | III-148 |
| T2-2762 | I-3 | II-16 | III-149 |
| T2-2763 | I-3 | II-16 | III-150 |
| T2-2764 | I-3 | II-16 | III-151 |
| T2-2765 | I-3 | II-16 | III-152 |
| T2-2766 | I-3 | II-16 | III-153 |
| T2-2767 | I-3 | II-16 | III-154 |
| T2-2768 | I-3 | II-16 | III-155 |
| T2-2769 | I-3 | II-16 | III-156 |
| T2-2770 | I-3 | II-16 | III-157 |
| T2-2771 | I-3 | II-16 | III-158 |
| T2-2772 | I-3 | II-16 | III-159 |
| T2-2773 | I-3 | II-16 | III-160 |
| T2-2774 | I-3 | II-16 | III-161 |
| T2-2775 | I-3 | II-16 | III-162 |
| T2-2776 | I-3 | II-16 | III-163 |
| T2-2777 | I-3 | II-16 | III-164 |
| T2-2778 | I-3 | II-16 | III-165 |
| T2-2779 | I-3 | II-16 | III-166 |
| T2-2780 | I-3 | II-16 | III-167 |
| T2-2781 | I-3 | II-16 | III-168 |
| T2-2782 | I-3 | II-16 | III-169 |
| T2-2783 | I-3 | II-16 | III-170 |
| T2-2784 | I-3 | II-16 | III-171 |
| T2-2785 | I-3 | II-16 | III-172 |
| T2-2786 | I-3 | II-16 | III-173 |
| T2-2787 | I-3 | II-16 | III-174 |
| T2-2788 | I-3 | II-16 | III-175 |

| composition | I | II | III |
|---|---|---|---|
| T2-2789 | I-3 | II-16 | III-176 |
| T2-2790 | I-3 | II-16 | III-177 |
| T2-2791 | I-3 | II-16 | III-178 |
| T2-2792 | I-3 | II-16 | III-179 |
| T2-2793 | I-3 | II-16 | III-180 |
| T2-2794 | I-3 | II-16 | III-181 |
| T2-2795 | I-3 | II-16 | III-182 |
| T2-2796 | I-3 | II-16 | III-183 |
| T2-2797 | I-3 | II-16 | III-184 |
| T2-2798 | I-3 | II-16 | III-185 |
| T2-2799 | I-3 | II-16 | III-186 |
| T2-2800 | I-3 | II-16 | III-187 |
| T2-2801 | I-3 | II-16 | III-188 |
| T2-2802 | I-3 | II-16 | III-189 |
| T2-2803 | I-3 | II-16 | III-190 |
| T2-2804 | I-3 | II-16 | III-191 |
| T2-2805 | I-3 | II-16 | III-192 |
| T2-2806 | I-3 | II-16 | III-193 |
| T2-2807 | I-3 | II-16 | III-194 |
| T2-2808 | I-3 | II-16 | III-195 |
| T2-2809 | I-3 | II-16 | III-196 |
| T2-2810 | I-3 | II-16 | III-197 |
| T2-2811 | I-3 | II-16 | III-198 |
| T2-2812 | I-3 | II-16 | III-199 |
| T2-2813 | I-3 | II-16 | III-200 |
| T2-2814 | I-3 | II-16 | III-201 |
| T2-2815 | I-3 | II-16 | III-202 |
| T2-2816 | I-3 | II-16 | III-203 |
| T2-2817 | I-3 | II-17 | III-27 |
| T2-2818 | I-3 | II-17 | III-28 |
| T2-2819 | I-3 | II-17 | III-29 |
| T2-2820 | I-3 | II-17 | III-30 |
| T2-2821 | I-3 | II-17 | III-31 |
| T2-2822 | I-3 | II-17 | III-32 |
| T2-2823 | I-3 | II-17 | III-33 |
| T2-2824 | I-3 | II-17 | III-34 |
| T2-2825 | I-3 | II-17 | III-35 |
| T2-2826 | I-3 | II-17 | III-36 |
| T2-2827 | I-3 | II-17 | III-37 |
| T2-2828 | I-3 | II-17 | III-38 |

| composition | I | II | III |
|---|---|---|---|
| T2-2829 | I-3 | II-17 | III-39 |
| T2-2830 | I-3 | II-17 | III-40 |
| T2-2831 | I-3 | II-17 | III-41 |
| T2-2832 | I-3 | II-17 | III-42 |
| T2-2833 | I-3 | II-17 | III-43 |
| T2-2834 | I-3 | II-17 | III-44 |
| T2-2835 | I-3 | II-17 | III-45 |
| T2-2836 | I-3 | II-17 | III-46 |
| T2-2837 | I-3 | II-17 | III-47 |
| T2-2838 | I-3 | II-17 | III-48 |
| T2-2839 | I-3 | II-17 | III-49 |
| T2-2840 | I-3 | II-17 | III-50 |
| T2-2841 | I-3 | II-17 | III-51 |
| T2-2842 | I-3 | II-17 | III-52 |
| T2-2843 | I-3 | II-17 | III-53 |
| T2-2844 | I-3 | II-17 | III-54 |
| T2-2845 | I-3 | II-17 | III-55 |
| T2-2846 | I-3 | II-17 | III-56 |
| T2-2847 | I-3 | II-17 | III-57 |
| T2-2848 | I-3 | II-17 | III-58 |
| T2-2849 | I-3 | II-17 | III-59 |
| T2-2850 | I-3 | II-17 | III-60 |
| T2-2851 | I-3 | II-17 | III-61 |
| T2-2852 | I-3 | II-17 | III-62 |
| T2-2853 | I-3 | II-17 | III-63 |
| T2-2854 | I-3 | II-17 | III-64 |
| T2-2855 | I-3 | II-17 | III-65 |
| T2-2856 | I-3 | II-17 | III-66 |
| T2-2857 | I-3 | II-17 | III-67 |
| T2-2858 | I-3 | II-17 | III-68 |
| T2-2859 | I-3 | II-17 | III-69 |
| T2-2860 | I-3 | II-17 | III-70 |
| T2-2861 | I-3 | II-17 | III-71 |
| T2-2862 | I-3 | II-17 | III-72 |
| T2-2863 | I-3 | II-17 | III-73 |
| T2-2864 | I-3 | II-17 | III-74 |
| T2-2865 | I-3 | II-17 | III-75 |
| T2-2866 | I-3 | II-17 | III-76 |
| T2-2867 | I-3 | II-17 | III-77 |
| T2-2868 | I-3 | II-17 | III-78 |

| composition | I | II | III |
|---|---|---|---|
| T2-2869 | I-3 | II-17 | III-79 |
| T2-2870 | I-3 | II-17 | III-80 |
| T2-2871 | I-3 | II-17 | III-81 |
| T2-2872 | I-3 | II-17 | III-82 |
| T2-2873 | I-3 | II-17 | III-83 |
| T2-2874 | I-3 | II-17 | III-84 |
| T2-2875 | I-3 | II-17 | III-85 |
| T2-2876 | I-3 | II-17 | III-86 |
| T2-2877 | I-3 | II-17 | III-87 |
| T2-2878 | I-3 | II-17 | III-88 |
| T2-2879 | I-3 | II-17 | III-89 |
| T2-2880 | I-3 | II-17 | III-90 |
| T2-2881 | I-3 | II-17 | III-91 |
| T2-2882 | I-3 | II-17 | III-92 |
| T2-2883 | I-3 | II-17 | III-93 |
| T2-2884 | I-3 | II-17 | III-94 |
| T2-2885 | I-3 | II-17 | III-95 |
| T2-2886 | I-3 | II-17 | III-96 |
| T2-2887 | I-3 | II-17 | III-97 |
| T2-2888 | I-3 | II-17 | III-98 |
| T2-2889 | I-3 | II-17 | III-99 |
| T2-2890 | I-3 | II-17 | III-100 |
| T2-2891 | I-3 | II-17 | III-101 |
| T2-2892 | I-3 | II-17 | III-102 |
| T2-2893 | I-3 | II-17 | III-103 |
| T2-2894 | I-3 | II-17 | III-104 |
| T2-2895 | I-3 | II-17 | III-105 |
| T2-2896 | I-3 | II-17 | III-106 |
| T2-2897 | I-3 | II-17 | III-107 |
| T2-2898 | I-3 | II-17 | III-108 |
| T2-2899 | I-3 | II-17 | III-109 |
| T2-2900 | I-3 | II-17 | III-110 |
| T2-2901 | I-3 | II-17 | III-111 |
| T2-2902 | I-3 | II-17 | III-112 |
| T2-2903 | I-3 | II-17 | III-113 |
| T2-2904 | I-3 | II-17 | III-114 |
| T2-2905 | I-3 | II-17 | III-115 |
| T2-2906 | I-3 | II-17 | III-116 |
| T2-2907 | I-3 | II-17 | III-117 |
| T2-2908 | I-3 | II-17 | III-118 |

| composition | I | II | III |
|---|---|---|---|
| T2-2909 | I-3 | II-17 | III-119 |
| T2-2910 | I-3 | II-17 | III-120 |
| T2-2911 | I-3 | II-17 | III-121 |
| T2-2912 | I-3 | II-17 | III-122 |
| T2-2913 | I-3 | II-17 | III-123 |
| T2-2914 | I-3 | II-17 | III-124 |
| T2-2915 | I-3 | II-17 | III-125 |
| T2-2916 | I-3 | II-17 | III-126 |
| T2-2917 | I-3 | II-17 | III-127 |
| T2-2918 | I-3 | II-17 | III-128 |
| T2-2919 | I-3 | II-17 | III-129 |
| T2-2920 | I-3 | II-17 | III-130 |
| T2-2921 | I-3 | II-17 | III-131 |
| T2-2922 | I-3 | II-17 | III-132 |
| T2-2923 | I-3 | II-17 | III-133 |
| T2-2924 | I-3 | II-17 | III-134 |
| T2-2925 | I-3 | II-17 | III-135 |
| T2-2926 | I-3 | II-17 | III-136 |
| T2-2927 | I-3 | II-17 | III-137 |
| T2-2928 | I-3 | II-17 | III-138 |
| T2-2929 | I-3 | II-17 | III-140 |
| T2-2930 | I-3 | II-17 | III-141 |
| T2-2931 | I-3 | II-17 | III-142 |
| T2-2932 | I-3 | II-17 | III-143 |
| T2-2933 | I-3 | II-17 | III-144 |
| T2-2934 | I-3 | II-17 | III-145 |
| T2-2935 | I-3 | II-17 | III-146 |
| T2-2936 | I-3 | II-17 | III-147 |
| T2-2937 | I-3 | II-17 | III-148 |
| T2-2938 | I-3 | II-17 | III-149 |
| T2-2939 | I-3 | II-17 | III-150 |
| T2-2940 | I-3 | II-17 | III-151 |
| T2-2941 | I-3 | II-17 | III-152 |
| T2-2942 | I-3 | II-17 | III-153 |
| T2-2943 | I-3 | II-17 | III-154 |
| T2-2944 | I-3 | II-17 | III-155 |
| T2-2945 | I-3 | II-17 | III-156 |
| T2-2946 | I-3 | II-17 | III-157 |
| T2-2947 | I-3 | II-17 | III-158 |
| T2-2948 | I-3 | II-17 | III-159 |

| composition | I | II | III |
|---|---|---|---|
| T2-2949 | I-3 | II-17 | III-160 |
| T2-2950 | I-3 | II-17 | III-161 |
| T2-2951 | I-3 | II-17 | III-162 |
| T2-2952 | I-3 | II-17 | III-163 |
| T2-2953 | I-3 | II-17 | III-164 |
| T2-2954 | I-3 | II-17 | III-165 |
| T2-2955 | I-3 | II-17 | III-166 |
| T2-2956 | I-3 | II-17 | III-167 |
| T2-2957 | I-3 | II-17 | III-168 |
| T2-2958 | I-3 | II-17 | III-169 |
| T2-2959 | I-3 | II-17 | III-170 |
| T2-2960 | I-3 | II-17 | III-171 |
| T2-2961 | I-3 | II-17 | III-172 |
| T2-2962 | I-3 | II-17 | III-173 |
| T2-2963 | I-3 | II-17 | III-174 |
| T2-2964 | I-3 | II-17 | III-175 |
| T2-2965 | I-3 | II-17 | III-176 |
| T2-2966 | I-3 | II-17 | III-177 |
| T2-2967 | I-3 | II-17 | III-178 |
| T2-2968 | I-3 | II-17 | III-179 |
| T2-2969 | I-3 | II-17 | III-180 |
| T2-2970 | I-3 | II-17 | III-181 |
| T2-2971 | I-3 | II-17 | III-182 |
| T2-2972 | I-3 | II-17 | III-183 |
| T2-2973 | I-3 | II-17 | III-184 |
| T2-2974 | I-3 | II-17 | III-185 |
| T2-2975 | I-3 | II-17 | III-186 |
| T2-2976 | I-3 | II-17 | III-187 |
| T2-2977 | I-3 | II-17 | III-188 |
| T2-2978 | I-3 | II-17 | III-189 |
| T2-2979 | I-3 | II-17 | III-190 |
| T2-2980 | I-3 | II-17 | III-191 |
| T2-2981 | I-3 | II-17 | III-192 |
| T2-2982 | I-3 | II-17 | III-193 |
| T2-2983 | I-3 | II-17 | III-194 |
| T2-2984 | I-3 | II-17 | III-195 |
| T2-2985 | I-3 | II-17 | III-196 |
| T2-2986 | I-3 | II-17 | III-197 |
| T2-2987 | I-3 | II-17 | III-198 |
| T2-2988 | I-3 | II-17 | III-199 |

| composition | I | II | III |
|---|---|---|---|
| T2-2989 | I-3 | II-17 | III-200 |
| T2-2990 | I-3 | II-17 | III-201 |
| T2-2991 | I-3 | II-17 | III-202 |
| T2-2992 | I-3 | II-17 | III-203 |
| T2-2993 | I-3 | II-18 | III-27 |
| T2-2994 | I-3 | II-18 | III-28 |
| T2-2995 | I-3 | II-18 | III-29 |
| T2-2996 | I-3 | II-18 | III-30 |
| T2-2997 | I-3 | II-18 | III-31 |
| T2-2998 | I-3 | II-18 | III-32 |
| T2-2999 | I-3 | II-18 | III-33 |
| T2-3000 | I-3 | II-18 | III-34 |
| T2-3001 | I-3 | II-18 | III-35 |
| T2-3002 | I-3 | II-18 | III-36 |
| T2-3003 | I-3 | II-18 | III-37 |
| T2-3004 | I-3 | II-18 | III-38 |
| T2-3005 | I-3 | II-18 | III-39 |
| T2-3006 | I-3 | II-18 | III-40 |
| T2-3007 | I-3 | II-18 | III-41 |
| T2-3008 | I-3 | II-18 | III-42 |
| T2-3009 | I-3 | II-18 | III-43 |
| T2-3010 | I-3 | II-18 | III-44 |
| T2-3011 | I-3 | II-18 | III-45 |
| T2-3012 | I-3 | II-18 | III-46 |
| T2-3013 | I-3 | II-18 | III-47 |
| T2-3014 | I-3 | II-18 | III-48 |
| T2-3015 | I-3 | II-18 | III-49 |
| T2-3016 | I-3 | II-18 | III-50 |
| T2-3017 | I-3 | II-18 | III-51 |
| T2-3018 | I-3 | II-18 | III-52 |
| T2-3019 | I-3 | II-18 | III-53 |
| T2-3020 | I-3 | II-18 | III-54 |
| T2-3021 | I-3 | II-18 | III-55 |
| T2-3022 | I-3 | II-18 | III-56 |
| T2-3023 | I-3 | II-18 | III-57 |
| T2-3024 | I-3 | II-18 | III-58 |
| T2-3025 | I-3 | II-18 | III-59 |
| T2-3026 | I-3 | II-18 | III-60 |
| T2-3027 | I-3 | II-18 | III-61 |
| T2-3028 | I-3 | II-18 | III-62 |

| composition | I | II | III |
|---|---|---|---|
| T2-3029 | I-3 | II-18 | III-63 |
| T2-3030 | I-3 | II-18 | III-64 |
| T2-3031 | I-3 | II-18 | III-65 |
| T2-3032 | I-3 | II-18 | III-66 |
| T2-3033 | I-3 | II-18 | III-67 |
| T2-3034 | I-3 | II-18 | III-68 |
| T2-3035 | I-3 | II-18 | III-69 |
| T2-3036 | I-3 | II-18 | III-70 |
| T2-3037 | I-3 | II-18 | III-71 |
| T2-3038 | I-3 | II-18 | III-72 |
| T2-3039 | I-3 | II-18 | III-73 |
| T2-3040 | I-3 | II-18 | III-74 |
| T2-3041 | I-3 | II-18 | III-75 |
| T2-3042 | I-3 | II-18 | III-76 |
| T2-3043 | I-3 | II-18 | III-77 |
| T2-3044 | I-3 | II-18 | III-78 |
| T2-3045 | I-3 | II-18 | III-79 |
| T2-3046 | I-3 | II-18 | III-80 |
| T2-3047 | I-3 | II-18 | III-81 |
| T2-3048 | I-3 | II-18 | III-82 |
| T2-3049 | I-3 | II-18 | III-83 |
| T2-3050 | I-3 | II-18 | III-84 |
| T2-3051 | I-3 | II-18 | III-85 |
| T2-3052 | I-3 | II-18 | III-86 |
| T2-3053 | I-3 | II-18 | III-87 |
| T2-3054 | I-3 | II-18 | III-88 |
| T2-3055 | I-3 | II-18 | III-89 |
| T2-3056 | I-3 | II-18 | III-90 |
| T2-3057 | I-3 | II-18 | III-91 |
| T2-3058 | I-3 | II-18 | III-92 |
| T2-3059 | I-3 | II-18 | III-93 |
| T2-3060 | I-3 | II-18 | III-94 |
| T2-3061 | I-3 | II-18 | III-95 |
| T2-3062 | I-3 | II-18 | III-96 |
| T2-3063 | I-3 | II-18 | III-97 |
| T2-3064 | I-3 | II-18 | III-98 |
| T2-3065 | I-3 | II-18 | III-99 |
| T2-3066 | I-3 | II-18 | III-100 |
| T2-3067 | I-3 | II-18 | III-101 |
| T2-3068 | I-3 | II-18 | III-102 |

| composition | I | II | III |
|---|---|---|---|
| T2-3069 | I-3 | II-18 | III-103 |
| T2-3070 | I-3 | II-18 | III-104 |
| T2-3071 | I-3 | II-18 | III-105 |
| T2-3072 | I-3 | II-18 | III-106 |
| T2-3073 | I-3 | II-18 | III-107 |
| T2-3074 | I-3 | II-18 | III-108 |
| T2-3075 | I-3 | II-18 | III-109 |
| T2-3076 | I-3 | II-18 | III-110 |
| T2-3077 | I-3 | II-18 | III-111 |
| T2-3078 | I-3 | II-18 | III-112 |
| T2-3079 | I-3 | II-18 | III-113 |
| T2-3080 | I-3 | II-18 | III-114 |
| T2-3081 | I-3 | II-18 | III-115 |
| T2-3082 | I-3 | II-18 | III-116 |
| T2-3083 | I-3 | II-18 | III-117 |
| T2-3084 | I-3 | II-18 | III-118 |
| T2-3085 | I-3 | II-18 | III-119 |
| T2-3086 | I-3 | II-18 | III-120 |
| T2-3087 | I-3 | II-18 | III-121 |
| T2-3088 | I-3 | II-18 | III-122 |
| T2-3089 | I-3 | II-18 | III-123 |
| T2-3090 | I-3 | II-18 | III-124 |
| T2-3091 | I-3 | II-18 | III-125 |
| T2-3092 | I-3 | II-18 | III-126 |
| T2-3093 | I-3 | II-18 | III-127 |
| T2-3094 | I-3 | II-18 | III-128 |
| T2-3095 | I-3 | II-18 | III-129 |
| T2-3096 | I-3 | II-18 | III-130 |
| T2-3097 | I-3 | II-18 | III-131 |
| T2-3098 | I-3 | II-18 | III-132 |
| T2-3099 | I-3 | II-18 | III-133 |
| T2-3100 | I-3 | II-18 | III-134 |
| T2-3101 | I-3 | II-18 | III-135 |
| T2-3102 | I-3 | II-18 | III-136 |
| T2-3103 | I-3 | II-18 | III-137 |
| T2-3104 | I-3 | II-18 | III-138 |
| T2-3105 | I-3 | II-18 | III-140 |
| T2-3106 | I-3 | II-18 | III-141 |
| T2-3107 | I-3 | II-18 | III-142 |
| T2-3108 | I-3 | II-18 | III-143 |

| composition | I | II | III |
|---|---|---|---|
| T2-3109 | I-3 | II-18 | III-144 |
| T2-3110 | I-3 | II-18 | III-145 |
| T2-3111 | I-3 | II-18 | III-146 |
| T2-3112 | I-3 | II-18 | III-147 |
| T2-3113 | I-3 | II-18 | III-148 |
| T2-3114 | I-3 | II-18 | III-149 |
| T2-3115 | I-3 | II-18 | III-150 |
| T2-3116 | I-3 | II-18 | III-151 |
| T2-3117 | I-3 | II-18 | III-152 |
| T2-3118 | I-3 | II-18 | III-153 |
| T2-3119 | I-3 | II-18 | III-154 |
| T2-3120 | I-3 | II-18 | III-155 |
| T2-3121 | I-3 | II-18 | III-156 |
| T2-3122 | I-3 | II-18 | III-157 |
| T2-3123 | I-3 | II-18 | III-158 |
| T2-3124 | I-3 | II-18 | III-159 |
| T2-3125 | I-3 | II-18 | III-160 |
| T2-3126 | I-3 | II-18 | III-161 |
| T2-3127 | I-3 | II-18 | III-162 |
| T2-3128 | I-3 | II-18 | III-163 |
| T2-3129 | I-3 | II-18 | III-164 |
| T2-3130 | I-3 | II-18 | III-165 |
| T2-3131 | I-3 | II-18 | III-166 |
| T2-3132 | I-3 | II-18 | III-167 |
| T2-3133 | I-3 | II-18 | III-168 |
| T2-3134 | I-3 | II-18 | III-169 |
| T2-3135 | I-3 | II-18 | III-170 |
| T2-3136 | I-3 | II-18 | III-171 |
| T2-3137 | I-3 | II-18 | III-172 |
| T2-3138 | I-3 | II-18 | III-173 |

| composition | I | II | III |
|---|---|---|---|
| T2-3139 | I-3 | II-18 | III-174 |
| T2-3140 | I-3 | II-18 | III-175 |
| T2-3141 | I-3 | II-18 | III-176 |
| T2-3142 | I-3 | II-18 | III-177 |
| T2-3143 | I-3 | II-18 | III-178 |
| T2-3144 | I-3 | II-18 | III-179 |
| T2-3145 | I-3 | II-18 | III-180 |
| T2-3146 | I-3 | II-18 | III-181 |
| T2-3147 | I-3 | II-18 | III-182 |
| T2-3148 | I-3 | II-18 | III-183 |
| T2-3149 | I-3 | II-18 | III-184 |
| T2-3150 | I-3 | II-18 | III-185 |
| T2-3151 | I-3 | II-18 | III-186 |
| T2-3152 | I-3 | II-18 | III-187 |
| T2-3153 | I-3 | II-18 | III-188 |
| T2-3154 | I-3 | II-18 | III-189 |
| T2-3155 | I-3 | II-18 | III-190 |
| T2-3156 | I-3 | II-18 | III-191 |
| T2-3157 | I-3 | II-18 | III-192 |
| T2-3158 | I-3 | II-18 | III-193 |
| T2-3159 | I-3 | II-18 | III-194 |
| T2-3160 | I-3 | II-18 | III-195 |
| T2-3161 | I-3 | II-18 | III-196 |
| T2-3162 | I-3 | II-18 | III-197 |
| T2-3163 | I-3 | II-18 | III-198 |
| T2-3164 | I-3 | II-18 | III-199 |
| T2-3165 | I-3 | II-18 | III-200 |
| T2-3166 | I-3 | II-18 | III-201 |
| T2-3167 | I-3 | II-18 | III-202 |
| T2-3168 | I-3 | II-18 | III-203 |

In Table T3, further specific compositions according to the invention are individualized.

Table T3: Three-component compositions T3-1 to T3-3168 corresponding to compositions T2-1 to T2-3168 above, wherein instead of compound I-3 compound I-5 is present in every composition, comprising one component I ("I"), namely component I-5, one component II ("II") and one component III ("III"), in particular ternary compositions containing the respective components I, II and III as only active ingredients.

The weight ratio of component I to component II in the inventive compositions is preferably from 1000:1 to 1:1000, more specifically 500:1 to 1:500, particularly 100:1 to 1:100.

The weight ratio of component I to component II depends from the properties of the active substances used and is usually in the range of from 1:1000 to 1000:1, more particularly 1:500 to 500:1. The weight ratio of component I to component II generally depends from the properties of the active substances used and is usually in the range of from

1:100 to 100:1, frequently in the range of from 1:50 to 50:1, preferably in the range of from 1:20 to 20:1, particularly preferably in the range of from 1:10 to 10:1, in particular in the range of from 1:3 to 3:1. It may also be preferable for the weight ratio to be in the range of from 1:2 to 2:1.

According to one embodiment, the compositions according to the invention may preferably have weight ratios of component I versus component II in the range of from 1000:1 to 1:1, often in the range of from 100:1 to 1:1, regularly in the range of from 50:1 to 1:1, preferably in the range of from 20:1 to 1:1, more preferably in the range of from 10:1 to 1:1, even more preferably in the range of from 4:1 to 1:1 and in particular in the range of from 2:1 to 1:1.

According to a further embodiment, the compositions according to the invention may preferably have weight ratios of component I versus component II usually is in the range of from 1:1 to 1000, often in the range of from 1:1 to 1:100, regularly in the range of from 1:1 to 1:50, preferably in the range of from 1:1 to 1:20, more preferably in the range of from 1:1 to 1:10, even more preferably in the range of from 1:1 to 1:4 and in particular in the range of from 1:1 to 1:2.

In the inventive three-component-compositions, the weight ratio of component I to component II depends on the properties of the active compounds in question and may particularly be 1000:1 to 1:1000, specifically 500:1 to 1:500. Preferably, it is in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of component I to the component III may particularly be 1000:1 to 1:1000, specifically 500:1 to 1:500. It is preferably in the range of from 1:100 to 100:1, preferably in the range of from 1:50 to 50:1 and in particular in the range of from 1:20 to 20:1. It may be preferable for the weight ratio to be in the region of from 1:10 to 10:1, preferably from 1:3 to 3:1, in particular from 1:2 to 2:1. The weight ratio of component II to component III is preferably in the range of from 1:100 to 100:1, frequently in the range of from 1:50 to 50:1, preferably in the range of from 1:20 to 20:1, and in particular in the range of from 1:10 to 10:1. It may be preferable for the weight to be in the range of from 1:3 to 3:1, in particular from 1:2 to 2:1.

In the mixtures and compositions, the compound ratios of the active ingredients are advantageously chosen so as to produce a synergistic effect.

The invention also provides pesticidal compositions, comprising a liquid and/or solid carrier and an inventive composition.

The invention furthermore relates to the use of the inventive compositions for controlling phytopathogenic fungi as detailled herein and preparations or compositions comprising them. The invention furthermore also relates to seed comprising the compositions. The invention furthermore also relates to methods for controlling phytopathogenic fungi as detailled herein, wherein the fungi or the materials, plants, the soil or seed to be protected from fungal attack are treated with an effective amount of a compositions according to the invention. The invention furthermore also relates to processes for preparing the compositions according to the invention.

The compositions may be used by treating the fungi or the plants, plant propagation materials, such as seeds, soil, surfaces, materials or rooms to be protected from fungal attack with a fungicidally effective amount of the active substances. The application can be carried out both before and after the infection of the plants, plant propagation materials, such as seeds, soil, surfaces, materials or rooms by the fungi.

By applying the components of the inventive composition or the composition, respectively, a synergistic effect can be obtained, i.e. more then simple addition of the individual effects is obtained (synergistic mixtures).

This can be obtained by applying the components simultaneously, either jointly (e. g. as tank-mix) or seperately, or in succession, wherein the time interval between the individual applications is selected to ensure that the active substance applied first still occurs at the site of action in a sufficient amount at the time of application of the further active substance(s). The order of application is not essential for working of the present invention.

When applying the components sequentially the time between both applications may vary e. g. between 2 hours to 7 days. Also a broader range is possible ranging from 0.25 hour to 30 days, preferably from 0.5 hour to 14 days, particularly from 1 hour to 7 days or from 1.5 hours to 5 days, even more preferred from 2 hours to 1 day.

The compositions according to the invention may effectively be used against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling harmful fungi, which inter alia occur in wood or roots of plants.

The compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferably, the compositions are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with the inventive compositions or the components thereof, respectively, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibitors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J.

Agricult. Res. 58, 2007, 708; Science 316, 2007, 1185; and references quoted therein. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.), Cultivance® (imidazolinone tolerant, BASF SE, Germany) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus,* particularly from *Bacillus thuringiensis*, such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilbene synthase, bibenzyl synthase, chitinases or glucanases. In the context of the present invention these insecticidal proteins or toxins are to be understood expressly also as pre-toxins, hybrid proteins, truncated or otherwise modified proteins.

Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of arthropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme phosphinothricin-N-acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1 F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the Mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The compositions are particularly suitable for controlling the following plant diseases:

*Albugo* spp. (white rust) on ornamentals, vegetables (e. g. *A. candida*) and sunflowers (e. g. *A. tragopogonis*); *Alternaria* spp. (Alternaria leaf spot) on vegetables, rape (A. *brassicola* or *brassicae),* sugar beets (*A. tenuis*), fruits, rice, soybeans, potatoes (e. g. *A. solani* or *A. alternata*), tomatoes (e. g. *A. solani* or *A. alternata*) and wheat; *Aphanomyces* spp. on sugar beets and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.), e. g. Southern leaf blight (*D. maydis)* or Northern leaf blight (*B. zeicola*) on corn, e. g. spot blotch (*B. sorokiniana*) on cereals and e. g. *B. oryzae* on rice and turfs; *Blumeria* (formerly *Erysiphe*) *graminis* (powdery mildew) on cereals (e. g. on wheat or barley); *Botrytis cinerea* (teleomorph: *Botryotinia fuckeliana*: grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn (e. g. Gray leaf spot: *C. zeae-maydis*), rice, sugar beets (e. g. *C. beticola*), sugar cane, vegetables, coffee, soybeans (e. g. *C. sojina* or *C. kikuchii*) and rice; *Cladosporium* spp. on tomatoes (e. g. *C. fulvum*: leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus,* anamorph: *B. sorokiniana*) and rice (e. g. *C. miyabeanus*, anamorph: *H. oryzae*); *Colletotrichum* (teleomorph: *Glomerella*) spp. (anthracnose) on cotton (e. g. *C. gossypii*), corn (e. g. *C. graminicola:* Anthracnose stalk rot), soft fruits, potatoes (e. g. *C. coccodes:* black dot), beans (e. g. *C. lindemuthianum*) and soybeans (e. g. *C. truncatum* or *C. gloeosporioides*); *Corticium*

spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri,* teleomorph: *Neonectria liriodendri*: Black Foot Disease) and ornamentals; *Dematophora* (teleomorph: *Rosellinia) necatrix* (root and stem rot) on soybeans; *Diaporthe* spp., e. g. *D. phaseolorum* (damping off) on soybeans; *Drechslera* (syn. *Helminthosporium,* teleomorph: *Pyrenophora*) spp. on corn, cereals, such as barley (e. g. *D. teres*, net blotch) and wheat (e. g. *D. tritici-repentis*: tan spot), rice and turf; Esca (dieback, apoplexy) on vines, caused by *Formitiporia* (syn. *Phellinus) punctata, F. mediterranea*, *Phaeomoniella chlamydospora* (earlier *Phaeoacremonium chlamydosporum), Phaeoacremonium aleophilum* and/or *Botryosphaeria obtusa; Elsinoe* spp. on pome fruits (*E. pyri*), soft fruits (*E. veneta*: anthracnose) and vines (*E. ampelina:* anthracnose); *Entyloma oryzae* (leaf smut) on rice; *Epicoccum* spp. (black mold) on wheat; *Erysiphe* spp. (powdery mildew) on sugar beets (*E. betae),* vegetables (e. g. *E. pisi*), such as cucurbits (e. g. *E. cichoracearum*), cabbages, rape (e. g. *E. cruciferarum*); *Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum*); *Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* (f. sp. *glycines* now syn. *F. virguliforme* ) and *F. tucumaniae* and *F. brasiliense* each causing sudden death syndrome on soybeans, and *F. verticillioides* on corn; *Gaeumannomyces graminis* (take-all) on cereals (e. g. wheat or barley) and corn; *Gibberella* spp. on cereals (e. g. *G. zeae*) and rice (e. g. *G. fujikuroi*: Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus*) on corn, cereals and rice; *Hemileia* spp., e. g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici*, Septoria blotch) on wheat or *M. fijiensis* (black Sigatoka disease) on bananas; *Peronospora* spp. (downy mildew) on cabbage (e. g. *P. brassicae*), rape (e. g. *P. parasitica*), onions (e. g. *P. destructor*), tobacco (*P. tabacina*) and soybeans (e. g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata*: stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola*: can and leaf spot) and soybeans (e. g. stem rot: *P. phaseoli*, teleomorph: *Diaporthe phaseolorum*); *Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma,* syn. *P. sojae*), potatoes and tomatoes (e. g. *P. infestans*: late blight) and broad-leaved trees (e. g. *P. ramorum:* sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis*) and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or ‚rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, *P. kuehnii* (orange rust) on sugar cane and *P. asparagi* on asparagus; *Pyrenophora* (anamorph: *Drechslera*) *tritici-repentis* (tan spot) on wheat or *P. teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum*) and soybeans (e. g. *S. rolfsii* or *S. sclerotiorum*); *Septoria* spp. on various plants, e. g. *S. glycines* (brown spot) on soybeans, *S. tritici* (Septoria blotch) on wheat and *S.* (syn. *Stagonospora*) nodorum (Stagonospora blotch) on cereals; *Uncinula* (syn. *Erysiphe*) *necator* (powdery mildew,

anamorph: *Oidium tuckeri*) on vines; *Setospaeria* spp. (leaf blight) on corn (e. g. *S. turcicum,* syn. *Helminthosporium turcicum*) and turf; *Sphacelotheca* spp. (smut) on corn, (e. g. *S. reiliana:* head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria*] *nodorum*) on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus*, syn. *U. phaseoli*) and sugar beets (e. g. *U. betae*); *Ustilago* spp. (loose smut) on cereals (e. g. *U. nuda* and *U. avaenae),* corn (e. g. *U. maydis:* corn smut) and sugar cane; *Venturia* spp. (scab) on apples (e. g. *V. inaequalis*) and pears; and *Verticillium* spp. (wilt) on various plants, such as fruits and ornamentals, vines, soft fruits, vegetables and field crops, e. g. *V. dahliae* on strawberries, rape, potatoes and tomatoes.

The compositions are also suitable for controlling harmful fungi in the protection of stored products or harvest and in the protection of materials.

The term "protection of materials" is to be understood to denote the protection of technical and non-living materials, such as adhesives, glues, wood, paper and paperboard, textiles, leather, paint dispersions, plastics, cooling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichoderma* spp., *Alternaria* spp., *Paecilomyces* spp. and Zygomycetes such as *Mucor spp.*, and in addition in the protection of stored products and harvest the following yeast fungi are worthy of note: *Candida* spp. and *Saccharomyces cerevisae.*

Bacteria pathogenic for plants are responsible for devastating losses in agriculture. The use of antibiotics to control such infections is restricted in many countries due to worries over the evolution and transmission of antibiotic resistance.

The compositions according to the invention may also be suitable as bactericides. They may be distinguished by an outstanding effectiveness against a broad spectrum of phytopathogenic bacteria, including soil-borne bacteria, which derive especially from the genera of Agrobacterium, Clavibacter, Corynebacterium, Erwinia, Leifsonia, Pectobacterium, Pseudomonas, Ralstonia, Xanthomonas (e. g. Xanthomonas oryzae causing bacterial blight on rice) and Xylella; preferably Erwinia; even more preferably Erwinia amylovora causing fire blight on apples, pears and other member of the family Rosaceae.

The method of treatment according to the invention can also be used in the field of protecting stored products or harvest against attack of fungi and microorganisms. According to the present invention, the term "stored products" is understood to denote natural substances of plant or animal origin and their processed forms, which have been taken from the natural life cycle and for which long-term protection is desired. Stored products of crop plant origin, such as plants or parts thereof, for example stalks, leafs, tubers, seeds, fruits or grains, can be protected in the freshly harvested state or in processed form, such as pre-dried, moistened, comminuted, ground, pressed or roasted, which process is also known as post-harvest treatment. Also falling under the definition of stored products is timber, whether in the form of crude timber, such as construction timber, electricity pylons and barriers, or in the form of finished articles, such as furniture or objects made from wood. Stored products of animal origin are hides, leather, furs, hairs and the like. The combinations according the present invention can prevent disadvantageous effects such as decay, discoloration or mold. Preferably "stored products" is understood to denote natural substances of plant origin and their processed forms, more preferably fruits and their processed forms, such as pomes, stone fruits, soft fruits and citrus fruits and their processed forms.

The compositions may be used by treating the fungi or the plants, plant propagation materials, such as seeds, soil, surfaces, materials or rooms to be protected from fungal attack with a fungicidally effective amount of the active substances. The application can be carried out both before and after the infection of the plants, plant propagation materials, such as seeds, soil, surfaces, materials or rooms by the fungi.

Plant propagation materials may be treated with the inventive compositions or the components thereof, respectively, prophylactically either at or before planting or transplanting.

An agrochemical composition of the invention may comprise a fungicidally effective amount of the components. The term "effective amount" denotes an amount of the inventive compositions which is sufficient for controlling harmful fungi on cultivated plants or in the protection of materials and which does not result in a substantial damage to the treated

plants. Such an amount can vary in a broad range and is dependent on various factors, such as the fungal species to be controlled, the treated cultivated plant or material, the climatic conditions and the specific compositions used.

Compositions of the invention may also be suitable for efficiently controlling arthropodal pests such as arachnids, myriapedes and insects as well as nematodes.

The present invention also provides methods for the control of insects, acarids or nematodes comprising contacting the insect, acarid or nematode or their food supply, habitat, breeding grounds or their locus with a pesticidally effective amount of the compositions or the components of the inventive compositions, respectively.

Moreover, the present invention also relates to a method of protecting plants from attack or infestation by insects, acarids or nematodes comprising contacting the plant, or the soil or water in which the plant is growing, with a pesticidally effective amount of an inventive composition or with a pesticidally effective amount of the components of the inventive composition, respectively.

Particularly, the invention relates to a method for the protection of plant propagation material, preferably seeds, from soil insects and of the seedlings' roots and shoots from soil and foliar insects which comprises contacting the plant progagation material as e.g. the seeds before sowing and/or after pregermination with a pesticidally effective amount of an inventive composition or with a pesticidally effective amount of the components of the inventive composition, respectively.

The invention also provides seeds comprising the inventive composition or the components of the inventive composition, respectively.

Moreover, it has been found that simultaneous, that is joint or separate, application of the active compound(s) of the inventive compositions or successive application (that is immediately one after another and thereby creating the mixture "in-situ" on the desired location, as e.g. the plant) of the active compound(s) of the inventive compositions allows enhanced control of pests compared to the control rates that are possible with the individual compounds.

They may be suitable for efficiently combating the following pests:

insects from the order of Lepidoptera, for example *Achroia grisella, Acleris* spp. such as *A. fimbriana, A. gloverana, A. variana; Acrolepiopsis assectella, Acronicta major, Adoxophyes* spp. such as A. *cyrtosema, A. orana; Aedia leucomelas, Agrotis* spp. such as *A. exclamationis, A. fucosa, A. ipsilon, A. orthogoma, A. segetum, A. subterranea; Alabama argillacea, Aleurodicus dispersus, Alsophila pometaria, Ampelophaga rubiginosa, Amyelois transitella, Anacampsis sarcitella, Anagasta kuehniella, Anarsia lineatella, Anisota senatoria, Antheraea pernyi, Anticarsia (=Thermesia)* spp. such as *A. gemmatalis; Apamea* spp., *Aproaerema modicella, Archips* spp. such as *A. argyrospila, A. fuscocupreanus, A. rosana, A. xyloseanus; Argyresthia conjugella, Argyroploce* spp., *Argyrotaenia* spp. such as *A. velutinana; Athetis mindara, Austroasca viridigrisea, Autographa gamma, Autographa nigrisigna, Barathra brassicae, Bedellia* spp., *Bonagota salubricola, Borbo cinnara, Bucculatrix thurberiella, Bupalus piniarius, Busseola* spp., *Cacoecia* spp. such as *C. murinana, C. podana; Cactoblastis cactorum, Cadra cautella, Calingo braziliensis, Caloptilis theivora, Capua reticulana, Carposina* spp. such as *C. niponensis, C. sasakii; Cephus* spp., *Chaetocnema aridula, Cheimatobia brumata, Chilo* spp. such as *C. Indicus, C. suppressalis, C. partellus; Choreutis pariana, Choristoneura* spp. such as *C. conflictana, C. fumiferana, C. longicellana, C. murinana, C. occidentalis, C. rosaceana; Chrysodeixis (=Pseudoplusia)* spp. *such as C. eriosoma, C. includens; Cirphis unipuncta, Clysia ambiguella, Cnaphalocerus* spp., *Cnaphalocrocis medinalis, Cnephasia* spp., *Cochylis hospes, Coleophora* spp., *Colias eurytheme, Conopomorpha* spp., *Conotrachelus* spp., *Copitarsia* spp., *Corcyra cephalonica, Crambus caliginosellus, Crambus teterrellus, Crocidosema (=Epinotia) aporema, Cydalima (=Diaphania) perspectalis, Cydia (=Carpocapsa)* spp. such as *C. pomonella, C. latiferreana; Dalaca noctuides, Datana integerrima, Dasychira pinicola, Dendrolimus* spp. such as *D. pini, D. spectabilis, D. sibiricus; Desmia funeralis, Diaphania* spp. such as *D. nitidalis, D. hyalinata; Diatraea grandiosella, Diatraea saccharalis, Diphthera festiva, Earias* spp. such as *E. insulana, E. vittella; Ecdytolopha aurantianu, Egira (=Xylomyges) curialis, Elasmopalpus lignosellus, Eldana saccharina, Endopiza viteana, Ennomos subsignaria, Eoreuma loftini, Ephestia* spp. such as *E. cautella, E. elutella, E. kuehniella; Epinotia aporema, Epiphyas postvittana, Erannis tiliaria, Erionota thrax, Etiella* spp., *Eulia* spp., *Eupoecilia ambiguella, Euproctis chrysorrhoea, Euxoa* spp., *Evetria bouliana, Faronta albilinea, Feltia* spp. such as *F. subterranean; Galleria mellonella, Gracillaria* spp., *Grapholita* spp. such as *G. funebrana, G. molesta, G. inopinata; Halysidota* spp., *Harrisina americana, Hedylepta* spp., *Helicoverpa* spp. such as *H. armigera (=Heliothis armigera), H. zea (=Heliothis zea); Heliothis* spp. such as *H. assulta, H. subflexa, H. virescens; Hellula* spp. such as *H. undalis, H. rogatalis; Helocoverpa gelotopoeon, Hemileuca oliviae, Herpetogramma licarsisalis, Hibernia defoliaria, Hofmannophila pseudospretella, Homoeosoma electellum, Homona magnanima, Hypena scabra, Hyphantria cunea, Hyponomeuta padella, Hyponomeuta malinellus, Kakivoria flavofasciata, Keiferia lycopersicella, Lambdina fiscellaria fiscellaria, Lambdina fiscellaria lugubrosa, Lamprosema indicata, Laspeyresia molesta, Leguminivora glycinivorella, Lerodea eufala, Leucinodes orbonalis, Leucoma salicis, Leucoptera* spp. such as *L. coffeella, L. scitella; Leuminivora lycinivorella, Lithocolletis blancardella, Lithophane antennata, Llattia octo (=Amyna axis), Lobesia botrana, Lophocampa* spp., *Loxagrotis albicosta, Loxostege* spp. such as *L. sticticalis, L. cereralis; Lymantria* spp. such as *L. dispar, L. monacha; Lyonetia clerkella,*

*Lyonetia prunifoliella, Malacosoma* spp. such as *M. americanum, M. californicum, M. constrictum, M. neustria; Mamestra* spp. such as *M. brassicae, M. configurata; Mamstra brassicae, Manduca* spp. such as *M. quinquemaculata, M. sexta; Marasmia spp, Marmara* spp., *Maruca testulalis, Megalopyge lanata, Melanchra picta, Melanitis leda, Mocis* spp. such as *M. lapites, M. repanda; Mocis latipes, Monochroa fragariae, Mythimna separata, Nemapogon cloacella, Neoleucinodes elegantalis, Nepytia* spp., *Nymphula* spp., *Oiketicus* spp., *Omiodes indicata, Omphisa anastomosalis, Operophtera brumata, Orgyia pseudotsugata, Oria* spp., *Orthaga thyrisalis, Ostrinia* spp. such as *O. nubilalis; Oulema oryzae, Paleacrita vernata, Panolis flammea, Parnara* spp., *Papaipema nebris, Papilio cresphontes, Paramyelois transitella, Paranthrene regalis, Paysandisia archon, Pectinophora* spp. such as *P. gossypiella; Peridroma saucia, Perileucoptera* spp., such as *P. coffeella; Phalera bucephala, Phryganidia californica, Phthorimaea* spp. such as *P. operculella; Phyllocnistis citrella, Phyllonorycter* spp. such as *P. blancardella, P. crataegella, P. issikii, P. ringoniella; Pieris* spp. such as *P. brassicae, P. rapae, P. napi; Pilocrocis tripunctata, Plathypena scabra, Platynota* spp. such as *P. flavedana, P. idaeusalis, P. stultana; Platyptilia carduidactyla, Plebejus argus, Plodia interpunctella, Plusia spp, Plutella maculipennis, Plutella xylostella, Pontia protodica, Prays* spp., *Prodenia* spp., *Proxenus lepigone, Pseudaletia* spp. such as *P. sequax, P. unipuncta; Pyrausta nubilalis, Rachiplusia nu, Richia albicosta, Rhizobius ventralis, Rhyacionia frustrana, Sabulodes aegrotata, Schizura concinna, Schoenobius* spp., *Schreckensteinia festaliella, Scirpophaga* spp. such as *S. incertulas, S. innotata; Scotia segetum, Sesamia* spp. such as *S. inferens, Seudyra subflava, Sitotroga cerealella, Sparganothis pilleriana, Spilonota lechriaspis, S. ocellana, Spodoptera (=Lamphygma)* spp. such as *S. eridania, S. exigua, S. frugiperda, S. latisfascia, S. littoralis, S. litura, S. omithogalli; Stigmella* spp., *Stomopteryx subsecivella, Strymon bazochii, Sylepta derogata, Synanthedon* spp. such as S. exitiosa, *Tecia solanivora, Telehin licus, Thaumatopoea pityocampa, Thaumatotibia (=Cryptophlebia) leucotreta, Thaumetopoea pityocampa, Thecla* spp., *Theresimima ampelophaga, Thyrinteina* spp, *Tildenia inconspicuella, Tinea* spp. such as *T. cloacella, T. pellionella; Tineola bisselliella, Tortrix* spp. such as *T. viridana; Trichophaga tapetzella, Trichoplusia* spp. such as *T. ni; Tuta (=Scrobipalpula) absoluta, Udea* spp. such as *U. rubigalis, U. rubigalis; Virachola* spp., *Yponomeuta padella, and Zeiraphera canadensis;*

insects from the order of Coleoptera, for example *Acalymma vittatum, Acanthoscehdes obtectus, Adoretus* spp., *Agelastica alni, Agrilus* spp. such as *A. anxius, A. planipennis, A. sinuatus; Agriotes* spp. such as A. *fuscicollis, A. lineatus, A. obscurus; Alphitobius diaperinus, Amphimallus solstitialis, Anisandrus dispar, Anisoplia austriaca, Anobium punctatum, Anomala corpulenta, Anomala rufocuprea, Anoplophora* spp. such as *A. glabripennis; Anthonomus* spp. such as *A. eugenii, A. grandis, A. pomorum; Anthrenus* spp., *Aphthona euphoridae, Apion* spp., *Apogonia* spp., *Athous haemorrhoidalis, Atomaria* spp. such as *A. linearis; Attagenus* spp., *Aulacophora femoralis, Blastophagus piniperda, Blitophaga undata, Bruchidius obtectus, Bruchus* spp. such as *B. lentis, B. pisorum, B. rufimanus; Byctiscus betulae, Callidiellum rufipenne, Callopistria floridensis, Callosobruchus chinensis, Cameraria ohridella, Cassida nebulosa, Cerotoma trifurcata, Cetonia aurata, Ceuthorhynchus* spp. such as *C. assimilis, C. napi*; *Chaetocnema tibialis, Cleonus mendicus*, *Conoderus* spp. such as *C. vespertinus; Conotrachelus nenuphar, Cosmopolites* spp., *Costelytra zealandica, Crioceris asparagi, Cryptolestes ferrugineus, Cryptorhynchus lapathi, Ctenicera* spp. such as *C. destructor; Curculio* spp., *Cylindrocopturus* spp., *Cyclocephala* spp., *Dactylispa balyi, Dectes texanus, Dermestes* spp., *Diabrotica* spp. such as *D. undecimpunctata, D. speciosa, D. longicornis, D. semipunctata, D. virgifera*; *Diaprepes abbreviates, Dichocrocis* spp., *Dicladispa armigera, Diloboderus abderus, Diocalandra frumenti (Diocalandra stigmaticollis), Enaphalodes rufulus, Epilachna* spp. such as *E. varivestis, E. vigintioctomaculata; Epitrix* spp. such as *E. hirtipennis, E. similaris; Eutheola humilis, Eutinobothrus brasiliensis, Faustinus cubae, Gibbium psylloides, Gnathocerus cornutus, Hellula undalis, Heteronychus arator, Hylamorpha elegans, Hylobius abietis, Hylotrupes bajulus, Hypera* spp. such as *H. brunneipennis, H. postica; Hypomeces squamosus, Hypothenemus* spp., *Ips typographus, Lachnosterna consanguinea, Lasioderma serricorne, Latheticus oryzae, Lathridius* spp., *Lema* spp. such as *L. bilineata, L. melanopus; Leptinotarsa* spp. such as *L. decemlineata; Leptispa pygmaea, Limonius californicus, Lissorhoptrus oryzophilus, Lixus* spp., *Luperodes* spp., *Lyctus* spp. such as *L. bruneus; Liogenys fuscus, Macrodactylus* spp. such as *M. subspinosus; Maladera matrida, Megaplatypus mutates, Megascelis* spp., *Melanotus communis, Meligethes* spp. such as *M. aeneus; Melolontha* spp. such as *M. hippocastani, M. melolontha; Metamasius hemipterus, Microtheca* spp., *Migdolus* spp. such as *M. fryanus, Monochamus* spp. such as *M. alternatus; Naupactus xanthographus, Niptus hololeucus, Oberia brevis, Oemona hirta, Oryctes rhinoceros, Oryzaephilus surinamensis, Oryzaphagus oryzae, Otiorrhynchus sulcatus, Otiorrhynchus ovatus, Otiorrhynchus sulcatus, Oulema melanopus, Oulema oryzae, Oxycetonia jucunda, Phaedon* spp. such as *P. brassicae, P. cochleariae; Phoracantha recurva, Phyllobius pyri, Phyllopertha horticola, Phyllophaga* spp. such as *P. helleri, Phyllotreta* spp. such as *P. chrysocephala, P. nemorum, P. striolata, P. vittula; Phyllopertha horticola, Popillia japonica, Premnotrypes* spp., *Psacothea hilaris, Psylliodes chrysocephala, Prostephanus truncates, Psylliodes* spp., *Ptinus* spp., *Pulga saltona, Rhizopertha dominica, Rhynchophorus* spp. such as *R. billineatus, R. ferrugineus, R. palmarum, R. phoenicis, R. vulneratus; Saperda candida, Scolytus schevyrewi, Scyphophorus acupunctatus, Sitona lineatus, Sitophilus* spp. such as *S. granaria, S. oryzae, S. zeamais; Sphenophorus* spp. such as *S. levis; Stegobium paniceum, Sternechus* spp. such as *S.*

*subsignatus; Strophomorphus ctenotus, Symphyletes* spp., *Tanymecus* spp., *Tenebrio molitor, Tenebrioides mauretanicus, Tribolium* spp. such as *T. castaneum; Trogoderma* spp., *Tychius* spp., *Xylotrechus* spp. such as *X. pyrrhoderus; and, Zabrus* spp. *such as Z. tenebrioides;*

insects from the order of Diptera for example *Aedes* spp. such as *A. aegypti, A. albopictus, A. vexans; Anastrepha ludens, Anopheles* spp. such as *A. albimanus, A. crucians, A. freeborni, A. gambiae, A. leucosphyrus, A. maculipennis, A. minimus, A. quadrimaculatus, A. sinensis; Bactrocera invadens, Bibio hortulanus, Calliphora erythrocephala, Calliphora vicina, Ceratitis capitata, Chrysomyia* spp. such as *C. bezziana, C. hominivorax, C. macellaria; Chrysops atlanticus, Chrysops discalis, Chrysops silacea, Cochliomyia* spp. such as *C. hominivorax; Contarinia* spp. such as *C. sorghicola; Cordylobia anthropophaga, Culex* spp. such as *C. nigripalpus, C. pipiens, C. quinquefasciatus, C. tarsalis, C. tritaeniorhynchus; Culicoides furens, Culiseta inornata, Culiseta melanura, Cuterebra* spp., *Dacus cucurbitae, Dacus oleae, Dasineura brassicae, Dasineura oxycoccana, Delia* spp. such as *D. antique, D. coarctata, D. platura, D. radicum; Dermatobia hominis, Drosophila* spp. such as *D. suzukii, Fannia* spp. such as *F. canicularis; Gastraphilus* spp. such as *G. intestinalis; Geomyza tipunctata, Glossina* spp. such as *G. fuscipes, G. morsitans, G. palpalis, G. tachinoides; Haematobia irritans, Haplodiplosis equestris, Hippelates* spp., Hylemyia spp. such as *H. platura; Hypoderma* spp. such as *H. lineata; Hyppobosca* spp., *Hydrellia philippina, Leptoconops torrens, Liriomyza* spp. such as *L. sativae, L. trifolii; Lucilia* spp. such as *L. caprina, L. cuprina, L. sericata; Lycoria pectoralis, Mansonia titillanus, Mayetiola* spp. such as *M. destructor; Musca* spp. such as *M. autumnalis, M. domestica; Muscina stabulans, Oestrus* spp. such as *O. ovis; Opomyza florum, Oscinella* spp. such as *O. frit; Orseolia oryzae, Pegomya hysocyami, Phlebotomus argentipes, Phorbia* spp. such as *P. antiqua, P. brassicae, P. coarctata; Phytomyza gymnostoma, Prosimulium mixtum, Psila rosae, Psorophora columbiae, Psorophora discolor, Rhagoletis* spp. such as *R. cerasi, R. cingulate, R. indifferens, R. mendax, R. pomonella; Rivellia quadrifasciata, Sarcophaga* spp. such as *S. haemorrhoidalis; Simulium vittatum, Sitodiplosis mosellana, Stomoxys* spp. such as *S. calcitrans; Tabanus* spp. such as *T. atratus, T. bovinus, T. lineola, T. similis; Tannia spp., Thecodiplosis japonensis, Tipula oleracea, Tipula paludosa,* and *Wohlfahrtia* spp;

insects from the order of Thysanoptera for example, *Baliothrips biformis, Dichromothrips corbetti, Dichromothrips* ssp., *Echinothrips americanus, Enneothrips flavens, Frankliniella* spp. such as *F. fusca, F. occidentalis, F. tritici; Heliothrips* spp., *Hercinothrips femoralis, Kakothrips* spp., *Microcephalothrips abdominalis, Neohydatothrips samayunkur, Pezothrips kellyanus, Rhipiphorothrips cruentatus, Scirtothrips* spp. such as *S. citri, S. dorsalis, S. perseae; Stenchaetothrips spp, Taeniothrips cardamoni, Taeniothrips inconsequens, Thrips* spp. such as *T. imagines, T. hawaiiensis, T. oryzae, T. palmi, T. parvispinus, T. abaci;*

insects from the order of Hemiptera for example, *Acizzia jamatonica, Acrosternum* spp. such as *A. hilare;* Acyrthosipon spp. such as *A. onobrychis, A. pisum; Adelges laricis, Adelges tsugae, Adelphocoris* spp., such as *A. rapidus, A. superbus; Aeneolamia* spp., *Agonoscena* spp., *Aulacorthum solani, Aleurocanthus woglumi, Aleurodes* spp., *Aleurodicus disperses, Aleurolobus barodensis, Aleurothrixus* spp., *Amrasca* spp., *Anasa tristis, Antestiopsis* spp., *Anuraphis cardui, Aonidiella* spp., *Aphanostigma piri, Aphidula nasturtii, Aphis* spp. such as *A. craccivora, A. fabae, A. forbesi, A. gossypii, A. grossulariae, A. maidiradicis, A. pomi, A. sambuci, A. schneideri, A. spiraecola; Arboridia apicalis, Arilus critatus, Aspidiella* spp., *Aspidiotus* spp., *Atanus* spp., *Aulacaspis yasumatsui, Aulacorthum solani, Bactericera cockerelli (Paratrioza cockerelli), Bemisia* spp. such as *B. argentifolii, B. tabaci (Aleurodes tabaci); Blissus* spp. such as *B. leucopterus; Brachycaudus* spp. such as *B. cardui, B. helichrysi, B. persicae, B. prunicola; Brachycolus* spp., *Brachycorynella asparagi, Brevicoryne brassicae, Cacopsylla* spp. such as *C. fulguralis, C. pyricola (Psylla piri); Calligypona marginata, Calocoris* spp., *Campylomma livida, Capitophorus horni, Carneocephala fulgida, Cavelerius* spp., *Ceraplastes* spp., *Ceratovacuna lanigera, Ceroplastes ceriferus, Cerosipha gossypii, Chaetosiphon fragaefolii, Chionaspis tegalensis, Chlorita onukii, Chromaphis juglandicola, Chrysomphalus ficus, Cicadulina mbila, Cimex* spp. such as *C. hemipterus, C. lectularius; Coccomytilus halli, Coccus* spp. such as *C. hesperidum, C. pseudomagnoliarum; Corythucha arcuata, Creontiades dilutus, Cryptomyzus ribis, Chrysomphalus aonidum, Cryptomyzus ribis, Ctenarytaina spatulata, Cyrtopeltis notatus, Dalbulus* spp., *Dasynus piperis, Dialeurodes* spp. such as *D. citrifolii; Dalbulus maidis, Diaphorina* spp. such as *D. citri; Diaspis* spp. such as *D. bromeliae; Dichelops furcatus, Diconocoris hewetti, Doralis* spp., *Dreyfusia nordmannianae, Dreyfusia piceae, Drosicha* spp., *Dysaphis* spp. such as *D. plantaginea, D. pyri, D. radicola; Dysaulacorthum pseudosolani, Dysdercus* spp. such as *D. cingulatus, D. intermedius; Dysmicoccus* spp., *Edessa* spp., *Geocoris* spp., *Empoasca* spp. such as *E. fabae, E. solana; Epidiaspis leperii, Eriosoma* spp. such as *E. lanigerum, E. pyricola; Erythroneura* spp., *Eurygaster spp.* such as *E. integriceps; Euscelis bilobatus, Euschistus* spp. such as *E. heros, E. impictiventris, E. servus; Fiorinia theae, Geococcus coffeae, Glycaspis brimblecombei, Halyomorpha* spp. such as *H. halys; Heliopeltis* spp., *Homalodisca vitripennis (=H. coagulata), Horcias nobilellus, Hyalopterus pruni, Hyperomyzus lactucae, Icerya* spp. such as *I. purchase; Idiocerus* spp., *Idioscopus* spp., *Laodelphax striatellus, Lecanium* spp., *Lecanoideus floccissimus,*

*Lepidosaphes* spp. such as *L. ulmi; Leptocorisa* spp., *Leptoglossus phyllopus, Lipaphis erysimi, Lygus* spp. such as *L. hesperus, L. lineolaris, L. pratensis; Maconellicoccus hirsutus, Marchalina hellenica, Macropes excavatus, Macrosiphum* spp. such as *M. rosae, M. avenae, M. euphorbiae; Macrosteles quadrilineatus, Mahanarva fimbriolata, Megacopta cribraria, Megoura viciae, Melanaphis pyrarius, Melanaphis sacchari, Melanocallis (=Tinocallis) caryaefoliae, Metcafiella* spp., *Metopolophium dirhodum, Monellia costalis, Monelliopsis pecanis, Myzocallis coryli, Murgantia* spp., *Myzus* spp. such as *M. ascalonicus, M. cerasi, M. nicotianae, M. persicae, M. varians; Nasonovia ribisnigri, Neotoxoptera formosana, Neomegalotomus spp, Nephotettix* spp. such as *N. malayanus, N. nigropictus, N. parvus, N. virescens; Nezara* spp. such as *N. viridula; Nilaparvata lugens, Nysius huttoni, Oebalus* spp. such as *O. pugnax; Oncometopia* spp., *Orthezia praelonga, Oxycaraenus hyalinipennis, Parabemisia myricae, Parlatoria* spp., *Parthenolecanium* spp. such as *P. corni, P. persicae; Pemphigus* spp. such as *P. bursarius, P. populivenae; Peregrinus maidis, Perkinsiella saccharicida, Phenacoccus* spp. such as *P. aceris, P. gossypii; Phloeomyzus passerinii, Phorodon humuli, Phylloxera* spp. such as *P. devastatrix, Piesma quadrata, Piezodorus* spp. such as *P. guildinii; Pinnaspis aspidistrae, Planococcus* spp. such as *P. citri, P. ficus; Prosapia bicincta, Protopulvinaria pyriformis, Psallus seriatus, Pseudacysta persea, Pseudaulacaspis pentagona, Pseudococcus* spp. such as *P. comstocki; Psylla* spp. such as *P. mali; Pteromalus* spp., *Pulvinaria amygdali, Pyrilla* spp., *Quadraspidiotus* spp., such as *Q. perniciosus; Quesada gigas, Rastrococcus* spp., *Reduvius senilis, Rhizoecus americanus, Rhodnius* spp., *Rhopalomyzus ascalonicus, Rhopalosiphum* spp. such as *R. pseudobrassicas, R. insertum, R. maidis, R. padi; Sagatodes* spp., *Sahlbergella singularis, Saissetia* spp., *Sappaphis mala, Sappaphis mali, Scaptocoris* spp., *Scaphoides titanus, Schizaphis graminum, Schizoneura lanuginosa, Scotinophora* spp., *Selenaspidus articulatus, Sitobion avenae, Sogata* spp., *Sogatella furcifera, Solubea insularis, Spissistilus festinus (=Stictocephala festina), Stephanitis nashi, Stephanitis pyrioides, Stephanitis takeyai, Tenalaphara malayensis, Tetraleurodes perseae, Therioaphis maculate, Thyanta* spp. such as *T. accerra, T. perditor; Tibraca* spp., *Tomaspis* spp., *Toxoptera* spp. such as *T. aurantii; Trialeurodes* spp. such as *T. abutilonea, T. ricini, T. vaporariorum; Triatoma* spp., *Trioza* spp., *Typhlocyba* spp., *Unaspis* spp. such as *U. citri, U. yanonensis; and Viteus vitifolii,*

Insects from the order Hymenoptera for example *Acanthomyops interjectus, Athalia rosae, Atta* spp. *such as A. capiguara, A. cephalotes, A. cephalotes, A. laevigata, A. robusta, A. sexdens, A. texana, Bombus* spp., *Brachymyrmex* spp., *Camponotus* spp. such as *C. floridanus, C. pennsylvanicus, C. modoc; Cardiocondyla nuda, Chalibion sp, Crematogaster* spp., *Dasymutilla occidentalis, Diprion* spp., *Dolichovespula maculata, Dorymyrmex* spp., *Dryocosmus kuriphilus, Formica* spp., *Hoplocampa* spp. such as *H. minuta, H. testudinea; Iridomyrmex humilis,* Lasius spp. such as *L. niger, Linepithema humile, Liometopum* spp., *Leptocybe invasa, Monomorium* spp. such as *M. pharaonis, Monomorium, Nylandria fulva, Pachycondyla chinensis, Paratrechina longicornis, Paravespula* spp., such as *P. germanica, P. pennsylvanica, P. vulgaris; Pheidole* spp. such as *P. megacephala; Pogonomyrmex* spp. such as *P. barbatus, P. californicus, Polistes rubiginosa, Prenolepis impairs, Pseudomyrmex gracilis, Schelipron* spp., *Sirex cyaneus, Solenopsis* spp. such as *S. geminata, S.invicta, S. molesta, S. richteri, S. xyloni, Sphecius speciosus, Sphex* spp., *Tapinoma* spp. such as *T. melanocephalum, T. sessile; Tetramorium* spp. such as *T. caespitum, T. bicarinatum, Vespa* spp. such as *V. crabro; Vespula* spp. such as *V. squamosal; Wasmannia auropunctata, Xylocopa* sp;

Insects from the order Orthoptera for example *Acheta domesticus, Calliptamus italicus, Chortoicetes terminifera, Ceuthophilus* spp., *Diastrammena asynamora, Dociostaurus maroccanus, Gryllotalpa* spp. such as *G. africana, G. gryllotalpa; Gryllus* spp., *Hieroglyphus daganensis, Kraussaria angulifera, Locusta* spp. such as *L. migratoria, L. pardalina; Melanoplus* spp. such as *M. bivittatus, M. femurrubrum, M. mexicanus, M. sanguinipes, M. spretus; Nomadacris septemfasciata, Oedaleus senegalensis, Scapteriscus* spp., *Schistocerca* spp. such as *S. americana, S. gregaria, Stemopelmatus* spp., *Tachycines asynamorus,* and *Zonozerus variegatus;*

Pests from the Class Arachnida for example Acari,e.g. of the families Argasidae, Ixodidae and Sarcoptidae, such as *Amblyomma* spp. (e.g. *A. americanum, A. variegatum, A. maculatum*), Argas spp. such as *A. persicu*), *Boophilus* spp. such as *B. annulatus, B. decoloratus, B. microplus, Dermacentor* spp. such as *D.silvarum, D. andersoni, D. variabilis, Hyalomma* spp. such as *H. truncatum, Ixodes* spp. such as *I. ricinus, I. rubicundus, I. scapularis, I. holocyclus, I. pacificus, Rhipicephalus sanguineus, Ornithodorus* spp. such as *O. moubata, O. hermsi, O. turicata, Ornithonyssus bacoti, Otobius megnini, Dermanyssus gallinae, Psoroptes* spp. such as *P. ovis, Rhipicephalus* spp. such as *R. sanguineus, R. appendiculatus, Rhipicephalus evertsi, Rhizoglyphus* spp., *Sarcoptes* spp. such as*S. Scabiei*; and Family Eriophyidae including *Aceria* spp. such as A. *sheldoni, A. anthocoptes*, *Acallitus* spp., *Aculops* spp. such as *A. lycopersici*, *A. pelekassi*; *Aculus* spp. such as *A. schlechtendali; Colomerus vitis, Epitrimerus pyri, Phyllocoptruta oleivora; Eriophytes ribis* and *Eriophyes* spp. such as *Eriophyes sheldoni*; Family Tarsonemidae including *Hemitarsonemus* spp., *Phytonemus pallidus and Polyphagotarsonemus latus, Stenotarsonemus* spp. *Steneotarsonemus spinki*; Family Tenuipalpidae including Brevipalpus spp. such as *B. phoenicis*; Family Tetranychidae

including *Eotetranychus* spp., *Eutetranychus* spp., *Oligonychus* spp., *Petrobia latens, Tetranychus* spp. such as *T. cinnabarinus, T. evansi, T. kanzawai, T, pacificus, T. phaseulus, T. telarius* and *T. urticae; Bryobia praetiosa*; *Panonychus* spp. such as *P. ulmi*, *P. citri*; *Metatetranychus* spp. and *Oligonychus* spp. such as *O. pratensis, O. perseae, Vasates lycopersici*; *Raoiella indica, Family* Carpoglyphidae including *Carpoglyphus* spp.; *Penthaleidae* spp. such as *Halotydeus destructor,* Family Demodicidae with species such as *Demodex* spp.; Family Trombicidea including *Trombicula* spp.; Family Macronyssidae including *Ornothonyssus* spp.; Family Pyemotidae including *Pyemotes tritici*; *Tyrophagus putrescentiae;* Family Acaridae including *Acarus siro*; Family Araneida including *Latrodectus mactans, Tegenaria agrestis, Chiracanthium sp, Lycosa sp Achaearanea tepidariorum* and *Loxosceles reclusa*;

Pests from the Phylum Nematoda, for example, plant parasitic nematodes such as root-knot nematodes, *Meloidogyne* spp. such as *M. hapla, M. incognita, M. javanica;* cyst-forming nematodes, *Globodera* spp. such as *G. rostochiensis; Heterodera* spp. such as *H. avenae, H. glycines, H. schachtii, H. trifolii;* Seed gall nematodes, *Anguina* spp.; Stem and foliar nematodes, *Aphelenchoides* spp. such as *A. besseyi;* Sting nematodes, *Belonolaimus* spp. such as *B. longicaudatus;* Pine nematodes, *Bursaphelenchus* spp. such as *B. lignicolus, B. xylophilus;* Ring nematodes, *Criconema* spp., *Criconemella* spp. such as *C. xenoplax* and *C. ornata;* and, *Criconemoides* spp. such as *Criconemoides informis; Mesocriconema* spp.;

Stem and bulb nematodes, *Ditylenchus* spp. such as *D. destructor, D. dipsaci;* Awl nematodes, *Dolichodorus* spp.; Spiral nematodes, *Heliocotylenchus multicinctus;* Sheath and sheathoid nematodes, *Hemicycliophora* spp. and *Hemicriconemoides* spp.; *Hirshmanniella* spp.; Lance nematodes, *Hoploaimus* spp.; False rootknot nematodes, *Nacobbus spp.;* Needle nematodes, *Longidorus* spp. such as *L. elongatus;* Lesion nematodes, *Pratylenchus* spp. such as *P. brachyurus, P. neglectus, P. penetrans, P. curvitatus, P. goodeyi;* Burrowing nematodes, *Radopholus* spp. such as *R. similis; Rhadopholus* spp.; *Rhodopholus* spp.; Reniform nematodes, *Rotylenchus* spp. such as *R. robustus, R. reniformis; Scutellonema* spp.; Stubby-root nematode, *Trichodorus* spp. such as *T. obtusus, T. primitivus; Paratrichodorus* spp. such as *P. minor;* Stunt nematodes, *Tylenchorhynchus* spp. such as *T. claytoni, T. dubius;* Citrus nematodes, *Tylenchulus* spp. such as *T. semipenetrans;* Dagger nematodes, *Xiphinema* spp.; and other plant parasitic nematode species;

Insects from the order Isoptera for example *Calotermes flavicollis, Coptotermes* spp. such as *C. formosanus, C. gestroi, C. acinaciformis; Cornitermes cumulans, Cryptotermes* spp. such as *C. brevis, C. cavifrons; Globitermes sulfureus, Heterotermes* spp. such as *H. aureus, H. longiceps, H. tenuis; Leucotermes flavipes, Odontotermes spp., Incisitermes* spp. such as *I. minor, I. Snyder, Marginitermes hubbardi, Mastotermes* spp. such as *M. darwiniensis Neocapritermes* spp. such as *N. opacus, N. parvus; Neotermes* spp., *Procornitermes* spp., *Zootermopsis* spp. *such as Z. angusticollis*, *Z. nevadensis*, *Reticulitermes* spp. such as *R. hesperus, R. tibialis, R. speratus, R. flavipes, R. grassei, R. lucifugus, R. santonensis, R. virginicus; Termes natalensis,*

Insects from the order Blattaria for example *Blatta* spp. such as *B. orientalis, B. lateralis; Blattella* spp. such as *B. asahinae, B. germanica; Leucophaea maderae, Panchlora nivea, Periplaneta* spp. such as *P. americana, P. australasiae, P. brunnea, P. fuligginosa, P. japonica; Supella longipalpa, Parcoblatta pennsylvanica, Eurycotis floridana, Pycnoscelus surinamensis,*

Insects from the order Siphonoptera for example *Cediopsylla simples, Ceratophyllus* spp., *Ctenocephalides* spp. such as *C. felis, C. canis, Xenopsylla cheopis, Pulex irritans*, *Trichodectes canis, Tunga penetrans,* and *Nosopsyllus fasciatus,*

Insects from the order Thysanura for example *Lepisma saccharina, Ctenolepisma urbana*, and *Thermobia domestica,* Pests from the class Chilopoda for example *Geophilus* spp., Scutigera spp. such as *Scutigera coleoptrata*; Pests from the class Diplopoda for example *Blaniulus guttulatus, Julus* spp., *Narceus* spp., Pests from the class Symphyla for example *Scutigerella immaculata,* Insects from the order Dermaptera, for example *Forficula auricularia,* Insects from the order Collembola, for example *Onychiurus* spp., such as *Onychiurus armatus,* Pests from the order Isopoda for example, *Armadillidium vulgare, Oniscus asellus, Porcellio scaber,*

Insects from the order Phthiraptera, for example *Damalinia* spp., Pediculus spp. such as *Pediculus humanus capitis, Pediculus humanus corporis, Pediculus humanus humanus; Pthirus pubis,* Haematopinus spp. such as *Haematopinus eurysternus, Haematopinus suis;* Linognathus spp. such as *Linognathus vituli; Bovicola bovis, Menopon gallinae, Menacanthus stramineus* and *Solenopotes capillatus, Trichodectes* spp.,

Examples of further pest species which may be controlled by mixtures of the invention include: from the Phylum

Mollusca, class Bivalvia, for example, *Dreissena* spp.; class Gastropoda, for example, *Arion* spp., *Biomphalaria* spp., *Bulinus* spp., *Deroceras* spp., *Galba* spp., *Lymnaea* spp., *Oncomelania* spp., *Pomacea canaliclata, Succinea* spp.; from the class of the helminths, for example, *Ancylostoma duodenale, Ancylostoma ceylanicum, Acylostoma braziliensis, Ancylostoma* spp., *Ascaris lubricoides, Ascaris spp., Brugia malayi, Brugia timori, Bunostomum* spp., *Chabertia* spp., *Clonorchis* spp., *Cooperia* spp., *Dicrocoelium* spp., *Dictyocaulus filaria, Diphyllobothrium latum, Dracunculus medinensis, Echinococcus granulosus, Echinococcus multilocularis, Enterobius vermicularis, Faciola* spp., Haemonchus spp. such as *Haemonchus contortus; Heterakis* spp., *Hymenolepis nana, Hyostrongulus* spp., *Loa Loa, Nematodirus* spp., *Oesophagostomum* spp., *Opisthorchis* spp., *Onchocerca volvulus, Ostertagia* spp., *Paragonimus* spp., *Schistosomen* spp., *Strongyloides fuelleborni, Strongyloides stercora lis, Stronyloides* spp., *Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.*

The animal pest, i.e. the insects, arachnids and nematodes, the plant, soil or water in which the plant is growing can be contacted with the inventive compositions or the components thereof, respectively, by any application method known in the art. As such, "contacting" includes both direct contact (applying the compounds/compositions directly on the animal pest or plant - typically to the foliage, stem or roots of the plant) and indirect contact (applying the compounds/compositions to the locus of the animal pest or plant).

The inventive compositions may be used to protect growing plants and crops from attack or infestation by animal pests, especially insects, acaridae or arachnids by contacting the plant/crop with a pesticidally effective amount of the compositions or the components thereof, respectively. The term "crop" refers both to growing and harvested crops.

The inventive compositions may particularly be important in the control of a multitude of insects on various cultivated plants, such as cereal, root crops, oil crops, vegetables, spices, ornamentals, for example seed of durum and other wheat, barley, oats, rye, maize (fodder maize and sugar maize / sweet and field corn), soybeans, oil crops, crucifers, cotton, sunflowers, bananas, rice, oilseed rape, turnip rape, sugarbeet, fodder beet, eggplants, potatoes, grass, lawn, turf, fodder grass, tomatoes, leeks, pumpkin/squash, cabbage, iceberg lettuce, pepper, cucumbers, melons, Brassica species, melons, beans, peas, garlic, onions, carrots, tuberous plants such as potatoes, sugar cane, tobacco, grapes, petunias, geranium/pelargoniums, pansies and impatiens.

The compositions of the present invention may be employed by treating the insects or the plants, plant propagation materials, such as seeds, soil, surfaces, materials or rooms to be protected from insecticidal attack with an insecticidally effective amount of the active compounds. The application can be carried out both before and after the infection of the plants, plant propagation materials, such as seeds, soil, surfaces, materials or rooms by the insects.

The present invention also includes a method of combating animal pests which comprises contacting the animal pests, their habit, breeding ground, food supply, cultivated plants, seed, soil, area, material or environment in which the animal pests are growing or may grow, or the materials, plants, seeds, soils, surfaces or spaces to be protected from animal attack or infestation with a pesticidally effective amount of an inventive composition.

Moreover, animal pests may be controlled by contacting the target pest, its food supply, habitat, breeding ground or its locus with a pesticidally effective amount of the inventive compositions. As such, the application may be carried out before or after the infection of the locus, growing crops, or harvested crops by the pest.

The compositions of the invention can also be applied preventively to places at which occurrence of the pests is expected.

The compositions may be also used to protect growing plants from attack or infestation by pests by contacting the plant with a pesticidally effective amount of the compositions or the components thereof, respectively. As such, "contacting" includes both direct contact (applying the compounds/compositions directly on the pest and/or plant - typically to the foliage, stem or roots of the plant) and indirect contact (applying the compounds/compositions to the locus of the pest and/or plant).

"Locus" means a habitat, breeding ground, plant, seed, soil, area, material or environment in which a pest or parasite is growing or may grow.

In general, "pesticidally effective amount" means the amount of active ingredient needed to achieve an observable effect on growth, including the effects of necrosis, death, retardation, prevention, and removal, destruction, or otherwise diminishing the occurrence and activity of the target organism. The pesticidally effective amount can vary for the various compounds/compositions used in the invention. A pesticidally effective amount of the compositions will also vary according to the prevailing conditions such as desired pesticidal effect and duration, weather, target species, locus, mode of application, and the like.

The separate or joint application of the compounds of the inventive compositions is carried out by spraying or dusting the seeds, the seedlings, the plants or the soils before or after sowing of the plants or before or after emergence of the plants.

The inventive mixtures are effective through both contact (via soil, glass, wall, bed net, carpet, plant parts or animal parts), and ingestion (bait, or plant part) and through trophallaxis and transfer.

Preferred application methods are into water bodies, via soil, cracks and crevices, pastures, manure piles,

sewers, into water, on floor, wall, or by perimeter spray application and bait. According to another preferred embodiment of the invention, for use against non crop pests such as ants, termites, wasps, flies, mosquitoes, crickets, locusts, or cockroaches the inventive mixtures are prepared into a bait preparation.

The bait can be a liquid, a solid or a semisolid preparation (e.g. a gel). The bait employed in the composition is a product which is sufficiently attractive to incite insects such as ants, termites, wasps, flies, mosquitoes, crickets etc. or cockroaches to eat it. This attractant may be chosen from feeding stimulants or para and / or sex pheromones readily known in the art.

Methods to control infectious diseases transmitted by insects (e.g. malaria, dengue and yellow fever, lymphatic filariasis, and leishmaniasis) with the inventive mixtures and their respective compositions also comprise treating surfaces of huts and houses, air spraying and impregnation of curtains, tents, clothing items, bed nets, tsetse-fly trap or the like. Insecticidal compositions for application to fibers, fabric, knitgoods, non-wovens, netting material or foils and tarpaulins preferably comprise a composition including the inventive mixtures, optionally a repellent and at least one binder.

The inventive compositions can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

For use in treating crop plants, the rate of application of the active ingredients of this invention may be in the range of 0.1 g to 4000 g per hectare, desirably from 25 g to 600 g per hectare, more desirably from 50 g to 500 g per hectare.

In the case of soil treatment or of application to the pests dwelling place or nest, the quantity of active ingredient ranges from 0.0001 to 500 g per 100 $m^2$, preferably from 0.001 to 20 g per 100 $m^2$.

Customary application rates in the protection of materials are, for example, from 0.01 g to 1000 g of active compound per $m^2$ treated material, desirably from 0.1 g to 50 g per $m^2$.

Insecticidal compositions for use in the impregnation of materials typically contain from 0.001 to 95 weight %, preferably from 0.1 to 45 weight %, and more preferably from 1 to 25 weight % of at least one repellent and / or insecticide.

For use in bait compositions, the typical content of active ingredient is from 0.0001 weight % to 15 weight %, desirably from 0.001 weight % to 5% weight % of active compound. The composition used may also comprise other additives such as a solvent of the active material, a flavoring agent, a preserving agent, a dye or a bitter agent. Its attractiveness may also be enhanced by a special color, shape or texture.

For use in spray compositions, the content of the mixture of the active ingredients is from 0.001 to 80 weights %, preferably from 0.01 to 50 weight % and most preferably from 0.01 to 15 weight %.

The compositions are effective through both contact (via soil, glass, wall, bed net, carpet, plant parts or animal parts), and ingestion (bait, or plant part).

The compositions of the invention may also be applied against non-crop insect pests, such as ants, termites, wasps, flies, mosquitos, crickets, or cockroaches. For use against said non-crop pests, the inventive compositions are preferably used in a bait composition.

The bait can be a liquid, a solid or a semisolid preparation (e.g. a gel). Solid baits can be formed into various shapes and forms suitable to the respective application e.g. granules, blocks, sticks, disks. Liquid baits can be filled into various devices to ensure proper application, e.g. open containers, spray devices, droplet sources, or evaporation sources. Gels can be based on aqueous or oily matrices and can be formulated to particular necessities in terms of stickyness, moisture retention or aging characteristics.

The bait employed in the composition is a product, which is sufficiently attractive to incite insects such as ants, termites, wasps, flies, mosquitos, crickets etc. or cockroaches to eat it. The attractiveness can be manipulated by using feeding stimulants or sex pheromones. Food stimulants are chosen, for example, but not exclusively, from animal and/or plant proteins (meat-, fish- or blood meal, insect parts, egg yolk), from fats and oils of animal and/or plant origin, or mono-, oligo- or polyorganosaccharides, especially from sucrose, lactose, fructose, dextrose, glucose, starch, pectin or even molasses or honey. Fresh or decaying parts of fruits, crops, plants, animals, insects or specific parts thereof can also serve as a feeding stimulant. Sex pheromones are known to be more insect specific. Specific pheromones are described in the literature and are known to those skilled in the art.

Formulations of the inventive compositions as aerosols (e.g in spray cans), oil sprays or pump sprays are highly suitable for the non-professional user for controlling pests such as flies, fleas, ticks, mosquitos or cockroaches. Aerosol recipes are preferably composed of the active compound, solvents such as lower alcohols (e.g. methanol, ethanol, propanol, butanol), ketones (e.g. acetone, methyl ethyl ketone), paraffin hydrocarbons (e.g. kerosenes) having boiling ranges of approximately 50 to 250 °C, dimethylformamide, N-methylpyrrolidone, dimethyl sulfoxide, aromatic hydrocarbons such as toluene, xylene, water, furthermore auxiliaries such as emulsifiers such as sorbitol monooleate, oleyl ethoxylate having 3-7 mol of ethylene oxide, fatty alcohol ethoxylate, perfume oils such as ethereal oils, esters of medium fatty acids with lower alcohols, aromatic carbonyl compounds, if appropriate stabilizers such as sodium benzoate, amphoteric surfactants, lower epoxides, triethyl orthoformate and, if required, propellants such as propane, butane, nitrogen, compressed air, dimethyl ether, carbon dioxide, nitrous oxide, or mixtures of these gases.

The oil spray formulations differ from the aerosol recipes in that no propellants are used.

For use in spray compositions, the content of active ingredient is from 0.001 to 80 weights %, preferably from 0.01 to 50 weight % and most preferably from 0.01 to 15 weight %.

The inventive compositions can also be used in mosquito and fumigating coils, smoke cartridges, vaporizer plates or long-term vaporizers and also in moth papers, moth pads or other heat-independent vaporizer systems.

Methods to control infectious diseases transmitted by insects (e.g. malaria, dengue and yellow fever, lymphatic filariasis, and leishmaniasis) with inventive compositions and its respective compositions also comprise treating surfaces of huts and houses, air spraying and impregnation of curtains, tents, clothing items, bed nets, tsetse-fly trap or the like. Insecticidal compositions for application to fibers, fabric, knitgoods, nonwovens, netting material or foils and tarpaulins preferably comprise a mixture including the insecticide, optionally a repellent and at least one binder. Suitable repellents for example are N,N-Diethyl-meta-toluamide (DEET), N,N-diethylphenylacetamide (DEPA), 1-(3-cyclohexan-1-yl-carbonyl)-2-methylpiperine, (2-hydroxymethylcyclohexyl) acetic acid lactone, 2-ethyl-1,3-hexandiol, indalone, Methylneodecanamide (MNDA), a pyrethroid not used for insect control such as {(+/-)-3-allyl-2-methyl-4-oxocyclopent-2-(+)-enyl-(+)-trans-chrysantemate (Esbiothrin), a repellent derived from or identical with plant extracts like limonene, eugenol, (+)-Eucamalol (1), (-)-1-epi-eucamalol or crude plant extracts from plants like Eucalyptus maculata, Vitex rotundifolia, Cymbopogan martinii, Cymbopogan citratus (lemon grass), Cymopogan nartdus (citronella). Suitable binders are selected for example from polymers and copolymers of vinyl esters of aliphatic acids (such as such as vinyl acetate and vinyl versatate), acrylic and methacrylic esters of alcohols, such as butyl acrylate, 2-ethylhexylacrylate, and methyl acrylate, mono- and di-ethylenically unsaturated hydrocarbons, such as styrene, and aliphatic diens, such as butadiene.

The impregnation of curtains and bednets is done in general by dipping the textile material into emulsions or dispersions of the insecticide or spraying them onto the nets.

The inventive compositions can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities). The compounds of formula I are applied not only to the surrounding soil surface or into the under-floor soil in order to protect wooden materials but it can also be applied to lumbered articles such as surfaces of the under-floor concrete, alcove posts, beams, plywoods, furniture, etc., wooden articles such as particle boards, half boards, etc. and vinyl articles such as coated electric wires, vinyl sheets, heat insulating material such as styrene foams, etc. In case of application against ants doing harm to crops or human beings, the ant controller of the present invention is applied to the crops or the surrounding soil, or is directly applied to the nest of ants or the like.

The inventive compositions are also suitable for the treatment of seeds in order to protect the seed from insect pest, in particular from soil-living insect pests and the resulting plant's roots and shoots against soil pests and foliar insects.

The inventive compositions are particularly useful for the protection of the seed from soil pests and the resulting plant's roots and shoots against soil pests and foliar insects. The protection of the resulting plant's roots and shoots is preferred. More preferred is the protection of resulting plant's shoots from piercing and sucking insects, wherein the protection from aphids is most preferred.

The present invention therefore comprises a method for the protection of seeds from insects, in particular from soil insects and of the seedlings' roots and shoots from insects, in particular from soil and foliar insects, said method comprising contacting the seeds before sowing and/or after pregermination with composition of the present invention. Particularly preferred is a method, wherein the plant's roots and shoots are protected, more preferably a method, wherein the plants shoots are protected form piercing and sucking insects, most preferably aa method, wherein the plants shoots are protected from aphids.

The term seed embraces seeds and plant propagules of all kinds including but not limited to true seeds, seed pieces, suckers, corms, bulbs, fruit, tubers, grains, cuttings, cut shoots and the like and means in a preferred embodiment true seeds.

The term seed treatment comprises all suitable seed treatment techniques known in the art, such as seed dressing, seed coating, seed dusting, seed soaking and seed pelleting.

The present invention also comprises seeds coated with or containing the inventive composition.

The term "coated with and/or containing" generally signifies that the active ingredients are for the most part on the surface of the propagation product at the time of application, although a greater or lesser part of the ingredients may penetrate into the propagation product, depending on the method of application. When the said propagation product is (re)planted, it may absorb the active ingredients.

Suitable seed is seed of cereals, root crops, oil crops, vegetables, spices, ornamentals, for example seed of durum and other wheat, barley, oats, rye, maize (fodder maize and sugar maize / sweet and field corn), soybeans, oil crops, crucifers, cotton, sunflowers, bananas, rice, oilseed rape, turnip rape, sugarbeet, fodder beet, eggplants, potatoes, grass, lawn, turf, fodder grass, tomatoes, leeks, pumpkin/squash, cabbage, iceberg lettuce, pepper, cucumbers, melons, Brassica species, melons, beans, peas, garlic, onions, carrots, tuberous plants such as potatoes, sugar cane, tobacco,

grapes, petunias, geranium/pelargoniums, pansies and impatiens.

In addition, the active compound may also be used for the treatment seeds from plants, which tolerate the action of herbicides or fungicides or insecticides owing to breeding, including genetic engineering methods.

For example, the active compound can be employed in treatment of seeds from plants, which are resistant to herbicides from the group consisting of the sulfonylureas, imidazolinones, glufosinate-ammonium or glyphosate-isopropylammonium and analogous active substances (see for example, EP-A 242 236, EP-A 242 246) (WO 92/00377) (EP-A 257 993, U.S. 5,013,659) or in transgenic crop plants, for example cotton, with the capability of producing Bacillus thuringiensis toxins (Bt toxins) which make the plants resistant to certain pests (EP-A 142 924, EP-A 193 259).

The compositions may also be suitable and used for improving the health of a plant. The invention also relates to a method for improving plant health by treating a plant, its propagation material and/or the locus where the plant is growing or is to grow with an effective amount of the compositions.

The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients) and tolerance to abiotic and/or biotic stress. The above identified indicators for the health condition of a plant may be interdependent or may result from each other.

The components of the compositions can be present in different crystal modifications whose biological activity may differ. The compositions containing said components are likewise subject matter of the present invention.

The invention also relates to agrochemical compositions comprising an auxiliary and the components according to the invention.

The components of the compositions, their N-oxides and salts can be converted into customary types of agrochemical compositions, e. g. solutions, emulsions, suspensions, dusts, powders, pastes, granules, pressings, capsules, and mixtures thereof. Examples for composition types are suspensions (e. g. SC, OD, FS), emulsifiable concentrates (e. g. EC), emulsions (e. g. EW, EO, ES, ME), capsules (e. g. CS, ZC), pastes, pastilles, wettable powders or dusts (e. g. WP, SP, WS, DP, DS), pressings (e. g. BR, TB, DT), granules (e. g. WG, SG, GR, FG, GG, MG), insecticidal articles (e. g. LN), as well as gel formulations for the treatment of plant propagation materials such as seeds (e. g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e. g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e. g. ethanol, propanol, butanol, benzyl alcohol, cyclohexanol; glycols; DMSO; ketones, e. g. cyclohexanone; esters, e. g. lactates, carbonates, fatty acid esters, gamma-butyrolactone; fatty acids; phosphonates; amines; amides, e. g. N-methyl pyrrolidone, fatty acid dimethyl amides; and mixtures thereof.

Suitable solid carriers or fillers are mineral earths, e. g. silicates, silica gels, talc, kaolins, limestone, lime, chalk, clays, dolomite, diatomaceous earth, bentonite, calcium sulfate, magnesium sulfate, magnesium oxide; polysaccharides, e. g. cellulose, starch; fertilizers, e. g. ammonium sulfate, ammonium phosphate, ammonium nitrate, ureas; products of vegetable origin, e. g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylaryl sulfonates, diphenyl sulfonates, alpha-olefin sulfonates, lignin sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkyl naphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or

alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinyl pyrrolidone, vinyl alcohols, or vinyl acetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinyl amines or polyethylene amines.

Suitable adjuvants are compounds, which have a negligible or even no pesticidal activity themselves, and which improve the biological performance of the compound I on the target. Examples are surfactants, mineral or vegetable oils, and other auxiliaries. Further examples are listed by Knowles, Adjuvants and additives, Agrow Reports DS256, T&F Informa UK, 2006, chapter 5.

Suitable thickeners are polysaccharides (e. g. xanthan gum, carboxymethyl cellulose), inorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e. g. in red, blue, or green) are pigments of low water solubility and water-soluble dyes. Examples are inorganic colorants (e. g. iron oxide, titan oxide, iron hexacyanoferrate) and organic colorants (e. g. alizarin-, azo- and phthalocyanine colorants).

Suitable tackifiers or binders are polyvinyl pyrrolidones, polyvinyl acetates, polyvinyl alcohols, polyacrylates, biological or synthetic waxes, and cellulose ethers.

Examples for composition types and their preparation are:

i) Water-soluble concentrates (SL, LS)
10-60 wt% of the active ingredients and 5-15 wt% wetting agent (e. g. alcohol alkoxylates) are dissolved in water and/or in a water-soluble solvent (e. g. alcohols) ad 100 wt%. The active substance dissolves upon dilution with water.

ii) Dispersible concentrates (DC)
5-25 wt% of the active ingredients and 1-10 wt% dispersant (e. g. polyvinyl pyrrolidone) are dissolved in organic solvent (e. g. cyclohexanone) ad 100 wt%. Dilution with water gives a dispersion.

iii) Emulsifiable concentrates (EC)
15-70 wt% of the active ingredients and 5-10 wt% emulsifiers (e. g. calcium dodecylbenzenesulfonate and castor oil ethoxylate) are dissolved in water-insoluble organic solvent (e. g. aromatic hydrocarbon) ad 100 wt%. Dilution with water gives an emulsion.

iv) Emulsions (EW, EO, ES)
5-40 wt% of the active ingredients and 1-10 wt% emulsifiers (e. g. calcium dodecylbenzenesulfonate and castor oil ethoxylate) are dissolved in 20-40 wt% water-insoluble organic solvent (e. g. aromatic hydrocarbon). This mixture is introduced into water ad 100 wt% by means of an emulsifying machine and made into a homogeneous emulsion. Dilution with water gives an emulsion.

v) Suspensions (SC, OD, FS)
In an agitated ball mill, 20-60 wt% of the active ingredients are comminuted with addition of 2-10 wt% dispersants and wetting agents (e. g. sodium lignosulfonate and alcohol ethoxylate), 0.1-2 wt% thickener (e. g. xanthan gum) and water ad 100 wt% to give a fine active substance suspension. Dilution with water gives a stable suspension of the active substances. For FS type composition up to 40 wt% binder (e. g. polyvinyl alcohol) is added.

vi) Water-dispersible granules and water-soluble granules (WG, SG)

50-80 wt% of the active ingredients are ground finely with addition of dispersants and wetting agents (e. g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substances.

vii) Water-dispersible powders and water-soluble powders (WP, SP, WS)
50-80 wt% of the active ingredients are ground in a rotor-stator mill with addition of 1-5 wt% dispersants (e. g. sodium lignosulfonate), 1-3 wt% wetting agents (e. g. alcohol ethoxylate) and solid carrier (e. g. silica gel) ad 100 wt%. Dilution with water gives a stable dispersion or solution of the active substances.

viii) Gel (GW, GF)
In an agitated ball mill, 5-25 wt% of the active ingredients are comminuted with addition of 3-10 wt% dispersants (e. g. sodium lignosulfonate), 1-5 wt% thickener (e. g. carboxymethyl cellulose) and water ad 100 wt% to give a fine suspension of the active substance. Dilution with water gives a stable suspension of the active substances.

ix) Microemulsion (ME)
5-20 wt% of the active ingredients are added to 5-30 wt% organic solvent blend (e. g. fatty acid dimethyl amide and cyclohexanone), 10-25 wt% surfactant blend (e. g. alcohol ethoxylate and arylphenol ethoxylate), and water ad 100 %. This mixture is stirred for 1 h to produce spontaneously a thermodynamically stable microemulsion.

x) Microcapsules (CS)
An oil phase comprising 5-50 wt% of the active ingredients, 0-40 wt% water insoluble organic solvent (e. g. aromatic hydrocarbon), 2-15 wt% acrylic monomers (e. g. methylmethacrylate, methacrylic acid and a di- or triacrylate) are dispersed into an aqueous solution of a protective colloid (e. g. polyvinyl alcohol). Radical polymerization results in the formation of poly(meth)acrylate microcapsules. Alternatively, an oil phase comprising 5-50 wt% of a compound I according to the invention, 0-40 wt% water insoluble organic solvent (e. g. aromatic hydrocarbon), and an isocyanate monomer (e. g. diphenylmethene-4,4'-diisocyanatae) are dispersed into an aqueous solution of a protective colloid (e. g. polyvinyl alcohol). The addition of a polyamine (e. g. hexamethylenediamine) results in the formation of polyurea microcapsules. The monomers amount to 1-10 wt%. The wt% relate to the total CS composition.

xi) Dustable powders (DP, DS)
1-10 wt% of the active ingredients are ground finely and mixed intimately with solid carrier (e. g. finely divided kaolin) ad 100 wt%.

xii) Granules (GR, FG)
0.5-30 wt% of the active ingredients is ground finely and associated with solid carrier (e. g. silicate) ad 100 wt%. Granulation is achieved by extrusion, spray-drying or fluidized bed.

xiii) Ultra-low volume liquids (UL)
1-50 wt% of the active ingredients are dissolved in organic solvent (e. g. aromatic hydrocarbon) ad 100 wt%.

The compositions types i) to xiii) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%, and in particular between 0.5 and 75%, by weight of active substances. The active substances are employed in a purity of from 90% to 100%, preferably from 95% to 100% (according to NMR spectrum).

Furthermore, the active compounds/inventive compositions can be used also for the treatment of seeds from plants, which have modified characteristics in comparison with existing plants consist, which can be generated for example by traditional breeding methods and/or the generation of mutants, or by recombinant procedures). For example, a number of cases have been described of recombinant modifications of crop plants for the purpose of modifying the starch synthesized in the plants (e.g. WO 92/11376, WO 92/14827, WO 91/19806) or of transgenic crop plants having a modified fatty acid composition (WO 91/13972).

For the purposes of treatment of plant propagation materials, particularly seeds, solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC), and gels (GF) are usually employed. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying the inventive compositions or the components thereof, respectively,

onto plant propagation material, especially seeds, include dressing, coating, pelleting, dusting, and soaking as well as in-furrow application methods. Preferably, the inventive compositions or the components thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, and in particular from 0.1 to 0.75 kg per ha.

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seeds) are generally required.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

In a preferred embodiment a FS formulation is used for seed treatment. Typcially, a FS formulation may comprise 1-800 g/l of active ingredient, 1-200 g/l Surfactant, 0 to 200 g/l antifreezing agent, 0 to 400 g/l of binder, 0 to 200 g/l of a pigment and up to 1 liter of a solvent, preferably water.

Especially preferred FS formulations of the inventive compositions or the components thereof, respectively, for seed treatment usually comprise from 0.1 to 80% by weight (1 to 800 g/l) of the active ingredient, from 0.1 to 20 % by weight (1 to 200 g/l) of at least one surfactant, e.g. 0.05 to 5 % by weight of a wetter and from 0.5 to 15 % by weight of a dispersing agent, up to 20 % by weight, e.g. from 5 to 20 % of an anti-freeze agent, from 0 to 15 % by weight, e.g. 1 to 15 % by weight of a pigment and/or a dye, from 0 to 40 % by weight, e.g. 1 to 40 % by weight of a binder (sticker /adhesion agent), optionally up to 5 % by weight, e.g. from 0.1 to 5 % by weight of a thickener, optionally from 0.1 to 2 % of an antifoam agent, and optionally a preservative such as a biocide, antioxidant or the like, e.g. in an amount from 0.01 to 1 % by weight and a filler/vehicle up to 100 % by weight.

Seed Treatment formulations may additionally also comprise binders and optionally colorants.

Binders can be added to improve the adhesion of the active materials on the seeds after treatment. Suitable binders are homo- and copolymers from alkylene oxides like ethylene oxide or propylene oxide, polyvinylacetate, polyvinylalcohols, polyvinylpyrrolidones, and copolymers thereof, ethylene-vinyl acetate copolymers, acrylic homo- and copolymers, polyethyleneamines, polyethyleneamides and polyethyleneimines, polysaccharides like celluloses, tylose and starch, polyolefin homo- and copolymers like olefin/maleic anhydride copolymers, polyurethanes, polyesters, polystyrene homo and copolymers Optionally, also colorants can be included in the formulation. Suitable colorants or dyes for seed treatment formulations are Rhodamin B, C.I. Pigment Red 112, C.I. Solvent Red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of a gelling agent is carrageen (Satiagel®).

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seeds) are generally required.

In the treatment of seed, the application rates of the inventive compositions or the components thereof, respectively,may also be suitable from 0.1 g to 10 kg per 100 kg of seed, preferably from 1 g to 5 kg per 100 kg of seed, more preferably from 1 g to 1000 g per 100 kg of seed and in particular from 1 g to 200 g per 100 kg of seed.

The invention therefore also relates to seed comprising the inventive compositions or the components thereof, respectively,, or an agriculturally useful salt thereof, as defined herein. The amount of the active compounds will in general vary from 0.1 g to 10 kg per 100 kg of seed, preferably from 1 g to 5 kg per 100 kg of seed, in particular from 1 g to 1000 g per 100 kg of seed. For specific crops such as lettuce the rate can be higher.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, and in particular from 0.1 to 0.75 kg per ha.

Various types of oils, wetters, adjuvants, fertilizer, or micronutrients, and further pesticides (e. g. herbicides, insecticides, fungicides, growth regulators, safeners, biopesticides) may be added to the compositions comprising the respective components as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400

liters, of the ready-to-use spray liquor are applied per hectare of agricultural useful area.

According to one embodiment, individual components of the composition according to the invention such as parts of a kit or parts of a three-component mixture may be mixed by the user himself in a spray tank or any other kind of vessel used for applications (e. g. seed treater drums, seed pelleting machinery, knapsack sprayer) and further auxiliaries may be added, if appropriate.

In the mixtures and compositions, the compound ratios are advantageously chosen so as to produce a synergistic effect.

The term "synergistic effect" is understood to refer in particular to that defined by Colby's formula (Colby, S. R., "Calculating synergistic and antagonistic responses of herbicide combinations", Weeds, 15, pp. 20-22, 1967).

The term "synergistic effect" is also understood to refer to that defined by application of the Tammes method, (Tammes, P. M. L., "Isoboles, a graphic representation of synergism in pesticides", Netherl. J. Plant Pathol. 70, 1964).

The active compounds, separately or jointly, are usually prepared as a stock solution comprising 25 mg of active compound which is made up to 10 ml using a mixture of acetone and/or DMSO and the emulsifier Uniperol® EL (wetting agent having an emulsifying and dispersing action based on ethoxylated alkylphenols) in a ratio by volume of solvent/emulsifier of 99:1. The mixture is then made up to 100 ml with water. This stock solution is diluted with the solvent/emulsifier/water mixture described to give the respective concentration of active compound.

The visually determined percentages of infected leaf areas in case of fungal attack are converted into efficacies in % of the untreated control.

The efficacy (E) is calculated as follows using Abbot's formula:

$$E = (1 - \alpha/\beta) \cdot 100$$

$\alpha$ corresponds to the fungicidal infection of the treated plants in % and

$\beta$ corresponds to the fungicidal infection of the untreated (control) plants in %

An efficacy of 0 means that the infection level of the treated plants corresponds to that of the untreated control plants; an efficacy of 100 means that the treated plants were not infected.

The expected efficacies of active compound combinations were determined using Colby's formula (Colby, S.R. "Calculating synergistic and antagonistic responses of herbicide combinations", Weeds, 15, pp. 20-22, 1967) and compared with the observed efficacies.

Colby's formula:

$$E = x + y - x \cdot y/100$$

E expected efficacy, expressed in % of the untreated control, when using the mixture of the active compounds A and B at the concentrations a and b

x efficacy, expressed in % of the untreated control, when using the active compound A at the concentration a

y efficacy, expressed in % of the untreated control, when using the active compound B at the concentration b.

## Claims

**1.** Compositions comprising,

1) as component I a compound selected from:

| | |
|---|---|
| compound I-1 | 2-[2-chloro-4-(4-chlorophenoxy)phenyl]-1-(1,2,4-triazol-1-yl)pent-3-yn-2-ol; |
| compound I-2 | 1-[2-chloro-4-(4-chlorophenoxy)phenyl]-1-cyclopropyl-2-(1,2,4-triazol-1-yl)ethanol; |
| compound I-3 | 2-[4-(4-chlorophenoxy)-2-(trifluoromethyl)phenyl]-1-(1,2,4-triazol-1-yl)propan-2-ol; |
| compound I-4 | 1-[4-(4-chlorophenoxy)-2-(trifluoromethyl)phenyl]-1-cyclopropyl-2-(1,2,4-triazol-1-yl)ethanol; |
| compound I-5 | 2-[4-(4-chlorophenoxy)-2-(trifluoromethyl)phenyl]-3-methyl-1-(1,2,4-triazol-1-yl)butan-2-ol; |
| compound I-6 | 1-[2-[2-chloro-4-(4-chlorophenoxy)phenyl]-2-methoxy-pent-3-ynyl]-1,2,4-triazole; |

(continued)

| | |
|---|---|
| compound I-7 | 2-[4-(4-chlorophenoxy)-2-(trifluoromethyl)phenyl]-1-(1,2,4-triazol-1-yl)butan-2-ol; |
| compound I-8 | 1-[2-[2-chloro-4-(4-chlorophenoxy)phenyl]-2-cyclopropyl-2-methoxy-ethyl]-1,2,4-triazole; |
| compound I-9 | 1-[2-[4-(4-chlorophenoxy)-2-(trifluoromethyl)phenyl]-2-methoxy-propyl]-1,2,4-triazole; |
| compound I-10 | 2-[2-chloro-4-(4-chlorophenoxy)phenyl]-3,3-dimethyl-1-(1,2,4-triazol-1-yl)butan-2-ol, |
| compound I-11 | 1-[2-[4-(4-chlorophenoxy)-2-(trifluoromethyl)phenyl]-2-cyclopropyl-2-methoxy-ethyl]-1,2,4-triazole; |
| compound I-12 | 1-[2-[2-chloro-4-(4-chlorophenoxy)phenyl]-2-methoxy-3,3-dimethyl-butyl]-1,2,4-triazole; |
| compound I-13 | 1-[2-[4-(4-chlorophenoxy)-2-(trifluoromethyl)phenyl]-2-methoxy-butyl]1,2,4-triazole; |
| compound I-14 | 2-[4-(4-chlorophenoxy)-2-(trifluoromethyl)phenyl]-1-(1,2,4-triazol-1-yl)pent-3-yn-2-ol; |
| compound I-15 | 1-[2-[4-(4-chlorophenoxy)-2-(trifluoromethyl)phenyl]-2-methoxy-pent-3-ynyl]-1,2,4-triazole; |
| compound I-16 | 2-[4-(4-chlorophenoxy)-2-(trifluoromethyl)phenyl]-1-(1,2,4-triazol-1-yl) but-3-yn-2-ol; |
| compound I-17 | 2-[2-chloro-4-(4-chlorophenoxy)phenyl]-1-(1,2,4-triazol-1-yl)propan-2-ol; |
| compound I-18 | 2-[2-chloro-4-(4-fluorophenoxy)phenyl]-1-(1,2,4-triazol-1-yl)propan-2-ol; |
| compound I-19 | 2-[2-chloro-4-(4-chlorophenoxy)phenyl]-3-methyl-1-(1,2,4-triazol-1-yl)butan-2-ol; |
| compound I-20 | 1-[2-[2-chloro-4-(4-chlorophenoxy)phenyl]-2-methoxy-propyl]-1,2,4-triazole; |
| compound I-21 | 1-[2-[2-chloro-4-(4-chlorophenoxy)phenyl]-2-methoxy-butyl]-1,2,4-riazole; |
| compound I-22 | 1-[2-[2-chloro-4-(4-chlorophenoxy)phenyl]-2-methoxy-pentyl]-1,2,4-triazole; |
| compound I-23 | 2-[2-chloro-4-(4-chlorophenoxy)phenyl]-1,1,1-trifluoro-3-(1,2,4-triazol-1-yl)propan-2-ol; |
| compound I-24 | 2-[2-chloro-4-(4-chlorophenoxy)phenyl]-3-fluoro-1-(1,2,4-triazol-1-yl)butan-2-ol hydrochloride; |
| compound I-25 | 2-[2-chloro-4-(4-chlorophenoxy)phenyl]-1-(1,2,4-triazol-1-yl)pent-4-yn-2-ol; |
| compound I-26 | 2-[2-chloro-4-(4-chlorophenoxy)phenyl]-1-methoxy-3-(1,2,4-triazol-1-yl)propan-2-ol; |
| compound I-27 | 2-[2-chloro-4-(4-fluorophenoxy)phenyl]-1-methoxy-3-(1,2,4-triazol-1-yl)propan-2-ol; |
| compound I-28 | 2-[4-(4-chlorophenoxy)-2-(trifluoromethyl)phenyl]-1-(1,2,4-triazol-1-yl)pentan-2-ol; |
| compound I-29 | and2-[4-(4-fluorophenoxy)-2-(trifluoromethyl)phenyl]-1-(1,2,4-triazol-1-yl)propan-2-ol; |
| compound I-30 | 2-[2-chloro-4-(4-chlorophenoxy)phenyl]-1-(1,2,4-triazol-1-yl)butan-2-ol; and |
| compound I-31 | 2-[2-chloro-4-(4-chlorophenoxy)phenyl]-1-(1,2,4-triazol-1-yl)pentan-2-ol; |

and

2) as component II a compound of formula II:

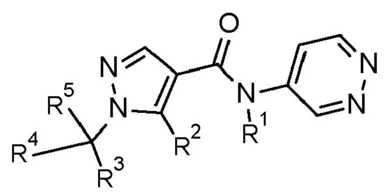

II

wherein

$R^1$ is H, $C_1$-$C_2$-alkyl, or $C_1$-$C_2$-alkoxy-$C_1$-$C_2$-alkyl;
$R^2$ is $CH_3$, or halomethyl;
$R^3$ is CN, $C_1$-$C_6$-alkyl, $C_1$-$C_6$-haloalkyl, $C_1$-$C_2$-alkoxy-$C_1$-$C_2$-alkyl, $C_2$-$C_6$-alkenyl and $C_2$-$C_6$-alkynyl, $C_3$-$C_6$-cycloalkyl, $C_5$-$C_6$-cycloalkenyl, $C_1$-$C_6$-alkoxy, wherein the C-atoms are unsubstituted, or partially or fully substituted by $R^a$;
$R^a$ is halogen, CN, $C_1$-$C_2$-alkyl, $C_1$-$C_2$-haloalkyl, $C_1$-$C_4$-alkoxy, $C_1$-$C_2$-haloalkoxy;
$R^4$ is $C_1$-$C_4$-alkyl, or a group mentioned for $R^3$; or
$R^3$ and $R^4$ may together form $C_5$-$C_6$-cycloalkyl, which is unsubstituted, or partially or fully substituted by $R^a$;
$R^5$ is H, or a group mentioned for $R^4$;
and the stereoisomers, salts, tautomers and N-oxides thereof; and

2) as component III a biopesticide selected from groups L1 to L6:

L1) Microbial pesticides with fungicidal, bactericidal, viricidal and/or plant defense activator activity: *Am-*

*pelomyces quisqualis, Aspergillus flavus, Aureobasidium pullulans, Bacillus altitudinis, B. amyloliquefaciens, B. megaterium, B. mojavensis, B. mycoides, B. pumilus, B. simplex, B. solisalsi, B. subtilis, B. subtilis* var. *amyloliquefaciens, Candida oleophila, C. saitoana, Clavibacter michiganensis* (bacteriophages), *Coniothyrium minitans, Cryphonectria parasitica, Cryptococcus albidus, Dilophosphora alopecuri, Fusarium oxysporum, Clonostachys rosea* f. *catenulate* (also named *Gliocladium catenulatum*), *Gliocladium roseum, Lysobacter antibioticus*, *L. enzymogenes*, *Metschnikowia fructicola, Microdochium dimerum, Microsphaeropsis ochracea, Muscodor albus*, *Paenibacillus alvei, Paenibacillus polymyxa, Pantoea vagans, Penicillium bilaiae, Phlebiopsis gigantea, Pseudomonas* sp., *Pseudomonas chloraphis, Pseudozyma flocculosa, Pichia anomala, Pythium oligandrum, Sphaerodes mycoparasitica, Streptomyces griseoviridis, S. lydicus, S. violaceusniger, Talaromyces flavus, Trichoderma asperellum, T. atroviride, T. fertile, T. gamsii, T. harmatum, T. harzianum, T. polysporum, T. stromaticum, T. virens, T. viride, Typhula phacorrhiza, Ulocladium oudemansii, Verticillium dahlia,* zucchini yellow mosaic virus (avirulent strain);

L2) Biochemical pesticides with fungicidal, bactericidal, viricidal and/or plant defense activator activity: chitosan (hydrolysate), harpin protein, laminarin, Menhaden fish oil, natamycin, Plum pox virus coat protein, potassium or sodium bicarbonate, *Reynoutria sachalinensis* extract, salicylic acid, tea tree oil;

L3) Microbial pesticides with insecticidal, acaricidal, molluscidal and/or nematicidal activity: *Agrobacterium radiobacter, Bacillus cereus, B. firmus, B. thuringiensis, B. thuringiensis* ssp. *aizawai, B. t.* ssp. *israelensis, B. t.* ssp. *galleriae, B. t.* ssp. *kurstaki, B. t.* ssp. *tenebrionis, Beauveria bassiana, B. brongniartii, Burkholderia* spp., *Chromobacterium subtsugae, Cydia pomonella* granulovirus (CpGV), *Cryptophlebia leucotreta* granulovirus (CrleGV), *Flavobacterium* spp., *Helicoverpa armigera* nucleopolyhedrovirus (HearNPV), *Heterorhabditis bacteriophora, Isaria fumosorosea, Lecanicillium longisporum, L. muscarium, Metarhizium anisopliae, Metarhizium anisopliae* var. *anisopliae, M. anisopliae* var. *acridum, Nomuraea rileyi, Paecilomyces lilacinus, Paenibacillus popilliae, Pasteuria* spp., *P. nishizawae, P. penetrans, P. ramosa, P. thornea, P. usgae, Pseudomonas fluorescens, Spodoptera littoralis* nucleopolyhedrovirus (SpliNPV), *Steinernema carpocapsae, S. feltiae, S. kraussei, Streptomyces galbus, S. microflavus;*

L4) Biochemical pesticides with insecticidal, acaricidal, molluscidal, pheromone and/or nematicidal activity: L-carvone, citral, (E,Z)-7,9-dodecadien-1-yl acetate, ethyl formate, (E,Z)-2,4-ethyl decadienoate (pear ester), (Z,Z,E)-7,11,13-hexadecatrienal, heptyl butyrate, isopropyl myristate, lavanulyl senecioate, cis-jasmone, 2-methyl 1-butanol, methyl eugenol, methyl jasmonate, (E,Z)-2,13-octadecadien-1-ol, (E,Z)-2,13-octadecadien-1-ol acetate, (E,Z)-3,13-octadecadien-1-ol, R-1-octen-3-ol, pentatermanone, potassium silicate, sorbitol actanoate, (E,Z,Z)-3,8,11-tetradecatrienyl acetate, (Z,E)-9,12-tetradecadien-1-yl acetate, Z-7-tetradecen-2-one, Z-9-tetradecen-1-yl acetate, Z-11-tetradecenal, Z-11-tetradecen-1-ol, Acacia negra extract, extract of grapefruit seeds and pulp, extract of *Chenopodium ambrosiodes,* Catnip oil, Neem oil, Quillay extract, Tagetes oil;

L5) Microbial pesticides with plant stress reducing, plant growth regulator, plant growth promoting and/or yield enhancing activity: *Azospirillum amazonense, A. brasilense, A. lipoferum, A. irakense, A. halopraeferens, Bradyrhizobium* spp., *B. elkanii, B. japonicum, B. liaoningense, B. lupini, Delftia acidovorans, Glomus intraradices, Mesorhizobium* spp., *Rhizobium leguminosarum* bv. *phaseoli, R. I.* bv. *trifolii, R. I.* bv. *viciae, R. tropici, Sinorhizobium meliloti*;

L6) Biochemical pesticides with plant stress reducing, plant growth regulator and/or plant yield enhancing activity: abscisic acid, aluminium silicate (kaolin), 3-decen-2-one, formononetin, genistein, hesperetin, homobrassinolide, humates, jasmonic acid and its salts or derivatives thereof, lysophosphatidyl ethanolamine, naringenin, polymeric polyhydroxy acid, *Ascophyllum nodosum* (Norwegian kelp, Brown kelp) extract and *Ecklonia maxima* (kelp) extract.

**2.** The compositions of claim 1, wherein the biopesticide is selected from :

La) Microbial pesticides with fungicidal, bactericidal, viricidal and/or plant defense activator activity selected from: Bacillus altudinis, Bacillus amyloliquefaciens, Bacillus amyloliquefaciens ssp. plantarum MBI 600 (III-27), B. amyloliquefaciens ssp. plantarum D747, B. megaterium, B. mojavensis (III-28), B. mycoides, B. pumilus INR-7 (III-29), B. pumilus GHA 180, B. simplex (III-30), B. solisalsi (III-31), Bacillus subtilis, Burkholderia sp., Clavibacter michiganensis (bacteriophages) (III-32), Gliocladium roseum (III-33), Microsphaeropsis ochracea, Muscodor albus, Paenibacillus alvei, Paenibacillus polymyxa (III-34), Pantoea agglomerans (III-35), Pantoea vagans, Penicillium bilaiae, Pseudomonas sp., Pseudomonas chloraphis, P. fluorescens, Sphaerodes mycoparasitica (III-36), Streptomyces lydicus (III-37), S. violaceusniger (III-38), Trichoderma fertile JM41R (III-39), Typhula phacorrhiza (III-40), Verticillium dahlia (III-42), zucchini yellow mosaic virus (avirulent strain);

Lb) Biochemical pesticides with fungicidal, bactericidal, viricidal and/or plant defense activator activity selected from: harpin protein, laminarin, jasmonic acid (III-43) or salts or derivatives thereof, laminarin, Menhaden fish

oil, natamycin, Plum pox virus coat protein, potassium or sodium bicarbonate, salicylic acid, tea tree oil;
Lc) Microbial pesticides with insecticidal, acaricidal, molluscidal and/or nematicidal activity selected from: Agrobacterium radiobacter, Bacillus cereus, Bacillus firmus (III-44), B. thuringiensis ssp. israelensis, B. t. ssp. galleriae, B. t. ssp. kurstaki, Beauveria bassiana (III-45), Beauveria brongniartii, Burkholderia sp., Chromobacterium subtsugae, Cydia pomonella granulosis virus, Isaria fumosorosea, Lecanicillium longisporum, L. muscarium (formerly Verticillium lecanii), Metarhizium anisopliae (III-46), M. anisopliae var. anisopliae, M. anisopliae var. acridum, Paecilomyces fumosoroseus, P. lilacinus, Paenibacillus popilliae, Pasteuria spp., P. nishizawae, P. reneformis, P. usagae, Pseudomonas fluorescens, Pseudomonas putida, Steinernema feltiae, Steinernema kraussei, Streptomces galbus, Streptomyces microflavus;
Ld) Biochemical pesticides with insecticidal, acaricidal, molluscidal, pheromone and/or nematicidal activity selected from: L-carvone, citral, (E,Z)-7,9-dodecadien-1-yl acetate, ethyl formate, (E,Z)-2,4-ethyl decadienoate (pear ester), (Z,Z,E)-7,11,13-hexadecatrienal, heptyl butyrate, isopropyl myristate, lavanulyl senecioate, 2-methyl 1-butanol, methyl eugenol, methyl jasmonate, (E,Z)-2,13-octadecadien-1-ol, (E,Z)-2,13-octadecadien-1-ol acetate, (E,Z)-3,13-octadecadien-1-ol, R-1-octen-3-ol, pentatermanone, potassium silicate, sorbitol actanoate, (E,Z,Z)-3,8,11-tetradecatrienyl acetate, (Z,E)-9,12-tetradecadien-1-yl acetate, Z-7-tetradecen-2-one, Z-9-tetradecen-1-yl acetate, Z-11-tetradecenal, Z-11-tetradecen-1-ol, Acacia negra extract, extract of grapefruit seeds and pulp, extract of Chenopodium ambrosiodae, Catnip oil, Neem oil, Quillay extract (III-47), Tagetes oil;
Le) Microbial pesticides with plant stress reducing, plant growth regulator, plant growth promoting and/or yield enhancing activity selected from: Azospirillum amazonense, A. brasilense (III-48), A. lipoferum, A. irakense, A. halopraeferens, Bradyrhizobium sp. (III-49), B. japonicum (III-50), B. elkanii, B. lupini, B. liaoningense, Delftia acidovorans, Glomus intraradices, Mesorhizobium sp. (III-51), M. ciceri, M. huakii, M. loti, Paenibacillus alvei, Penicillium bilaiae (III-52), Rhizobium leguminosarum bv. phaseoli (III-53), R. I. trifolii, R. I. bv. viciae (III-54), R. tropici, Sinorhizobium meliloti (III-55);
Lf) Biochemical pesticides with plant stress reducing, plant growth regulator and/or plant yield enhancing activity selected from: abscisic acid, aluminium silicate (kaolin), 3-decen-2-one, homobrassinlide, humates, indole-3-acetic acid, lysophosphatidyl ethanlamine, polymeric polyhydroxy acid, Ascophyllum nodosum (Norwegian kelp, Brown kelp) extract and Ecklonia maxima (kelp) extract.

**3.** The compositions of claim 1 or 2, wherein the biopesticide is selected from Bacillus amyloliquefaciens ssp. Plantarum (III-27)), Bacillus mojavensis (III-28), Bacillus pumilus (III-29), Bacillus simplex (III-30), Bacillus solisalsi (III-31), Paenibacillus polymyxa (III-34), jasmonic acid or salts or derivatives thereof (III-43), Bacillus firmus (III-44), Azospirillum brasilense (III-48), Bradyrhizobium spp. (III-49), Bradyrhizobium japonicum (III-50), Mesorhizobium spp. (III-51), Penicillium bilaiae (III-52), Rhizobium leguminosarum bv. Phaseoli (III-53), Rhizobium leguminosarum bv. Viciae (III-54), Sinorhizobium meliloti (III-55), Azospirillum amazonense (III-56), Azospirillum lipoferum (III-57), Azospirillum irakense (III-58), Azospirillum halopraeferens (III-59), Bradyrhizobium sp. (Arachis) (III-60), Bradyrhizobium sp. (Vigna), (III-61), Bradyrhizobium elkanii (III-62), Bradyrhizobium liaoningense (III-63), Bradyrhizobium lupini (III-64), Delftia acidovorans (III-65), Glomus intraradices (III-66), Mesorhizobium ciceri (III-67), Mesorhizobium huakii (III-68), Mesorhizobium loti (III-69), Rhizobium leguminosarum bv. Trifolii (III-70), Rhizobium tropici (III-71), Bacillus altitudinis (III-72), Bacillus amyloliquefaciens (III-73), Bacillus megaterium (III-74), Bacillus mycoides (III-75), Bacillus subtilis (III-76), Burkholderia sp. (III-77), Coniothyrium minitans (III-78), Paecilomyces lilacinus (III-79), Paenibacillus alvei (III-80), Paenibacillus popilliae (III-81), Pasteuria nishizawae (III-82), Pasteuria usgae (III-83), Pseudomonas chloraphis (III-84), Pseudomonas fluorescens (III-85), Pseudomonas putida (III-86), abscisic acid (III-87), harpin (alpha-beta) (III-88), cis-jasmone (III-89) and methyl jasmonate (III-90).

**4.** The compositions of any one of claims 1 to 3, wherein component III is selected from the group consisting of 1-isopropyl-N,5-dimethyl-N-pyridazin-4-yl-pyrazole-4-carboxamide (II-1), 1-(1,2-dimethylpropyl)-N-ethyl-5-methyl-N-pyridazin-4-yl-pyrazole-4-carboxamide (II-2), N,5-dimethyl-N-pyridazin-4-yl-1-(2,2,2-trifluoro-1-methyl-ethyl)pyrazole-4-carboxamide (II-3), 1-[1-(1-cyanocyclopropyl)ethyl]-N-ethyl-5-methyl-N-pyridazin-4-yl-pyrazole-4-carboxamide (II-4), N-ethyl-1-(2-fluoro-1-methyl-propyl)-5-methyl-N-pyridazin-4-yl-pyrazole-4-carboxamide (II-5), 1-(1,2-dimethylpropyl)-N,5-dimethyl-N-pyridazin-4-yl-pyrazole-4-carboxamide (II-6), 1-[1-(1-cyanocyclopropyl)ethyl]-N,5-dimethyl-N-pyridazin-4-yl-pyrazole-4-carboxamide (II-7), N-methyl-1-(2-fluoro-1-methyl-propyl]-5-methyl-N-pyridazin-4-yl-pyrazole-4-carboxamide (II-8), 1-(4,4-difluorocyclohexyl)-N-ethyl-5-methyl-N-pyridazin-4-yl-pyrazole-4-carboxamide (II-9), 1-(4,4-difluorocyclohexyl)-N,5-dimethyl-N-pyridazin-4-yl-pyrazole-4-carboxamide (II-10), N-ethyl-1-isopropyl-5-methyl-N-pyridazin-4-yl-pyrazole-4-carboxamide (II-11), N-ethyl-5-methyl-N-pyridazin-4-yl-1-(2,2,2-trifluoro-1-methyl-ethyl)pyrazole-4-carboxamide (II-12), 1-isopropyl-N-(methoxymethyl)-5-methyl-N-pyridazin-4-yl-pyrazole-4-carboxamide (II-13), N-(methoxymethyl)-5-methyl-N-pyridazin-4-yl-1-(2,2,2-trifluoro-1-methyl-ethyl)pyrazole-4-carboxamide (II-14), 1-(1,2-dimethylpropyl)-N-(methoxymethyl)-5-methyl-N-pyridazin-4-yl-pyrazole-4-carboxamide (II-15), 1-[1-(1-cyanocyclopropyl)ethyl]-N-(methoxymethyl)-5-methyl-N-pyridazin-4-yl-pyrazole-4-carboxamide (II-16), 1-(2-fluoro-1-methyl-propyl)-N-(methoxymethyl)-5-methyl-N-pyridazin-4-yl-pyrazole-4-carboxamide (II-17) and 1-(4,4-difluorocyclohexyl)-N-(methoxymethyl)-5-methyl-N-pyridazin-4-yl-pyrazole-4-carboxamide (II-18); and the stereoisomers, salts, tautomers and N-oxides of each of the compounds.

**5.** The compositions of any one of claims 1 to 4, wherein component I and component II are present in a total weight ratio of from 1000:1 to 1:1000.

**6.** The compositions of any one of claims 1 to 5, wherein the component I and the component II are present in a synergistically effective amount.

**7.** The compositions of any one of claims 1 to 6, further comprising an agrochemical auxiliary.

**8.** The compositions of any one of claims 1 to 7, wherein the compound I and the biopesticide III are present in a synergistically effective amount.

**9.** The compositions of any one of claims 1 to 8, wherein component I and component III are present in a total weight ratio of from 100:1 to 1:100 wherein the total weight of component III is based on the amount of the solid material (dry matter) of component III.

**10.** The compositions of any one of claims 1 to 9, wherein component I and component III are present in a total weight ratio of from 100:1 to 1:100, wherein the total weight of component II is calculated on the basis of the amount of CFU of component III, wherein 1 x $10^9$ CFU equals one gram of total weight of component III.

**11.** The compositions of any one of claims 1 to 10, wherein component I is selected from the compounds I-1, I-3 and I-5.

**12.** The compositions of any one of claims 1 to 11, wherein component II is selected from the group consisting of 1-isopropyl-N,5-dimethyl-N-pyridazin-4-yl-pyrazole-4-carboxamide (II-1), 1-(1,2-dimethylpropyl)-N-ethyl-5-methyl-N-pyridazin-4-yl-pyrazole-4-carboxamide (II-2), N,5-dimethyl-N-pyridazin-4-yl-1-(2,2,2-trifluoro-1-methyl-ethyl)pyrazole-4-carboxamide (II-3), 1-[1-(1-cyanocyclopropyl)ethyl]-N-ethyl-5-methyl-N-pyridazin-4-yl-pyrazole-4-carboxamide (II-4), N-ethyl-1-(2-fluoro-1-methyl-propyl)-5-methyl-N-pyridazin-4-yl-pyrazole-4-carboxamide (II-5), 1-(1,2-dimethylpropyl)-N,5-dimethyl-N-pyridazin-4-yl-pyrazole-4-carboxamide (II-6), 1-[1-(1-cyanocyclopropyl)ethyl]-N,5-dimethyl-N-pyridazin-4-yl-pyrazole-4-carboxamide (II-7), N-methyl-1-(2-fluoro-1-methyl-propyl]-5-methyl-N-pyridazin-4-yl-pyrazole-4-carboxamide (II-8), 1-(4,4-difluorocyclohexyl)-N-ethyl-5-methyl-N-pyridazin-4-yl-pyrazole-4-carboxamide (II-9), 1-(4,4-difluorocyclohexyl)-N,5-dimethyl-N-pyridazin-4-yl-pyrazole-4-carboxamide (II-10), N-ethyl-1-isopropyl-5-methyl-N-pyridazin-4-yl-pyrazole-4-carboxamide (II-11), N-ethyl-5-methyl-N-pyridazin-4-yl-1-(2,2,2-trifluoro-1-methyl-ethyl)pyrazole-4-carboxamide (II-12), 1-isopropyl-N-(methoxymethyl)-5-methyl-N-pyridazin-4-yl-pyrazole-4-carboxamide (II-13), N-(methoxymethyl)-5-methyl-N-pyridazin-4-yl-1-(2,2,2-trifluoro-1-methyl-ethyl)pyrazole-4-carboxamide (II-14), 1-(1,2-dimethylpropyl)-N-(methoxymethyl)-5-methyl-N-pyridazin-4-yl-pyrazole-4-carboxamide (II-15), 1-[1-(1-cyanocyclopropyl)ethyl]-N-(methoxymethyl)-5-methyl-N-pyridazin-4-yl-pyrazole-4-carboxamide (II-16), 1-(2-fluoro-1-methyl-propyl)-N-(methoxymethyl)-5-methyl-N-pyridazin-4-yl-pyrazole-4-carboxamide (II-17) and 1-(4,4-difluorocyclohexyl)-N-(methoxymethyl)-5-methyl-N-pyridazin-4-yl-pyrazole-4-carboxamide (II-18); and the stereoisomers, salts, tautomers and N-oxides of each of the compounds.

**13.** A use of a composition as defined in any of the claims 1 to 12 for combating phytopathogenic fungi.

**14.** A method for combating phytopathogenic fungi, comprising treating the fungi or the materials, plants, the soil or seeds to be protected against fungal attack with an effective amount of a composition as defined in any of the claims 1 to 12.

**15.** A method for improving plant health by treating a plant, its propagation material and/or the locus where the plant is growing or is to grow with an effective amount of a composition as defined in any of the claims 1 to 12.

**16.** Plant propagation material, coated with the components I, II and III of the compositions as defined in any one of claims 1 to 12, in an amount of from 0.1 to 10 kg active substances per 100 kg of seed.

Europäisches Patentamt
European Patent Office
Office européen des brevets

# EUROPEAN SEARCH REPORT

Application Number
EP 15 17 5092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/267476 A1 (DEFIEBER CHRISTIAN [DE] ET AL) 10 October 2013 (2013-10-10) * the claims and tests 6-9 * ----- | 1-16 | INV. A01N43/58 A01N43/653 A01P7/00 |
| Y | US 2014/045690 A1 (DEFIEBER CHRISTIAN [DE] ET AL) 13 February 2014 (2014-02-13) * the claims * ----- | 1-16 | |
| Y | US 2011/269770 A1 (GROSS STEFFEN [DE] ET AL) 3 November 2011 (2011-11-03) * the claims * ----- | 1-16 | |
| Y | US 2015/150257 A1 (SOERGEL SEBASTIAN [DE] ET AL) 4 June 2015 (2015-06-04) * the claims and tests 8-13 * ----- | 1-16 | |
| Y | WO 2014/095932 A1 (BASF SE [DE]) 26 June 2014 (2014-06-26) * compositions comprising bixafen or isopyrazam and the claims * ----- | 1-16 | TECHNICAL FIELDS SEARCHED (IPC) |
| Y | WO 2014/095994 A1 (BASF SE [DE]) 26 June 2014 (2014-06-26) * the whole document; in particular, the claims * ----- | 1-16 | A01N |
| Y | WO 2015/003908 A1 (BASF SE [DE]) 15 January 2015 (2015-01-15) * the claims and pages 123, 124, 130 and 138-142 * ----- | 1-16 | |

The present search report has been drawn up for all claims

1

| Place of search | Date of completion of the search | Examiner |
|---|---|---|
| Munich | 22 February 2016 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 17 5092

This annex lists the patent family members relating to the patent documents cited in the above-mentioned European search report. The members are as contained in the European Patent Office EDP file on
The European Patent Office is in no way liable for these particulars which are merely given for the purpose of information.

22-02-2016

| Patent document cited in search report | Publication date | Patent family member(s) | Publication date |
|---|---|---|---|
| US 2013267476 A1 | 10-10-2013 | AR 087143 A1 | 26-02-2014 |
| | | AU 2011347752 A1 | 11-07-2013 |
| | | CA 2818914 A1 | 28-06-2012 |
| | | CL 2013001836 A1 | 04-10-2013 |
| | | CN 103269589 A | 28-08-2013 |
| | | CR 20130297 A | 09-08-2013 |
| | | EA 201300731 A1 | 30-01-2014 |
| | | EP 2654424 A1 | 30-10-2013 |
| | | JP 2014500282 A | 09-01-2014 |
| | | KR 20130132942 A | 05-12-2013 |
| | | US 2013267476 A1 | 10-10-2013 |
| | | WO 2012084670 A1 | 28-06-2012 |
| US 2014045690 A1 | 13-02-2014 | AR 086474 A1 | 18-12-2013 |
| | | AU 2012244846 A1 | 07-11-2013 |
| | | CA 2830138 A1 | 26-10-2012 |
| | | CN 103492378 A | 01-01-2014 |
| | | EA 201301185 A1 | 31-03-2014 |
| | | EP 2699563 A1 | 26-02-2014 |
| | | JP 2014517822 A | 24-07-2014 |
| | | KR 20140025469 A | 04-03-2014 |
| | | TW 201247643 A | 01-12-2012 |
| | | US 2014045690 A1 | 13-02-2014 |
| | | WO 2012143317 A1 | 26-10-2012 |
| US 2011269770 A1 | 03-11-2011 | AR 073316 A1 | 28-10-2010 |
| | | AU 2009295936 A1 | 01-04-2010 |
| | | CA 2736538 A1 | 01-04-2010 |
| | | CN 102224149 A | 19-10-2011 |
| | | CN 104211688 A | 17-12-2014 |
| | | CR 20110194 A | 03-06-2011 |
| | | EA 201100529 A1 | 30-12-2011 |
| | | EP 2342196 A1 | 13-07-2011 |
| | | ES 2546404 T3 | 23-09-2015 |
| | | JP 5536073 B2 | 02-07-2014 |
| | | JP 2012503622 A | 09-02-2012 |
| | | KR 20110058906 A | 01-06-2011 |
| | | TW 201016670 A | 01-05-2010 |
| | | UA 103633 C2 | 11-11-2013 |
| | | US 2011269770 A1 | 03-11-2011 |
| | | US 2014142111 A1 | 22-05-2014 |
| | | UY 32141 A | 26-03-2010 |
| | | WO 2010034737 A1 | 01-04-2010 |
| US 2015150257 A1 | 04-06-2015 | AU 2013279540 A1 | 22-01-2015 |
| | | CA 2874382 A1 | 27-12-2013 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 15 17 5092

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2016

| Patent document cited in search report | Publication date | Patent family member(s) | Publication date |
|---|---|---|---|
| | | CL 2014003471 A1 | 15-05-2015 |
| | | CN 104703982 A | 10-06-2015 |
| | | EA 201500020 A1 | 31-08-2015 |
| | | EP 2864320 A1 | 29-04-2015 |
| | | JP 2015525234 A | 03-09-2015 |
| | | KR 20150023824 A | 05-03-2015 |
| | | US 2015150257 A1 | 04-06-2015 |
| | | WO 2013189801 A1 | 27-12-2013 |
| WO 2014095932 A1 | 26-06-2014 | CN 104936450 A | 23-09-2015 |
| | | EP 2934146 A1 | 28-10-2015 |
| | | TW 201429397 A | 01-08-2014 |
| | | US 2015313225 A1 | 05-11-2015 |
| | | UY 35238 A | 30-06-2014 |
| | | WO 2014095932 A1 | 26-06-2014 |
| WO 2014095994 A1 | 26-06-2014 | CA 2894264 A1 | 26-06-2014 |
| | | CN 105050406 A | 11-11-2015 |
| | | EA 201500653 A1 | 30-12-2015 |
| | | EP 2934147 A1 | 28-10-2015 |
| | | JP 2016501899 A | 21-01-2016 |
| | | TW 201429398 A | 01-08-2014 |
| | | US 2015344445 A1 | 03-12-2015 |
| | | UY 35237 A | 30-06-2014 |
| | | WO 2014095994 A1 | 26-06-2014 |
| WO 2015003908 A1 | 15-01-2015 | CA 2916777 A1 | 15-01-2015 |
| | | WO 2015003908 A1 | 15-01-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0275955 A1
- DE 4003180 A1
- EP 0113640 A2
- EP 0126430 A2
- WO 2013007767 A
- EP 2012063626 W
- WO 2013024076 A
- EP 2012065835 W
- WO 2013024075 A
- EP 2012065834 W
- WO 2013024077 A
- EP 2012065836 W
- WO 2013024081 A
- EP 2012065848 W
- WO 2013024080 A
- EP 2012065847 W
- WO 2013024083 A
- EP 2012065852 W
- WO 2013010862 A
- EP 2012063526 W
- WO 2013010894 A
- EP 2012063635 W
- WO 2013010885 A
- EP 2012063620 W
- WO 2013024082 A
- EP 2012065850 W
- WO 2010034737 A
- WO 2012084670 A
- WO 2012143317 A
- US 61891437 B
- US 8445255 B
- US 20130236522 A1
- US 2011023045 A1
- US 20120149571 A1
- CA 2471555 A1
- US 6406690 B
- US 5733544 A
- WO 2009126473 A
- WO 2009124707 A
- US 20140051571 A1
- US 5906818 A
- WO 2014029697 A
- US 20100260735 A
- WO 2011109395 A
- WO 2013087709 A
- EP 0585215 B1
- EP 585215 B1
- US 200020031495 A
- US 5021076 A
- US 7262151 B
- WO 2013032693 A
- WO 1996021358 A
- WO 200357861 A
- WO 2013138398 A
- US 5002603 A
- US 6890525 B
- US 8221736 B
- WO 2012018266 A
- US 6994849 B
- US 20140086879 A1
- WO 2013110594 A
- WO 199102051 A
- WO 2010085795 A
- WO 2012064527 A
- WO 201080619 A
- US 5248500 A
- WO 2010080619 A
- US 5026417 A
- WO 1995017806 A
- WO 2010037228 A
- US 8206972 B
- WO 200140441 A
- EP 0210734 A
- WO 20040245865 A
- US 20130035230 A
- EP 0307510 B1
- WO 2011022809 A
- WO 2012135763 A
- US 5403584 A
- US 5968503 A
- EP 0133878 B1
- EP 0466133 B2
- US 7429477 B
- US 4996157 A
- WO 2012079073 A
- US 20120252672 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A
- EP 242236 A
- EP 242246 A

- WO 9200377 A
- EP 257993 A
- US 5013659 A
- EP 142924 A
- EP 193259 A
- WO 9211376 A
- WO 9214827 A
- WO 9119806 A
- WO 9113972 A

**Non-patent literature cited in the description**


- *J.Agric. Food Chem.,* 2009, vol. 57, 4854-4860
- *Nature,* 1979, vol. 280, 697-699
- *Proc. 9th Int. and 1st Latin American PGPR meeting,* 2012, ISBN 978-958-46-0908-3, 60
- *Eur. J. Soil Biol,* 2009, vol. 45 (1), 28-35
- *Plant Soil,* 2010, vol. 331, 413-425
- *Proc. 9th Int. and 1st Latin American PGPR meeting,* 2012, 60
- *Int. J. Syst. Evol. Microbiol.,* 2006, vol. 56 (7), 1465-1473
- *J. Microbiol. Biotechnol.,* 2007, vol. 17 (2), 280-286
- *J. Plant Dis. Prot.,* 1998, vol. 105, 181-197
- *Phytopathol.,* 1996, vol. 86 (11), 36
- *Int. J. Microbiol. Res.,* 2011, vol. 3 (2), 120-130
- *Federal Register,* vol. 77 (7), 1633-1637
- *System. Appl. Microbiol.,* 2004, vol. 27, 372-379
- *J. Appl. Microbiol.,* 2006, vol. 100 (5), 1063-72
- *FEMS Microbiol. Letters,* 2010, vol. 303 (2), 123-131
- *Revista Brasileira de Ciencia do Solo,* 2011, vol. 35 (3), ISSN 0100-0683, 739-742
- **BISSON ; MASON.** Project report. Worcester Polytechnic Institute, 29 April 2010
- *Appl. Environ. Microbiol.,* 2007, vol. 73 (8), 2635
- *Can. J. Plant. Sci.,* 1990, vol. 70, 661-666
- *Eur. J. Soil Biol.,* 2009, vol. 45, 28-35
- *Biol. Fertil. Soils,* 2011, vol. 47, 81-89
- *C. R. Acad. Agric. Fr.,* 1987, vol. 73, 163-171
- *Appl. Environ. Microbiol.,* 1990, vol. 56, 2399-2403
- *Appl. Environ. Microbiol.,* 1994, vol. 60, 940-94
- *Crop Science,* 1986, vol. 26 (5), 911-916
- Proceed. 12th International Lupin Conference. International Lupin Association, 14 September 2008, 47-50
- *Appl. Environ. Microbiol.,* 2005, vol. 71, 7041-7052
- *Australian J. Exp. Agricult.,* 1996, vol. 36 (1), 63-70
- *Phytoparasitica,* 1995, vol. 23 (3), 231-234
- *Biological Control,* 2009, vol. 51, 403-408
- *NJF Report,* 2006, vol. 2 (10), 15-15
- *Microbiol. Reviews,* 1992, vol. 56 (4), 561-576
- *J. Ecological Engineering,* 2013, vol. 14 (1), 48-52
- *Appl. Environ. Microbiol,* 2002, vol. 68 (8), 4044-4060
- *Prevention Today,* 2006, vol. 2 (1-2), 47-62
- *Science,* 1992, vol. 257, 85-88
- *J. Invertebrate Pathol.,* 2011, vol. 107, 112-126
- *Biocontrol Science Technol.,* 2012, vol. 22 (7), 747-761
- *Biological Control,* 2008, vol. 45, 288-296
- *Curr. Microbiol.,* 2009, vol. 59 (6), 608-615
- *Microbiol. Res.,* 2003, vol. 158, 107-115
- *Biological Control,* 2004, vol. 31 (2), 145-154
- *Soil Biol. Biochem.,* 2004, vol. 36 (8), 1309-1317
- *Plant and Soil,* 2011, vol. 348 (1-2), 231-243
- *Can. J. Microbiol.,* 2002, vol. 48, 279-284
- *World J. Microbiol. Biotechn.,* 2007, vol. 23 (6), ISSN 0959-3993, 845-851
- *Memoirs of the Entomological Society of Canada,* 1997, vol. 171, 287-300
- *Mycologia,* 2002, vol. 94 (2), 297-301
- *Braz. Arch. Biol. Technol.,* 2003, vol. 46 (1), 13-19
- *Crop Protection,* 2008, vol. 27, 352-361
- *Can. J. Microbiol.,* 2002, vol. 48 (2), 159-169
- *Phytopathol.,* 2011, vol. 101 (10), 1234-41
- *Trees,* 2012, vol. 26, 227-238
- *J. Bacteriol.,* 2010, vol. 192 (24), 6486-6487
- *Federal Register,* 02 February 2011, vol. 76 (22), 5808
- *J. Nematol.,* 2010, vol. 42 (2), 87-90
- *J. NEMATOL.,* 2011, vol. 43 (2), 101-109
- *Fertilizer Res.,* 1994, vol. 39, 97-103
- *Can. J. Plant Sci.,* 1998, vol. 78 (1), 91-102
- *Microbiology Monographs,* 2011, vol. 18, 21-43
- *Phytopathol,* 2007, vol. 97 (2), 244-249
- *Mol. Plant Microbe Interact.,* 1992, vol. 5 (1), 4-13
- *J. Invertebr. Pathol.,* 2013, vol. 113 (1), 104-14
- *Int. J. Syst. Bacteriol.,* 1996, vol. 46 (1), 240-244
- *Int. J. Syst. Evol. Microbiol.,* 2000, vol. 50, 159-170
- *Proc. New Zealand Grassland Assoc.,* 1994, vol. 56, 101-105

- *Microbiol.,* 2007, vol. 153, 3184-3195
- Inoculating Legumes: A Practical Guide. 2012
- *Appl. Environ. Microbiol.,* 1982, vol. 44 (5), 1096-1101
- *Appl. Environ. Microbiol.,* 1985, vol. 49 (1), 127-131
- *Stand. Genomic Sci.,* 2010, vol. 2 (3), 347-356
- *Stand. Genomic Sci.,* 2010, vol. 2 (1), 66-76
- *New Phytol.,* 2007, vol. 176, 680-690
- *NEW PHYTOL.,* 2008, vol. 179 (1), 224-235
- *Agronomy, N.Z.,* 2006, vol. 36, 4-35
- *Rev. Ciênc. Agron.,* October 2013, vol. 44 (4
- *Appl. Microbiol. Biotechnol.,* 2012, vol. 93 (5), 2035-49
- *Soil Biology & Biochemistry,* 2007, vol. 39, 867-876
- *BMC Microbiol.,* 2012, vol. 12, 84
- *Mol. Gen. Genomics,* 2004, vol. 272, 1-17
- *Crop Protection,* 2006, vol. 25, 468-475
- *J. Gen. Plant Pathol.,* 2005, vol. 71 (5), 351-356
- *BioControl,* 2012, vol. 57, 687-696
- *J. Biological Control,* 2009, vol. 23 (1), 31-36
- *Agronomy,* 2013, vol. 3, 632-647
- *Beltsville Rhiz. Cult. Catalog, http://pdf.usaid.gov/ pdf docs/PNAAW891.pdf*
- *Int. J. Microbiol. Res.,* 2011, vol. 3 (2), ISSN 0975-5276, 120-130
- *Appl Environ Microbiol,* 1994, vol. 60, 940-94
- **FERNANDEZ-FLOURET, D. ; CLEYET-MAREL, J. C.** *C R Acad Agric Fr,* 1987, vol. 73, 163-171
- *Appl Environ Microbiol,* 1990, vol. 56, 2399-2403
- *Can J Plant Sci,* 1990, vol. 70, 661-666
- 73. *Appl Environ Microbiol,* 2007, (8), 2635
- *Can. J. Microbiol.,* 1992, vol. 38, 501-505
- *Biol Fertil Soils,* 2011, vol. 47, 81-89
- *Appl Environ Microbiol,* 2007, vol. 73 (8), 2635
- *FEMS Microbiology Letters,* 2010, vol. 303 (2), 123-131
- Proceedings 12th International Lupin Conference. International Lupin Association, 14 September 2008, 47-50
- *Appl Environ Microbiol,* 2005, vol. 71, 7041-7052
- *Can J Microbial,* 2002, vol. 48, 279-284
- *Soil Biol Biochem,* 2004, vol. 36 (8), 1309-1317
- *Appl. Environ. Microbiol.,* 2011, vol. 77 (15), 5513-5516
- *Appl. Environ. Microbiol.,* 1983, vol. 45 (3), 737-742
- *APPL. ENVIRON. MICROBIOL.,* 1988, vol. 54 (5), 1280-1283
- *Pest Managem. Sci.,* 2005, vol. 61, 246
- *PEST MANAGEM. SCI.,* 2005, vol. 61, 258
- *PEST MANAGEM. SCI.,* 2005, vol. 61, 277
- *PEST MANAGEM. SCI.,* 2005, vol. 61, 269
- *PEST MANAGEM. SCI.,* 2005, vol. 61, 286
- *PEST MANAGEM. SCI.,* 2008, vol. 64, 326
- *PEST MANAGEM. SCI.,* 2008, vol. 64, 332
- *Weed Sci.,* 2009, vol. 57, 108
- *AUSTRAL. J. AGRICULT. RES.,* 2007, vol. 58, 708
- *Science,* 2007, vol. 316, 1185
- Catalogue of pesticide formulation types and international coding system. Technical Monograph. CropLife International, May 2008, vol. 2
- **MOLLET ; GRUBEMANN.** Formulation technology. Wiley VCH, 2001
- New developments in crop protection product formulation. **KNOWLES.** Agrow Reports DS243. T&F Informa, 2005
- **MCCUTCHEON'S.** Emulsifiers & Detergents, McCutcheon's Directories. Glen Rock, 2008, vol. 1
- Adjuvants and additives. **KNOWLES.** Agrow Reports DS256. T&F Informa, 2006
- **COLBY, S. R.** Calculating synergistic and antagonistic responses of herbicide combinations. *Weeds,* 1967, vol. 15, 20-22
- **TAMMES, P. M. L.** Isoboles, a graphic representation of synergism in pesticides. *Netherl. J. Plant Pathol.,* 1964, vol. 70
- **COLBY, S.R.** Calculating synergistic and antagonistic responses of herbicide combinations. *Weeds,* 1967, vol. 15, 20-22